(19) Europäisches Patentamt
European Patent Office
Office européen des brevets

(11) **EP 4 478 821 A1**

(12) **EUROPEAN PATENT APPLICATION**
published in accordance with Art. 153(4) EPC

(43) Date of publication:
**18.12.2024 Bulletin 2024/51**

(21) Application number: **23767201.9**

(22) Date of filing: **10.03.2023**

(51) International Patent Classification (IPC):
$H04W\ 72/23^{(2023.01)}$        $H04W\ 72/04^{(2023.01)}$
$H04W\ 56/00^{(2009.01)}$        $H04L\ 5/00^{(2006.01)}$
$H04W\ 72/21^{(2023.01)}$

(52) Cooperative Patent Classification (CPC):
H04L 5/00; H04W 56/00; H04W 72/04;
H04W 72/21; H04W 72/23

(86) International application number:
**PCT/KR2023/003293**

(87) International publication number:
**WO 2023/172100 (14.09.2023 Gazette 2023/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.03.2022 KR 20220030832
20.07.2022 KR 20220089542
14.10.2022 KR 20220131910
19.10.2022 KR 20220135146**

(71) Applicant: **Samsung Electronics Co., Ltd.
Suwon-si, Gyeonggi-do 16677 (KR)**

(72) Inventors:
• **JANG, Youngrok**
**Suwon-si, Gyeonggi-do 16677 (KR)**
• **PARK, Kyoungmin**
**Suwon-si, Gyeonggi-do 16677 (KR)**
• **ABEBE, Ameha Tsegaye**
**Suwon-si, Gyeonggi-do 16677 (KR)**
• **LIM, Seongmok**
**Suwon-si, Gyeonggi-do 16677 (KR)**
• **JI, Hyoungju**
**Suwon-si, Gyeonggi-do 16677 (KR)**
• **CHOI, Kyungjun**
**Suwon-si, Gyeonggi-do 16677 (KR)**

(74) Representative: **Gulde & Partner
Patent- und Rechtsanwaltskanzlei mbB
Wallstraße 58/59
10179 Berlin (DE)**

(54) **METHOD AND APPARATUS FOR TRANSMITTING AND RECEIVING DATA AND REFERENCE SIGNALS IN WIRELESS COMMUNICATION SYSTEM**

(57) The present disclosure relates to a 5G or 6G communication system for supporting higher data transmission rates. The present disclosure relates to an operation of a terminal and a base station in a wireless communication system. Specifically, the present disclosure relates to a method for transmitting and receiving data and reference signals in a wireless communication system, and an apparatus capable of performing same According to one embodiment of the present disclosure, a method by a terminal of a communication system is provided. The method comprises the steps of: transmitting terminal capability information to a base station; receiving downlink control information (DCI) including resource allocation information related to a physical downlink shared channel (PDSCH) from the base station; and receiving the PDSCH from the base station on the basis of the resource allocation information, wherein if the terminal capability information does not indicate that the terminal supports PDSCH scheduling without scheduling constraint, the resource allocation information is determined on the basis of the scheduling constraint, wherein the scheduling constraint is a constraint on frequency resource allocation of a PDSCH related to an enhanced DMRS type.

EP 4 478 821 A1

**(Cont. next page)**

# FIG. 1

One subframe (110)

$N_{symb}^{subframe,\mu}$ OFDM symbols

1 OFDM symbols (102)

1 subcarrier (103)

$K=N_{RB,x}^{max,\mu} N_{sc}^{RB}-1$

$N_{RB}^{\mu} N_{sc}^{RB}$ subcarriers

Resource block $N_{sc}^{RB}$ subcarriers (104)

Resource element (k,l) (101)

Frequency

Time

$\bar{l}=0$

$\bar{l}=14\cdot 2^{\mu}-1$

$K=0$

**Description**

**[Technical Field]**

The disclosure relates to an operation of a user equipment (UE) and a base station in a wireless communication system. Specifically, the disclosure relates to a method of transmitting or receiving data and a reference signal in a wireless communication system and an apparatus capable of performing the same.

**[Background Art]**

5th generation (5G) mobile communication technologies define broad frequency bands such that high transmission rates and new services are possible, and may be implemented not only in "Sub 6 GHz" bands, such as 3.5 GHz, but also in "Above 6 GHz" bands referred to as mmWave including 28 GHz and 39 GHz. In addition, it has been considered to implement 6th generation (6G) mobile communication technologies referred to as Beyond 5G systems in terahertz bands (e.g., 95 GHz to 3 THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced mobile broadband (eMBB), ultra-reliable low latency communications (URLLC), and massive machine-type communications (mMTC), there has been ongoing standardization regarding beamforming and massive multiple input multiple output (MIMO) for mitigating radio-wave path loss and increasing radio-wave transmission distances in mmWave, supporting various numerologies (e.g., operating multiple subcarrier spacings) for efficiently utilizing mmWave resources and dynamic operation of slot formats, initial access technologies for supporting multi-beam transmission and broadbands, definition and operation of bandwidth part (BWP), new channel coding methods, such as a low density parity check (LDPC) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies, such as vehicle-to-everything (V2X) for aiding driving determination by autonomous vehicles based on information on locations and states of vehicles transmitted by the vehicles and for enhancing user convenience, new radio unlicensed (NR-U) aimed at system operations conforming to various regulation-related requirements in unlicensed bands, NR user equipment (UE) power saving, non-terrestrial network (NTN) that is UE-satellite direct communication for providing coverage in an area in which communication with terrestrial networks is unavailable, and positioning.

In addition, there has been ongoing standardization in air interface architecture/protocol regarding technologies, such as industrial Internet of things (IIoT) for supporting new services through interworking and convergence with other industries, integrated access and backhaul (IAB) for providing a node for network service area expansion by supporting a wireless backhaul link and an access link in an integrated manner, mobility enhancement including conditional handover and dual active protocol stack (DAPS) handover, and two-step random access for simplifying random access procedures (2-step RACH for NR). There also has been ongoing standardization in system architecture/service field regarding a 5G baseline architecture (e.g., service based architecture or service based interface) for combining Network Functions Virtualization (NFV) and Software-Defined Networking (SDN) technologies, and Mobile Edge Computing (MEC) for receiving services based on UE locations.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting augmented reality (AR), virtual reality (VR), mixed reality (MR), and the like, 5G performance improvement and complexity reduction by utilizing artificial intelligence (AI) and machine learning (ML), AI service support, metaverse service support, and drone communication.

Also, such development of 5G mobile communication systems will serve as a basis for developing not only new waveforms for providing coverage in terahertz bands of 6G mobile communication technologies, multi-antenna transmission technologies, such as full dimensional MIMO (FD-MIMO), array antennas, and large-scale antennas, metamaterial-based lenses and antennas for improving coverage of terahertz band signals, high-dimensional space multiplexing technology using orbital angular momentum (OAM), and reconfigurable intelligent surface (RIS), but also full-duplex technology for increasing frequency efficiency of 6G mobile communication technologies and improving system networks, AI-based communication technology for implementing system optimization by utilizing satellites and AI from the design stage and internalizing end-to-end AI support functions, and next-generation distributed computing technology for implementing services at levels of complexity exceeding the limit of UE operation capability by utilizing ultra-high-performance communication and computing resources.

As various services are providable with the development of wireless communication systems as described above, there is a need for a method to smoothly provide the services.

**[Disclosure of Invention]**

**[Technical Problem]**

The disclosed embodiment is to provide an apparatus and a method that may effectively provide a service in a mobile communication system.

**[Solution to Problem]**

According to an embodiment of the disclosure, a method of a user equipment (UE) of a communication system is provided. The method may include transmitting UE capability information to a base station; receiving, from the base station, downlink control information (DCI) that includes resource allocation information related to a physical downlink shared channel (PDSCH); and receiving the PDSCH from the base station based on the resource allocation information, wherein, when the UE capability information does not indicate that the UE supports PDSCH scheduling without scheduling constraint, the resource allocation information is determined based on the scheduling constraint, and the scheduling constraint is constraint on frequency resource allocation of a PDSCH related to an enhanced demodulation reference signal (DMRS).

According to another embodiment of the disclosure, a method of a base station of a communication system is provided. The method may include receiving UE capability information from a UE; transmitting, to the UE, DCI that includes resource allocation information related to a PDSCH; and transmitting the PDSCH to the UE based on the resource allocation information, wherein, when the UE capability information does not indicate that the UE supports PDSCH scheduling without scheduling constraint, the resource allocation information is determined based on the scheduling constraint, and the scheduling constraint is constraint on frequency resource allocation of a PDSCH related to an enhanced DMRS.

According to another embodiment of the present invention, a UE of a communication system is provided. The UE may include a transceiver; and a controller configured to transmit UE capability information to a base station, to receive, from the base station, DCI that includes resource allocation information related to a PDSCH, and to receive the PDSCH from the base station based on the resource allocation information, wherein, when the UE capability information does not indicate that the UE supports PDSCH scheduling without scheduling constraint, the resource allocation information is determined based on the scheduling constraint, and the scheduling constraint is constraint on frequency resource allocation of a PDSCH related to an enhanced DMRS.

According to another embodiment of the disclosure, a base station of a communication system is provided. The base station may include a transceiver; and a controller configured to receive UE capability information from a UE, to transmit, to the UE, DCI that includes resource allocation information related to a PDSCH, and to transmit the PDSCH to the UE based on the resource allocation information, wherein, when the UE capability information does not indicate that the UE supports PDSCH scheduling without scheduling constraint, the resource allocation information is determined based on the scheduling constraint, and the scheduling constraint is constraint on frequency resource allocation of a PDSCH related to an enhanced DMRS.

**[Advantageous Effects of Invention]**

The disclosed embodiment provides an apparatus and method that may effectively provide a service in a mobile communication system.

**[Brief Description of Drawings]**

FIG. 1 illustrates a basic structure of a time-frequency domain in a wireless communication system, according to an embodiment of the disclosure.
FIG. 2 illustrates frame, subframe, and slot structures in a wireless communication system, according to an embodiment of the disclosure.
FIG. 3 illustrates an example of a configuration of a bandwidth part in a wireless communication system, according to an embodiment of the disclosure.

FIG. 4 illustrates an example of a configuration of a control area of a downlink control channel in a wireless communication system, according to an embodiment of the disclosure.

FIG. 5A illustrates a structure of a downlink control channel in a wireless communication system, according to an embodiment of the disclosure.

FIG. 5B illustrates a case in which a user equipment (UE) may have a plurality of physical downlink control channel (PDCCH) monitoring occasions within a slot through a span in a wireless communication system, according to an embodiment of the disclosure.

FIG. 6 illustrates an example of a discontinuous reception (DRX) operation in a wireless communication system, according to an embodiment of the disclosure.

FIG. 7 illustrates an example of base station (BS) beam allocation according to a transmission configuration indication (TCI) state configuration in a wireless communication system, according to an embodiment of the disclosure.

FIG. 8 illustrates an example of a method of allocating TCI states for a physical downlink control channel (PDCCH) in a wireless communication system, according to an embodiment of the disclosure.

FIG. 9 illustrates a TCI indication medium access control (MAC) control element (CE) signaling structure for a PDCCH demodulation reference signal (DMRS) in a wireless communication system, according to an embodiment of the disclosure.

FIG. 10 illustrates an example of a beam configuration of a control resource set (CORESET) and a search space in a wireless communication system, according to an embodiment of the disclosure.

FIG. 11 illustrates a diagram of a method of transmitting or receiving data in consideration of a downlink data channel and a rate matching resource by a base station and a UE in a wireless communication system, according to an embodiment of the disclosure.

FIG. 12 illustrates a diagram of a method of selecting a receivable control resource set in consideration of priority when a UE receives a downlink control channel in a wireless communication system, according to an embodiment of the disclosure.

FIG. 13 illustrates an example of frequency axis resource allocation of a physical downlink shared channel (PDSCH) in a wireless communication system, according to an embodiment of the disclosure.

FIG. 14 illustrates an example of time axis resource allocation of a PDSCH in a wireless communication system, according to an embodiment of the disclosure.

FIG. 15 illustrates an example of time axis resource allocation according to subcarrier spacing of a data channel and a control channel in a wireless communication system, according to an embodiment of the disclosure.

FIG. 16 illustrates a process for beam configuration and activation of a PDSCH according to an embodiment of the disclosure.

FIG. 17 illustrates an example of a MAC-CE structure for PDSCH TCI state activation/deactivation.

FIG. 18 illustrates a wireless protocol structure of a base station and a UE in a single cell environment, a carrier aggregation (CA) environment, and a dual connectivity (DC) environment in a wireless communication system, according to an embodiment of the disclosure.

FIG. 19 illustrates an example of configuring antenna ports and allocating resources for cooperative communication in a wireless communication system, according to an embodiment of the disclosure.

FIG. 20 illustrates an example for a configuration of downlink control information (DCI) for cooperative communication in a wireless communication system, according to an embodiment of the disclosure.

FIG. 21 illustrates a diagram of an enhanced PDSCH TCI state activation/deactivation MAC-CE structure.

FIG. 22 illustrates a diagram of a structure of a UE in a wireless communication system, according to an embodiment of the disclosure.

FIG. 23 illustrates a diagram of a structure of a base station in a wireless communication system, according to an embodiment of the disclosure.

FIG. 24 illustrates an operation of a UE for supporting enhanced DMRS types 1 and 2, according to an embodiment of the disclosure.

FIG. 25 illustrates an operation of a base station for supporting enhanced DMRS types 1 and 2, according to an embodiment of the disclosure.

**[Mode for the Invention]**

Hereinafter, embodiments of the disclosure are described with reference to the accompanying drawings.

In describing embodiments, descriptions related to technical contents that are well-known in the art to which the disclosure pertains and are not directly associated with the disclosure will be omitted. Such an omission of unnecessary descriptions is intended to prevent obscuring of the main idea of the disclosure and more clearly convey the main idea.

Similarly, in the drawings, some elements may be exaggerated, omitted, or schematically illustrated. Also, the size of each element does not completely reflect the actual size. In the drawings, identical or corresponding elements are provided with identical reference numerals.

The advantages and features of the disclosure and methods to achieve them will be apparent with reference to embodiments as described below in detail in conjunction with the accompanying drawings. However, the disclosure is not limited to the embodiments set forth below, but may be implemented in various different forms. The following embodiments are provided only to completely disclose and inform those skilled in the art of the scope of the disclosure, and the appended claims. Throughout the specification, the same or like reference numerals designate the same or like elements. Also, in describing the disclosure, a detailed description of known functions or configurations incorporated herein will be omitted when it is determined that the description may make the subject matter of the disclosure unnecessarily unclear. The terms that are described below are terms defined in consideration of the functions in the disclosure, and may be different according to users, intentions of the users, or customs. Therefore, the definitions of the terms should be made based on the contents throughout the specification.

In the following description, a base station (BS) is an entity that allocates resources to terminals, and may be at least one of a gNode B, an eNode B, a Node B, a BS, a wireless access unit, a BS controller, and a node on a network. A terminal may include a user equipment (UE), a mobile station (MS), a cellular phone, a smartphone, a computer, or a multimedia system capable of performing communication functions. In the disclosure, a "downlink (DL)" refers to a radio transmission link through which a BS transmits a signal to a terminal, and an "uplink" refers to a radio transmission link through which a terminal transmits a signal to a base station. Also, although the following description may be directed to a long term evolution (LTE) or LTE-A system by way of example, embodiments of the disclosure may also be applied to other communication systems having similar technical backgrounds or channel types to the embodiments of the disclosure. Examples of other communication systems may include 5G mobile communication technology (5G new radio (NR)) developed beyond LTE-A, and in the following description, "5G" may be a concept that covers exiting LTE, LTE-A, and other similar services. In addition, based on determinations by those skilled in the art, the disclosure may be applied to other communication systems through some modifications without significantly departing from the scope of the disclosure.

Herein, it will be understood that each block of flowchart illustrations and combinations of blocks in the flowchart illustrations may be implemented by computer program instructions. These computer program instructions may be provided to a processor of a general-purpose computer, special purpose computer, or other programmable data processing apparatus to produce a machine, such that the instructions, executed via the processor of the computer or other programmable data processing apparatus, create a method for implementing the functions specified in the flowchart block(s). These computer program instructions may also be stored in a computer usable or computer-readable memory that may direct a computer or other programmable data processing apparatus to function in a particular manner, such that the instructions stored in the computer usable or computer-readable memory produce an article of manufacture including instruction implies that implement the function specified in the flowchart block(s). The computer program instructions may also be loaded onto a computer or other programmable data processing apparatus to cause a series of operational steps to be performed on the computer or other programmable apparatus to produce a computer implemented process such that the instructions executed on the computer or other programmable apparatus provide steps for implementing the functions specified in the flowchart block(s).

Also, each block may represent a module, a segment, or a portion of code, which includes one or more executable instructions for implementing the specified logical function(s). It should also be noted that in some alternative implementations, the functions noted in the blocks may occur out of order. For example, two blocks shown in succession may in fact be executed simultaneously or the blocks may sometimes be executed in the reverse order, depending on the functionality involved.

Here, the term "unit" used herein refers to a software element or a hardware element, such as a field programmable gate array (FPGA) or an application specific integrated circuit (ASIC), which performs a predetermined function. However, the term "unit" does not always have a meaning limited to software or hardware. "Unit" may be configured either to be stored in an addressable storage medium or to execute one or more processors. Therefore, "unit" includes, for example, elements such as software elements, object-oriented software elements, class elements, and task elements, processes, functions, properties, procedures, sub-routines, segments of a program code, drivers, firmware, micro-codes, circuits, data, database, data structures, tables, arrays, and parameters. The elements and functions provided by the "unit" may be combined into a smaller number of elements and "units", or further divided into additional elements and "units". In addition, the elements and "units" may be implemented to reproduce one or more CPUs within a device or a security multimedia card. Also, the term "unit" in the embodiments may include one or more processors.

A wireless communication system has developed into a broadband wireless communication system that provides a high-speed and high-quality packet data service according to communication standards, for example, high-speed packet access (HSPA) of third generation partnership project (3GPP), LTE or evolved universal terrestrial radio access (E-UTRA), LTE-advanced (LTE-A), LTE-Pro, high rate packet data (HRPD) of 3GPP2, ultra mobile broadband (UMB), and 802.16e of the Institute of Electrical and Electronics Engineers (IEEE) beyond an initially provided voice-based service.

An LTE system, which is a representative example of the broadband wireless communication system, employs an orthogonal frequency division multiplexing (OFDM) scheme for downlink (DL), and employs a single carrier frequency division multiple access (SC-FDMA) scheme for uplink (UL). The uplink is a radio link through which a UE (or an MS) transmits data or a control signal to a base station (BS) (or an eNode B), and the downlink is a radio link through which the base station transmits data or a control signal to the UE. In the multiple access schemes as described above, time-frequency resources for carrying data or control information for each user are allocated and operated in a manner to prevent overlapping of the resources, that is, to establish orthogonality, to make it possible to identify data or control information of each user.

Snice a post-LTE communication system, that is, a 5G communication system, needs be able to freely reflect various requirements of a user and a service provider, a service that satisfies the various requirements needs to be supported. Services that are considered for the 5G communication system include enhanced mobile broadband (eMBB), massive machine type communication (mMTC), and ultra reliability low latency communication (URLLC).

The eMBB aims to provide a further enhanced data transmission rate than a data transmission rate supported by conventional LTE, LTE-A, or LTE-Pro. For example, in the 5G communication system, the eMBB needs to be able to provide a peak downlink data rate of 20 gigabits per second (Gbps) and a peak uplink data rate of 10 Gbps from the viewpoint of one base station. Also, the 5G communication system needs to provide not only a peak data rate but also an increased user-perceived data rate. In order to meet such requirements, improvement of various transmission/reception technologies, including a further improved multi input multi output (MIMO) transmission technology, is required. Also, while the current LTE system uses transmission bandwidths from a bandwidth of 2 GHz to a maximum bandwidth of 20 megahertz (MHz) to transmit signals, the 5G communication system uses a frequency bandwidth wider than 20 MHz in frequency bands of 3 to 6 GHz or 6 GHz or higher, whereby a data transmission rate required by the 5G communication system may be satisfied.

Also, in order to support an application, service such as the IoT, mMTC is considered in the 5G communication system. The mMTC is required to support access of a multitude of UEs within a cell, improve coverage of a UE, increase a battery lifetime, and reduce the cost of the UE in order to efficiently provide IoT technology. Since the IoT is used in conjunction with various sensors and a variety of devices to provide communication functions, there is a need to support a large number of UEs (e.g., 1,000,000 UEs/ km2) within a cell. Since the UE supporting the mMTC is highly likely to be located in a shaded area, such as a basement of a building, which a cell may not cover due to service characteristics, the mMTC may require wider coverage than other services provided by the 5G communication system. The UE supporting the mMTC needs to be produced at low cost and it is difficult to frequently exchange a battery of the UE. Thus, a long battery lifetime, for example, 10 to 15 years, may be required.

The URLLC is a cellular-based wireless communication service used for a specific (mission-critical) purpose. For example, services used for remote control of robots or machinery, industrial automation, unmanned aerial vehicles, remote health care, and emergency alerts may be considered. Accordingly, communication provided by the URLLC needs to provide very low latency and very high reliability. For example, services supporting the URLLC need to satisfy a radio access delay time (air interface latency) shorter than 0.5 milliseconds and also have requirements of a packet error rate of 10-5 or less. Accordingly, for services supporting the URLLC, the 5G system needs to provide a transmit time interval (TTI) smaller than that of other systems and also have design requirements of allocating a wide array of resources in a frequency band in order to guarantee reliability of a communication link.

Three services of 5G, that is, eMBB, URLLC, and mMTC, may be multiplexed and transmitted in one system. Here, in order to meet the different requirements of the respective services, different transmission/reception schemes and transmission/reception parameters may be used for the services. Of course, 5G is not limited to the above-described three service.

[NR time-frequency resources]

Hereinafter, a frame structure of a 5G system is described in more detail with reference to the drawings.

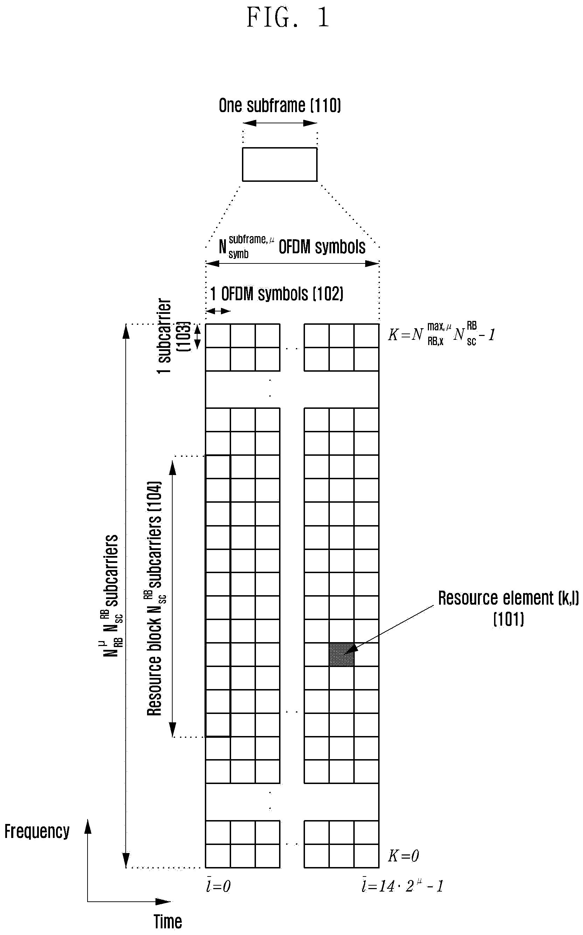

FIG. 1 illustrates a basic structure of a time-frequency domain, which is a radio resource area in which data or a control channel is transmitted, in a 5G system.

In FIG. 1, a horizontal axis represents a time domain and a vertical axis represents a frequency domain. The basic unit of resources in the time domain and the frequency domain is a resource element (RE) 101 and may be defined as 1 orthogonal frequency division multiplexing (OFDM) symbol 102 in a time axis and 1 subcarrier 103 in a frequency axis. In the frequency domain, $N_{SC}^{RB}$ (e.g., 12) consecutive REs may correspond to one resource block (RB) 104.

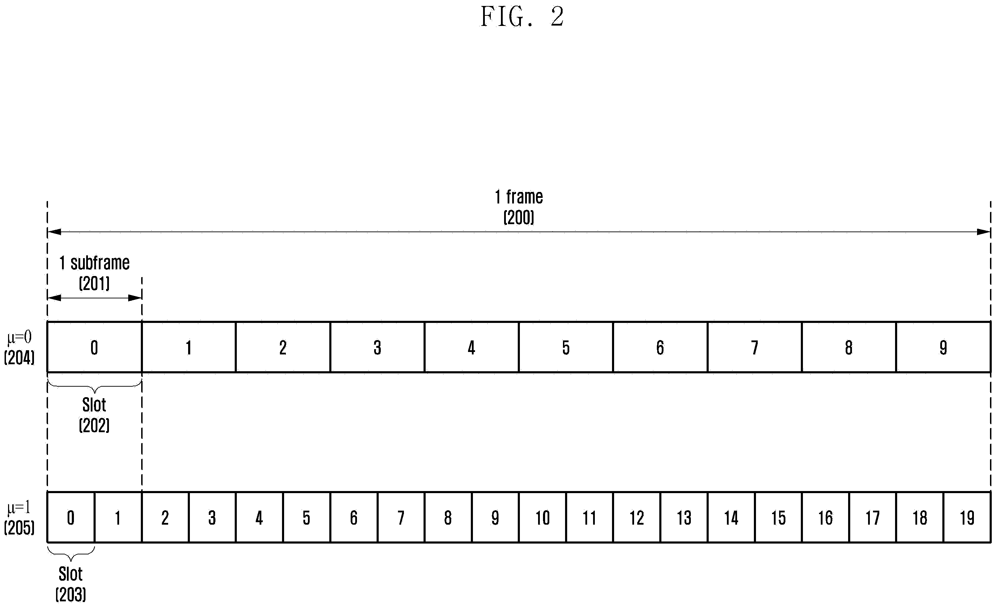

FIG. 2 illustrates frame, subframe, and slot structures in a wireless communication system, according to an embodiment of the disclosure.

In FIG. 2, an example of the structure of a frame 200, a subframe 201, and a slot 202 is illustrated. One frame 200 may be defined as 10 milliseconds (ms). One subframe 201 may be defined as 1 ms, and accordingly one frame 200 may

EP 4 478 821 A1

include a total of ten subframes 201. One slot 202 or 203 may be defined as 14 OFDM symbols (i.e., the number of symbols $N_{symb}^{slot}$ per slot=14). One subframe 201 may include one or a plurality of slots 202 and 203, and the number of slots 202 or 203 per subframe 201 may vary depending on a subcarrier spacing configuration value $\mu$ (204, 205). The example of FIG. 2 illustrates a case in which $\mu=0$ (204) and a case in which $\mu=1$(205) as the subcarrier spacing configuration value. One subframe 201 may include one slot 202 for $\mu=0$ 204, and one subframe 201 may include 2 slots 203 for $\mu=1$ 205. That is, the number ( $N_{slot}^{subframe,\mu}$ ) of slots per subframe may vary depending on the subcarrier spacing configuration value $\mu$, and accordingly the number ( $N_{slot}^{frame,\mu}$ ) of slots per frame may vary. The number ( $N_{slot}^{subframe,\mu}$ ) and the number ( $N_{slot}^{frame,\mu}$ ) according to the subcarrier spacing configuration value $\mu$ may be defined as shown in Table 1 below.

[Table 1]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

[Bandwidth part (BWP)]

Hereinafter, a configuration of a bandwidth part (BWP) in a 5G system is described in detail with reference to the drawings.

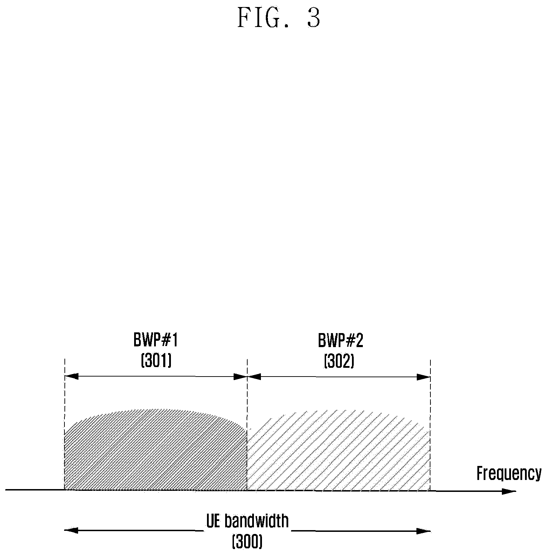

FIG. 3 illustrates an example of a configuration of a bandwidth part in a wireless communication system, according to an embodiment of the disclosure.

In FIG. 3, a UE bandwidth 300 is configured as two bandwidth parts, that is, BWP #1 301 and BWP #2 302. A base station may configure one or a plurality of BWPs in a UE, and the following information provided below in Table 2 may be configured for each BWP.

[Table 2]

```
BWP ::=                SEQUENCE {
    bwp-Id                  BWP-Id,
    locationAndBandwidth        INTEGER (1..65536),
    subcarrierSpacing           ENUMERATED {n0, n1, n2, n3, n4, n5},
    cyclicPrefix                ENUMERATED { extended }
}
```

Of course, the disclosure is not limited to the above-described example, and various parameters related to a BWP as well as the configuration information may be configured in the UE. The information may be transmitted to the UE from the base station through higher layer signaling, for example, radio resource control (RRC) signaling. Among one or a plurality of configured BWPs, at least one BWP may be activated. Information indicating whether to activate the configured BWP may be semi-statically transferred from the base station to the UE through RRC signaling or may be dynamically transferred through downlink control information (DCI).

According to some embodiments, the UE may receive a configuration of an initial BWP for initial access from the base station through a master information block (MIB) before RRC connection. More specifically, the UE may receive configuration information on a control area (hereinafter, control resource set (CORESET)) and a search space in which a physical downlink control channel (PDCCH) for receiving system information (, which may correspond to remaining system information (RMSI) or system information block 1 (SIB1),) required for initial access through the MIB may be transmitted in an initial access stage. The control area (control resource set) and the search space configured as the MIB may be considered as identity (ID) 0. The base station may inform the UE of configuration information, such as frequency allocation information for control resource set #0, time allocation information, and numerology, through the MIB. Also, the base station may inform the UE of configuration information for a monitoring period and an occasion of control resource set #0, that is, configuration information for search space #0 through the MIB. The UE may consider a frequency domain configured as control resource set #0 acquired from the MIB as an initial bandwidth part for initial access. Here, an ID of the initial BWP may be considered as 0.

The configuration for the BWP supported by the 5G system may be used for various purposes.

According to some embodiments, when a bandwidth supported by the UE is narrower than a system bandwidth, it may be supported through the BWP configuration. For example, the base station may configure a frequency location (configuration information 2) of the BWP in the UE such that the UE may transmit and receive data at a specific frequency location within the system bandwidth.

Also, according to some embodiments, to support different numerologies, the base station may configure a plurality of BWPs in the UE. For example, in order to support the UE to perform data transmission and reception using both subcarrier spacing of 15 kilohertz (kHz) and subcarrier spacing of 30 kHz, two BWPs may be configured as subcarrier spacings of 15 kHz and 30 kHz, respectively. Different BWPs may be frequency division-multiplexed, and in the case of transmitting and receiving data at specific subcarrier spacing, a BWP configured at the corresponding subcarrier spacing may be activated.

Also, according to some embodiments, to reduce power consumption of the UE, the base station may configure BWPs having different sizes of bandwidths in the UE. For example, when the UE supports a very large bandwidth, for example, 100 MHz, and always transmits and receives data through the bandwidth, very high power may be consumed. Particularly, monitoring an unnecessary downlink control channel through a large bandwidth of 100 MHz in a state in which there is no traffic is very inefficient in terms of power consumption. In order to reduce power consumption of the UE, the base station may configure a BWP having a relatively narrow bandwidth, for example, 20 MHz. The UE may perform a monitoring operation in the bandwidth part of 20 MHz in a state in which there is no traffic, and if data is generated, may transmit and receive the data through the bandwidth part of 100 MHz according to an instruction from the base station.

In a method of configuring the BWP, UEs before RRC connection may receive configuration information on an initial bandwidth part through an MIB in an initial access stage. More specifically, the UE may receive a configuration of a control resource set (CORESET) for a downlink control channel in which DCI for scheduling a system information block (SIB) may be transmitted from an MIB of a physical broadcast channel (PBCH). A bandwidth of the control resource set configured as the MIB may be considered as an initial bandwidth part, and the UE may receive a physical downlink shared channel (PDSCH) in which the SIB is transmitted, through the configured initial bandwidth part. The initial BWP may be used not only for reception of the SIB but also for other system information (OSI), paging, or random access (RA).


[BWP change]

When one or more BWPs are configured in the UE, the BS may indicate a change (or switching or transition) in the BWPs to the UE using a BWP indicator field in DCI. For example, in FIG. 3, when a currently activated BWP of the UE is BWP #1 301, the base station may indicate BWP #2 302 to the UE through a BWP indicator in the DCI and the UE may make a BWP change to BWP #2 302 indicated through the received BWP indicator in the DCI.

As described above, since the DCI-based BWP change may be indicated by the DCI for scheduling the PDSCH or the PUSCH, the UE needs to be able to receive or transmit the PDSCH or the PUSCH scheduled by the corresponding DCI in the changed BWP without any difficulty if the UE receives a BWP change request. To this end, requirements for a delay time (TBWP) required for the BWP change is specified in the standard, and may be defined, for example, as shown in Table 3 below.

[Table 3]

| $\mu$ | NR Slot length (ms) | BWP switch delay $T_{BWP}$ (slots) | |
| --- | --- | --- | --- |
| | | Type 1[Note1] | Type 2[Note 1] |
| 0 | 1 | 1 | 3 |
| 1 | 0.5 | 2 | 5 |
| 2 | 0.25 | 3 | 9 |

(continued)

| $\mu$ | NR Slot length (ms) | BWP switch delay $T_{BWP}$ (slots) | |
|---|---|---|---|
| | | Type 1[Note1] | Type 2[Note 1] |
| 3 | 0.125 | 6 | 18 |
| Note 1: Depends on UE capability. Note 2: If the BWP switch involves changing of SCS, the BWP switch delay is determined by the larger one between the SCS before BWP switch and the SCS after BWP switch. | | | |

The requirements for the BWP change delay time may support type 1 or type 2 according to UE capability. The UE may report a supportable BWP delay time type to the base station.

When the UE receives DCI including a BWP change indicator in slot n according to the requirements for the BWP change delay time, the UE may complete a change to a new BWP indicated by the BWP change indicator at a point in time that is not later than slot n+TBWP and may transmit and receive a data channel scheduled by the corresponding DCI in the changed new BWP. When the base station desires to schedule a data channel in the new BWP, the base station may determine time domain resource allocation for the data cannel in consideration of the BWP change delay time (TBWP) of the UE. That is, when scheduling the data channel in the new BWP, the base station may schedule the corresponding data channel after the BWP change delay time using a method of determining the time domain resource allocation for the data channel. Accordingly, the UE may not expect that the DCI indicating the BWP change indicates a slot offset (K0 or K2) value smaller than the BWP change delay time (TBWP).

If the UE receives DCI indicating the BWP change (e.g., DCI format 1_1 or 0_1), the UE may perform no transmission or reception during a time interval from a third symbol of a slot for receiving the PDCCH including the corresponding DCI to a start point of a slot indicated by a slot offset (K0 or K2) indicated through a time domain resource allocation field in the corresponding DCI. For example, if the UE receives DCI indicating the BWP change in slot n and a slot offset value indicated by the corresponding DCI is K, the UE may perform no transmission or reception from a third symbol of slot n to a symbol before slot n+K (i.e., last symbol of slot n+K-1).

[SS/PBCH Block]

Hereinafter, a synchronization signal (SS)/PBCH block in a 5G system is described.

The SS/PBCH block may be a physical layer channel block including a primary synchronization signal (PSS), a secondary synchronization signal (SSS), and a PBCH. Detailed description thereof is made below.

- PSS: The PSS is a signal that is a reference of downlink time/frequency synchronization and provides some pieces of information of a cell ID.
- SSS: The SSS is a reference of downlink time/frequency synchronization and provides remaining cell ID information that the PSS does not provide. In addition, the SSS serves as a reference signal for demodulation of a PBCH.
- PBCH: The PBCH provides necessary system information required for transmitting and receiving a data channel and a control channel by the UE. The necessary system information may include search space-related control information indicating radio resource mapping information of the control channel and scheduling control information for a separate data channel for transmitting system information.
- SS/PBCH block: The SS/PBCH block includes a combination of PSS, SSS, and PBCH. One or a plurality of SS/PBCH blocks may be transmitted within a time of 5 ms, and each of the transmitted SS/PBCH blocks may be distinguished by index.

The UE may detect the PSS and the SSS in an initial access stage and decode the PBCH. The UE may acquire an MIB from the PBCH and receive a configuration of control resource set (CORESET) #0 (corresponding to a control resource set of which control resource set index is 0) from the acquired MIB. The UE may monitor control resource set #0 with the assumption that the selected SS/PBCH block and a demodulation reference signal (DMRS) transmitted in control resource set #0 are quasi co-located (QCLed). The UE may receive system information through downlink control information transmitted in control resource set #0. The UE may acquire configuration information related to a random access channel (RACH) required for initial access from the received system information. The UE may transmit a physical RACH (PRACH) to the base station in consideration of the selected SS/PBCH block index, and the base station receiving the PRACH may acquire the SS/PBCH block index selected by the UE. The base station may know which block is selected by the UE from among the SS/PBCH blocks and that control resource set #0 related thereto is monitored.

[Discontinuous reception (DRX)]

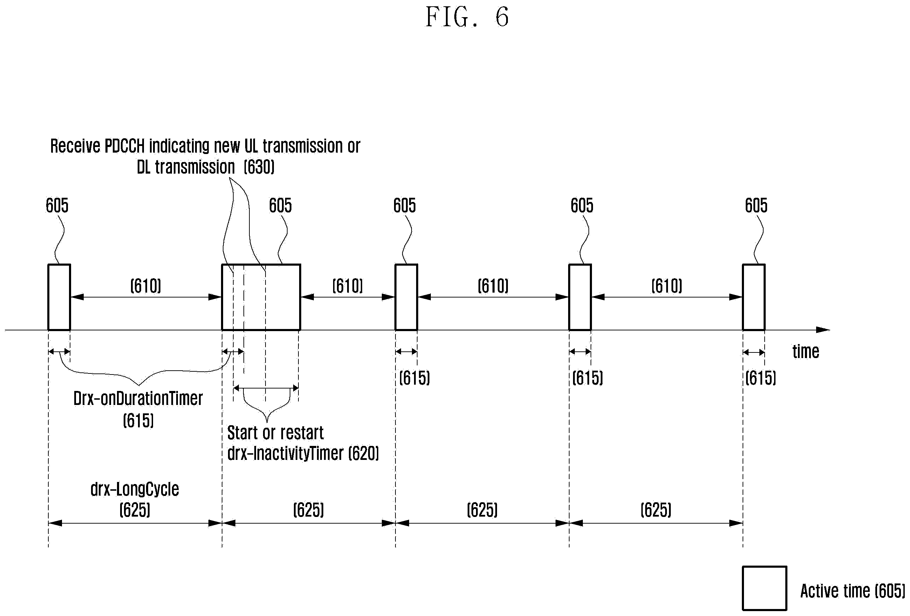

FIG. 6 illustrates an example of discontinuous reception (DRX).

DRX is an operation in which the UE using a service discontinuously receives data in an RRC-connected state in which a radio link is established between the base station and the UE. When DRX is applied, the UE may turn on a receiver at a specific point in time and monitor a control channel, and when there is no data received for a predetermined period, turn off the receiver to reduce power consumption of the UE. The DRX operation may be controlled by a MAC layer device on the basis of various parameters and a timer.

Referring to FIG. 6, an active time 605 is a time during which the UE wakes up every DRX cycle and monitors a PDCCH. The active time 605 may be defined as follows.

- drx-onDurationTimer or drx-InactivityTimer or drx-RetransmissionTimerDL or drx-RetransmissionTimerUL or ra-ContentionResolutionTimer is running; or
- a Scheduling Request is sent on PUCCH and is pending; or
- a PDCCH indicating a new transmission addressed to the C-RNTI of the MAC entity has not been received after successful reception of a Random Access Response for the Random Access Preamble not selected by the MAC entity among the contention-based Random Access Preamble

drx-onDurationTimer, drx-InactivityTimer, drx-RetransmissionTimerDL, drx-RetransmissionTimerUL, and ra-ContentionResolutionTimer are timers of which values are configured by the base station, and have functions of allowing the UE to monitor a PDCCH in a situation in which a predetermined condition is satisfied. drx-onDurationTimer 615 is a parameter for configuring a minimum time during which the UE is awake in a DRX cycle. drx-InactivityTimer 620 is a parameter for configuring a time during which the UE is additionally awake when a PDCCH indicating new uplink transmission or downlink transmission is received as indicated by reference numeral 630. drx-RetransmissionTimerDL is a parameter for configuring a maximum time during which the UE is awake in order to receive downlink retransmission in a downlink hybrid automatic repeat request (HARQ) procedure. drx-RetransmissionTimerUL is a parameter for configuring a maximum time during which the UE is awake in order to receive a grant of uplink retransmission in an uplink HARQ procedure. drx-onDurationTimer, drx-InactivityTimer, drx-RetransmissionTimerDL, and drx-RetransmissionTimerUL may be configured as, for example, a time, the number of subframes, and the number of slots. ra-ContentionResolutionTimer is a parameter for monitoring a PDCCH in a random access procedure.

An inActive time 610 is a time configured to not monitor the PDCCH or a time configured to not receive the PDCCH during the DRX operation, and the remaining time excluding the active time 605 from the entire time in which the DRX operation is performed may be the inactive time 610. When the PDCCH is not monitored during the active time 605, the UE may enter a sleep or an inActive state and reduce power consumption.

The DRX cycle refers to a cycle in which the UE wakes up and monitors the PDCCH. That is, the DRX cycle is a time interval or a cycle of an on-duration from monitoring of the PDCCH to monitoring of a next PDCCH by the UE. The DRX cycle has two types, a short DRX cycle and a long DRX cycle. The short DRX cycle may be optionally applied.

A long DRX cycle 625 is a longer cycle between the two DRX cycles configured in the UE. The UE starts the drx-onDurationTimer 615 again at a point in time at which the long DRX cycle 625 passes after a start point (e.g., a start symbol) of the drx-onDurationTimer 615 during operating in long DRX. In the case of operating in the long DRX cycle 625, the UE may start the drx-onDurationTimer 615 in a slot after drx-SlotOffset in a subframe that satisfies Equation 1 below. Here, drx-SlotOffset implies a delay before the drx-onDurationTimer 615 starts. drx-SlotOffset may be configured as, for example, a time and the number of slots.

[Equation 1]

$$[(SFN \text{ X } 10) + \text{subframe number}] \text{ modulo } (\text{drx-LongCycle}) = \text{drx-StartOffset}$$

Here, drx-LongCycleStartOffset and drx-StartOffset may be used to define a subframe for starting the long DRX cycle 625. drx-LongCycleStartOffset may be configured as, for example, time, the number of subframes, and the number of slots.

[PDCCH: Related to DCI]

Hereinafter, DCI in a 5G system is described in detail.

In the 5G system, scheduling information for uplink data (or a physical uplink data channel (PUSCH)) or downlink data (or a physical downlink data channel (PDSCH)) is transmitted from the base station to the UE through DCI. The UE may monitor a fallback DCI format and a non-fallback DCI format for the PUSCH or the PDSCH. The fallback DCI format may include a fixed field predefined between the base station and the UE, and the non-fallback DCI format may include a configurable field.

The DCI may be transmitted through a physical downlink control channel (PDCCH) via a channel coding and modulation process. A cyclic redundancy check (CRC) may be added to a DCI message payload and may be scrambled by a radio network temporary identifier (RNTI) corresponding to the identity of the UE. Depending on the purpose of a DCI message, for example, UE-specific data transmission, a power control command, or a random access response, different RNTIs may be used. That is, the RNTI is included in a CRC calculation process and transmitted, without being explicitly transmitted. If the DCI message transmitted through the PDCCH is received, the UE may identify the CRC through the allocated RNTI, and may recognize that the corresponding message is transmitted to the UE when the CRC is determined to be correct on the basis of the CRC identification result.

For example, DCI for scheduling a PDSCH for system information (SI) may be scrambled by an SI-RNTI. DCI for scheduling a PDSCH for a random access response (RAR) message may be scrambled by an RA-RNTI. DCI for scheduling a PDSCH for a paging message may be scrambled by a P-RNTI. DCI for notifying a slot format indicator (SFI) may be scrambled by an SFI-RNTI. DCI for notifying transmit power control (TPC) may be scrambled with a TPC-RNTI. DCI for scheduling a UE-specific PDSCH or PUSCH may be scrambled by a cell RNTI (C-RNTI).

DCI format 0_0 may be used for fallback DCI for scheduling a PUSCH and, here, the CRC may be scrambled by a C-RNTI. DCI format 0_0 in which the CRC is scrambled by the C-RNTI may include, for example, information as shown in Table 4 below.

[Table 4]

| |
|---|
| - Identifier for DCI formats - [1] bit |
| - Frequency domain resource assignment $-\lceil\lceil log_2(N_{RB}^{UL,BWP}(N_{RB}^{UL,BWP}+1)/2)\rceil\rceil$ bits |
| - Time domain resource assignment - X bits |
| - Frequency hopping flag - 1 bit. |
| - Modulation and coding scheme - 5 bits |
| - New data indicator - 1 bit |
| - Redundancy version - 2 bits |
| - HARQ process number - 4 bits |
| - TPC command for scheduled PUSCH - [2] bits |
| - UL/SUL indicator - 0 or 1 bit |

DCI format 0_1 may be used for non-fallback DCI for scheduling a PUSCH and, here, the CRC may be scrambled by a C-RNTI. DCI format 0_1 in which the CRC is scrambled by the C-RNTI may include, for example, information as shown in Table 5 below.

[Table 5]

| |
|---|
| - Carrier indicator - 0 or 3 bits |
| - UL/SUL indicator - 0 or 1 bit |
| - Identifier for DCI formats - [1] bits |
| - Bandwidth part indicator - 0, 1 or 2 bits |
| - Frequency domain resource assignment |
| • For resource allocation type 0, $\lceil N_{RB}^{UL,BWP}/P\rceil$ bits |
| - For resource allocation type 1, $\lceil log_2(N_{RB}^{UL,BWP}(N_{RB}^{UL,BWP}+1)/2)\rceil$ bits |
| - Time domain resource assignment -1, 2, 3, or 4 bits |
| - VRB-to-PRB mapping - 0 or 1 bit, only for resource allocation type 1. |
| • 0 bit if only resource allocation type 0 is configured; |
| - 1 bit otherwise. |

(continued)

- Frequency hopping flag - 0 or 1 bit, only for resource allocation type 1.
  • 0 bit if only resource allocation type 0 is configured;
  • 1 bit otherwise.
- Modulation and coding scheme - 5 bits
- New data indicator - 1 bit
- Redundancy version - 2 bits
- HARQ process number - 4 bits
- 1st downlink assignment index - 1 or 2 bits
  • 1 bit for semi-static HARQ-ACK codebook;
  • 2 bits for dynamic HARQ-ACK codebook with single HARQ-ACK codebook.
- 2nd downlink assignment index - 0 or 2 bits
  - 2 bits for dynamic HARQ-ACK codebook with two HARQ-ACK sub-codebooks;
  • 0 bit otherwise.
- TPC command for scheduled PUSCH - 2 bits
- SRS resource indicator

$$- \left\lceil log_2 \left( \sum_{k=1}^{L_{max}} \binom{N_{SRS}}{k} \right) \right\rceil$$

or $\lceil log_2(N_{SRS}) \rceil$ bits

$$\left\lceil log_2 \left( \sum_{k=1}^{L_{max}} \binom{N_{SRS}}{k} \right) \right\rceil$$

  • bits for non-codebook based PUSCH transmission;
  • $\lceil log_2(N_{SRS}) \rceil$ bits for codebook based PUSCH transmission.

---

- Precoding information and number of layers -up to 6 bits
- Antenna ports - up to 5 bits
- SRS request - 2 bits
- CSI request - 0, 1, 2, 3, 4, 5, or 6 bits
- CBG transmission information - 0, 2, 4, 6, or 8 bits
- PTRS-DMRS association - 0 or 2 bits.
- beta offset indicator - 0 or 2 bits
- DMRS sequence initialization - 0 or 1 bit

DCI format 1_0 may be used for fallback DCI for scheduling a PDSCH, and here, the CRC may be scrambled by a C-RNTI. DCI format 1_0 in which the CRC is scrambled by the C-RNTI may include, for example, information as shown in Table 6 below.

[Table 6]

- Identifier for DCI formats - [1] bit
- Frequency domain resource assignment
  $-\left\lceil \left\lceil log_2( N_{RB}^{DL,BWP}(N_{RB}^{DL,BWP} + 1)/2) \right\rceil \right\rceil$ bits
- Time domain resource assignment - X bits
- VRB-to-PRB mapping - 1 bit.
- Modulation and coding scheme - 5 bits
- New data indicator - 1 bit
- Redundancy version - 2 bits
- HARQ process number - 4 bits
- Downlink assignment index - 2 bits
- TPC command for scheduled PUCCH - [2] bits
- PUCCH resource indicator - 3 bits

(continued)

| - PDSCH-to-HARQ feedback timing indicator - [3] bits |

DCI format 1_1 may be used for non-fallback DCI for scheduling a PDSCH and, here, the CRC may be scrambled by a C-RNTI. DCI format 1_1 in which the CRC is scrambled by the C-RNTI may include, for example, information as shown in Table 7 below.

[Table 7]

- Carrier indicator - 0 or 3 bits
- Identifier for DCI formats - [1] bits
- Bandwidth part indicator - 0, 1 or 2 bits
- Frequency domain resource assignment

　　• For resource allocation type 0, $\left\lceil N_{RB}^{DL,BWP}/P \right\rceil$ bits

　　• For resource allocation type 1, $\left\lceil log_2\left(N_{RB}^{DL,BWP}\left(N_{RB}^{DL,BWP}+1\right)/2\right)\right\rceil$ bits

- Time domain resource assignment -1, 2, 3, or 4 bits
- VRB-to-PRB mapping - 0 or 1 bit, only for resource allocation type 1.
　　• 0 bit if only resource allocation type 0 is configured;
　　• 1 bit otherwise.
- PRB bundling size indicator - 0 or 1 bit
- Rate matching indicator - 0, 1, or 2 bits
- ZP CSI-RS trigger - 0, 1, or 2 bits
For transport block 1:
- Modulation and coding scheme - 5 bits
- New data indicator - 1 bit
- Redundancy version - 2 bits
For transport block 2:
- Modulation and coding scheme - 5 bits
- New data indicator - 1 bit
- Redundancy version - 2 bits
- HARQ process number - 4 bits
- Downlink assignment index - 0 or 2 or 4 bits
- TPC command for scheduled PUCCH - 2 bits
- PUCCH resource indicator - 3 bits
- PDSCH-to-HARQ_feedback timing indicator - 3 bits
- Antenna ports - 4, 5 or 6 bits
- Transmission configuration indication - 0 or 3 bits
- SRS request - 2 bits
- CBG transmission information - 0, 2, 4, 6, or 8 bits
- CBG flushing out information - 0 or 1 bit
- DMRS sequence initialization - 1 bit

[PDCCH: CORESET, REG, CCE, Search Space]

Hereinafter, a downlink control channel in a 5G communication system is described in more detail with reference to the drawings.

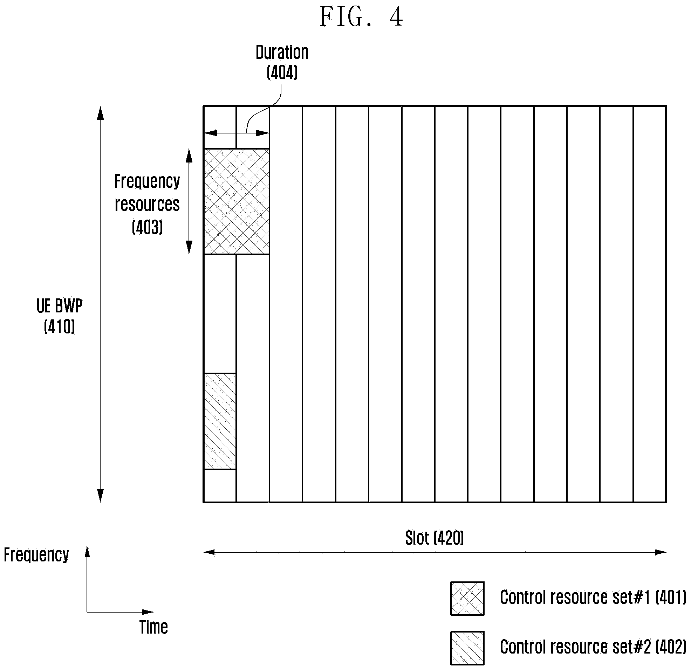

FIG. 4 illustrates an example of a configuration of a control area (hereinafter, control resource set (CORESET)) in which a downlink control channel is transmitted in a 5G wireless communication system. FIG. 4 illustrates an example in which a UE bandwidth part 410 is configured in the frequency axis and two control areas (control resource set #1 401 and control resource set #2 402) are configured in a single slot 420 in the time axis. The control resource sets 401 and 402 may be configured in specific frequency resources 403 within the entire UE BWP 410 in the frequency axis. A control resource set may be configured as one or a plurality of OFDM symbols in the time axis, which may be defined as a control resource set duration 404. Referring to the example of FIG. 4, the control resource set #1 401 may be configured as a control resource set duration of two symbols, and control resource set #2 402 may be configured as a control resource set duration of one symbol.

The above-described control resource sets in the 5G may be configured through higher layer signaling (e.g., system information, MIB, and RRC signaling) in the UE by the BS. Configuring the control resource set in the UE implies providing information, such as a control resource set identity, a frequency location of the control resource set, and a symbol length of the control resource set. For example, the following information may be included as shown in Table 8 below.

[Table 8]

```
ControlResourceSet ::=                    SEQUENCE {
    -- Corresponds to L1 parameter 'CORESET-ID'

    controlResourceSetId              ControlResourceSetId,
    frequencyDomainResources          BIT STRING (SIZE (45)),
    duration                          INTEGER (1..maxCoReSetDuration),
    cce-REG-MappingType               CHOICE {
        interleaved                   SEQUENCE {

            reg-BundleSize            ENUMERATED {n2, n3, n6},

            precoderGranularity           ENUMERATED {sameAsREG-bundle,
            allContiguousRBs},

            interleaverSize           ENUMERATED {n2, n3, n6}

            shiftIndex                INTEGER(0..maxNrofPhysicalResourceBlocks-1)
        },
        nonInterleaved                NULL
    },
    tci-StatesPDCCH                   SEQUENCE(SIZE (1..maxNrofTCI-StatesPDCCH))
        OF TCI-StateId                OPTIONAL,
    tci-PresentInDCI                  ENUMERATED {enabled}
}
```

In Table 8, tci-StatesPDCCH (simply, referred to as transmission configuration indication (TCI) state) configuration information may include information on one or a plurality of SS/PBCH block indices or channel state information reference signal (CSI-RS) indices having the quasi co-located (QCL) relationship with a DMRS transmitted in corresponding CORESET.

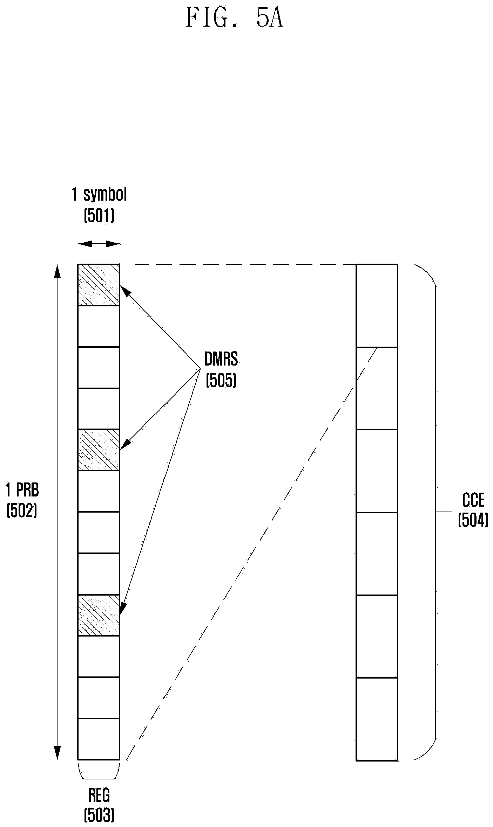

FIG. 5A illustrates an example of the basic unit of time and frequency resources included in a downlink control channel available in 5G. According to FIG. 5A, the basic unit of time and frequency resources included in the control channel may be referred to as a resource element group (REG) 503, and the REG 503 may be defined as one OFDM symbol 501 in the time axis and one PRB 502 in the frequency axis, that is, as 12 subcarriers. The base station may configure a downlink control channel allocation unit by concatenating the REGs 503.

As illustrated in FIG. 5A, when the basic unit for allocation of the downlink control channel in the 5G system is a control channel eminent (CCE) 504, one CCE 504 may include a plurality of REGs 503. In describing the REG 503 illustrated in FIG. 5A by way of example, the REG 503 may include 12 REs and, when one CCE 504 includes six REGs 503, one CCE 504 may include 72 REs. When a downlink CORESET is configured, the corresponding area may include a plurality of CCEs 504, and a specific downlink control channel may be mapped to one or the plurality of CCEs 504 according to an aggregation level (AL) within the CORESET and then transmitted. The CCEs 504 in the CORESET may be distinguished by numbers and the numbers of the CCEs 504 may be assigned according to a logical mapping scheme.

The basic unit of the downlink control channel illustrated in FIG. 5A, that is, the REG 503 may include all of REs to which DCI is mapped and areas each to which a DMRS 505, which is a reference signal for decoding the RE, are mapped. As illustrated in FIG. 5A, three DMRSs 505 may be transmitted in one REG 503. The number of CCEs required to transmit the PDCCH may be 1, 2, 4, 8, or 15 according to the aggregation level (AL), and the different number of CCEs may be used to implement link adaptation of the downlink control channel. For example, if AL=L, one downlink control channel may be transmitted through L CCEs. The UE needs to detect a signal in a state in which the UE is unaware of information on the downlink control channel, and a search space indicating a set of CCEs is defined to perform blind decoding. The search space is a set of downlink control channel candidates including CCEs for which the UE needs to attempt decoding at the given aggregation level, and there are several aggregation levels at which one set of CCEs is configured by 1, 2, 4, 8, and 16 CCEs and accordingly, the UE may have a plurality of search spaces. A search space set may be defined as a set of search spaces at all the configured aggregation levels.

The search space may be classified into a common search space and a UE-specific search space. UEs in a predetermined group or all UEs may investigate a common search space of the PDCCH in order to receive cell-common control information, such as dynamic scheduling for system information or paging messages. For example, PDSCH scheduling allocation information for transmission of an SIB including provider information of a cell may be received by investigating the common search space of the PDCCH. In the case of the common search space, UEs in a predetermined group or all UEs need to receive the PDCCH, so the common-search space may be defined as a set of pre-arranged CCEs. Scheduling allocation information for the UE-specific PDSCH or PUSCH may be received by investigating the UE-specific search space of the PDCCH. The UE-specific search space may be UE-specifically defined through a UE identity and a function of various system parameters.

A parameter for the search space of the PDCCH in the 5G system may be configured in the UE by the base station through higher layer signaling (e.g., SIB, MIB, and RRC signaling). For example, the base station may configure, in the UE, the number of PDCCH candidates at each aggregation level L, a monitoring period of the search space, a monitoring occasion in units of symbols within the slot for the search space, a search space type (common search space or UE-specific search space), a combination of a DCI format and an RNTI to be monitored in the corresponding search space, and a control resource set index for monitoring the search space. For example, the following information shown in Table 9 below may be included.

[Table 9]

```
SearchSpace ::=                        SEQUENCE {
    -- Identity of the search space. SearchSpaceId = 0 identifies the SearchSpace configured via PBCH
       (MIB) or ServingCellConfigCommon.
    searchSpaceId                      SearchSpaceId,
    controlResourceSetId               ControlResourceSetId,
    monitoringSlotPeriodicityAndOffset CHOICE {
        sl1                                NULL,
        sl2                                INTEGER (0..1),
        sl4                                INTEGER (0..3),
        sl5                            INTEGER (0..4),
        sl8                                INTEGER (0..7),
        sl10                           INTEGER (0..9),
        sl16                           INTEGER (0..15),
        sl20                           INTEGER (0..19)
    }
    duration                  INTEGER (2..2559)
    monitoringSymbolsWithinSlot            BIT STRING (SIZE (14))
    nrofCandidates                     SEQUENCE {
        aggregationLevel1                  ENUMERATED {n0, n1, n2, n3, n4, n5, n6, n8},
        aggregationLevel2                  ENUMERATED {n0, n1, n2, n3, n4, n5, n6, n8},
        aggregationLevel4                  ENUMERATED {n0, n1, n2, n3, n4, n5, n6, n8},
        aggregationLevel8                  ENUMERATED {n0, n1, n2, n3, n4, n5, n6, n8},
        aggregationLevel16                 ENUMERATED {n0, n1, n2, n3, n4, n5, n6, n8}
    },

    searchSpaceType                    CHOICE {
        -- Configures this search space as common search space (CSS) and DCI formats to monitor.
        common                             SEQUENCE {
        }
        ue-Specific                        SEQUENCE {
            -- Indicates whether the UE monitors in this USS for DCI formats 0-0 and 1-0 or for formats 0-1 and
        1-1.
            formats                            ENUMERATED {formats0-0-And-1-0,
        formats0-1-And-1-1},
            ...
        }
```

The base station may configure one or a plurality of search space sets in the UE according to configuration information. According to some embodiments, the base station may configure search space set 1 and search space set 2 in the UE, and the configuration may be performed such that DCI format A scrambled by an X-RNTI in search space set 1 is monitored in the common search space and DCI format B scrambled by a Y-RNTI in search space set 2 is monitored in the UE-specific search space.

According to configuration information, one or a plurality of search space sets may be present in the common search space or the UE-specific search space. For example, search space set #1 and search space set #2 may be configured as common search spaces, and search space set #3 and search space set #4 may be configured as UE-specific search spaces.

In the common search space, the following combinations of DCI formats and RNTIs may be monitored. Of course, the disclosure is not limited to the following examples.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI

- DCI format 2_2 with CRC scrambled by TPC-PUSCH-RNTI, TPC-PUCCH-RNTI
- DCI format 2_3 with CRC scrambled by TPC-SRS-RNTI

In the UE-specific search space, the following combinations of DCI formats and RNTIs may be monitored. Of course, the disclosure is not limited to the following examples.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

The specified RNTIs may follow the following definitions and usage.

Cell RNTI (C-RNTI): used for UE-specific PDSCH scheduling
Temporary cell RNTI (TC-RNTI): used for UE-specific PDSCH scheduling
Configured scheduling RNTI (CS-RNTI): used for semi-statically configured UE-specific PDSCH scheduling
Random access RNTI (RA-RNTI): used for PDSCH scheduling in random access stage
Paging RNTI (P-RNTI): used for PDSCH scheduling through which paging is transmitted
System information RNTI (SI-RNTI): used for PDSCH scheduling through which system information is transmitted
Interruption RNTI (INT-RNTI): used for indicating whether puncturing for PDSCH is performed
Transmit power control for PUSCH RNTI (TPC-PUSCH-RNTI): used for indicating power control command for PUSCH
Transmit power control for PUCCH RNTI (TPC-PUCCH-RNTI): used for indicating power control command for PUCCH
Transmit power control for SRS RNTI (TPC-SRS-RNTI): used for indicating power control command for SRS

The above-specified DCI formats may follow the following definition shown in Table 10 below.

[Table 10]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

In the 5G system, control resource set p and a search space of aggregation level L in search space set s may be expressed as shown in Equation 2 below.

[Equation 2]

$$L \cdot \left\{ \left( Y_{p,n_{s,f}^\mu} + \left\lfloor \frac{m_{s,n_{CI}} \cdot N_{CCE,p}}{L \cdot M_{s,max}^{(L)}} \right\rfloor + n_{CI} \right) \bmod \left\lfloor \frac{N_{CCE,p}}{L} \right\rfloor \right\} + i$$

- $L$: aggregation level
- $n_{CI}$: carrier index
- $N_{CCE,p}$: total number of CCEs present within control resource set p
- $n_{s,f}^\mu$ : slot index

- $M_{s,\max}^{(L)}$ : number of PDCCH candidates at aggregation level L

- $m_{s,n_{CI}} = 0, \ldots, M_{s,\max}^{(L)} - 1$ : PDCCH candidate index at aggregation level L

- $i = 0, \ldots, L-1$

- $Y_{p,n_{s,f}^{\mu}} = \left(A_p \cdot Y_{p,n_{s,f}^{\mu}-1}\right) \bmod D$ , $Y_{p,-1} = n_{RNT1} \neq 0$, $A_p = 39827$ *for pmod3 = 0*, $A_p = 39829$ *for pmod3 = 1*, $A_p = 39839$ *for pmod3 = 2*, $D = 65537$

- $n_{RNT}$ : UE identity

$Y_{p,n_{s,f}^{\mu}}$ may correspond to 0 in the case of the common search space.

$Y_{p,n_{s,f}^{\mu}}$ may correspond to a value that varies according to an identity of the UE (C-RNTI or ID configured by the base station to the UE) and a time index, in the case of the UE-specific search space.

In the 5G system, a set of search space sets monitored by the UE at every point in time may vary as a plurality of search space sets may be configured as different parameters (e.g., parameters in Table 9). When search space set #1 is configured on an X-slot period, search space set #2 is configured on a Y-slot period, and X and Y are different from each other, the UE may monitor all of search space set #1 and search space set #2 in a specific slot and monitor one of search space set #1 and search space set #2 in another specific slot.

[PDCCH: span]

The UE may perform UE capability report at every subcarrier spacing in a case in which a plurality of PDCCH monitoring occasion are present within a slot and, here, the concept "span" may be used. The span represents consecutive symbols in which the UE may monitor a PDCCH in the slot, and each PDCCH monitoring occasion may be in one span. The span may be expressed by (X,Y) in which X refers to the minimum number of symbols that needs to be spaced apart between first symbols of two consecutive spans and Y refers to the number of consecutive symbols for monitoring the PDCCH within one span. Here, the UE may monitor the PDCCH in a section within Y symbols from the first symbol of the span within the span.

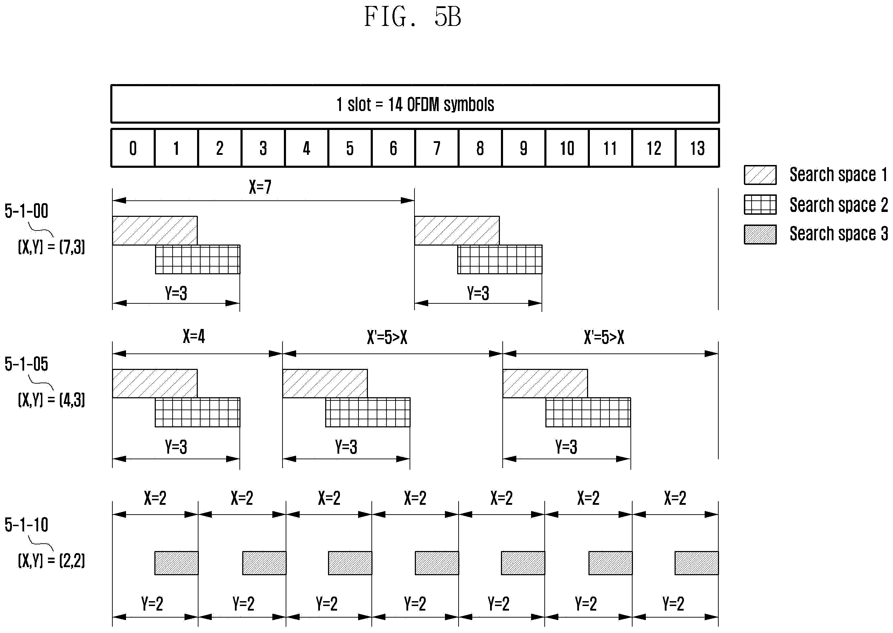

FIG. 5B illustrates a case in which the UE may have a plurality of PDCCH monitoring occasions in a slot through a span in a wireless communication system. The span may be expressed by (X,Y)=(7,3), (4,3), and (2,2), and the three cases are expressed as 5-1-00, 5-1-05, and 5-1-10 in FIG. 5B. For example, 5-1-00 represents a case in which the number of spans that may be expressed by (7,4) is 2 in the slot. An interval between first symbols of the two spans is expressed as X=7, a PDCCH monitoring occasion may be present within a total of Y=3 symbols from the first symbol of each span, and search spaces 1 and 2 are present within Y=3 symbols. As another example, 5-1-05 represents a case in which a total number of spans that may be expressed by (4,3) is 3 is in the slot, and an interval between a second span and a third span is X'=5 symbols larger than X=4.

[PDCCH: UE capability report]

A slot location of the common search space and the UE-specific search space is indicated by a monitoring-SymbolsWithinSlot parameter in Table 11-1 below, and the symbol location within the slot is indicated by a bitmap through a monitoringSymbolsWithinSlot parameter in Table 9. Meanwhile, the symbol location within the slot in which the UE may perform search space monitoring may be reported to the base station through the following UE capability.

- UE capability 1 (hereinafter, referred to as FG 3-1). When the number of monitoring occasions (MOs) for type 1 and type 3 common search spaces or the UE-specific search space is one within the slot as shown in Table 9A below, the UE capability refers to capability of monitoring a corresponding MO if the corresponding MO is within the first three symbols in the slot. The UE capability is mandatory capability that all UEs supporting NR need to support and whether to support the capability is not explicitly reported to the base station.

[Table 11-1]

| index | Feature group | Components | Field name in TS 38.331 [2] |
|-------|---------------|-----------|------------------------------|
| 3-1 | Basic DL control channel | 1) One configured CORESET per BWP per cell in addition to CORESETO<br><br>- CORESET resource allocation of 6RB bit-map and duration of 1<br>- 3 OFDM symbols for FR1<br>- For type 1 CSS without dedicated RRC configuration and for type 0, 0A, and 2 CSSs, CORESET resource allocation of 6RB bit-map and duration 1-3 OFDM symbols for FR2<br>- For type 1 CSS with dedicated RRC configuration and for type 3 CSS, UE specific SS, CORESET resource allocation of 6RB bit-map and duration 1-2 OFDM symbols for FR2<br>- REG-bundle sizes of 2/3 RBs or & RBs<br>- Interleaved and non-interleaved CCE-to-REG mapping<br>- Precoder-granularity of REG-bundle size<br>- PDCCH DMRS scrambling determination<br>- TCI state(s) for a CORESET configuration<br>2) CSS and UE-SS configurations for unicast PDCCH transmission per BWP per cell<br>- PDCCH aggregation levels 1, 2, 4, 8, 16<br>- UP to 3 search space sets in a slot for a scheduled SCell per BWP<br>This search space limit is before applying all dropping rules.<br>- For type 1 CSS with dedicated RRC configuration, type 3 CSS, and UE-SS, the monitoring occasion is within the first 3 OFDM symbols of a slot<br>- For type 1 CSS without dedicated RRC configuration and for type 0, 0A, and 2 CSS, the monitoring occasion can be any OFDM symbol(s) of a slot, with the monitoring occasions for any of Type 1- CSS without dedicated RRC configuration, or Types 0, 0A, or 2 CSS configurations within a single span of three consecutive OFDM symbols within a slot<br>3) Monitoring DCI formats 0_0, 1_0, 0_1, 1_1<br>4) Number of PDCCH blind decodes per slot with a given SCS follows Case 1-1 table<br>5) Processing one unicast DCI scheduling DL and one unicast DCI scheduling UL per slot per scheduled CC for FDD<br>6) Processing one unicast DCI scheduling DL and 2 unicast DCI scheduling UL per slot per scheduled CC for TDD | n/a |

- UE capability 2 (hereinafter, referred to as FG 3-2). When the number of MOs for the common search space or the UE-specific search space is one within the slot as shown in Table 11-2 below, the UE capability refers to capability of performing monitoring regardless of a start symbol location of the corresponding MO. The UE capability may be optionally supported by the UE, and whether to support the capability is explicitly reported to the base station.

[Table 11-2]

| Index | Feature group | Components | Field name in TS 38.331 [2] |
|---|---|---|---|
| 3-2 | PDCCH monitoring or any span of up to 3 consecutive OFDM symbols of a slot | For a given UE, all search space configurations are within the same span of 3 consecutive OFDM symbols in the slot | *pdcchMonitoringSingleOccasion* |

- UE capability 3 (hereinafter, referred to as FG 3-5, 3-5a, 3-5b). When the number of MOs for the common search space or the UE-specific search space is plural within the slot as shown in Table 11-3 below, the UE capability indicates a pattern of MOs that the UE may monitor. The pattern includes an interval X between start symbols of different MOs and a maximum symbol length Y of one MO. A combination of (X,Y) supported by the UE may be one or more of {(2,2), (4,3), (7,3)}. The UE capability may be optionally supported by the UE, and whether to support the capability and the combination (X,Y) are explicitly reported to the base station.

[Table 11-3]

| Index | Feature group | Components | Field name in TS 38.331 [2] |
|---|---|---|---|
| 3-5 | For type 1 CSS with dedicated RRC configuration, type 3 CSS, and UE-SS, monitoring occasion can be any OFDM symbol(s) of a slot for Case 2 | For type 1 CSS with dedicated RRC configuration, type 3 CSS, and UE-SS, monitoring occasion can be any OFDM symbol(s) of a slot for Case 2 | *pdcch-MonitoringAnyOccasions* { 3-5. *withoutDCI-Gap* 3-5a. *withDCI-Gap* } |
| 3-5a | For type 1 CSS with dedicated RRC configuration, type 3 CSS, and UE-SS, monitoring occasion can be any OFDM symbol(s) of a slot for Case 2 with a DCI gap | For type 1 CSS with dedicated RRC configuration, type 3 CSS and UE-SS, monitoring occasion can be any OFDM symbol(s) of a slot for Case 2, with minimum time separation (including the cross-slot boundary case) between two DL unicast DCIs, between two UL unicast DCIs, or between a DL and an UL unicast DCI in different monitoring occasions where at least one of them is not the monitoring occasions of FG-3-1, for a same UE as<br>- 2OFDM symbols for 15kHz<br>- 4OFDM symbols for 30kHz<br>- 7OFDM symbols for fiakHz with NCP<br>- 11OFDM symbols for 120kHz<br>Up to one unicast DL DCI and up to one unicast UL DCI in a monitoring occasion except for the monitoring occasions of FG 3-1.<br>In addition for TDD the minimum separation between the first two UL unicast DCIs within the first 3 OFDM symbols of a slot can be zero OFDM symbols. | |

(continued)

| Index | Feature group | Components | Field name in TS 38.331 [2] |
|---|---|---|---|
| 3-5b | All PDCCH monitoring occasion can be any OFDM symbol(s) of a slot for Case 2 with a span gap | PDCCH monitoring occasions of FG-3-1, plus additional PDCCH monitoring occasion(s) can be any OFDM symbol(s) of a slot for Case 2, and for any two PDCCH monitoring occasions belonging to different spans, where at least one of them is not the monitoring occasions of FG-3-1, in same or different search spaces, there is a minimum time separation of X OFDM symbols (including the cross-slot boundary case) between the start of two spans, where each span is of length up to Y consecutive OFDM symbols of a slot. Spans do not overlap. Every span is contained in a single slot. The same span pattern repeats in every slot. The separation between consecutive spans within and across slots may be unequal but the same (X, Y) limit must be satisfied by all spans. Every monitoring occasion is fully contained in one span. In order to determine a suitable span pattern, first a bitmap b(I), 0<=I<=13 is generated, where b(I)=1 if symbol I of any slot is part of a monitoring occasion, b(I)=0 otherwise. The first span in the span pattern begins at the smallest I for which b(I)=1. The next span in the span pattern begins at the smallest I not included in the previous span(s) for which b(I)=1. The span duration is max {maximum value of all CORESET durations, minimum value of Y in the UE reported candidate value) except possibly the last span in a slot which can be of shorter duration. A particular PDCCH monitoring configuration meets the UE capability limitation if the span arrangement satisfies the gap separation for at least one (X, Y) in the UE reported candidate value set in every slot, including cross slot boundary. For the set of monitoring occasions which are within the same span: • Processing one unicast DCI scheduling DL and one unicast DCI scheduling UL per scheduled CC across this set of monitoring occasions for FDD • Processing one unicast DCI scheduling DL and two unicast DCI scheduling UL per scheduled CC across this set of monitoring occasions for TDD • Processing two unicast DCI scheduling DL and one unicast DCI scheduling UL per scheduled CC across this set of monitoring occasions for TDD The number of different start symbol indices of spans for all PDCCH monitoring occasions per slot, including PDCCH monitoring occasions of FG-3-1, is no more than floor(14/X) (X is minimum among values reported by UE). The number of different start symbol indices of PDCCH monitoring occasions per slot including PDCCH monitoring occasions of FG-3-1, is no more than 7_ | |

(continued)

| Index | Feature group | Components | Field name in TS 38.331 [2] |
|---|---|---|---|
|  |  | The number of different start symbol indices of PDCCH monitoring occasions per half-slot including PDCCH monitoring occasions of FG-3-1 is no more than 4 in SCell. |  |

The UE may report whether to support UE capability 2 and/or UE capability 3 and a relevant parameter to the base station. The base station may perform time axis resource allocation for the common search space and the UE-specific search space on the basis of the UE capability. In the resource allocation, the BS may not place a MO at a location at which the UE may not perform monitoring.

[PDCCH: BD/CCE limit]

When a plurality of search space sets are configured in the UE, the following conditions may be considered for a method of determining a search space set that the UE needs to monitor.

If the UE receives a configuration of a value of higher layer signaling, monitoringCapabilityConfig-r16 as r15monitoringcapability, the UE defines the number of PDCCH candidates that may be monitored and a maximum value for the number of CCEs included in entire search spaces (indicating a set of entire CCE sets corresponding to a union area of a plurality of search space sets). If the UE receives a configuration of a value of monitoringCapabilityConfig-r16 as r16monitoringcapability, the UE may define the number of PDCCH candidates that may be monitored and a maximum value for the number of CCEs included in entire search spaces (indicating entire CCE sets corresponding to a union area of a plurality of search space sets) for each span.

[Condition 1: limitation on maximum number of PDCCH candidates]

In a cell with subcarrier spacing=$15 \cdot 2^{\mu}$ kHz, the maximum number $M^{\mu}$ of PDCCH candidates that the UE may monitor according to a configuration value of higher layer signaling, as described above, follows Table 12-1 below when defined on a slot basis or follows Table 12-2 below when defined on a span basis.

[Table 12-1]

| $\mu$ | Maximum number of PDCCH candidates per slot and per serving cell ($M^{\mu}$) |
|---|---|
| 0 | 44 |
| 1 | 36 |
| 2 | 22 |
| 3 | 20 |

[Table 12-2]

| | Maximum number $M^{\mu}$ of monitored PDCCH candidates per span for combination (X,Y) and per serving cell | | |
|---|---|---|---|
| $\mu$ | (2,2) | (4,3) | (7,3) |
| 0 | 14 | 28 | 44 |
| 1 | 12 | 24 | 36 |

[Condition 2: limitation on maximum number of CCEs]

In a cell with subcarrier spacing=$15 \cdot 2^{\mu}$ kHz, the maximum number $C^{\mu}$ of CCEs included in the entire search spaces (indicating a set of entire CCE sets corresponding to a union area of a plurality of search space sets) according to a configuration value of higher layer signaling, as described above, follows Table 12-3 below when defined on a slot basis or follows Table 12-4 below, when defined on a span basis.

[Table 12-3]

| $\mu$ | Maximum number of non-overlapped CCEs per slot and per serving cell ($C^\mu$) |
|---|---|
| 0 | 56 |
| 1 | 56 |
| 2 | 48 |
| 3 | 32 |

[Table 12-4]

| | Maximum number $C^\mu$ of non-overlapped CCEs per span for combination (X,Y) and per serving cell | | |
|---|---|---|---|
| $\mu$ | (2,2) | (4,3) | (7,3) |
| 0 | 18 | 36 | 56 |
| 1 | 18 | 36 | 56 |

For convenience of description, a situation satisfying both conditions 1 and 2 at a specific point in time is defined as "condition A". Accordingly, not satisfying condition A may imply that at least one of conditions 1 and 2 is not satisfied.

[PDCCH: Overbooking]

Condition A may not be satisfied at a specific point in time according to a configuration of search space sets by the base station. If condition A is not satisfied at a specific point in time, the UE may select and monitor only some of the search space sets configured to satisfy condition A at the corresponding point in time, and the base station may transmit the PDCCH through the selected search space sets.
The following method may be applied as a method of selecting some of the entire configured search space sets.
If condition A for the PDCCH is not satisfied at a specific point in time (slot), the UE (or base station) may preferentially select a search space set of which a search space type is configured as a common-search space from among search space sets present at the corresponding point in time rather than a search space set of which a search space type is configured as a UE-specific search space.
If search space sets configured as the common-search space are all selected (i.e., if condition A is satisfied even after all search spaces configured as the common-search space are selected), the UE (or base station) may select search space sets configured as the UE-specific search space. Here, if the number of search space sets configured as the UE-specific search space is plural, a search space set having a lower search space set index may have higher priority. UE-specific search space sets may be selected within a range in which condition A is satisfied in consideration of the priority.

[QCL, TCI state]

In a wireless communication system, one or more different antenna ports (or one or more channels, signals, and combinations thereof, but commonly referred to as different antenna ports for convenience of description) may be associated by a QCL configuration shown in Table 10 below. The TCI state is to inform a QCL relation between a PDCCH (or PDCCH DMRS) and another RS or channel, and that a reference antenna port A (e.g., reference RS #A) and another purpose antenna port B (e.g., target RS #B) are QCLed implies that the UE is allowed to apply some or all of large-scale channel parameters estimated in the antenna port A to channel measurement from the antenna port B. The QCL is required to associate different parameters according to situations, such as 1) time tracking influenced by average delay and delay spread, 2) frequency tracking influenced by Doppler shift and Doppler spread, 3) radio resource management (RRM) influenced by an average gain, and 4) beam management (BM) influenced by a spatial parameter. Accordingly, NR supports four types of QCL relations shown in Table 13 below.

[Table 13]

| QCL type | large-scale characteristics |
|---|---|
| A | Doppler shift, Doppler spread, average delay, delay spread |
| B | Doppler shift, Doppler spread |
| C | Doppler shift, average delay |
| D | Spatial Rx parameter |

The spatial RX parameter may refer to some or all of various parameters, such as an angle of arrival (AoA), a power angular spectrum (PAS) of AoA, an angle of departure (AoD), a PAS of AoD, a transmission/reception channel correlation, transmission/reception beamforming, and a spatial channel correlation.

The QCL relation may be configured in the UE through RRC parameter TCI-state and QCL-Info as shown in Table 14 below. Referring to Table 14 below, the base station may configure one or more TCI states in the UE and inform the UE of a maximum of two QCL relations (qcl-Type 1 and qcl-Type 2) for an RS referring to an ID of the TCI state, that is, a target RS. Here, each piece of QCL information (QCL-Info) included in the TCI state includes a serving cell index and a BWP index of a reference RS indicated by the corresponding QCL information, a type and an ID of the reference RS, and the QCL type as shown in Table 13 above.

[Table 14]

```
TCI-State ::=                        SEQUENCE {
    tci-StateId                          TCI-StateId,
    qcl-Type1                            QCL-Info,
    qcl-Type2                            QCL-Info                OPTIONAL,  -- Need R
    ...
}


QCL-Info ::=                         SEQUENCE {
    cell                                 ServCellIndex           OPTIONAL,  -- Need R
    bwp-Id                               BWP-Id                  OPTIONAL, -- Cond CSI-RS-Indicated
    referenceSignal                      CHOICE {
        csi-rs                               NZP-CSI-RS-ResourceId,
        ssb                                  SSB-Index
    },
    qcl-Type                         ENUMERATED {typeA, typeB, typeC, typeD},
    ...
}
```

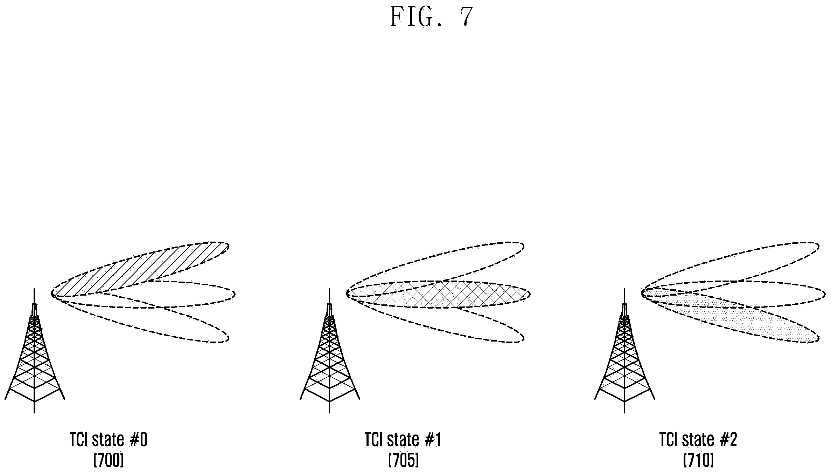

FIG. 7 illustrates an example of base station (BS) beam allocation according to a TCI state configuration. Referring to FIG. 7, the base station may transmit information on N different beams to the UE through N different TCI. For example, when N=3 as illustrated in FIG. 7, the base station may inform that a qcl-Type 2 parameter included in three TCI states 700, 705, and 710 is associated with a CSI-RS or an SSB corresponding to different beams to be configured as QCL type D and antenna ports referring to the different TCI states 700, 705, and 710 are associated with different spatial Rx parameters, that is, different beams.

Table 15-1 to Table 15-5 below show valid TCI state configurations according to a target antenna port type.

Table 15-1 shows valid TCI state configuration when the target antenna port is a CSI-RS for tracking (TRS). The TRS represents an NZP CSI-RS for which a repetition parameter is not configured and trs-Info is configured as true among CSI-RSs. Third configuration in Table 15-1 may be used for an aperiodic TRS.

[Table 15-1] Valid TCI configuration when the target antenna port is CSI-RS for tracking (TRS)

| Valid TCI state Configuration | DL RS 1 | qcl-Type1 | DL RS 2 (if configured) | qcl-Type2 (if configured) |
|---|---|---|---|---|
| 1 | SSB | QCL-TypeC | SSB | QCL-TypeD |

(continued)

| Valid TCI state Configuration | DL RS 1 | qcl-Type1 | DL RS 2 (if configured) | qcl-Type2 (if configured) |
|---|---|---|---|---|
| 2 | SSB | QCL-TypeC | CSI-RS (BM) | QCL-TypeD |
| 3 | TRS (periodic) | QCL-TypeA | TRS (same as DL RS 1) | QCL-TypeD |

Table 15-2 shows valid TCI state configuration when the target antenna port is a CSI-RS for CSI. The CSI-RS for CSI represents an NZP CSI-RS for which a parameter (e.g., repetition parameter) indicating that repetition is not configured and trs-Info is not configured as true among the CSI-RSs.

[Table 15-2] Valid TCI state configuration when the target antenna port is CSI-RS for CSI

| Valid TCI state Configuration | DL RS 1 | qcl-Type1 | DL RS 2 (if configured) | qcl-Type2 (if configured) |
|---|---|---|---|---|
| 1 | TRS | QCL-TypeA | SSB | QCL-TypeD |
| 2 | TRS | QCL-TypeA | CSI-RS for BM | QCL-TypeD |
| 3 | TRS | QCL-TypeA | TRS (same as DL RS 1) | QCL-TypeD |
| 4 | TRS | QCL-TypeB | | |

Table 15-3 shows valid TCI state configuration when the target antenna port is a CSI-RS for beam management (BM) (the same meaning as CSI-RS for L1 RSRP reporting). The CSI-RS for BM represents an NZP CSI-RS for which a repetition parameter is configured to have a value of on or off and trs-Info is not configured as true.

[Table 15-3] Valid TCI state configuration when the target antenna port is CSI-RS for BM (for L1 RSRP reporting)

| Valid TCI state Configuration | DL RS 1 | qcl-Type1 | DL RS 2 (if configured) | qd-Type2 (if configured) |
|---|---|---|---|---|
| 1 | TRS | QCL-TypeA | TRS (same as DL RS 1) | QCL-TypeD |
| 2 | TRS | QCL-TypeA | CSI-RS (BM) | QCL-TypeD |
| 3 | SS/PBCH Block | QCL-TypeC | SS/PBCH Block | QCL-TypeD |

Table 15-4 shows valid TCI state configuration when the target antenna port is a PDCCH DMRS.

[Table 15-4] Valid TCI state configuration when the target antenna port is PDCCH DMRS

| Valid TCI state Configuration | DL RS 1 | qcl-Type1 | DL RS 2 (if configured) | qcl-Type2 (if configured) |
|---|---|---|---|---|
| 1 | TRS | QCL-TypeA | TRS (same as DL RS 1) | QCL-TypeD |
| 2 | TRS | QCL-TypeA | CSI-RS (BM) | QCL-TypeD |
| 3 | CSI-RS (CSI) | QCL-TypeA | CSI-RS (same as DL RS 1) | QCL-TypeD |

Table 15-5 shows valid TCI state configuration when the target antenna port is a PDCCH DMRS.

[Table 15-5] valid TCI state configurations when the target antenna port is PDSCH DMRS

| Valid TCI state Configuration | DL RS 1 | qcl-Type1 | DL RS 2 (if configured) | qcl-Type2 (if configured) |
|---|---|---|---|---|
| 1 | TRS | QCL-TypeA | TRS | QCL-TypeD |
| 2 | TRS | QCL-TypeA | CSI-RS (BM) | QCL-TypeD |
| 3 | CSI-RS (CSI) | QCL-TypeA | CSI-RS (CSI) | QCL-TypeD |

In a representative QCL configuration method by Table 15-1 to Table 15-5 above, the target antenna port and the reference antenna port for each stage are configured and operated as "SSB"->"TRS"->"CSI-RS for CSI, CSI-RS for BM, PDCCH DMRS, or PDSCH DMRS". Through this, it is possible to aid a reception operation of the UE by associating statistical characteristics measurable from the SSB and the TRS to the respective antennas.

[PDCCH: Related to TCI state]

Specifically, TCI state combinations applicable to the PDCCH DMRS antenna port may be as shown in Table 16 below. In Table 16, a fourth row is a combination assumed by the UE before RRC configuration, and configuration after RRC is impossible.

[Table 16]

| Valid TCI state Configuration | DL RS 1 | qcl-Typel | DL RS 2 (if configured) | qcl-Type2 (if configured) |
|---|---|---|---|---|
| 1 | TRS | QCL-TypeA | TRS | QCL-TypeD |
| 2 | TRS | QCL-TypeA | CSI-RS (BM) | QCL-TypeD |
| 3 | CSI-RS (CSI) | QCL-TypeA | | |
| 4 | SS/PBCH Block | QCL-TypeA | SS/PBCH Block | QCL-TypeD |

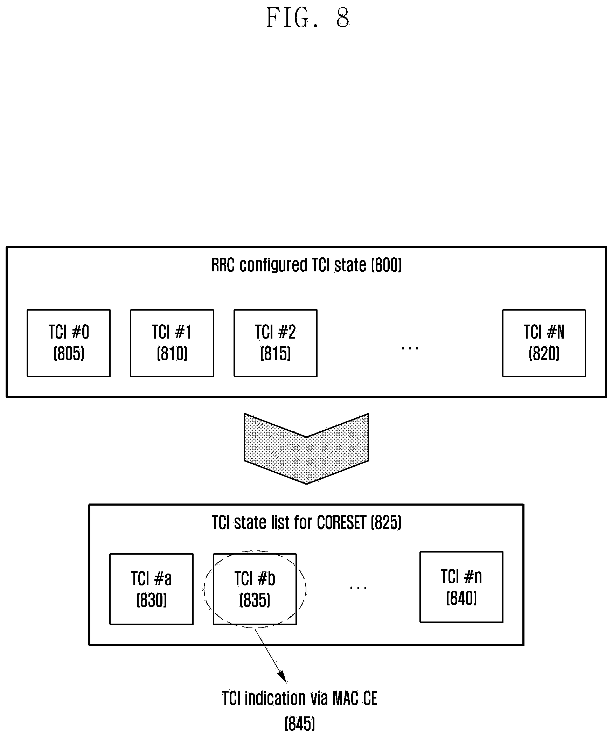

In NR, a hierarchical signaling method as illustrated in FIG. 8 is supported for dynamic allocation for a PDCCH beam. Referring to FIG. 8, the base station may configure N TCI states 805, 810, ..., 820 in the UE through RRC signaling 800 and configure some of them as TCI states for CORESET as indicated by reference numeral 825. Then, the base station may indicate one of TCI states 830, 835, and 840 for CORESET to the UE through MAC CE signaling as indicated by reference numeral 845. Then, the UE may receive a PDCCH on the basis of beam information included in the TCI state indicated by the MAC CE signaling.

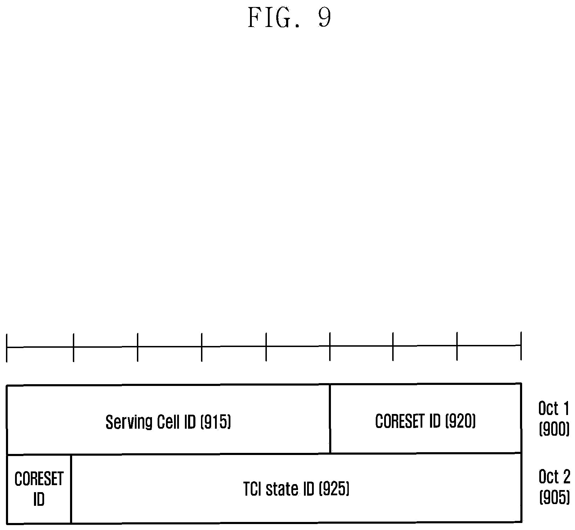

FIG. 9 illustrates a TCI indication MAC CE indication signaling structure for the PDCCH DMRS. Referring to FIG. 9, TCI indication MAC CE signaling for the PDCCH DMRS may include 2 bytes (16 bits), and may include a serving cell ID 915 of 5 bits, a CORESET ID 920 of 4 bits, and a TCI state ID 925 of 7 bits.

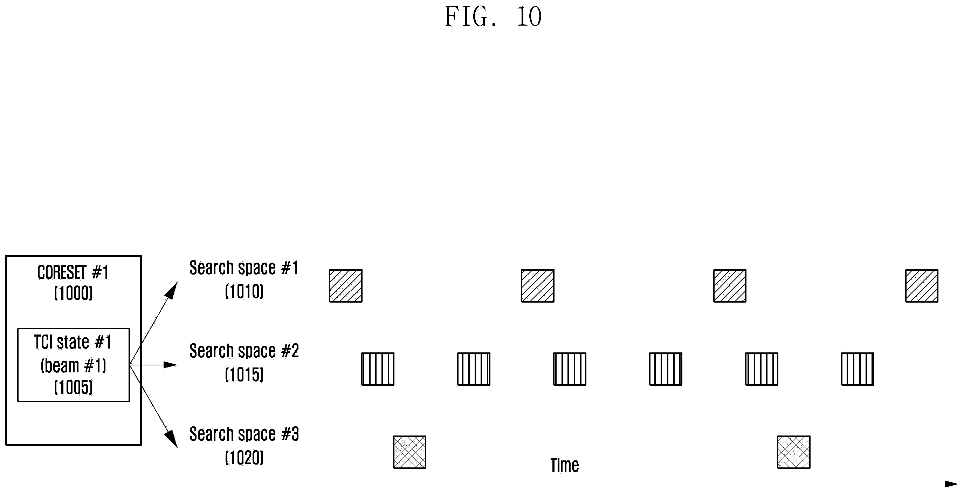

FIG. 10 illustrates an example of beam configuration of a control resource set (CORESET) and a search space according to the description. Referring to FIG. 10, the base station may indicate one of a TCI state list included in configuration of CORESET 1000 through MAC CE signaling as indicated by reference numeral 1005. Then, before another TCI state is indicated to corresponding CORESET through different MAC CE signaling, the UE may consider that the same QCL information (beam #1) 1005 is applied to one or more search spaces 1010, 1015, and 1020 associated with the CORESET. The above-described PDCCH beam allocation method has difficulty in indicating a beam change earlier than a MAC CE signaling delay and has a disadvantage of applying the same beam to all CORESETs regardless of a search space characteristic, and thus makes a flexible PDCCH beam operation difficult. Hereinafter, embodiments of the disclosure provide a more flexible PDCCH beam configuration and operation method. In describing the following embodiments of the disclosure, some distinguished examples are provided for convenience of description, but they are not exclusive and may be applied through a proper combination thereof according to circumstances.

The base station may configure one or a plurality of TCI states for specific CORESET in the UE and activate one of the configured TCI states through a MAC CE activation command. For example, {TCI state #0, TCI state #1, TCI state #2} are configured in CORESET #1 as the TCI states, and the base station may transmit a command for activating TCI state #0 assumed as the TCI state for CORESET #1 to the UE through the MAC CE. The UE may correctly receive a DMRS of the corresponding CORESET on the basis of QCL information within the activated TCI state in response to the activation command for the TCI state received through the MAC CE.

When the UE does not receive the MAC CE activation command for the TCI state of CORESET #0 for the CORESET (CORESET #0) having an index of 0, the UE may assume that a DMRS transmitted in CORESET #0 is QCLed with an SS/PBCH block identified in an initial access process or a non-contention-based random access process that is not triggered by a PDCCH command.

When the UE does not receive configuration of a TCI state for CORESET #X or the UE receives configuration of one or more TCI states but does not receive a MAC CE activation command for activating one thereof, the UE may assume that a DMRS transmitted in CORESET #X is QCLed with an SS/PBCH block identified in an initial access process.

[PDCCH: Related to QCL prioritization rule]

Hereinafter, an operation of determining QCL priority of a PDCCH is described in detail.

When a plurality of control resource sets operating by carrier aggregation in a single cell or band and present in an activated bandwidth part in a single or a plurality of cells overlap each other in the time domain while having the same or different QCL-TypeD characteristics in a specific PDCCH monitoring occasion, the UE may select a specific control resource set according to a QCL priority determination operation, and monitor control resource sets having the same QCL-TypeD characteristic as that of the selected control resource set. That is, when a plurality of control resource sets overlap each other in the time domain, the UE may receive only one QCL-TypeD characteristic. Criteria capable of determining QCL priority may be as follows

- Criterion 1. A control resource set connected to a common search interval having a lowest index in a cell corresponding to a lowest index among cells including common search intervals
- Criterion 2. A control resource set connected to a UE-specific search interval having a lowest index in a cell corresponding to a lowest index among cells including UE-specific search intervals

As described above, if each criterion is not satisfied, a next criterion is applied. For example, in a case in which control resource sets overlap each other in the time domain in a specific PDCCH monitoring occasion, if all the control resource sets are connected to UE-specific search intervals rather than common search intervals, that is, if criterion 1 is not satisfied, the UE may omit application of criterion 1 and apply criterion 2.

In the case of selecting a control resource set according to the above-described criteria, the UE may additionally consider two items below for QCL information configured in the control resource set. First, if control resource set 1 has CSI-RS 1 as a reference signal having a relation of QCL-TypeD, a reference signal having a relation of QCL-TypeD with CSI-RS 1 is SSB 1, and a reference signal having a relation of QCL-TypeD with another control resource set, control resource set 2, is SSB 1, the UE may consider that two control resource sets 1 and 2 have different QCL-TypeD characteristics. Second, if control resource set 1 has CSI-RS 1 configured in cell 1 as a reference signal having a relation of QCL-TypeD, a reference signal having a relation of QCL-TypeD with CSI-RS 1 is SSB 1, control resource set 2 has CSI-RS 2 configured in cell 2 as a reference signal having a relation of QCL-TypeD, and a reference signal having a relation of QCL-TypeD with CSI-RS 2 is SSB 1, the UE may consider that the two control resource sets have the same QCL-TypeD characteristic.

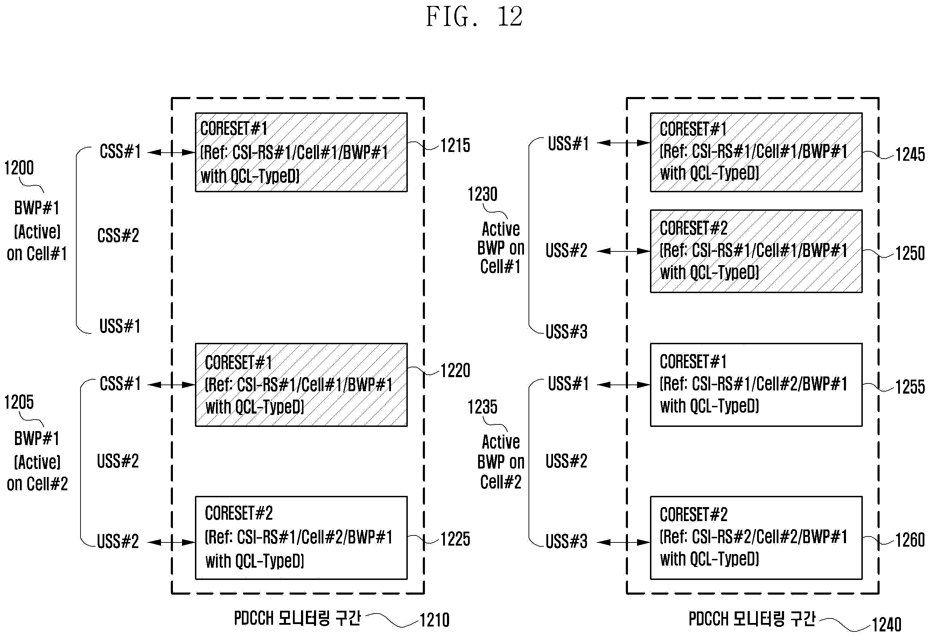

FIG. 12 illustrates a diagram of a method of selecting a receivable control resource set in consideration of priority when a UE receives a downlink control channel in a wireless communication system according to an embodiment of the disclosure. For example, a UE may be configured to receive a plurality of control resource sets overlapping each other in the time domain in a specific PDCCH monitoring occasion 1210, and each of the plurality of control resource sets may be connected to a common search space or a UE-specific search space with respect to a plurality of cells. In the corresponding PDCCH monitoring occasion, control resource set (CORESET) #1 1215 connected to common search interval #1 may be present in bandwidth part (BWP) #1 1200 of cell #1, and control resource set (CORESET) #1 1220 connected to common search interval #1 and control resource set (CORESET) #2 1225 connected to UE-specific search interval #2 may be present in bandwidth part (BWP) #1 1205 of cell #2. The control resource sets 1215 and 1220 may have a relation of QCL-TypeD with CSI-RS resource #1 configured in bandwidth part #1 of cell #1, and the control resource set 1225 may have a relation of QCL-TypeD with CSI-RS resource #1 configured in bandwidth part #1 of cell #2. Therefore, if criterion 1 is applied to the PDCCH monitoring occasion 1210, all the other control resource sets having a reference signal in the same QCL-TypeD as control resource set (CORESET) #1 1215 may be received. Therefore, the UE may receive the control resource sets 1215 and 1220 in the PDCCH monitoring occasion 1210. As another example, the UE may be configured to receive a plurality of control resource sets overlapping each other in the time domain in a specific PDCCH monitoring occasion 1240, and each of the plurality of control resource sets may be connected to a common search space or a UE-specific search space with respect to a plurality of cells. In the corresponding PDCCH monitoring occasion, control resource set (CORESET) #1 1245 connected to UE-specific search interval #1 and control resource set (CORESET) #2 1250 connected to UE-specific search interval #2 may be present in bandwidth part (BWP) #1 1230 of cell #1, and control resource set #1 (CORESET) 1255 connected to UE-specific search interval #1 and control resource set (CORESET) #2 1260 connected to UE-specific search interval #3 may be present in bandwidth part (BWP) #1 1235 of cell #2. The control resource sets 1245 and 1250 may have a relation of QCL-TypeD with CSI-RS resource #1 configured in bandwidth part #1 of cell #1, the control resource set 1255 may have a relation of QCL-TypeD with CSI-RS resource #1 configured in bandwidth part #1 of cell #2, and the control resource set 1260 may have a relation of QCL-TypeD with CSI-RS resource #2 configured in bandwidth part #1 of cell #2. However, if criterion 1 is applied to the PDCCH monitoring occasion 1240, criterion 2 that is the next criterion may be applied due to absence of the common search interval. If criterion 2 is applied to the PDCCH monitoring occasion 1240, all the other control resource sets having a reference signal in the same QCL-TypeD as the control resource set 1245 may be received. Therefore, the UE may receive the control resource sets 1245 and 1250 in the PDCCH monitoring occasion 1240.

[Related to rate matching/puncturing]

Hereinafter, a rate matching operation and a puncturing operation is described in detail.

If time and frequency resource A in which random symbol sequence A is to be transmitted overlaps with random time and frequency resource B, a rate matching or puncturing operation may be considered as an operation of transmitting or receiving channel A in consideration of resource C that is an area in which resource A and resource B overlap each other. A detailed operation may follow the contents below.

Rate matching operation

-   A base station may transmit channel A after mapping channel A to only a remaining resource area excluding resource C corresponding to an area overlapping with resource B from the entire resource A in which the base station is to transmit symbol sequence A to a UE. For example, in a case in which symbol sequence A includes {symbol #1, symbol #2, symbol #3, symbol #4}, resource A is {resource #1, resource #2, resource #3, resource #4}, and resource B is {resource #3, resource #5}, the base station may transmit symbol sequence A after sequentially mapping symbol sequence A to a remaining resource {resource #1, resource #2, resource #4} excluding {resource #3} corresponding to resource C from resource A. Consequently, the base station may transmit the symbol sequence {symbol #1, symbol #2, symbol #3} after mapping the same to {resource #1, resource #2, resource #4}, respectively.

The UE may determine resource A and resource B from scheduling information on symbol sequence A from the base station, and may determine resource C that is an area in which resource A and resource B overlap each other, through the scheduling information. The UE may receive symbol sequence A with the assumption that symbol sequence A is transmitted after being mapped to the remaining area excluding resource C from entire resource A. For example, in a case in which symbol sequence A includes {symbol #1, symbol #2, symbol #3, symbol #4}, resource A is {resource #1, resource #2, resource #3, resource #4}, and resource B is {resource #3, resource #5}, the UE may receive symbol sequence A with the assumption that symbol sequence A is sequentially mapped to the remaining resource {resource #1, resource #2, resource #4} excluding {resource #3} corresponding to resource C from resource A. Consequently, the UE may assume that the symbol sequence {symbol #1, symbol #2, symbol #3} is transmitted after being mapped to {resource #1, resource #2, resource #4}, respectively, and may perform a series of subsequent reception operations.

Puncturing Operation

If resource C corresponding to an area overlapping with resource B is present in entire resource A in which the base station is to transmit symbol sequence A to the UE, the base station may map symbol sequence A to the entire resource A and may perform transmission only in a remaining resource area excluding resource C from resource A without performing transmission in a resource area corresponding to resource C. For example, in a case in which symbol sequence A includes {symbol #1, symbol #2, symbol #3, symbol #4}, resource A is {resource #1, resource #2, resource #3, resource #4}, and resource B is {resource #3, resource #5}, the base station may map symbol sequence A {symbol #1, symbol #2, symbol #3, symbol #4} to resource A {resource #1, resource #2, resource #3, resource #4}, respectively, may only transmit a symbol sequence {symbol #1, symbol #2, symbol #4} corresponding to a remaining resource {resource #1, resource #2, resource #4} excluding {resource #3 } corresponding to resource C from resource A, and may not transmit {symbol #3} mapped to {resource #3} corresponding to resource C. Consequently, the base station may transmit the symbol sequence {symbol #1, symbol #2, symbol #4} after mapping the same to {resource #1, resource #2, resource #4}, respectively.

The UE may determine resource A and resource B from scheduling information on symbol sequence A from the base station, and may determine resource C that is an area in which resource A and resource B overlap each other, through the scheduling information. The UE may receive symbol sequence A with the assumption that symbol sequence A is mapped to entire resource A, but is transmitted only in a remaining area excluding resource C from resource area A. For example, in a case in which symbol sequence A includes {symbol #1, symbol #2, symbol #3, symbol #4}, resource A is {resource #1, resource #2, resource #3, resource #4}, and resource B is {resource #3, resource #5}, the UE may assume that symbol sequence A {symbol #1, symbol #2, symbol #3, symbol #4} is mapped to resource A {resource #1, resource #2, resource #3, resource #4}, respectively, but {symbol #3} mapped to {resource #3} corresponding to resource C is not transmitted, and may perform reception with the assumption that a symbol sequence {symbol #1, symbol #2, symbol #4} corresponding to a remaining resource (resource #1, resource #2, resource #4) excluding {resource #3} corresponding to resource C from resource A is mapped and transmitted. Consequently, the UE may assume that the symbol sequence {symbol #1, symbol #2, symbol #4} is transmitted after being mapped to {resource #1, resource #2, resource #4}, respectively, and may perform a series of subsequent reception operations.

Hereinafter, a method of configuring a rate matching resource for rate matching of a 5G communication system is described. Rate matching implies that the size of a signal is adjusted in consideration of an amount of resources available for signal transmission. For example, rate matching of a data channel may imply that a data channel is not transmitted after being mapped to a specific time and frequency resource area and the size of data is adjusted accordingly.

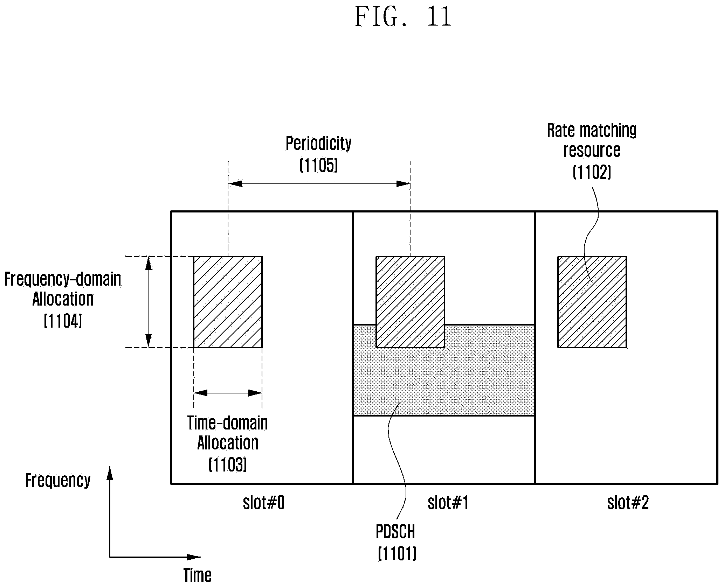

FIG. 11 illustrates a diagram of a method of transmitting or receiving data in consideration of a downlink data channel and a rate matching resource by a base station and a UE.

FIG. 11 illustrates a downlink data channel (PDSCH) 1101 and a rate matching resource 1102. The base station may configure, in the UE, one or a plurality of rate matching resources 1102 through higher layer signaling (e.g., RRC signaling). Configuration information on the rate matching resource 1102 may include time axis resource allocation information (time-domain allocation) 1103, frequency axis resource allocation information (frequency-domain allocation) 1104, and period information (periodicity) 1105. In the following description, a bitmap corresponding to the frequency axis resource allocation information 1104 is named a "first bitmap", a bitmap corresponding to the time axis resource allocation information 1103 is named a "second bitmap", and a bitmap corresponding to the period information 1105 is named a "third bitmap". If all or a portion of time and frequency resources of the scheduled data channel 1101 overlaps the configured rate matching resource 602, the base station may perform transmission by rate-matching the data channel 1101 in a part of the rate matching resource 1102, and the UE may perform reception and decoding after assuming that the data channel 1101 is rate-matched in the part of the rate matching resource 1102.

The base station may dynamically notify the UE of whether to perform rate matching of a data channel in the configured rate matching resource part, through DCI by means of an additional configuration (,which corresponds to a "rate matching indicator" in a DCI format described above). Specifically, the base station may select some of the configured rate matching resources and group the selected resources into a rate matching resource group, and may indicate whether a data channel is rate-matched for each rate matching resource group, to the UE through DCI using a bitmap scheme. For example, if four rate matching resources, RMR #1, RMR #2, RMR #3, and RMR #4, are configured, the base station may configure RMG #1={RMR #1, RMR #2} and RMG #2={RMR #3, RMR #4} as rate matching groups, and may indicate whether rate matching is performed in RMG #1 and RMG #2, to the UE through a bitmap using 2 bits in a DCI field, respectively. For example, if rate matching is needed, "1" may be indicated, and if rate matching is required not to be performed, "0" may be indicated.

5G supports the granularity of "RB symbol level" and "RE level" as a method of configuring a rate matching resource for a UE described above. More specifically, the following configuration method may be followed.

RB symbol level

A maximum of four RateMatchPatterns for each bandwidth part may be configured for a UE through higher layer signaling, and one RateMatchPattern may include the following contents.

- As a reserved resource in a bandwidth part, a resource in which a time and frequency resource area of the reserved resource is configured by a combination of a bitmap having an RB level in the frequency axis and a bitmap having a symbol level may be included. The reserved resource may be spanned over one or two slots. A time domain pattern (periodicityAndPattern) in which a time and frequency area configured by each pair of RB level and symbol level bitmaps is repeated may be additionally configured.
- A time and frequency domain resource area configured by a control resource set in a bandwidth part and a resource area corresponding to a time domain pattern configured by configuring a search space in which the corresponding resource area is repeated may be included.

RE level

The following contents may be configured for a UE through higher layer signaling.

- Configuration information (lte-CRS-ToMatchAround) on a RE corresponding to an LTE cell-specific reference signal or common reference signal (CRS) pattern may include the number (nrofCRS-Ports) of ports of an LTE CRS and a value (v-shift) of LTE-CRS-vshift(s), information (carrierFreqDL) on a location of a center subcarrier of an LTE carrier from a frequency point (e.g., reference point A) serving as a criterion, information (carrierBandwidthDL) on a bandwidth size of an LTE carrier, and subframe configuration information (mbsfn-SubframConfigList) corresponding to a multicast-broadcast single-frequency network (MBSFN). The UE may determine a location of a CRS in an NR slot corresponding to an LTE subframe, based on the information described above.
- Configuration information on a resource set corresponding to one or a plurality of zero power (ZP) CSI-RSs in a bandwidth part may be included.

[Related to LTE CRS rate matching]

Hereinafter, a rate matching process for the above-described LTE CRS is described in detail. For coexistence between LTE and new RAT (NR) (LTE-NR coexistence), NR provides a function of configuring a pattern of a cell-specific reference signal (CRS) of LTE to an NR UE. More specifically, the CRS pattern may be provided by RRC signaling including at least one parameter in a ServingCellConfig information element (IE) or a ServingCellConfigCommon IE. For example, the parameter may be lte-CRS-ToMatchAround, lte-CRS-PatternList1-r16, lte-CRS-PatternList2-r16, or crs-RateMatch-PerCORESETPoolIndex-r16.

Rel-15 NR provides a function of configuring one CRS pattern per serving cell through the lte-CRS-ToMatch-Around parameter. In Rel-16 NR, the function is expanded to make it possible to configure a plurality of CRS patterns per serving cell. More specifically, one CRS pattern per LTE carrier may be configured in a single-transmission and reception point (TRP) configuration UE, and two CRS patterns per LTE carrier may be configured in a multi-TRP configuration UE. For example, up to three CRS patterns per serving cell may be configured in a single-TRP configuration UE through the lte-CRS-PatternList1-r16 parameter. As another example, a CRS for each TRP may be configured in a multi-TRP configuration UE. That is, a CRS pattern for TRP1 may be configured for the lte-CRS-PatternList1-r16 parameter, and a CRS pattern for TRP2 may be configured through the lte-CRS-PatternList2-r16 parameter. When two TRPs are configured as described above, whether to apply both the CRS patterns of TRP1 and TRP2 to a specific PDSCH or whether to apply only the CRS pattern of one TRP is determined through the crs-RateMatch-PerCORESETPoolIndex-r16 parameter. When the crs-RateMatch-PerCORESETPoolIndex-r16 is configured to be enabled, only the CRS pattern of one TRP is applied, and otherwise, the CRS patterns of the two TRPs are both applied.

Table 17 shows a ServingCellConfig IE including the CRS pattern, and Table 18 shows a RateMatchPatternLTE-CRS IE including at least one parameter for a CRS pattern.

[Table 17]

```
ServingCellConfig ::=                  SEQUENCE {
    tdd-UL-DL-ConfigurationDedicated   TDD-UL-DL-ConfigDedicated
OPTIONAL,   -- Cond TDD
    initialDownlinkBWP                 BWP-DownlinkDedicated
OPTIONAL,   -- Need M
    downlinkBWP-ToReleaseList          SEQUENCE (SIZE (1..maxNrofBWPs)) OF BWP-Id
OPTIONAL,   -- Need N
    downlinkBWP-ToAddModList           SEQUENCE (SIZE (1..maxNrofBWPs)) OF BWP-Downlink
OPTIONAL,   -- Need N
    firstActiveDownlinkBWP-Id          BWP-Id
OPTIONAL,   -- Cond SyncAndCellAdd
    bwp-InactivityTimer                ENUMERATED {ms2, ms3, ms4, ms5, ms6, ms8, ms10, ms20,
ms30,
                                          ms40,ms50, ms60, ms80,ms100, ms200,ms300,
ms500,
                                          ms750, ms1280, ms1920, ms2560, spare10,
spare9, spare8,
                                          spare7, spare6, spare5, spare4, spare3,
spare2, spare1 }   OPTIONAL,   --Need R
    defaultDownlinkBWP-Id              BWP-Id
OPTIONAL,   -- Need S
    uplinkConfig                       UplinkConfig
OPTIONAL,   -- Need M
    supplementaryUplink                UplinkConfig
OPTIONAL,   -- Need M
    pdcch-ServingCellConfig            SetupRelease { PDCCH-ServingCellConfig }
OPTIONAL,   -- Need M
    pdsch-ServingCellConfig            SetupRelease { PDSCH-ServingCellConfig }
OPTIONAL,   -- Need M
    csi-MeasConfig                     SetupRelease { CSI-MeasConfig }
OPTIONAL,   -- Need M
    sCellDeactivationTimer             ENUMERATED {ms20, ms40, ms80, ms160, ms200, ms240,
                                          ms320, ms400, ms480, ms520, ms640, ms720,
                                          ms840, ms1280, spare2,spare1}     OPTIONAL,
-- Cond ServingCellWithoutPUCCH
    crossCarrierSchedulingConfig       CrossCarrierSchedulingConfig
OPTIONAL,   -- Need M
    tag-Id                             TAG-Id,
    dummy                              ENUMERATED {enabled}
OPTIONAL,   -- Need R
    pathlossReferenceLinking           ENUMERATED {spCell, sCell}
OPTIONAL,   -- Cond SCellOnly
    servingCellMO                      MeasObjectId
OPTIONAL,   -- Cond MeasObject
    ...,
    [[
    lte-CRS-ToMatchAround              SetupRelease { RateMatchPatternLTE-CRS }
OPTIONAL,   -- Need M
    rateMatchPatternToAddModList       SEQUENCE (SIZE (1..maxNrofRateMatchPatterns)) OF
RateMatchPattern       OPTIONAL,   -- Need N
    rateMatchPatternToReleaseList      SEQUENCE (SIZE (1..maxNrofRateMatchPatterns)) OF
```

```
RateMatchPatternId       OPTIONAL,      -- Need N
    downlinkChannelBW-PerSCS-List       SEQUENCE (SIZE (1..maxSCSs)) OF
SCS-SpecificCarrier                     OPTIONAL     -- Need S
    ]],
    [[
    supplementaryUplinkRelease          ENUMERATED {true}
OPTIONAL,    -- Need N
    tdd-UL-DL-ConfigurationDedicated-IAB-MT-r16    TDD-UL-DL-ConfigDedicated-IAB-MT-r16
OPTIONAL,    -- Cond TDD_IAB
    dormantBWP-Config-r16               SetupRelease { DormantBWP-Config-r16 }
OPTIONAL,    -- Need M
    ca-SlotOffset-r16            CHOICE {
        refSCS15kHz                     INTEGER (-2..2),
        refSCS30KHz                     INTEGER (-5..5),
        refSCS60KHz                     INTEGER (-10..10),
        refSCS120KHz                    INTEGER (-20..20)
    }
OPTIONAL,    -- Cond AsyncCA
    channelAccessConfig-r16             SetupRelease { ChannelAccessConfig-r16 }
OPTIONAL,    -- Need M
    intraCellGuardBandsDL-List-r16      SEQUENCE (SIZE (1..maxSCSs)) OF
IntraCellGuardBandsPerSCS-r16           OPTIONAL,    -- Need S
    intraCellGuardBandsUL-List-r16      SEQUENCE (SIZE (1..maxSCSs)) OF
IntraCellGuardBandsPerSCS-r16           OPTIONAL,    -- Need S
    csi-RS-ValidationWith-DCI-r16       ENUMERATED {enabled}
OPTIONAL,    -- Need R
    lte-CRS-PatternList1-r16            SetupRelease { LTE-CRS-PatternList-r16 }
OPTIONAL,    -- Need M
    lte-CRS-PatternList2-r16            SetupRelease { LTE-CRS-PatternList-r16 }
OPTIONAL,    -- Need M
    crs-RateMatch-PerCORESETPoolIndex-r16  ENUMERATED {enabled}
OPTIONAL,    -- Need R
    enableTwoDefaultTCI-States-r16      ENUMERATED {enabled}
OPTIONAL,    -- Need R
    enableDefaultTCI-StatePerCoresetPoolIndex-r16 ENUMERATED {enabled}
OPTIONAL,    -- Need R
    enableBeamSwitchTiming-r16          ENUMERATED {true}
OPTIONAL,    -- Need R
    cbg-TxDiffTBsProcessingType1-r16    ENUMERATED {enabled}
OPTIONAL,    -- Need R
    cbg-TxDiffTBsProcessingType2-r16    ENUMERATED {enabled}
OPTIONAL    -- Need R
    ]]
}
```

[Table 18]

```
        –    RateMatchPatternLTE-CRS

The IE RateMatchPatternLTE-CRS is used to configure a pattern to rate match
around LTE CRS. See TS 38.214 [19], clause 5.1.4.2.
```

**RateMatchPatternLTE-CRS information element**

```
-- ASN1START
-- TAG-RATEMATCHPATTERNLTE-CRS-START

RateMatchPatternLTE-CRS ::=         SEQUENCE {
    carrierFreqDL                    INTEGER (0..16383),
    carrierBandwidthDL                ENUMERATED {n6, n15, n25, n50, n75, n100,
spare2, spare1},
    mbsfn-SubframeConfigList           EUTRA-MBSFN-SubframeConfigList
OPTIONAL,   -- Need M
    nrofCRS-Ports                   ENUMERATED {n1, n2, n4},
    v-Shift                         ENUMERATED {n0, n1, n2, n3, n4, n5}
}

LTE-CRS-PatternList-r16 ::=         SEQUENCE (SIZE
(1..maxLTE-CRS-Patterns-r16)) OF RateMatchPatternLTE-CRS

-- TAG-RATEMATCHPATTERNLTE-CRS-STOP
-- ASN1STOP
```

| RateMatchPatternLTE-CRS field descriptions |
| --- |
| *carrierBandwidthDL* <br> BW of the LTE carrier in number of PRBs (see TS 38.214 [19], clause 5.1.4.2). |
| *carrierFreqDL* <br> Center of the LTE carrier (see TS 38.214 [19], clause 5.1.4.2). |
| *mbsfn-SubframeConfigList* <br> LTE MBSFN subframe configuration (see TS 38.214 [19], clause 5.1.4.2). |
| *nrofCRS-Ports* <br> Number of LTE CRS antenna port to rate-match around (see TS 38.214 [19], clause 5.1.4.2). |
| *v-Shift* <br> Shifting value v-shift in LTE to rate match around LTE CRS (see TS 38.214 [19], clause 5.1.4.2). |

[PDSCH: Related to frequency resource allocation]

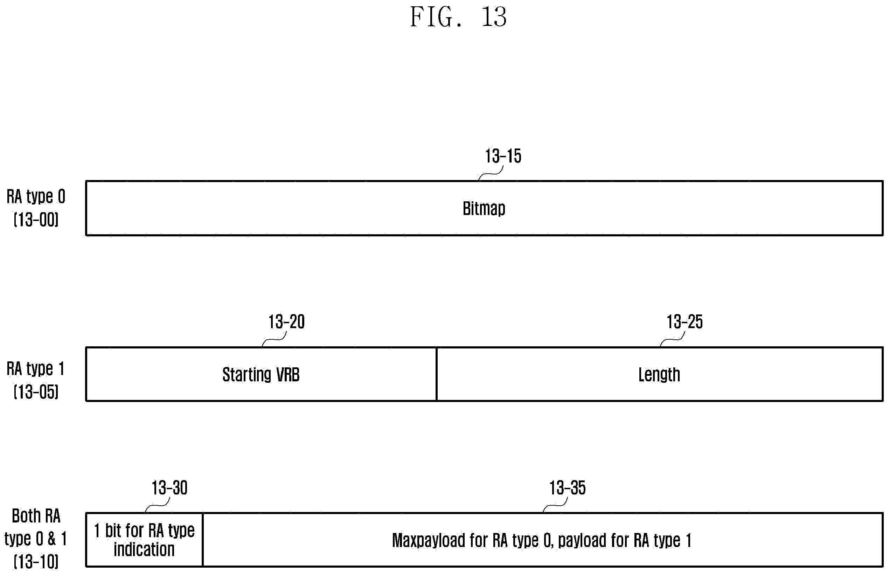

FIG. 13 illustrates an example of frequency axis resource allocation of a PDSCH in a wireless communication system, according to an embodiment of the disclosure.

FIG. 13 illustrates three frequency axis resource allocation methods of type 0 13-00, type 1 13-05, and dynamic switch 13-10 that may be configured through a higher layer in an NR wireless communication system.

Referring to FIG. 13, when the UE is configured to use only resource type 0 through higher layer signaling as indicated by reference numeral 13-00, some pieces of DCI for allocating a PDSCH to the corresponding UE includes a bitmap that includes NRBG bits. A condition therefor is described later. Here, NRBG denotes the number of RBGs, determined as shown in Table 19 below according to a BWP size allocated by a BWP indicator and a higher layer parameter rbg-Size, and data is transmitted in an RBG indicated as 1 by the bitmap.

[Table 19]

| Bandwidth Part Size | Configuration 1 | Configuration 2 |
| --- | --- | --- |
| 1 - 36 | 2 | 4 |
| 37 - 72 | 4 | 8 |
| 73 - 144 | 8 | 16 |
| 145 - 275 | 16 | 16 |

When the UE is configured to use only resource type 1 through higher layer signaling as indicated by reference numeral 13-05, some pieces of DCI for allocating the PDSCH to the corresponding UE includes frequency axis resource allocation information that includes $\lceil \log_2 (N_{RB}^{DL,BWP} (N_{RB}^{DL,BWP} +1)/2 \rceil$ bits. A condition therefor is described again later. The base station may configure a starting virtual RB (VRB) 13-20 and a length 13-25 of frequency axis resources allocated consecutively therefrom.

When the UE is configured to use both resource type 0 and resource type 1 through higher layer signaling as indicated by reference numeral 13-10, some pieces of DCI for allocating the PDSCH to the corresponding UE includes frequency axis resource allocation information that includes bits of a larger value 13-35 among payload 13-15 for configuring resource type 0 and payload 13-20 and 13-25 for configuring resource type 1. A condition therefor is described again later. Here, one bit may be added to a most front part (e.g., most significant bit (MSB)) of the frequency axis resource allocation information in the DCI, and the use of resource type 0 may be indicated when the corresponding bit is "0" and the use of resource type 1 may be indicated when the corresponding bit is "1".

[PDSCH/PUSCH: Related to time resource allocation]

Hereinafter, a method of allocating time domain resources for a data channel in a wireless communication system (e.g., 5G or NR system) is described.

The base station may configure a table for time domain resource allocation information for a downlink data channel (e.g., PDSCH) and an uplink data channel (e.g., PUSCH) in the UE through higher layer signaling (e.g., RRC signaling). A table including a maximum of maxNrofDL-Allocations=16 entries may be configured for the PDSCH, and a table including a maximum of maxNrofUL-Allocations=16 entries may be configured for the PUSCH. In an embodiment, the time domain resource allocation information may include PDCCH-to-PDSCH slot timing (corresponding to a time interval in units of slots between a point in time at which the PDCCH is received and a point in time at which the PDSCH scheduled by the received PDCCH is transmitted, and indicated by K0) or PDCCH-to-PUSCH slot timing (corresponding to a time interval in units of slots between a point in time at which the PDCCH is received and a point in time at which the PUSCH scheduled by the received PDCCH is transmitted, and indicated by K2), information on a location and a length of a start symbol in which the PDSCH or the PUSCH is scheduled in the slot, and a mapping type of the PDSCH or the PUSCH. For example, information shown in [Table 20] or [Table 21] below may be transmitted from the base station to the UE.

[Table 20]

```
                    PDSCH-TimeDomainResourceAllocationList information element

PDSCH-TimeDomainResourceAllocationList    ::=    SEQUENCE   (SIZE(1..maxNrofDL-Allocations))    OF
PDSCH-TimeDomainResourceAllocation

PDSCH-TimeDomainResourceAllocation ::=   SEQUENCE {
    k0                                                                       INTEGER(0..32)
OPTIONAL,   -- Need S

    mappingType                     ENUMERATED {typeA, typeB},

    startSymbolAndLength            INTEGER (0..127)

}
```

[Table 21]

```
                    PUSCH-TimeDomainResourceAllocation information element

PUSCH-TimeDomainResourceAllocationList ::=   SEQUENCE    {SIZE(1..maxNrofUL-Allocations))    OF
PUSCH-TimeDomainResourceAllocation

PUSCH-TimeDomainResourceAllocation ::=   SEQUENCE {
    k2                              INTEGER(0..32)        OPTIONAL,   -- Need S

    mappingType                     ENUMERATED {typeA, typeB},

    startSymbolAndLength            INTEGER (0..127)

}
```

The base station may notify the UE of one of the entries in the table for the above-described time domain resource allocation information through L1 signaling (e.g., DCI) (e.g., which may be indicated as a time domain resource allocation field in DCI). The UE may acquire time domain resource allocation information for the PDSCH or the PUSCH on the basis of the DCI received from the BS.

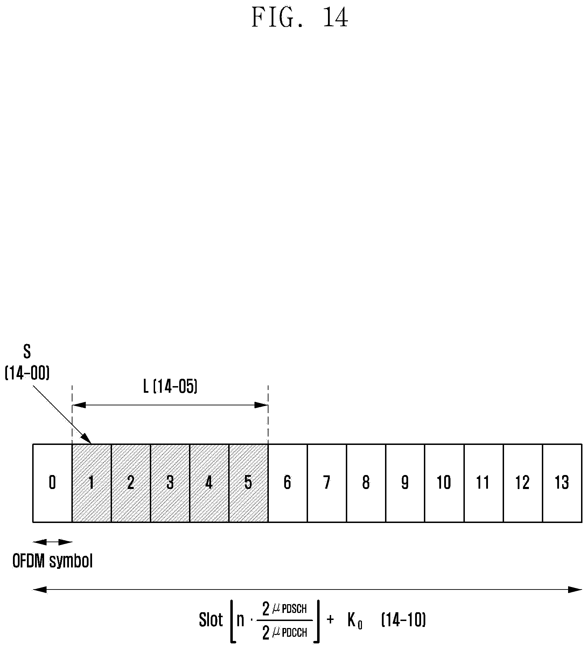

FIG. 14 illustrates an example of time axis resource allocation of a PDSCH in a wireless communication system, according to an embodiment of the disclosure.

Referring to FIG. 14, the base station may indicate a time axis location of PDSCH resource according to subcarrier spacing (SCS) ($\mu$PDSCH, $\mu$PDCCH) of a data channel and a control channel configured using a higher layer, a scheduling offset (K0) value, and an OFDM symbol start location 14-00 and a length 14-05 within one slot dynamically indicated through DCI.

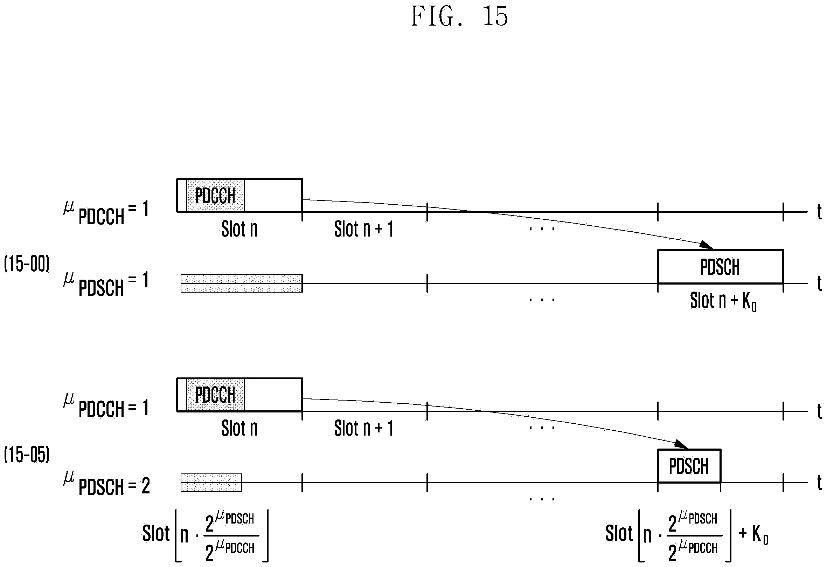

FIG. 15 illustrates an example of time axis resource allocation according to subcarrier spacing of a data channel and a control channel in a wireless communication system, according to an embodiment of the disclosure.

Referring to FIG. 15, when the data channel and the control channel have the same subcarrier spacing (PDSCH=$\mu$PDCCH) as indicated by reference numeral 15-00, slot numbers for data and control are the same as each other, and thus the base station and the UE may generate a scheduling offset according to predetermined slot offset K0. On the other hand, when the data channel and the control channel have different subcarrier spacing (PDSCH # pPDCCH) as indicated by reference numeral 15-05, slot numbers for the data and the control are different from each other, and thus the base station and the UE may generate a scheduling offset according to predetermined slot offset K0 on the basis of subcarrier spacing of the PDCCH.

[PDSCH: TCI state activation MAC-CE]

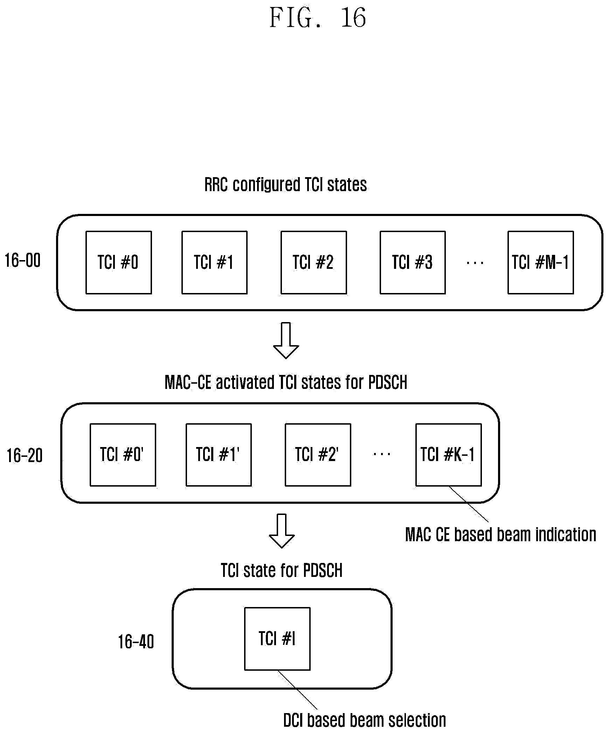

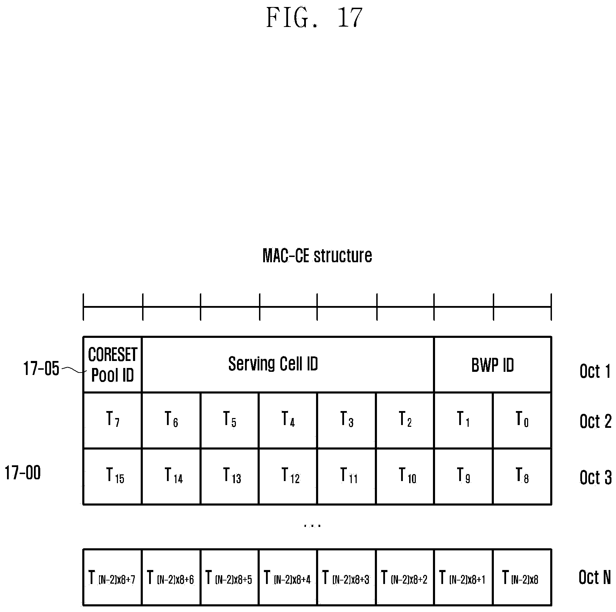

Next, a beam configuration method for a PDSCH is described. FIG. 16 illustrates a process for beam configuration and activation of a PDSCH. A list of TCI states for the PDSCH may be indicated through a higher layer list, such as RRC (as indicated by reference numeral 16-00). The list of TCI states may be indicated by, for example, tci-States-ToAddModList and/or tci-StatesToReleaseList in a BWP-specific PDSCH-Config IE. Next, a portion of the list of TCI states may be activated through an MAC CE (as indicated by reference numeral 16-20). A maximum number of activated TCI states may be determined according to capability reported by the UE. FIG. 17 illustrates an example of a MAC-CE structure 17-00 for PDSCH TCI state activation/deactivation.

The meaning of each field in the MAC CE and a value that may be configured in each field are as follows.

- **Serving Cell ID:** This field indicates the identity of the Serving Cell for which the MAC CE applies. The length of the field is 5 bits. If the indicated Serving Cell is configured as part of a simultaneousTCI-UpdateList1 or simultaneousTCI-UpdateList2 as specified in TS 38.331 [5], this MAC CE applies to all the Serving Cells configured in the set simultaneousTCI-UpdateList1 or simultaneousTCI-UpdateList2, respectively;

- **BWP ID:** This field indicates a DL BWP for which the MAC CE applies as the codepoint of the DCI bandwidth part indicator field as specified in TS 38.212 [9]. The length of the BWP ID field is 2 bits. This field is ignored if this MAC CE applies to a set of Serving Cells;

- **T$_i$:** If there is a TCI state with TCI-StateId i as specified in TS 38.331 [5], this field indicates the activation/deactivation status of the TCI state with TCI-StateId i, otherwise MAC entity shall ignore the Ti field. The Ti field is set to 1 to indicate that the TCI state with TCI-StateId i shall be activated and mapped to the codepoint of the DCI Transmission Configuration indication field, as specified in TS 38.214 [7]. The Ti field is set to 0 to indicate that the TCI state with TCI-StateId i shall be deactivated and is not mapped to the codepoint of the DCI Transmission Configuration Indication field. The codepoint to which the TCI State is mapped is determined by its ordinal position among all the TCI States with Ti field set to 1, i.e. the first TCI State with T$_i$ field set to 1 shall be mapped to the codepoint value 0, second TCI State with Ti field set to 1 shall be mapped to the codepoint value 1 and so on. The maximum number of activated TCI states is 8;

- **CORESET Pool ID:** This field indicates that mapping between the activated TCI states and the codepoint of the DCI Transmission Configuration Indication set by field Ti is specific to the ControlResourceSetId configured with CORESET Pool ID as specified in TS 38.331 [5]. This field set to 1 indicates that this MAC CE shall be applied for the DL transmission scheduled by CORESET with the CORESET pool ID equal to 1, otherwise, this MAC CE shall be applied for the DL transmission scheduled by CORESET pool ID equal to 0. If the coresetPoolIndex is not configured for any CORESET, MAC entity shall ignore the CORESET Pool ID field in this MAC CE when receiving the MAC CE. If the Serving Cell in the MAC CE is configured in a cell list that contains more than one Serving Cell, the CORESET Pool ID field shall be ignored when receiving the MAC CE.

[PUSCH: Related to transmission scheme]

Next, a scheme of scheduling PUSCH transmission is described. PUSCH transmission may be dynamically scheduled by a UL grant in DCI, or may be operated by configured grant Type 1 or Type 2. Dynamic scheduling indication for PUSCH transmission may be performed through DCI format 0_0 or 0_1.

Configured grant Type 1 PUSCH transmission may be semi-statically configured through reception of configuredGrantConfig including rrc-ConfiguredUplinkGrant shown in Table 22 through higher signaling without receiving a UL grant in DCI. Configured grant Type 2 PUSCH transmission may be semi-persistently scheduled by the UL grant in the DCI after reception of configuredGrantConfig not including rrc-ConfiguredUplinkGrant shown in Table 22 through higher signaling. When the PUSCH transmission operates by a configured grant, parameters applied to the PUSCH transmission may be applied through configuredGrantConfig, which is higher signaling in Table 22, except for dataScramblingIdentityPUSCH, txConfig, codebookSubset, maxRank, and scaling of UCI-OnPUSCH provided by pusch-Config shown in Table 23, which is higher signaling. When transformPrecoder in configuredGrantConfig, which is higher signaling in Table 22, is provided to the UE, the UE applies tp-pi2BPSK in pusch-Config of Table 23 to the PUSCH transmission that operates by the configured grant.

[Table 22]

```
ConfiguredGrantConfig ::=            SEQUENCE {
    frequencyHopping                     ENUMERATED {intraSlot, interSlot}
OPTIONAL,    -- Need S,
    cg-DMRS-Configuration                DMRS-UplinkConfig,
    mcs-Table                            ENUMERATED {qam256, qam64LowSE}
OPTIONAL,    -- Need S
    mcs-TableTransformPrecoder           ENUMERATED {qam256, qam64LowSE}
OPTIONAL,    -- Need S
    uci-OnPUSCH                           SetupRelease { CG-UCI-OnPUSCH }
OPTIONAL,    -- Need M
    resourceAllocation                   ENUMERATED { resourceAllocationType0,
resourceAllocationType1, dynamicSwitch },
    rbg-Size                             ENUMERATED {config2}
OPTIONAL,    -- Need S
    powerControlLoopToUse                ENUMERATED {n0, n1},
    p0-PUSCH-Alpha                       P0-PUSCH-AlphaSetId,
    transformPrecoder                    ENUMERATED {enabled, disabled}
OPTIONAL,    -- Need S
    nrofHARQ-Processes                   INTEGER(1..16),
    repK                                 ENUMERATED {n1, n2, n4, n8},
    repK-RV                              ENUMERATED {s1-0231, s2-0303, s3-0000}
OPTIONAL,    -- Need R
    periodicity                          ENUMERATED {
                                         sym2, sym7, sym1x14, sym2x14,
sym4x14, sym5x14, sym8x14, sym10x14, sym16x14, sym20x14,
                                         sym32x14, sym40x14, sym64x14,
sym80x14, sym128x14, sym160x14, sym256x14, sym320x14, sym512x14,
                                         sym640x14, sym1024x14, sym1280x14,
sym2560x14, sym5120x14,
                                         sym6, sym1x12, sym2x12, sym4x12,
sym5x12, sym8x12, sym10x12, sym16x12, sym20x12, sym32x12,
                                         sym40x12, sym64x12, sym80x12,
sym128x12, sym160x12, sym256x12, sym320x12, sym512x12, sym640x12,
                                         sym1280x12, sym2560x12
    },
    configuredGrantTimer                 INTEGER (1..64)
OPTIONAL,    -- Need R
    rrc-ConfiguredUplinkGrant            SEQUENCE {
        timeDomainOffset                     INTEGER (0..5119),
        timeDomainAllocation                 INTEGER  (0..15),
        frequencyDomainAllocation            BIT STRING (SIZE(18)),
        antennaPort                          INTEGER (0..31),
        dmrs-SeqInitialization               INTEGER (0..1)
OPTIONAL,    -- Need R
        precodingAndNumberOfLayers           INTEGER (0..63),
        srs-ResourceIndicator                INTEGER (0..15)
```

```
OPTIONAL,     -- Need R
         mcsAndTBS                              INTEGER (0..31),
         frequencyHoppingOffset                 INTEGER (1..
maxNrofPhysicalResourceBlocks-1)               OPTIONAL,    -- Need R
         pathlossReferenceIndex                 INTEGER
(0..maxNrofPUSCH-PathlossReferenceRSs-1),

         ...
     }
OPTIONAL,     -- Need R
     ...

}
```

Next, a PUSCH transmission method is described. ADMRS antenna port for PUSCH transmission is the same as an antenna port for SRS transmission. The PUSCH transmission may follow each of a codebook-based transmission method and a non-codebook-based transmission method depending on whether a value of txConfig in pusch-Config of Table 23, which is higher signaling, is a "codebook" or a "nonCodebook".

As described above, the PUSCH transmission may be dynamically scheduled through DCI format 0_0 or 0_1, and may be semi-statically configured by a configured grant. If scheduling for PUSCH transmission is indicated to the UE through DCI format 0_0, the UE may perform beam configuration for the PUSCH transmission using pucch-spatialRelationnfoID corresponding to a UE-specific PUCCH resource corresponding to a lowest ID in an uplink BWP activated in a serving cell. Here, the PUSCH transmission is based on a single antenna port. The UE does not expect scheduling for PUCCH transmission through DCI format 0_0, within a BWP in which a PUCCH resource including pucch-spatialRelationDnfo is not configured. If txConfig in pusch-Config of Table 23 is not configured for the UE, the UE does not expect to be scheduled through DCI format 0_1.

[Table 23]

```
PUSCH-Config ::=                              SEQUENCE {
        dataScramblingIdentityPUSCH              INTEGER (0..1023)
OPTIONAL,    -- Need S
        txConfig                                ENUMERATED {codebook, nonCodebook}
OPTIONAL,    -- Need S
        dmrs-UplinkForPUSCH-MappingTypeA           SetupRelease { DMRS-UplinkConfig }
OPTIONAL,    -- Need M
        dmrs-UplinkForPUSCH-MappingTypeB           SetupRelease { DMRS-UplinkConfig }
OPTIONAL,    -- Need M


        pusch-PowerControl                      PUSCH-PowerControl
OPTIONAL,    -- Need M
        frequencyHopping                        ENUMERATED {intraSlot, interSlot}
OPTIONAL,    -- Need S
        frequencyHoppingOffsetLists             SEQUENCE (SIZE (1..4)) OF INTEGER (1..
maxNrofPhysicalResourceBlocks-1)


OPTIONAL,    -- Need M
        resourceAllocation                      ENUMERATED { resourceAllocationType0,
resourceAllocationType1, dynamicSwitch},
        pusch-TimeDomainAllocationList          SetupRelease
{ PUSCH-TimeDomainResourceAllocationList }              OPTIONAL,    -- Need M
        pusch-AggregationFactor                 ENUMERATED { n2, n4, n8 }
OPTIONAL,    -- Need S
        mcs-Table                               ENUMERATED {qam256, qam64LowSE}
OPTIONAL,    -- Need S
        mcs-TableTransformPrecoder              ENUMERATED {qam256, qam64LowSE}
OPTIONAL,    -- Need S
        transformPrecoder                       ENUMERATED {enabled, disabled}
OPTIONAL,    -- Need S
        codebookSubset                          ENUMERATED
{fullyAndPartialAndNonCoherent, partialAndNonCoherent,nonCoherent}


OPTIONAL, -- Cond codebookBased
        maxRank                                 INTEGER (1..4)
OPTIONAL, -- Cond codebookBased
        rbg-Size                                ENUMERATED { config2}
OPTIONAL, -- Need S
        uci-OnPUSCH                              SetupRelease { UCI-OnPUSCH}
OPTIONAL, -- Need M
        tp-pi2BPSK                              ENUMERATED {enabled}
OPTIONAL, -- Need S

        ...
}
```

Next, codebook-based PUSCH transmission is described. The codebook-based PUSCH transmission may be dynamically scheduled through DCI format 0_0 or 0_1, and may semi-statically operate by a configured grant. If a codebook-based PUSCH is dynamically scheduled by DCI format 0_1 or semi-statically configured by the configured grant, the UE determines a precoder for PUSCH transmission based on an SRS resource indicator (SRI), a transmission precoding matrix indicator (TPMI), and a transmission rank (the number of PUSCH transmission layers).

Here, the SRI may be given through an SRS resource indicator that is a field in DCI, or may be configured through srs-ResourceIndicator that is higher signaling. At least one SRS resource may be configured for the UE at the time of the codebook-based PUSCH transmission, and a maximum of two SRS resources may be configured. In a case in which the SRI is provided to the UE through the DCI, an SRS resource indicated by the SRI indicates an SRS resource corresponding to the SRI among SRS resources transmitted before a PDCCH including the corresponding SRI. Also, the TPMI and the transmission rank may be given through a field for precoding information and the number of layers in the DCI, or may be configured through precodingAndNumberOfLayers that is higher signaling. The TPMI is used to indicate a precoder

40

applied to PUSCH transmission. If one SRS resource is configured for the UE, the TPMI is used to indicate a precoder to be applied in the configured one SRS resource. If a plurality of SRS resources are configured for the UE, the TPMI is used to indicate a precoder to be applied in an SRS resource indicated by the SRI.

A precoder to be used for PUSCH transmission is selected from an uplink codebook having the number of antenna ports corresponding to a value of nrofSRS-Ports in SRS-Config that is higher signaling. In the codebook-based PUSCH transmission, the UE determines a codebook subset based on a TPMI and codebookSubset in pusch-Config that is higher signaling. The higher signaling, codebookSubset in pusch-Config, may be configured to be one of "fullyAndPartialAndNonCoherent", "partialAndNonCoherent", and "nonCoherent" based on UE capability reported to the base station by the UE. If the UE reports "partialAndNonCoherent" as UE capability, the UE does not expect that a value of codebookSubset that is higher signaling is configured to be "fullyAndPartialAndNonCoherent". Also, if the UE reports "nonCoherent" as UE capability, the UE does not expect that the value of codebookSubset corresponding to higher signaling is configured to be "fullyAndPartialAndNonCoherent" or "partialAndNonCoherent". When nrofSRS-Ports in SRS-ResourceSet corresponding to higher signaling indicates two SRS antenna ports, the UE does not expect that the value of codebookSubset corresponding to higher signaling is configured to be "partialAndNonCoherent".

One SRS resource set in which a value of usage in higher signaling, SRS-ResourceSet, is configured to be "codebook" may be configured for the UE, and one SRS resource in the SRS resource set may be indicated through an SRI. If several SRS resources are configured in an SRS resource set in which the value of usage in SRS-ResourceSet that is higher signaling is configured to be "codebook", the UE expects that a value of nrofSRS-Ports in SRS-Resource corresponding to higher signaling is configured to be identical for all the SRS resources.

The UE may transmit, to the base station, one or a plurality of SRS resources included in the SRS resource set in which the value of usage is configured to be "codebook" according to higher signaling, and the base station may select one from among the SRS resources transmitted from the UE, and indicates the UE to perform PUSCH transmission using transmission beam information on the selected SRS resource. Here, in the codebook-based PUSCH transmission, an SRI is used as information for selecting an index of one SRS resource and is included in DCI. Additionally, the base station may include, in the DCI, information indicating a TPMI and a rank to be used by the UE for PUSCH transmission. The UE may use the SRS resource indicated by the SRI, to apply a precoder indicated by the TPMI and the rank indicated based on a transmission beam of the SRS resource, and may perform the PUSCH transmission.

Next, non-codebook-based PUSCH transmission is described. The non-codebook-based PUSCH transmission may be dynamically scheduled through DCI format 0_0 or 0_1, and may semi-statically operate by a configured grant. When at least one SRS resource is configured in an SRS resource set in which a value of usage in SRS-ResourceSet that is higher signaling is configured to be "nonCodebook", the non-codebook-based PUSCH transmission may be scheduled for the UE through DCI format 0_1.

For an SRS resource set in which the value of usage in SRS-ResourceSet that is higher signaling is configured to be "nonCodebook", one connected non-zero power (NZP) CSI-RS resource may be configured for the UE. The UE may perform a calculation for a precoder for SRS transmission through measurement of the NZP CSI-RS resource connected to the SRS resource set. If a difference between a first symbol of aperiodic SRS transmission by the UE and a last reception symbol of an aperiodic NZP CSI_RS resource connected to an SRS resource set is smaller than 42 symbols, the UE does not expect that information on the precoder for SRS transmission is updated.

If a value of resource Type in SRS-ResourceSet that is higher signaling is configured to be "aperiodic", the connected NZP CSI-RS is indicated by SRS request that is a field in DCI format 0_1 or 1_1. Here, if the connected NZP CSI-RS resource is an aperiodic NZP CSI-RS resource, this implies that the connected NZP CSI-RS is present for a case in which a value of the SRS request that is a field in DCI format 0_1 or 1_1 is not "00". Here, corresponding DCI is required not to indicate scheduling of a cross carrier or a cross BWP. Also, if the value of the SRS request indicates presence of the NZP CSI-RS, the NZP CSI-RS may be located in a slot in which a PDCCH including an SRS request field is transmitted. TCI states configured for a scheduled subcarrier is not configured to be QCL-TypeD.

If a periodic or semi-persistent SRS resource set is configured, the connected NZP CSI-RS may be indicated through associatedCSI-RS in SRS-ResourceSet that is higher signaling. For non-codebook-based transmission, the UE does not expect that spatialRelationInfo that is higher signaling for an SRS resource and associatedCSI-RS in SRS-ResourceSet that is higher signaling are configured together.

When a plurality of SRS resources are configured for the UE, the UE may determine a precoder and a transmission rank to be applied to PUSCH transmission, based on an SRI indicated by the base station. Here, the SRI may be indicated through an SRS resource indicator that is a field in DCI, or may be configured through srs-ResourceIndicator that is higher signaling. Similarly to the codebook-based PUSCH transmission described above, when the SRI is provided to the UE through the DCI, an SRS resource indicated by the corresponding SRI indicates an SRS resource corresponding to the SRI among SRS resources transmitted before a PDCCH including the SRI. The UE may use one or a plurality of SRS resources for SRS transmission, and a maximum number of SRS resources and a maximum number of SRS resources simultaneously transmittable in the same symbol in one SRS resource set are determined based on UE capability reported by the UE to the base station. Here, the SRS resources simultaneously transmitted from the UE occupy the same RB. The UE configures one SRS port for each SRS resource. Only one SRS resource set may be configured in the SRS resource set in which a value of usage in SRS-ResourceSet that is higher signaling is configured to be "nonCodebook", and up to four SRS resources may be configured for non-codebook-based PUSCH transmission.

The base station transmits one NZP CSI-RS connected to an SRS resource set to the UE, and the UE calculates a precoder to be used to transmit one or a plurality of SRS resources in the SRS resource set, based on a result of measurement performed at the time of reception of the NZP CSI-RS. The UE applies the calculated precoder when transmitting, to the base station, one or a plurality of SRS resources in an SRS resource set in which usage is configured to be "nonCodebook", and the base station selects one or a plurality of SRS resources from among the received one or plurality of SRS resources. In the non-codebook-based PUSCH transmission, an SRI indicates an index that may represent a combination of one or a plurality of SRS resources, and the SRI is included in the DCI. The number of SRS resources indicated by the SRI transmitted from the base station may be the number of transmission layers of a PUSCH, and the UE applies a precoder applied to SRS resource transmission to each of the layers to transmit the PUSCH.

[Related to UE capability report]

In LTE and NR systems, the UE may perform a procedure for reporting capability supported by the UE to the corresponding base station in a state in which the UE is connected to a serving base station. In the following description, this is referred to as UE capability report.

The base station may transmit a UE capability enquiry message that makes a request for a capability report to the UE in the connected state. The message may include a UE capability request for each radio access technology (RAT) type of the base station. The request for each RAT type may include supported frequency band combination information. In the case of the UE capability enquiry message, a plurality of UE capabilities for respective RAT types may be requested through one RRC message container transmitted from the base station. Alternatively, the base station may insert the UE capability enquiry message including the UE capability request for each RAT type multiple times and transmit the same to the UE. That is, the UE capability enquiry is repeated multiple times within one message and the UE may configure a UE capability information message corresponding thereto and report the same multiple times. In a next-generation mobile communication system, a UE capability request for NR, LTE, E-UTRA-NR dual connectivity (EN-DC), and multi-RAT dual connectivity (MR-DC) may be made. Also, in general, the UE capability enquiry message is transmitted initially after the UE is connected to the base station, but may be requested under any condition when the base station needs the same.

The UE receiving a request for the UE capability report from the base station in the above stage may configure UE capability according to RAT type and band information requested by the base station. A method by which the UE configures the UE capability in the NR system is described below.

1. If the UE receives a list of LTE and/or NR bands from the base station through a UE capability request, the UE configures a band combination (BC) for EN-DC and NR stand alone (SA). That is, the UE configures a candidate list of BCs for EN-DC and NR SA on the basis of requested bands in FreqBandList. Also, the bands sequentially have priority as stated in FreqBandList.

2. If the base station sets a "eutra-nr-only" flag or an "eutra" flag and makes a request for the UE capability report, the UE completely removes NR SA BCs from the configured candidate list of BCs. This operation may be performed only when the LTE BS (eNB) makes a request for "eutra" capability.

3. Then, the UE removes fallback BCs from the candidate list of BCs configured in the above stage. Here, the fallback BC represents a BC that may be acquired by removing a band corresponding to at least one SCell from an arbitrary BC, and a BC before the removal of the band corresponding to at least one SCell may cover the fallback BC and thus the fallback BC may be omitted. This stage is applied to MR-DC, that is, LTE bands. BCs left after the stage are a final "candidate BC list".

4. The UE selects BCs suitable for the requested RAT type from the final "candidate BC list" and selects BCs to be reported. In this stage, the UE configures supportedBandCombinationList in determined order. That is, the UE configures BCs and UE capability to be reported according to the preset order of rat-Type (nr->eutra-nr->eutra). Also, the UE configures featureSetCombination for configured supportedBandCombinationList and configures a list of "candidate feature set combination" in a candidate BC list from which a list for fallback BCs (including capability at the same or lower stage) is removed. The "candidate feature set combination" may include all feature set combinations for NR and EUTRA-NR BCs, and may be acquired from a feature set combination of UE-NR-Capabilities and UE-MRDC-Capabilities containers.

5. Also, if the requested rat Type is eutra-nr and has influence, featureSetCombinations are included in all of two containers of UE-MRDC-Capabilities and UE-NR-Capabilities. However, the NR feature set includes only UE-NR-Capabilities.

After configuring the UE capability, the UE transfers a UE capability information message including the UE capability to the base station. The base station performs scheduling for the corresponding UE and transmission/reception management on the basis of the UE capability received from the UE.

[Related to CA/DC]

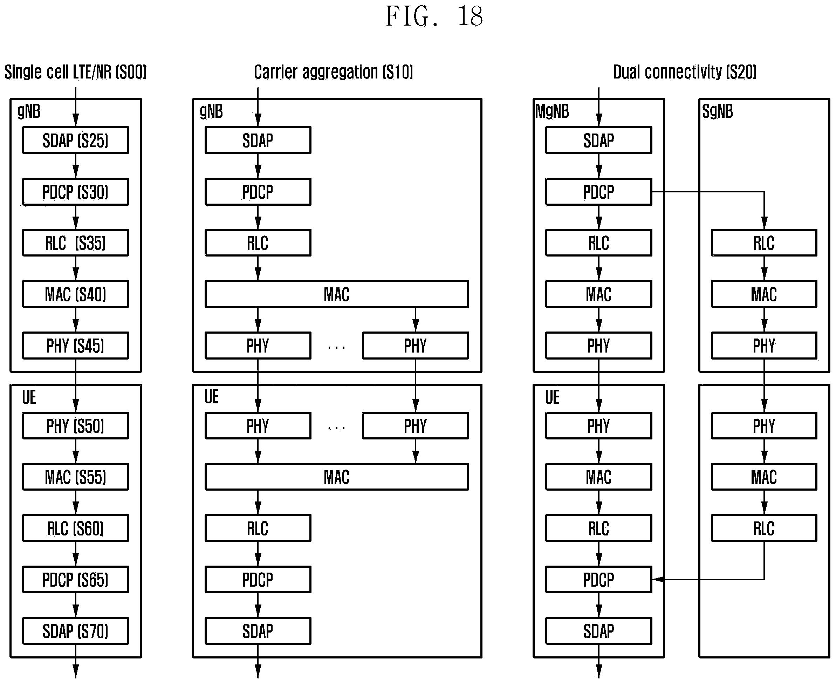

FIG. 18 illustrates a wireless protocol structure of a base station and a UE in single cell, carrier aggregation, and dual connectivity situations, according to an embodiment of the disclosure.

Referring to FIG. 18, a wireless protocol of a next-generation mobile communication system includes NR service data adaptation protocols (SDAPs) S25 and S70, NR packet data convergence protocols (PDCPs) S30 and S65, NR radio link controls (RLCs) S35 and S60, and NR medium access controls (MACs) S40 and S55 in the UE and the NR base station (gNB), respectively.

Main functions of the NR SDAP S25 or S70 may include some of the following functions.

- A user data transmission function (transfer of user plane data)
- A function of mapping a QoS flow and a data bearer for uplink and downlink (mapping between a QoS flow and a DRB for both DL and UL)
- A function of marking a QoS flow ID for uplink and downlink (marking QoS flow ID in both DL and UL packets)
- A function of mapping a reflective QoS flow to a data bearer for uplink SDAP PDUs (reflective QoS flow to DRB mapping for the UL SDAP PDUs).

For the SDAP layer device, the UE may receive a configuration as to whether to use a header of the SDAP layer device or a function of the SDAP layer device for each PDCP layer device, each bearer, or each logical channel through an RRC message. If the SDAP header is configured, a 1-bit indicator of non-access stratum (NAS) reflective QoS of the SDAP header and a 1 bit-indicator of AS reflective QoS may indicate that the UE may update or reconfigure information on mapping of QoS flow and a data bearer in uplink and downlink. The SDAP header may include QoS flow ID information indicating QoS. The QoS information may be used as data-processing-priority or scheduling information to support a seamless service.

Main functions of the NR PDCP S30 or S65 may include some of the following functions.

- A header compression and decompression function (header compression and decompression: ROHC only)
- A user data transmission function (transfer of user data)
- A sequential delivery function (in-sequence delivery of higher layer PDUs)
- A non-sequential delivery function (out-of-sequence delivery of higher layer PDUs)
- A reordering function (PDCP PDU reordering for reception)
- A duplicate detection function (duplicate detection of lower layer SDUs)
- A retransmission function (retransmission of PDCP SDUs)
- A ciphering and deciphering function (ciphering and deciphering)
- A timer-based SDU removal function (timer-based SDU discard in uplink.)

The reordering function of the NR PDCP layer device refers to a function of sequentially reordering PDCP PDUs received from a lower layer on the basis of a PDCP sequence number (SN), and may include a function of sequentially transferring the reordered data to a higher layer. Alternatively, the reordering function of the NR PDCP layer device may include a function of directly transmitting data regardless of the sequence, a function of recording PDCP PDUs lost due to the reordering, a function of reporting statuses of the lost PDCP PDUs to a transmitting side, and a function of making a request for retransmitting the lost PDCP PDUs.

Main functions of the NR RLC S35 or S60 may include some of the following functions.

- A data transmission function (transfer of higher layer PDUs)
- A sequential delivery function (in-sequence delivery of upper-layer PDUs)
- A non-sequential delivery function (out-of-sequence delivery of upper-layer PDUs)
- An automatic repeat request (ARQ) function (error correction through ARQ)
- A concatenation, segmentation, and reassembly function (concatenation, segmentation and reassembly of RLC SDUs)
- A re-segmentation function (re-segmentation of RLC data PDUs)
- A reordering function (reordering of RLC data PDUs)
- A duplicate detection function (duplicate detection)
- An error detection function (protocol error detection)
- An RLC SDU deletion function (RLC SDU discard)

- An RLC reestablishment function (RLC reestablishment)

The sequential delivery function (in-sequence delivery) of the NR RLC device refers to a function of sequentially transmitting RLC SDUs received from the lower layer to the higher layer. When one original RLC SDU is divided into a plurality of RLC SDUs and then received, the sequential delivery function (in-sequence delivery) of the NR RLC device may include a function of reassembling and transmitting the RLC SDUs, a function of reordering the received RLC PDUs on the basis of an RLC SN or a PDCP SN, a function of recording RLC PDUs lost due to the reordering, a function of reporting statuses of the lost RLC PDUs to a transmitting side, and a function of making a request for retransmitting the lost RLC PDUs. When there are lost RLC SDUs, the sequential delivery function (in-sequence delivery) of the NR RLC device may include a function of sequentially transferring only RLC SDUs preceding the lost RLC SDUs to the higher layer or a function of, if a predetermined timer expires even though there are lost RLC SDUs, sequentially transferring all RLC SDUs received before the timer starts to the higher layer. Alternatively, the sequential delivery function (in-sequence delivery) of the NR RLC device may include a function of, if a predetermined timer expires even though there are lost RLC SDUs, sequentially transferring all RLC SDUs received up to now to the higher layer. Also, the NR RLC device may process the RLC PDUs sequentially in order in which they are received (according to the arrival order regardless of a serial number or a sequence number) and may transfer the RLC PDUs to a PDCP device regardless of the sequence thereof (out-of-sequence delivery). In the case of segments, the NR RLC device may receive segments that are stored in a buffer or are to be received in the future, reconfigure the segments to be one RLC PDU, process the RLC PDU, and then transmit the same to the PDCP device. The NR RLC layer may not include a concatenation function, and the function may be performed by an NR MAC layer, or may be replaced with a multiplexing function of the NR MAC layer.

The non-sequential function (out-of-sequence delivery) of the NR RLC device refers to a function of transferring RLC SDUs received from the lower layer directly to the higher layer regardless of the sequence of the RLC SDUs, and may include, when one original RLC SDU is divided into a plurality of RLC SDUs and then received, a function of reassembling and transmitting the RLC PDUs and a function of storing RLC SNs or PDCP SNs of the received RLC PDUs, reordering the RLC PDUs, and recording lost RLC PDUs.

The NR MAC S40 or S55 may be connected to a plurality of NR RLC layer devices configured in one UE and main functions of the NR MAC may include some of the following functions.

- A mapping function (mapping between logical channels and transport channels)
- A multiplexing and demultiplexing function (multiplexing/demultiplexing of MAC SDUs)
- A scheduling information report function (scheduling information reporting)
- A HARQ function (error correction through HARQ)
- A logical channel priority control function (priority handling between logical channels of one UE)
- A UE priority control function (priority handling between UEs by means of dynamic scheduling)
- An MBMS service identification function (MBMS service identification)
- A transport format selection function (transport format selection)
- A padding function (padding)

The NR PHY layer S45 or S50 performs an operation for channel-coding and modulating higher layer data to generate an OFDM symbol and transmitting the OFDM symbol through a radio channel or demodulating and channel-decoding the OFDM symbol received through the radio channel and transmitting the demodulated and channel-decoded OFDM symbol to the higher layer.

A detailed structure of the wireless protocol may be variously changed according to a carrier (or cell) operation scheme. For example, when the base station transmits data to the UE on the basis of a single carrier (or cell), the base station and the UE use a protocol structure having a single structure for each layer as indicated by reference numeral 500. On the other hand, when the base station transmits data to the UE on the basis of CA using multiple carriers in a single TRP, the base station and the UE use a protocol structure in which layers up to RLC have a single structure but the PHY layer is multiplexed through the MAC layer as indicated by reference numeral S10. In another example, when the base station transmits data to the UE on the basis of DC using multiple carriers in multiple TRPs, the base station and the UE use a protocol structure in which layers up to RLC have a single structure but the PHY layer is multiplexed through the MAC layer as indicated by reference numeral S20.

Referring to the PDCCH and beam configuration-related descriptions described above, it is difficult to achieve the required reliability in a scenario requiring high reliability, such as URLLC, since PDCCH repetition transmission is not currently supported in Rel-15 and Rel-16 NRs. The disclosure improves PDCCH reception reliability of the UE by providing a PDCCH repetition transmission method via multiple transmission points (TRPs).

Hereinafter, an embodiment of the disclosure is described with reference to the accompanying drawings. The contents of the disclosure may be applicable in frequency division duplex (FDD) and time division duplex (TDD) systems. In the following, higher signaling (or higher layer signaling) herein may be a signal transmission method of transmitting a signal from the base station to the UE using a downlink data channel of a physical layer or from the UE to the base station using an uplink data channel of the physical layer, and may be referred to as RRC signaling, PDCP signaling, or an MAC control element (CE).

Hereinafter, in the disclosure, when determining whether to apply cooperative communication, the UE may use various methods by which PDCCH(s) allocating PDSCHs to which cooperative communication is applied have specific formats, PDCCH(s) allocating PDSCHs to which cooperative communication is applied include a specific indicator informing of whether cooperative communication is applied, PDCCH(s) allocating PDSCHs to which cooperative communication is applied are scrambled by a specific RNTI, or the application of cooperative communication to a specific section indicated by a higher layer is assumed. Thereafter, for convenience of description, reception of, by the UE, a PDSCH to which cooperative communication is applied on the basis of conditions similar to the above conditions is referred to as a non-coherent joint transmission (NC-JT) case.

Hereinafter, in the disclosure, determining the priority between A and B may be described in various ways, such as selecting one having higher priority according to a predetermined priority rule to perform an operation corresponding thereto, or omitting or dropping an operation of one having lower priority.

Hereinafter, in the disclosure, the examples are explained through a plurality of embodiments. However, the embodiments are not independent, and one or more embodiments may be applied simultaneously or in combination.

[Related to NC-JT]

According to an embodiment of the disclosure, non-coherent joint transmission (NC-JT) may be used for the UE to receive a PDSCH from a plurality of TRPs.

Unlike the conventional system, a 5G wireless communication system may support all of a service having very short transmission latency and a service requiring a high connectivity density as well as a service requiring a high transmission rate. In a wireless communication network including a plurality of cells, TRPs, or beams, cooperative communication (coordinated transmission) between respective cells, TRPs, or beams may satisfy various service requirements by increasing the strength of a signal received by the UE or efficiently controlling interference between the respective cells, TRPs, and/or beams.

Joint transmission (JT) refers to representative transmission technology for the cooperative communication described above and may increase the strength of a signal received by the UE or throughput by transmitting signals to one UE through different cells, TRPs, and/or beams. Here, a channel between each cell, TRP, and/or beam and the UE may have greatly different characteristics, and particularly, NC-JT supporting non-coherent precoding between respective cells, TRPs, and/or beams may need individual precoding, MCS, resource allocation, and TCI indication according to the channel characteristics for each link between each cell, TRP, and/or beam and the UE.

The NC-JT described above may be applied to at least one of a downlink data channel (e.g., PDSCH), a downlink control channel (e.g., PDCCH), an uplink data channel (e.g., PUSCH), and an uplink control channel (e.g., PUCCH)). In PDSCH transmission, transmission information, such as precoding, MCS, resource allocation, and TCI, may be indicated through DL DCI, and needs to be independently indicated for each cell, TRP, and/or beam for the NC-JT. This is a significant factor that increases payload required for DL DCI transmission, which may have bad influence on reception performance of the PDCCH for transmitting the DCI. Accordingly, in order to support JT of the PDSCH, there is a need to carefully design a tradeoff between an information amount of DCI and reception performance of control information.

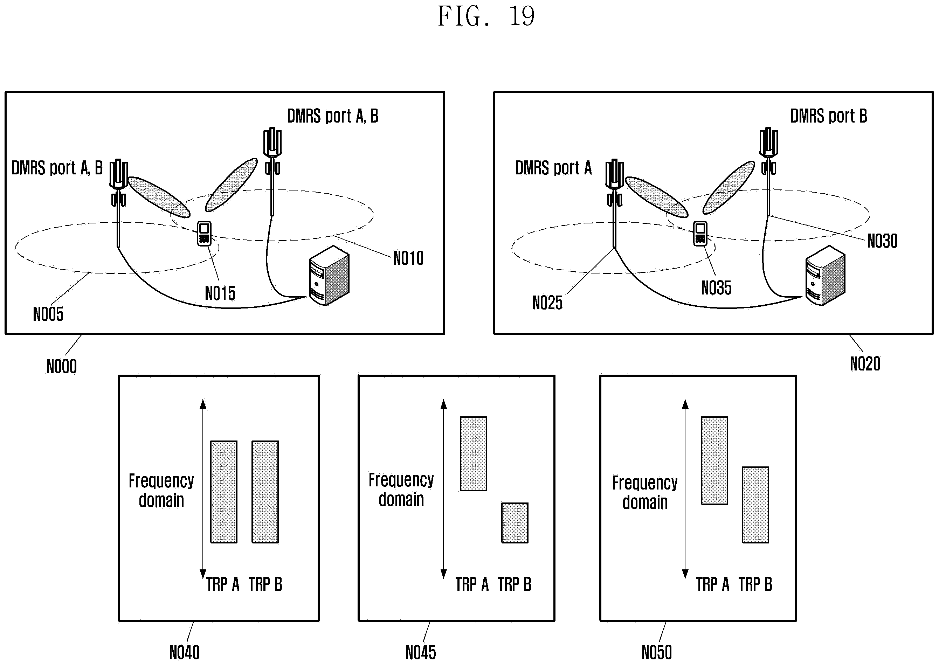

FIG. 19 illustrates an example of configuring antenna ports and allocating resources for transmitting a PDSCH using cooperative communication in a wireless communication system, according to an embodiment of the disclosure.

Referring to FIG. 19, an example for PDSCH transmission is described for each scheme of JT, and examples for allocating radio resources for each TRP are illustrated.

Referring to FIG. 19, an example N000 of coherent JT (C-JT) supporting coherent precoding between respective cells, TRPs, and/or beams is illustrated.

In the case of C-JT, a TRP A N005 and a TRP B N010 transmit single data (e.g., PDSCH) to a UE N015, and a plurality of TRPs may perform joint precoding. This may imply that the TRP A N005 and the TPR B N010 transmit DMRSs through the same DMRS ports in order to transmit the same PDSCH. For example, the TRP A N005 and the TPR B N010 may transmit DMRSs to the UE through a DMRS port A and a DMRS port B, respectively. In this case, the UE may receive one piece of DCI for receiving one PDSCH demodulated on the basis of the DMRSs transmitted through the DMRS port A and the DMRS port B.

FIG. 19 illustrates an example N020 of NC-JT supporting non-coherent precoding between respective cells, TRPs, and/or beams for PDSCH transmission.

In the case of NC-JT, a PDSCH is transmitted to a UE N035 for each cell, TPR, and/or beam, and individual precoding may be applied to each PDSCH. Respective cells, TRPs, and/or beams may transmit different PDSCHs or different PDSCH layers to the UE, thereby improving throughput compared to single cell, TRP, and/or beam transmission. Also, respective cells, TRPs, and/or beams may repeatedly transmit the same PDSCH to the UE, thereby improving reliability compared to single cell, TRP, and/or beam transmission. For convenience of description, the cell, TRP, and/or beam are commonly called a TRP.

Here, various wireless resource allocations, such as a case N040 in which frequency and time resources used by a plurality of TRPs for PDSCH transmission are all the same, a case N045 in which frequency and time resources used by a plurality of TRPs do not overlap at all, and a case N050 in which frequency and time resources used by a plurality of TRPs partially overlap each other may be considered.

In order to support NC-JT, DCI in various forms, structures, and relations may be considered to simultaneously allocate a plurality of PDSCHs to one UE.

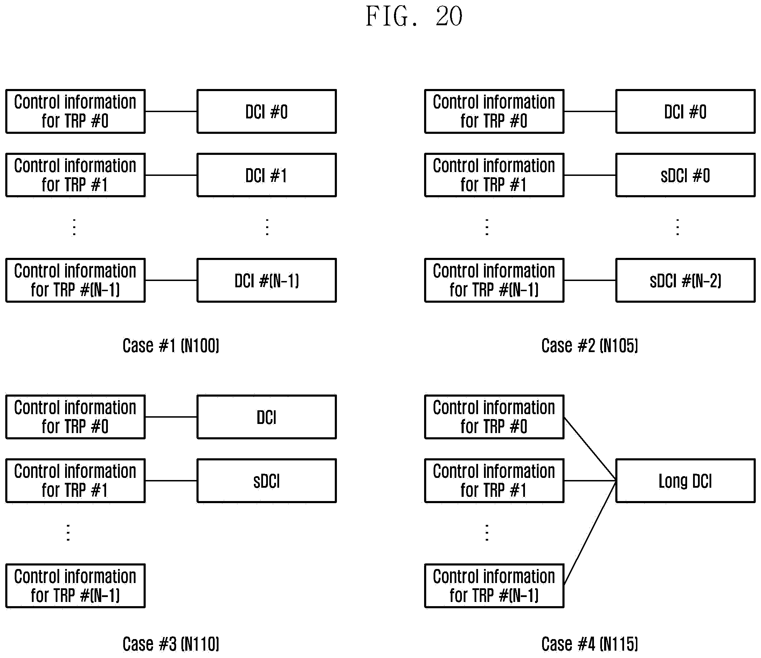

FIG. 20 illustrates an example for a configuration of DCI for NC-JT in which respective TRPs transmit different PDSCHs or different PDSCH layers to a UE in a wireless communication system, according to an embodiment of the disclosure.

Referring to FIG. 20, case #1 N100 is an example in which control information for PDSCHs transmitted from (N-1) additional TRPs is transmitted independently from control information for a PDSCH transmitted from a serving TRP in a situation in which (N-1) different PDSCHs are transmitted from the (N-1) additional TRPs (TRP #1 to TRP #(N-1)) other than the serving TRP (TRP #0) used for single PDSCH transmission. That is, the UE may acquire control information for PDSCHs transmitted from different TRPs (TRP #0 to TRP #(N-1)) through independent DCI (DCI #0 to DCI #(N-1)). Formats between the independent DCI may be the same as or different from each other, and payload between the DCI may also be the same as or different from each other. In case #1 described above, a degree of freedom of each PDSCH control or allocation may be completely guaranteed, but when respective pieces of DCI are transmitted from different TRPs, a difference in DCI-specific coverage may be generated and reception performance may be degraded.

Case #2 N105 is an example in which pieces of control information for PDSCHs of (N-1) additional TRPs are transmitted and each piece of DCI is dependent on control information for the PDSCH transmitted from the serving TRP in a situation in which (N-1) different PDSCHs are transmitted from (N-1) additional TRPs (TRP #1 to TRP #(N-1)) other than the serving TRP (TRP #0) used for single PDSCH transmission.

For example, DCI #0 that is control information for the PDSCH transmitted from the serving TRP (TRP #0) may include all information elements of DCI format 1_0, DCI format 1_1, and DCI format 1_2, but shortened DCI (hereinafter, referred to as sDCI) (sDCI #0 to sDCI#(N-2)) that is control information for PDSCHs transmitted from the cooperative TRPs (TRP #1 to TRP #(N-1)) may include only some of the information elements of DCI format 1_0, DCI format 1_1, and DCI format 1_2. Accordingly, the sDCI for transmitting control information for PDSCHs transmitted from cooperative TPRs has smaller payload compared to normal DCI (nDCI) for transmitting control information related to the PDSCH transmitted from the serving TRP, and thus may include reserved bits compared to the nDCI.

In case #2 described above, a degree of freedom of each PDSCH control or allocation may be limited according to content of information elements included in the sDCI, but reception performance of the sDCI is better than the nDCI, making it possible to lowering the probability that difference in DCI-specific coverage is generated.

Case #3 N110 is an example in which one piece of control information for PDSCHs of (N-1) additional TRPs is transmitted and the DCI is dependent on control information for the PDSCH transmitted from the serving TRP in a situation in which (N-1) different PDSCHs are transmitted from (N-1) additional TRPs (TRP #1 to TRP #(N-1)) other than the serving TRP (TRP #0) used for single PDSCH transmission.

For example, DCI #0 that is control information for the PDSCH transmitted from the serving TRP (TRP #0) may include all information elements of DCI format 1_0, DCI format 1_1, and DCI format 1_2, and in the case of control information for PDSCHs transmitted from cooperative TRPs (TRP #1 to TRP #(N-1)), only some of the information elements of DCI format 1_0, DCI format 1_1, and DCI format 1_2 may be gathered in one "secondary" DCI (sDCI) and transmitted. For example, the sDCI may include at least one piece of HARQ-related information, such as frequency domain resource assignment and time domain resource assignment of the cooperative TRPs, and the MCS. In addition thereto, information that is not included in the sDCI, such as a BWP indicator and a carrier indicator, may follow the DCI (DCI #0, normal DCI, or nDCI) of the serving TRP.

In case #3 N110, a degree of freedom of PDSCH control or allocation may be limited according to content of the information elements included in the sDCI, but reception performance of the sDCI may be controlled, and case #3 N110 may have smaller complexity of DCI blind decoding of the UE compared to case #1 N100 or case #2 N105.

Case #4 N115 is an example in which control information for PDSCHs transmitted from (N-1) additional TRPs is transmitted in the DCI (long DCI) that is the same as that of control information for the PDSCH transmitted from the serving TRP in a situation in which different (N-1) PDSCHs are transmitted from the (N-1) additional TRPs (TRP #1 to TRP #(N-1)) other than the serving TRP (TRP #0) used for single PDSCH transmission. That is, the UE may acquire control information for PDSCHs transmitted from different TRPs (TRP #0 to TRP #(N-1)) through single DCI. In case #4 N115, complexity of DCI blind decoding of the UE may not be increased, but a degree of freedom of PDSCH control or allocation may be low since the number of cooperative TRPs is limited according to long DCI payload restriction.

In the following description and embodiments, the sDCI may refer to various pieces of supplementary DCI, such as shortened DCI, secondary DCI, or normal DCI (DCI formats 1_0 and 1_1) including PDSCH control information transmitted from the cooperative TRP, and unless specific restriction is mentioned, the corresponding description may be similarly applied to various pieces of supplementary DCI.

Case #1 N100, case #2 N105, and case #3 N110 in which one or more pieces of DCI (PDCCHs) are used to support NC-JT may be classified as multiple PDCCH-based NC-JT, and case #4 N115 in which single DCI (PDCCH) is used to support NC-JT may be classified as single PDCCH-based NC-JT. In multiple PDCCH-based PDSCH transmission, a CORESET for scheduling DCI of the serving TRP (TRP #0) may be distinguished from CORESETs for scheduling DCI of cooperative TRPs (TRP #1 to TRP #(N-1)). A method of distinguishing CORESETs may include a distinguishing method through a higher layer indicator for each CORESET and a distinguishing method through a beam configuration for each CORESET. Also, in single PDCCH-based NC-JT, single DCI schedules a single PDSCH having a plurality of layers instead of scheduling a plurality of PDSCHs, and the plurality of layers may be transmitted from a plurality of TRPs. Here, association between a layer and a TRP transmitting the corresponding layer may be indicated through a TCI indication for the layer.

In embodiments of the disclosure, the term "cooperative TRP" may be replaced with various terms, such as a "cooperative panel" and a "cooperative beam", when actually applied.

In embodiments of the disclosure, a "case in which NC-JT is applied" may be variously interpreted depending on situations, such as a "case in which the UE simultaneously receives one or more PDSCHs in one BWP", a "case in which the UE simultaneously receives PDSCHs on the basis of two or more TCI indications in one BWP", and a "case in which PDSCHs received by the UE are associated with one or more DMRS port groups", but is used by one expression for convenience of description.

In the disclosure, a wireless protocol structure for NC-JT may be variously used according to a TRP development scenario. For example, when a backhaul delay between cooperative TRPs is absent or small, a method (CA-like method) using a structure based on MAC layer multiplexing may be used similarly to reference numeral S10 of FIG. x4. On the other hand, when the backhaul delay between cooperative TRPs is too large to be ignored (e.g., when a time of 2 ms or longer is required to exchange information, such as CSI, scheduling, and HARQ-ACK between cooperative TRPs), a method (DC-like method) of securing a characteristic robust against a delay may be used through an independent structure for each TRP from an RLC layer similarly to reference numeral S20 of FIG. x4.

The UE supporting C-JT/NC-JT may receive a C-JT/NC-JT-related parameter or a setting value from a higher layer configuration and may set an RRC parameter of the UE on the basis thereof. For the higher layer configuration, the UE may use a UE capability parameter, for example, tci-StatePDSCH. Here, the UE capability parameter, for example, tci-StatePDSCH may define TCI states for PDSCH transmission, the number of TCI states may be configured as 4, 8, 16, 32, 64, and 128 in FR1 and may be configured as 64 and 128 in FR2, and a maximum of 8 states that may be indicated by 3 bits of a TCI field of the DCI may be configured through a MAC CE message among the configured numbers. A maximum value, 128, refers to a value indicated by maxNumberConfiguredTCIstatesPerCC within the parameter tci-StatePDSCH that is included in capability signaling of the UE. As described above, a series of configuration processes from the higher layer configuration to the MAC CE configuration may be applied to a beamforming indication or a beamforming change command for at least one PDSCH in one TRP.

[Multi-DCI-based multi-TRP]

As an embodiment of the disclosure, a multi-DCI-based multi-TRP transmission method is described. The multi-DCI-based multi-TRP transmission method may configure a downlink control channel for NC-JT transmission based on a multi-PDCCH.

In NC-JT based on multiple PDCCHs, there may be a CORESET or a search space separated for each TRP when transmitting DCI for scheduling a PDSCH of each TRP. The CORESET or the search space for each TRP may be configured according to at least one of the following configuration cases.

* A configuration of a higher layer index for each CORESET: CORESET configuration information configured by a higher layer may include an index value, and a TRP for transmitting a PDCCH in the corresponding CORESET may be identified by the configured index value for each CORESET. That is, in a set of CORESETs having the same higher layer index value, the same TRP may be considered to transmit the PDCCH or the PDCCH for scheduling the PDSCH of the same TRP may be considered to be transmitted. The index for each CORESET may be named CORESETPoolIndex, and the PDCCH may be considered to be transmitted from the same TRP in CORESETs in which the same CORESETPoolIndex value is configured. In the case of CORESET in which the CORESETPoolIndex value is not configured, a default value of CORESETPoolIndex may be considered to have been configured, and the default value may be 0.

 - In the disclosure, if the number of CORESETPoolIndex types of each of a plurality of CORESETs included in higher layer signaling, PDCCH-Config, exceeds 1, that is, if each CORESET has different CORESETPoolIndex, the UE may consider that the base station may use the multi-DCI-based multi-TRP transmission method.

- Unlike this, in the disclosure, if the number of CORESETPoolIndex types of each of the plurality of CORESETs included in higher layer signaling, PDCCH-Config, is 1, that is, if all the CORESETs have the same CORESETPoolIndex of 0 or 1, the UE may consider that the base station performs transmission using a single TRP without using the multi-DCI-based multi-TRP transmission method.

* A configuration of multiple PDCCH-Config: A plurality of PDCCH-Config are configured in one BWP, and each PDCCH-Config may include a PDCCH configuration for each TRP. That is, a list of CORESETs for each TRP and/or a list of search spaces for each TRP may be included in one PDCCH-Config, and one or more CORESETs and one or more search spaces included in one PDCCH-Config may correspond to a specific TRP.
* A configuration of a CORESET beam/beam group: A TRP that corresponds to a corresponding CORESET may be identified through a beam or a beam group configured for each CORESET. For example, when the same TCI state is configured in a plurality of CORESETs, the corresponding CORESETs may be considered to be transmitted through the same TRP or a PDCCH for scheduling a PDSCH of the same TRP may be considered to be transmitted in the corresponding CORESET.
* A configuration of a search space beam/beam group: A beam or a beam group is configured for each search space, and a TRP for each search space may be identified therethrough. For example, when the same beam/beam group or TCI state is configured in a plurality of search spaces, the same TRP may be considered to transmit the PDCCH in a corresponding search space or a PDCCH for scheduling a PDSCH of the same TRP may be considered to be transmitted in the corresponding search space.

As described above, by separating CORESETs or search spaces for each TRP, PDSCH and HARQ-ACK information may be classified for each TRP and, through this, it is possible to generate an independent HARQ-ACK codebook for each TRP and use an independent PUCCH resource.

The configuration may be independent for each cell or for each BWP. For example, while two different CORESETPoolIndex values are configured in a primary cell (PCell), no CORESETPoolIndex value may be configured in a specific SCell. In this case, it may be considered that NC-JT transmission is configured in the PCell, but NC-JT is not configured in the SCell in which no CORESETPoolIndex value is configured.

A PDSCH TCI state activation/deactivation MAC-CE applicable to the multi-DCI-based multi-TRP transmission method may follow FIG. 17 described above. If CORESETPoolIndex for each of all CORESETs in PDCCH-Config that is higher layer signaling is not configured for the UE, the UE may disregard a CORESET pool ID field 17-05 in the MAC-CE 17-00. If the UE is able to support the multi-DCI-based multi-TRP transmission method, that is, if each of CORESETs in PDCCH-Config that is higher layer signaling has different CORESETPoolIndex, the UE may activate a TCI state in DCI included in a PDCCH transmitted in CORESETs having the same CORESETPoolIndex value as that of the CORESET pool ID field 17-05 in the MAC-CE 17-00. For example, if the value of the CORESET pool ID field 17-05 in the MAC-CE 17-00 is 0, a TCI state in the DCI included in the PDCCH transmitted from CORESETs having CORESETPoolIndex of 0 may follow activation information of the MAC-CE.

When the UE is configured by the base station to be able to use the multi-DCI-based multi-TRP transmission method, that is, when the number of CORESETPoolIndex types of each of a plurality of CORESETs included in PDCCH-Config that is higher layer signaling exceeds 1, or when each of the CORESETs has different CORESETPoolIndex, the UE may recognize that PDSCHs scheduled from PDCCHs in the respective CORESETs having two different CORESETPoolIndexes have the following constraints.

1) If PDSCHs indicated by PDCCHs in respective CORESETs having two different CORESETPoolIndexes entirely or partially overlap each other, the UE may apply TCI states indicated by the respective PDCCHs to different CDM groups, respectively. That is, two or more TCI states may not be applied to one CDM group.
2) If PDSCHs indicated by PDCCHs in respective CORESETs having two different CORESETPoolIndexes entirely or partially overlap each other, the UE may expect that the PDSCHs have the same number of actual front-loaded DMRS symbols, the same number of actual additional DMRS symbols-, the same location of an actual DMRS symbol, and the same DMRS type.
3) The UE may expect that bandwidth parts indicated by PDCCHs in respective CORESETs having two different CORESETPoolIndexes are the same and the subcarrier spacings are also the same
4) The UE may expect that information on a PDSCH scheduled by a PDCCH in each of CORESET having two different CORESETPoolIndexes is fully included in a corresponding PDCCH.

[Single-DCI-based multi-TRP]

As an embodiment of the disclosure, a single-DCI-based multi-TRP transmission method is described. The single-DCI-based multi-TRP transmission method may configure a downlink control channel for NC-JT transmission based on a single PDCCH.

The single-DCI-based multi-TRP transmission method may schedule PDSCHs transmitted by a plurality of TRPs with one piece of DCI. Here, as a method of indicating the number of TRPs transmitting the corresponding PDSCHs and the number of TCI states may be used. That is, single-PDCCH-based NC-JT transmission may be considered if the number of TCI states indicated by the DCI for scheduling the PDSCHs is 2, and single-TRP transmission may be considered if the number of TCI states is 1. The TCI states indicated by the DCI may correspond to one or two TCI states among TCI states activated by the MAC CE. When the TCI states of DCI correspond to two TCI states activated by the MAC CE, a TCI codepoint indicated by the DCI is associated with the TCI states activated by the MAC CE, in which case the number of TCI states activated by the MAC CE, corresponding to the TCI codepoint, may be 2.

As another example, if at least one codepoint among all codepoints of a TCI state field in the DCI indicates two TCI states, the UE may consider that the base station may perform transmission based on the single-DCI-based multi-TRP transmission method. Here, at least one codepoint indicating two TCI states in the TCI state field may be activated through an enhanced PDSCH TCI state activation/deactivation MAC-CE.

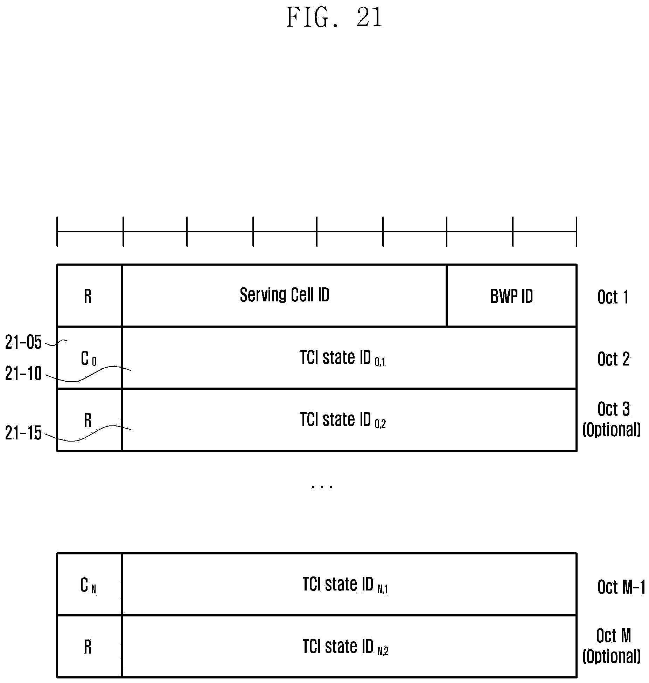

FIG. 21 illustrates a diagram of an enhanced PDSCH TCI state activation/deactivation MAC-CE structure. The meaning of each field in the corresponding MAC CE and a value configurable in each field are as follows.

---

- **Serving Cell ID:** This field indicates the identity of the Serving Cell for which the MAC CE applies. The length of the field is 5 bits. If the indicated Serving Cell is configured as part of a *simultaneousTCI-UpdateList1* or *simultaneousTCI-UpdateList2* as specified in TS 38.331 [5], this MAC CE applies to all the Serving Cells configured in the set *simultaneousTCI-UpdateList1* or *simultaneousTCI-UpdateList2,* respectively;

- **BWP ID:** This field indicates a DL BWP for which the MAC CE applies as the codepoint of the DCI bandwidth part indicator field as specified in TS 38.212 [9]. The length of the BWP ID field is 2 bits;

- **$C_i$:** This field indicates whether the octet containing TCI state $ID_{i,2}$ is present. If this field is set to "1", the octet containing TCI state $ID_{i,2}$ is present. If this field is set to "0", the octet containing TCI state $ID_{i,2}$ is not present;

- **TCI state $ID_{i,j}$:** This field indicates the TCI state identified by TCI-StateId as specified in TS 38.331 [5], where i is the index of the codepoint of the DCI Transmission configuration indication field as specified in TS 38.212 [9] and TCI state $ID_{i,j}$ denotes the j-th TCI state indicated for the i-th codepoint in the DCI Transmission Configuration Indication field. The TCI codepoint to which the TCI States are mapped is determined by its ordinal position among all the TCI codepoints with sets of TCI state $ID_{i,j}$ fields, i.e. the first TCI codepoint with TCI state $ID_{0,1}$ and TCI state $ID_{0,2}$ shall be mapped to the codepoint value 0, the second TCI codepoint with TCI state $ID_{1,1}$ and TCI state $ID_{1,2}$ shall be mapped to the codepoint value 1 and so on.

The TCI state $ID_{i,2}$ is optional based on the indication of the Ci field. The maximum number of activated TCI codepoint is 8 and the maximum number of TCI states mapped to a TCI codepoint is 2.

- R: Reserved bit, set to "0".

---

In FIG. 21, if a value of a $C_0$ field 21-05 is 1, the corresponding MAC-CE may include a TCI state $ID_{0,2}$ field 21-15 in addition to a TCI state $ID_{0,1}$ field 21-10. This implies that TCI state $ID_{0,1}$ and TCI state $ID_{0,2}$ are activated for a 0-th codepoint of a TCI state field included in the DCI, and if the base station indicates the corresponding codepoint to the UE, two TCI states may be indicated to the UE. If the value of the $C_0$ field 21-05 is 0, the MAC-CE may not include the TCI state $ID_{0,2}$ field 21-15, and this implies that one TCI state corresponding to TCI state $ID_{0,1}$ is activated for the 0-th codepoint of the TCI state field included in the DCI.

This configuration may be independent for each cell or each BWP. For example, while the number of activated TCI states corresponding to one TCI codepoint is up to 2 in a PCell, the number of activated TCI states corresponding to one TCI codepoint may be up to 1 in a specific SCell. In this case, it may be considered that NC-JT transmission is configured in the PCell, but NC-JT transmission is not configured in the SCell.

[Single-DCI-Based multi-TRP PDSCH repetitive transmission scheme (TDM/FDM/SDM) distinguishment method]

Next, a single-DCI-based multi-TRP PDSCH repetitive transmission scheme distinguishment method is described. Different single-DCI-based multi-TRP PDSCH repetitive transmission schemes (e.g., TDM, FDM, and SDM) may be indicated to the UE from the base station according to a value indicated by a DCI field and a higher layer signaling configuration. Table 24 below shows a method of distinguishing between single or multi-TRP-based schemes indicated to the UE according to a specific DCI field value and a higher layer signaling configuration.

[Table 24]

| Combination | Number of TCI states | Number of CDM groups | repetitionNumber configuration and indication condition | Related to repetitionscheme | Transmissino scheme indicated to UE |
|---|---|---|---|---|---|
| 1 | 1 | ≥ 1 | Condition 2 | Not configured | Single-TRP |
| 2 | 1 | ≥ 1 | Condition 2 | Configured | Single-TRP |
| 3 | 1 | ≥ 1 | Condition 3 | Configured | Single-TRP |
| 4 | 1 | 1 | Condition 1 | Configured or not configured | Single-TRP TDM scheme B |
| 5 | 2 | 2 | Condition 2 | Not configured | Multi-TRP SDM |
| 6 | 2 | 2 | Condition 3 | Not configured | Multi-TRP SDM |
| 7 | 2 | 2 | Condition 3 | Configured | Multi-TRP SDM |
| 8 | 2 | 2 | Condition 3 | Configured | Multi-TRP FDM scheme AIFDM scheme BJTDM scheme A |
| 9 | 2 | 2 | Condition 1 | Not configured | Multi-TRP TDM scheme B |

In Table 24 above, each column may be described as follows.

- Number of TCI states (second column): This represents the number of TCI slates indicated by the TCI state filed in DCI and may be 1 or 2.
- Number of CDM groups (third column): This represents the number of different CDM groups of DMRS ports indicated by an antenna port field in the DCI and may be 1, 2, or 3.
- repetitionNumber configuration and indication condition (fourth column): There may be three conditions depending on whether repetitionNumber is configured for all TDRA entries that may be indicated by a time domain resource allocation field in the DCI, and whether an actually indicated TDRA entry has a repetitionNumber configuration.

    ■ Condition 1: corresponds to a case in which at least one of all TDRA entries that may be indicated by a time domain resource allocation field includes a configuration on repetitionNumber and a TDRA entry indicated by a time domain resource allocation field in the DCI includes a configuration on repetitionNumber greater than 1.

    ■ Condition 2: corresponds to a case in which at least one of all TDRA entries that may be indicated by the time domain resource allocation field includes a configuration on repetitionNumber, and a TDRA entry indicated by the time domain resource allocation field in the DCI does not include a configuration on repetitionNumber.

    ■ Condition 3: corresponds to a case in which all TDRA entries that may be indicated by the time domain resource allocation field do not include a configuration on repetitionNumber.

- Related to repetitionScheme configuration (fifth column): This indicates whether repetitionScheme that is higher layer signaling is configured. As higher layer signaling repetitionScheme, one of "tdmSchemeA", "fdmSchemeA", and "fdmSchemeB" may be configured.
- Transmission scheme indicated to UE (sixth column): This indicates single or multi-TRP schemes indicated by combinations (first column) represented in Table 24 above.

    ■ Single-TRP: This indicates single-TRP-based PDSCH transmission. If pdsch-AggegationFactor in higher layer signaling PDSCH-config is configured for the UE, a single-TRP-based PDSCH repetitive transmission performed configured times may be scheduled for the UE. Otherwise, a single-TRP-based PDSCH single transmission may be scheduled for the UE.

    ■ Single-TRP TDM scheme B: This indicates single-TRP-based inter-slot time resource division-based PDSCH repetitive transmission. According to condition 1 related to repetitionNumber described above, the UE repeats PDSCH transmission in the time domain the number of times corresponding to the number of slots corresponding to the count of repetitionNumber greater than 1 configured in the TDRA entry indicated by the time domain resource allocation field. Here, the UE applies the same start symbol and the same symbol length of the PDSCH indicated by the TDRA entry to each of the slots, the number of which is equal to the count of repetitionNumber, and applies the same TCI state to each PDSCH repetitive transmission. The corresponding scheme is similar to a slot aggregation scheme in that inter-slot PDSCH repetitive transmission is performed in time resources, but differs from slot aggregation in that whether repetitive transmission is indicated may be dynamically determined based on the time domain resource allocation field in the DCI.

■ Multi-TRP SDM: This indicates a multi-TRP-based spatial resource division PDSCH transmission scheme. This refers to a method of receiving distributed layers from each TRP, and is not a repetitive transmission scheme, but may increase the reliability of PDSCH transmission in that transmission is performed at a lowered code rate by increasing the number of layers. The UE may apply two TCI states indicated through the TCI state field in the DCI to two CDM groups indicated by the base station, respectively, to receive a PDSCH.

■ Multi-TRP FDM scheme A: This indicates a multi-TRP-based frequency resource division PDSCH transmission scheme. This scheme provides one PDSCH transmission occasion and thus is not repetitive transmission like multi-TRP SDM, but may perform transmission with high reliability at a lowered code rate by increasing an amount of frequency resources. Multi-TRP FDM scheme A may apply two TCI states indicated through the TCI state field in the DCI to frequency resources not overlapping each other, respectively. In a case in which a PRB bundling size is determined to be a wideband, if the number of RBs indicated by a frequency domain resource allocation field is N, the UE applies a first TCI state to first ceil(N/2) RBs and applies a second TCI state to remaining floor(N/2) RBs, and performs reception. Here, ceil(·) and floor(·) are operators indicating rounding up and rounding down for a first decimal place. If the PRB bundling size is determined to be 2 or 4, the UE applies the first TCI state to even-numbered precoding resource block groups (PRGs) and applies the second TCI state to odd-numbered PRGs, and performs reception.

■ Multi-TRP FDM scheme B: This indicates a multi-TRP-based frequency resource division PDSCH repetitive transmission scheme, and provides two PDSCH transmission occasions and accordingly, may repeat PDSCH transmission at the respective occasions. In the same manner as multi-TRP FDM scheme A, multi-TRP FDM scheme B may also apply two TCI states indicated through the TCI state field in the DCI to frequency resources not overlapping each other, respectively. In a case in which a PRB bundling size is determined to be a wideband, if the number of RBs indicated by a frequency domain resource allocation field is N, the UE applies a first TCI state to first ceil(N/2) RBs and applies a second TCI state to remaining floor(N/2) RBs and performs reception. Here, ceil(·) and floor(·) are operators indicating rounding up and rounding down for a first decimal place. If the PRB bundling size is determined to be 2 or 4, the UE applies the first TCI state to even-numbered PRGs and applies the second TCI state to odd-numbered PRGs, and performs reception.

■ Multi-TRP TDM scheme A: This indicates a multi-TRP-based time resource division intra-slot PDSCH repetitive transmission scheme. The UE may have two PDSCH transmission occasions in one slot, and a first reception occasion may be determined based on a start symbol and a symbol length of a PDSCH indicated through a time domain resource allocation field in DCI. A start symbol of a second reception occasion of the PDSCH may be a location acquired by applying a symbol offset of higher layer signaling Starting Symbol OffsetK from a last symbol of a first transmission occasion, and a transmission occasion may be determined by the symbol length indicated therefrom. If higher layer signaling, StartingSymbolOffsetK, is not configured, the symbol offset may be considered as 0.

■ Multi-TRP TDM scheme B: This indicates a multi-TRP-based time resource division inter-slot PDSCH repetitive transmission scheme. The UE may have one PDSCH transmission occasion in one slot and receive repetitive transmission, based on the same start symbol and the same symbol length of a PDSCH during the number of slots corresponding to the count of repetitionNumber indicated through the time domain resource allocation field in the DCI. If repetitionNumber is 2, the UE may receive PDSCH repetitive transmission in first and second slots by applying first and second TCI states, respectively. If repetitionNumber is greater than 2, the UE may use different TCI state application schemes depending on which higher layer signaling, tciMapping, is configured to be. If tciMapping is configured to be cyclicMapping, the UE applies the first and second TCI states to the first and second PDSCH transmission occasions, respectively, and also applies this TCI state application method to the remaining PDSCH transmission occasions in the same manner. If tciMapping is configured to be sequenticalMapping, the UE applies the first TCI state to the first and second PDSCH transmission occasions and applies the second TCI state to third and fourth PDSCH transmission occasions, and also applies this TCI state application method to the remaining PDSCH transmission occasions in the same manner.

[Related to DMRS]

Hereinafter, antenna port field indication included in DCI format 1_1 and DCI format 1_2 defined in [Table 7] described above is described. An antenna port field in DCI formats 1_1 and 1_2 may be expressed by 4, 5, or 6 bits, and may perform indication through [Table 25-1] to [Table 25-8] below.

[Table 25-1] Antenna port(s) (1000 + DMRS port), dmrs-Type=1, maxLength=1

| One Codeword:<br>Codeword 0 enabled,<br>Codeword 1 disabled | | |
|---|---|---|
| Value | Number of DMRS CDM group(s) without data | DMRS port(s) |
| 0 | 1 | 0 |
| 1 | 1 | 1 |
| 2 | 1 | 0,1 |
| 3 | 2 | 0 |
| 4 | 2 | 1 |
| 5 | 2 | 2 |
| 6 | 2 | 3 |
| 7 | 2 | 0,1 |
| 8 | 2 | 2,3 |
| 9 | 2 | 0-2 |
| 10 | 2 | 0-3 |
| 11 | 2 | 0,2 |
| 12-15 | Reserved | Reserved |

[Table 25-2] Antenna port(s) (1000 + DMRS port), dmrs-Type=1, maxLength=1

| One Codeword:<br>Codeword 0 enabled,<br>Codeword 1 disabled | | |
|---|---|---|
| Value | Number of DMRS CDM group(s) without data | DMRS port(s) |
| 0 | 1 | 0 |
| 1 | 1 | 1 |
| 2 | 1 | 0,1 |
| 3 | 2 | 0 |
| 4 | 2 | 1 |
| 5 | 2 | 2 |
| 6 | 2 | 3 |
| 7 | 2 | 0,1 |
| 8 | 2 | 2,3 |
| 9 | 2 | 0-2 |
| 10 | 2 | 0-3 |
| 11 | 2 | 0,2 |
| 12 | 2 | 0,2,3 |
| 13-15 | Reserved | Reserved |

[Table 25-3] Antenna port(s) (1000 + DMRS port), dmrs-Type=1, maxLength=2

| | One Codeword: Codeword 0 enabled, Codeword 1 disabled | | | | Two Codewords: Codeword 0 enabled, Codeword 1 enabled | | |
|---|---|---|---|---|---|---|---|
| Value | Number of DMRS CDM group(s) without data | DMRS port(s) | Number of front-load symbols | Value | Number of DMRS CDM group(s) without data | DMRS port(s) | Number of front-load symbols |
| 0 | 1 | 0 | 1 | 0 | 2 | 0-4 | 2 |
| 1 | 1 | 1 | 1 | 1 | 2 | 0,1,2,3,4,6 | 2 |
| 2 | 1 | 0,1 | 1 | 2 | 2 | 0,1,2,3,4,5,6 | 2 |
| 3 | 2 | 0 | 1 | 3 | 2 | 0.1,2,3,4,5,6,7 | 2 |
| 4 | 2 | 1 | 1 | 4-31 | reserved | reserved | reserved |
| 5 | 2 | 2 | 1 | | | | |
| 6 | 2 | 3 | 1 | | | | |
| 7 | 2 | 0,1 | 1 | | | | |
| 8 | 2 | 2,3 | 1 | | | | |
| 9 | 2 | 0-2 | 1 | | | | |
| 10 | 2 | 0-3 | 1 | | | | |
| 11 | 2 | 0,2 | 1 | | | | |
| 12 | 2 | 0 | 2 | | | | |
| 13 | 2 | 1 | 2 | | | | |
| 14 | 2 | 2 | 2 | | | | |
| 15 | 2 | 3 | 2 | | | | |
| 16 | 2 | 4 | 2 | | | | |
| 17 | 2 | 5 | 2 | | | | |
| 18 | 2 | 6 | 2 | | | | |
| 19 | 2 | 7 | 2 | | | | |
| 20 | 2 | 0,1 | 2 | | | | |
| 21 | 2 | 2,3 | 2 | | | | |
| 22 | 2 | 4,5 | 2 | | | | |
| 23 | 2 | 6,7 | 2 | | | | |
| 24 | 2 | 0.4 | 2 | | | | |
| 25 | 2 | 2,6 | 2 | | | | |
| 26 | 2 | 0,1,4 | 2 | | | | |
| 27 | 2 | 2,3,6 | 2 | | | | |
| 28 | 2 | 0.1,4.5 | 2 | | | | |
| 29 | 2 | 2,3,6,7 | 2 | | | | |
| 30 | 2 | 0,2,4,6 | 2 | | | | |
| 31 | Reserved | Reserved | Reserved | | | | |

[Table 25-4] Antenna port(s) (1000 + DMRS port), dmrs-Type=1, maxLength=2

| One Codeword: Codeword 0 enabled, Codeword 1 disabled | | | | Two Codewords: Codeword 0 enabled, Codeword 1 enabled | | | |
|---|---|---|---|---|---|---|---|
| Value | Number of DMRS CDM group(s) without data | DMRS port(s) | Number of front-load symbols | Value | Number of DMRS CDM group(s) without data | DMRS port(s) | Number of front-load symbols |
| 0 | 1 | 0 | 1 | 0 | 2 | 0-4 | 2 |
| 1 | 1 | 1 | 1 | 1 | 2 | 0,1,2,3,4,6 | 2 |
| 2 | 1 | 0,1 | 1 | 2 | 2 | 0,1,2,3,4,5,6 | 2 |
| 3 | 2 | 0 | 1 | 3 | 2 | 0,1,2,3,4,5,8.7 | 2 |
| 4 | 2 | 1 | 1 | 4-31 | reserved | reserved | reserved |
| 5 | 2 | 2 | 1 | | | | |
| 6 | 2 | 3 | 1 | | | | |
| 7 | 2 | 0,1 | 1 | | | | |
| 8 | 2 | 2,3 | 1 | | | | |
| 9 | 2 | 0-2 | 1 | | | | |
| 10 | 2 | 0-3 | 1 | | | | |
| 11 | 2 | 0,2 | 1 | | | | |
| 12 | 2 | 0 | 2 | | | | |
| 13 | 2 | 1 | 2 | | | | |
| 14 | 2 | 2 | 2 | | | | |
| 15 | 2 | 3 | 2 | | | | |
| 16 | 2 | 4 | 2 | | | | |
| 17 | 2 | 5 | 2 | | | | |
| 18 | 2 | 6 | 2 | | | | |
| 19 | 2 | 7 | 2 | | | | |
| 20 | 2 | 0,1 | 2 | | | | |
| 21 | 2 | 2,3 | 2 | | | | |
| 22 | 2 | 4,5 | 2 | | | | |
| 23 | 2 | 6,7 | 2 | | | | |
| 24 | 2 | 0,4 | 2 | | | | |
| 25 | 2 | 2,6 | 2 | | | | |
| 26 | 2 | 0,1,4 | 2 | | | | |
| 27 | 2 | 2,3,6 | 2 | | | | |
| 28 | 2 | 0,1,4,5 | 2 | | | | |
| 29 | 2 | 2.3,6.7 | 2 | | | | |
| 30 | 2 | 0,2,4,6 | 2 | | | | |
| 31 | 2 | 0,2,3 | 1 | | | | |

[Table 25-5]: Antenna port(s) (1000 + DMRS port), dmrs-Type=2, maxLength=1

| One codeword:<br>Codeword 0 enabled,<br>Codeword 1 disabled | | | Two codewords:<br>Codeword 0 enabled,<br>Codeword 1 enabled | | |
|---|---|---|---|---|---|
| Value | Number of DMRSCDM group(s) without data | DMRS port(s) | Value | Number of DMRSCDM group(s) without data | DMRS port(s) |
| 0 | 1 | 0 | 0 | 3 | 0-4 |
| 1 | 1 | 1 | 1 | 3 | 0-5 |
| 2 | 1 | 0,1 | 2-31 | reserved | reserved |
| 3 | 2 | 0 | | | |
| 4 | 2 | 1 | | | |
| 5 | 2 | 2 | | | |
| 6 | 2 | 3 | | | |
| 7 | 2 | 0,1 | | | |
| 8 | 2 | 2,3 | | | |
| 9 | 2 | 0-2 | | | |
| 10 | 2 | 0-3 | | | |
| 11 | 3 | 0 | | | |
| 12 | 3 | 1 | | | |
| 13 | 3 | 2 | | | |
| 14 | 3 | 3 | | | |
| 15 | 3 | 4 | | | |
| 16 | 3 | 5 | | | |
| 17 | 3 | 0,1 | | | |
| 18 | 3 | 2,3 | | | |
| 19 | 3 | 4,5 | | | |
| 20 | 3 | 0-2 | | | |
| 21 | 3 | 3-5 | | | |
| 22 | 3 | 0-3 | | | |
| 23 | 2 | 0,2 | | | |
| 24-31 | Reserved | Reserved | | | |

[Table 25-6]: Antenna port(s) (1000 + DMRS port), dmrs-Type=2, maxLength=1

| One codeword:<br>Codeword 0 enabled,<br>Codeword 1 disab ed | | | Two codewords:<br>Codeword 0 enabled,<br>Codeword 1 enabled | | |
|---|---|---|---|---|---|
| Value | Number of DMRSCDM group(s) without data | DMRS port(s) | Value | Number of DMRS CDM group(s) without data | DMRS port(s) |
| 0 | 1 | 0 | 0 | 3 | 0-4 |
| 1 | 1 | 1 | 1 | 3 | 0-5 |
| 2 | 1 | 0,1 | 2-31 | reserved | reserved |
| 3 | 2 | 0 | | | |
| 4 | 2 | 1 | | | |

(continued)

| | One codeword: Codeword 0 enabled, Codeword 1 disab ed | | | Two codewords: Codeword 0 enabled, Codeword 1 enabled | |
|---|---|---|---|---|---|
| Value | Number of DMRSCDM group(s) without data | DMRS port(s) | Value | Number of DMRS CDM group(s) without data | DMRS port(s) |
| 5 | 2 | 2 | | | |
| 6 | 2 | 3 | | | |
| 7 | 2 | 0,1 | | | |
| 8 | 2 | 2,3 | | | |
| 9 | 2 | 0-2 | | | |
| 10 | 2 | 0-3 | | | |
| 11 | 3 | 0 | | | |
| 12 | 3 | 1 | | | |
| 13 | 3 | 2 | | | |
| 14 | 3 | 3 | | | |
| 15 | 3 | 4 | | | |
| 16 | 3 | 5 | | | |
| 17 | 3 | 0,1 | | | |
| 18 | 3 | 2,3 | | | |
| 19 | 3 | 4,5 | | | |
| 20 | 3 | 0-2 | | | |
| 21 | 3 | 3-5 | | | |
| 22 | 3 | 0-3 | | | |
| 23 | 2 | 0,2 | | | |
| 24 | 2 | 0,2,3 | | | |
| 25-31 | Reserved | Reserved | | | |

[Table 25-7]: Antenna port(s) (1000 + DMRS port), dmrs-Type=2, maxLength=2

| | One codeword: Codeword 0 enabled, Codeword 1 disabled | | | Two Codewords: Codeword 0 enabled, Codeword 1 enabled | | |
|---|---|---|---|---|---|---|
| Value | Number of DMRS CDM group(s) without data | DMRS port(s) | Number of front-load symbols | Value | Number of DMRS CDM group(s) without data | DMRS port(s) | Number of front-load symbols |
| 0 | 1 | 0 | 1 | 0 | 3 | 0-4 | 1 |
| 1 | 1 | 1 | 1 | 1 | 3 | 0-5 | 1 |
| 2 | 1 | 0.1 | 1 | 2 | 2 | 0.1,2,3 6 | 2 |
| 3 | 2 | 0 | 1 | 3 | 2 | 0,1,2,3,6,8 | 2 |
| 4 | 2 | 1 | 1 | 4 | 2 | 0,1,2,3,6,7,8 | 2 |
| 5 | 2 | 2 | 1 | 5 | 2 | 0,1,2,3,6,7,8,9 | 2 |
| 6 | 2 | 3 | 1 | 6-63 | Reserved | Reserved | Reserved |

(continued)

| | One codeword: Codeword 0 enabled, Codeword 1 disabled | | | | Two Codewords: Codeword 0 enabled, Codeword 1 enabled | | |
|---|---|---|---|---|---|---|---|
| Value | Number of DMRS CDM group(s) without data | DMRS port(s) | Number of front-load symbols | Value | Number of DMRS CDM group(s) without data | DMRS port(s) | Number of front-load symbols |
| 7 | 2 | 0,1 | 1 | | | | |
| 8 | 2 | 2,3 | 1 | | | | |
| 9 | 2 | 0.2 | 1 | | | | |
| 10 | 2 | 0-3 | 1 | | | | |
| 11 | 3 | 0 | 1 | | | | |
| 12 | 3 | 1 | 1 | | | | |
| 13 | 3 | 2 | 1 | | | | |
| 14 | 3 | 3 | 1 | | | | |
| 15 | 3 | 4 | 1 | | | | |
| 16 | 3 | 5 | 1 | | | | |
| 17 | 3 | 0.1 | 1 | | | | |
| 18 | 3 | 2,3 | 1 | | | | |
| 19 | 3 | 4,5 | 1 | | | | |
| 20 | 3 | 0-2 | 1 | | | | |
| 21 | 3 | 3-5 | 1 | | | | |
| 22 | 3 | 0-3 | 1 | | | | |
| 23 | 2 | 0,2 | 1 | | | | |
| 24 | 3 | 0 | 2 | | | | |
| 25 | 3 | 1 | 2 | | | | |
| 26 | 3 | 2 | 2 | | | | |
| 27 | 3 | 3 | 2 | | | | |
| 28 | 3 | 4 | 2 | | | | |
| 29 | 3 | 5 | 2 | | | | |
| 30 | 3 | 6 | 2 | | | | |
| 31 | 3 | 7 | 2 | | | | |
| 32 | 3 | 8 | 2 | | | | |
| 33 | 3 | 9 | 2 | | | | |
| 34 | 3 | 10 | 2 | | | | |
| 35 | 3 | 11 | 2 | | | | |
| 36 | 3 | 0,1 | 2 | | | | |
| 37 | 3 | 2,3 | 2 | | | | |
| 38 | 3 | 4,5 | 2 | | | | |
| 39 | 3 | 6,7 | 2 | | | | |
| 40 | 3 | 8.9 | 2 | | | | |
| 41 | 3 | 10,11 | 2 | | | | |

(continued)

| One codeword: Codeword 0 enabled, Codeword 1 disabled | | | | Two Codewords: Codeword 0 enabled, Codeword 1 enabled | | | |
|---|---|---|---|---|---|---|---|
| Value | Number of DMRS CDM group(s) without data | DMRS port(s) | Number of front-load symbols | Value | Number of DMRS CDM group(s) without data | DMRS port(s) | Number of front-load symbols |
| 42 | 3 | 0,1,6 | 2 | | | | |
| 43 | 3 | 2,3,8 | 2 | | | | |
| 44 | 3 | 4,5,10 | 2 | | | | |
| 45 | 3 | 0,1,6,1 | 2 | | | | |
| 46 | 3 | 2.3,8,9 | 2 | | | | |
| 47 | 3 | 4,5,10,11 | 2 | | | | |
| 48 | 1 | 0 | 2 | | | | |
| 49 | 1 | 1 | 2 | | | | |
| 50 | 1 | 6 | 2 | | | | |
| 51 | 1 | 7 | 2 | | | | |
| 52 | 1 | 0,1 | 2 | | | | |
| 53 | 1 | 6,7 | 2 | | | | |
| 54 | 2 | 0,1 | 2 | | | | |
| 55 | 2 | 2,3 | 2 | | | | |
| 56 | 2 | 6,7 | 2 | | | | |
| 57 | 2 | 8,9 | 2 | | | | |
| 58-63 | Reserved | Reserved | Reserved | | | | |

[Table 25-8]: Antenna port(s) (1000 + DMRS port), dmrs-Type=2, maxLength=2

| One codeword: Codeword 0 enabled, Codeword 1 disabled | | | | Two Codewords: Codeword 0 enabled, Codeword 1 enabled | | | |
|---|---|---|---|---|---|---|---|
| Value | Number of DMRS CDM group(s) without data | DMRS port(s) | Number of front-load symbols | Value | Number of DMRS CDM group(s) without data | DMRS port(s) | Number of front-load symbols |
| 0 | 1 | 0 | 1 | 0 | 3 | 0-4 | 1 |
| 1 | 1 | 1 | 1 | 1 | 3 | 0-5 | 1 |
| 2 | 1 | 0.1 | 1 | 2 | 2 | 0,1,2,3,6 | 2 |
| 3 | 2 | 0 | 1 | 3 | 2 | 0,1,2,3,6,8 | 2 |
| 4 | 2 | 1 | 1 | 4 | 2 | 0,1,2,3,6,7,8 | 2 |
| 5 | 2 | 2 | 1 | 5 | 2 | 0,1,2,3,6,7,8,9 | 2 |
| 6 | 2 | 3 | 1 | 6-63 | Reserved | Reserved | Reserved |
| 7 | 2 | 0,1 | 1 | | | | |
| 8 | 2 | 2,3 | 1 | | | | |
| 9 | 2 | 0-2 | 1 | | | | |

(continued)

| | One codeword: Codeword 0 enabled, Codeword 1 disabled | | | | Two Codewords: Codeword 0 enabled, Codeword 1 enabled | | |
|---|---|---|---|---|---|---|---|
| Value | Number of DMRS CDM group(s) without data | DMRS port(s) | Number of front-load symbols | Value | Number of DMRS CDM group(s) without data | DMRS port(s) | Number of front-load symbols |
| 10 | 2 | 0-3 | 1 | | | | |
| 11 | 3 | 0 | 1 | | | | |
| 12 | 3 | 1 | 1 | | | | |
| 13 | 3 | 2 | 1 | | | | |
| 14 | 3 | 3 | 1 | | | | |
| 15 | 3 | 4 | 1 | | | | |
| 16 | 3 | 5 | 1 | | | | |
| 17 | 3 | 0.1 | 1 | | | | |
| 18 | 3 | 2,3 | 1 | | | | |
| 19 | 3 | 4,5 | 1 | | | | |
| 20 | 3 | 0-2 | 1 | | | | |
| 21 | 3 | 3-5 | 1 | | | | |
| 22 | 3 | 0-3 | 1 | | | | |
| 23 | 2 | 0,2 | 1 | | | | |
| 24 | 3 | 0 | 2 | | | | |
| 25 | 3 | 1 | 2 | | | | |
| 26 | 3 | 2 | 2 | | | | |
| 27 | 3 | 3 | 2 | | | | |
| 28 | 3 | 4 | 2 | | | | |
| 29 | 3 | 5 | 2 | | | | |
| 30 | 3 | 6 | 2 | | | | |
| 31 | 3 | 7 | 2 | | | | |
| 32 | 3 | 8 | 2 | | | | |
| 33 | 3 | 9 | 2 | | | | |
| 34 | 3 | 10 | 2 | | | | |
| 35 | 3 | 11 | 2 | | | | |
| 36 | 3 | 0,1 | 2 | | | | |
| 37 | 3 | 2,3 | 2 | | | | |
| 38 | 3 | 4,5 | 2 | | | | |
| 39 | 3 | 6,7 | 2 | | | | |
| 40 | 3 | 8,9 | 2 | | | | |
| 41 | 3 | 10,11 | 2 | | | | |
| 42 | 3 | 0,1,6 | 2 | | | | |
| 43 | 3 | 2,3,8 | 2 | | | | |
| 44 | 3 | 4,5,10 | 2 | | | | |

(continued)

| | One codeword: Codeword 0 enabled, Codeword 1 disabled | | | | Two Codewords: Codeword 0 enabled, Codeword 1 enabled | | |
|---|---|---|---|---|---|---|---|
| Value | Number of DMRS CDM group(s) without data | DMRS port(s) | Number of front-load symbols | Value | Number of DMRS CDM group(s) without data | DMRS port(s) | Number of front-load symbols |
| 45 | 3 | 0,1,6,7 | 2 | | | | |
| 46 | 3 | 2,3,8,9 | 2 | | | | |
| 47 | 3 | 4,5,10,11 | 2 | | | | |
| 48 | 1 | 0 | 2 | | | | |
| 49 | 1 | 1 | 2 | | | | |
| 50 | 1 | 6 | 2 | | | | |
| 51 | 1 | 7 | 2 | | | | |
| 52 | 1 | 0,1 | 2 | | | | |
| 53 | 1 | 6,7 | 2 | | | | |
| 54 | 2 | 0,1 | 2 | | | | |
| 55 | 2 | 2,3 | 2 | | | | |
| 56 | 2 | 6.7 | 2 | | | | |
| 57 | 2 | 8,9 | 2 | | | | |
| 58 | 2 | 0,2,3 | 1 | | | | |
| 59-63 | Reserved | Reserved | Reserved | | | | |

[Table 25-1] and [Table 25-2] are tables used when dmrs-type is indicated to be 1 and maxLength is indicated to be 1, [Table 25-3] and [Table 25-4] are tables used when dmrs-Type=1 and maxLength=2, [Table 25-5] and [Table 25-6] indicate DMRS ports when dmrs-type=2 and maxLength=1, and [Table 25-7] and [Table 25-8] indicate DMRS ports when drms-tpye=2 and maxLength=2.

If the UE receives MAC-CE for activating a codepoint indicating two TCI states for at least one codepoint of a TCI state field in DCI, the UE may receive indication of a DMRS port using [Table 25-2], [Table 25-4], [Table 25-6], and [Table 25-8]. Otherwise, the UE may receive indication of the DMRS port using [Table 25-1], [Table 25-3], [Table 25-5], and [Table 25-7]. If the UE receives indication of a codepoint indicating two TCI states through the TCI state field, the UE may receive indication of entries indicating DMRS ports 1000, 1002, and 1003 for the purpose of NC-JT scheduling in [Table 25-2], [Table 25-4], [Table 25-6], and [Table 25-8]. The entries may be entry #12 in [Table 25-2], entry #31 in [Table 25-4], entry #24 in [Table 25-6], and entry #58 in [Table 25-8],

With respect to DCI format 1_1, if higher layer signaling, *dmrs-DownlinkForPDSCH-MappingTypeA* and *dmrs-DownlinkForPDSCH-MappingTypeB*, are both configured for the UE, a bit length of an antenna port field in DCI format 1_1 may be determined as max{$x_{-A}$, $x_B$}. Here, $x_A$ and $x_B$ may indicate bit lengths of the antenna port field determined through *dmrs-DownlinkForPDSCH MappingTypeA* and *dmrs-DownlinkForPDSCH-MappingTypeB*, respectively. If a PDSCH mapping type corresponding to a smaller value between $x_A$ and $x_B$ is scheduled, as many MSB bits as $|x_A-x_B|$ may be allocated as 0 bits and then transmitted.

With respect to DCI format 1_2, if higher layer signaling, *antennaPortsFieldPresenceDCI-1-2,* is not configured for the UE, an antenna port field may be absent in DCI format 1-2. That is, in a corresponding case, the length of the antenna port field may be 0 bits and the UE may determine a DMRS port by assuming 0-th entry in [Table 25-1], [Table 25-3], [Table 25-5], and [Table 25-7]. If higher layer signaling, antennaPortsFieldPresenceDCI-1-2, is configured for the UE, a bit length of the antenna port field in DCI format 1_2 may be determined similarly to the case of DCI format 1_1. If higher layer signaling, *dmrs-DownlinkForPDSCH MappingTypeA IDCI 1-2* and *dmrs-DownlinkForPDSCH-MappingTypeB-DCI-1-2,* are both configured for the UE, the bit length of the antenna port field in DCI format 1_2 may be determined as max{$x_{-A}$, $x_B$}. Here, $x_A$ and $x_B$ may indicate bit lengths of the antenna port field determined through *dmrs-DownlinkForPDSCH-MappingTypeA-DCI-1-2* and *dmrs-DownlinkForPDSCH-MappingTypeB-DCI-1-2,* respectively. If a PDSCH mapping type corresponding to a smaller value between $x_A$ and $x_B$ is scheduled, as many MSB bits as $|x_A - x_B|$ may be allocated as 0 bits and then transmitted.

Numbers 1, 2, and 3 indicated by number of DMRS CDM group(s) without data in [Table 25-1] to [Table 25-8] may indicate CDM groups {0}, {0, 1}, and {0, 1, 2}, respectively. DMRS port(s) shows indices of used ports in sequence. Antenna port may be indicated by DMRS port+1000. A CDM group of a DMRS is connected to a method of generating a DMRS sequence and an antenna port as shown in [Table 26-1] and [Table 26-2]. [Table 26-1] shows parameters in the case of using dmrs-type=1, and [Table 26-2] shows parameters in the case of using dmrs-type=2.

[Table 26-1]: Parameters for PDSCH DM-RS dmrs-type=1.

| $p$ | CDM group $\lambda$ | $\Delta$ | $w_f(k')$ | | $w_t(l')$ | |
|---|---|---|---|---|---|---|
| | | | $k' = 0$ | $k' = 1$ | $l' = 0$ | $l' = 1$ |
| 1000 | 0 | 0 | +1 | +1 | +1 | +1 |
| 1001 | 0 | 0 | +1 | -1 | +1 | +1 |
| 1002 | 1 | 1 | +1 | +1 | +1 | +1 |
| 1003 | 1 | 1 | +1 | -1 | +1 | +1 |
| 1004 | 0 | 0 | +1 | +1 | +1 | -1 |
| 1005 | 0 | 0 | +1 | -1 | +1 | -1 |
| 1006 | 1 | 1 | +1 | +1 | +1 | -1 |
| 1007 | 1 | 1 | +1 | -1 | +1 | -1 |

[Table 26-2]: Parameters for PDSCH DM-RS dmrs-type=2.

| $p$ | CDM group $\lambda$ | $\Delta$ | $w_f(k')$ | | $w_t(l')$ | |
|---|---|---|---|---|---|---|
| | | | $k' = 0$ | $k' = 1$ | $l' = 0$ | $l' = 1$ |
| 1000 | 0 | 0 | +1 | +1 | +1 | +1 |
| 1001 | 0 | 0 | +1 | -1 | +1 | +1 |
| 1002 | 1 | 2 | +1 | +1 | +1 | +1 |
| 1003 | 1 | 2 | +1 | -1 | +1 | +1 |
| 1004 | 2 | 4 | +1 | +1 | +1 | +1 |
| 1005 | 2 | 4 | +1 | -1 | +1 | +1 |
| 1006 | 0 | 0 | +1 | +1 | +1 | -1 |
| 1007 | 0 | 0 | +1 | -1 | +1 | -1 |
| 1008 | 1 | 2 | +1 | +1 | +1 | -1 |
| 1009 | 1 | 2 | +1 | -1 | +1 | -1 |
| 1010 | 2 | 4 | +1 | +1 | +1 | -1 |
| 1011 | 2 | 4 | +1 | -1 | +1 | -1 |

A DMRS sequence according to each parameter may be determined according to Equation 3 below. In Equation 3, p denotes a DMRS port, k denotes a subcarrier index, l denotes an OFDM symbol index, $\mu$ denotes a subcarrier spacing, $w_f(k')$ and $w_t(l')$ denote a frequency domain orthogonal cover code (FD-OCC) coefficient and a time domain orthogonal cover code (TD-OCC) coefficient according to a k' value and an l' value, respectively, and $\Delta$ expresses an interval between CDM groups using the number of *DMRS* subcarriers. In [Equation 3], $\beta_{PDSCH}^{DMRS}$ is a scaling factor indicating a ratio between energy per RE (EPRE) of a PDSCH and EPRE of a DMRS, and may be calculated according to

$$\beta_{PDSCH}^{DMRS} = 10^{-\frac{\beta_{DMRS}}{20}}$$

, and a value of $\beta_{DMRS}$ may be 0 dB, -3 dB, or -4.77 dB depending on whether the number of CDM groups is 1, 2, or 3.

[Equation 3]

$$a_{\bar{k},l}^{(p,\mu)} = \beta_{\text{PDSCH}}^{\text{DMRS}} w_{\text{f}}\left(k'\right) w_{\text{t}}\left(l'\right) r\left(2n+k'\right)$$

$$k = \begin{cases} 4n+2k'+\Delta & \text{Configuration type 1} \\ 6n+k'+\Delta & \text{Configuration type 2} \end{cases}$$

$$k' = 0,1$$

$$l = \bar{l} + l'$$

$$n = 0,1,\ldots$$

In a case in which DMRS type 1 is used, if a single codeword is scheduled and entries #2, #9, #10, #11, and #30 are indicated to the UE using [Table 25-1] and [Table 25-3], if a single codeword is scheduled and entries #2, #9, #10, #11, and #12 are indicated thereto using [Table 25-2], if a single codeword is scheduled and entries #2, #9, #10, #11, #30, and #31 are indicated thereto using [Table 25-4], or if two codewords are scheduled, the UE may consider that the corresponding scheduling is single-user MIMO scheduling. That is, the UE may assume that a different UE is not scheduled to all remaining orthogonal DMRS ports other than DMRS ports allocated to a scheduled PDSCH, and may not expect multi-user MIMO (MU-MIMO) scheduling. In this case, the UE does not assume that a different UE is co-scheduled, and may not perform a multi-user MIMO reception operation, such as canceling, nulling, or whitening multi-user interference.

In a case in which DMRS type 2 is used, if a single codeword is scheduled and entries #2, #10, and #23 are indicated to the UE using Table [25-5] or [Table 25-7], if a single codeword is scheduled and entries #2, #10, #23, and #24 are indicated thereto using [Table 25-6], if a single codeword is scheduled and entries #2, #10, #23, and #58 are indicated thereto using [Table 25-8], or if two codewords are scheduled, the UE may consider that the corresponding scheduling is single-user MIMO scheduling. That is, the UE may assume that a different UE is not scheduled to all remaining orthogonal DMRS ports other than DMRS ports allocated to a scheduled PDSCH, and may not expect multi-user MIMO scheduling. In this case, the UE does not assume that a different UE is co-scheduled, and may not perform a multi-user MIMO reception operation, such as canceling, nulling, or whitening multi-user interference.

The UE may not expect that the number of maximum front-loaded DMRS symbols is configured to be len2 through higher layer signaling, maxLength, and at the same time, one or more additional DMRS symbols are configured through higher layer signaling, dmrs-AdditionalPosition.

The UE may not expect that the number of actual front-loaded DMRS, the number of actual additional DMRS symbols, a DMRS symbol location, and a DMRS type configuration are different for all UEs subject to multi-user MIMO scheduling.

In the case of a UE with a PRG size of 2 or 4, the UE may not expect that frequency resource allocation does not match in a PRG unit grid for a different UE co-scheduled using other orthogonal DMRS ports in the same CDM group as that of a DMRS port indicated to the UE.

In the case of a PDSCH scheduled by DCI formats 1_1 and 1_2, the UE may assume that CDM groups indicated through the column "number of DMRS CDM group(s) without data" in [Table 25-1] to [Table 25-8] described above may include DMRS ports allocated to a different UE that may be co-scheduled through a multi-user MIMO scheme, and may not be used for data transmission of the corresponding UE. That values indicated through the column "number of DMRS CDM group(s) without data" in [Table 25-1] to [Table 25-8] are 1, 2, and 3 may imply that indices of CDM groups corresponding to the values correspond to CDM groups 0, {0,1}, and {0,1,2}, respectively.

If higher layer signaling, dmrs-FD-OCC-disableForRank1PDSCH, is configured for the UE and one DMRS port is allocated to the UE for PDSCH scheduling, the UE may not expect that a different UE is allocated a DMRS port in which a different FD-OCC is used among other orthogonal DMRS ports belonging to the same CDM group as that of the one allocated DMRS port.

Hereinafter, antenna port field indication included in DCI format 0_1 and DCI format 0_2 defined in [Table 5] described above is described. The antenna port field in DCI formats 0_1 and 0_2 may be expressed as 3, 4, or 5 bits, and may be indicated through [Table 25-9] to [Table 25-24] below.

[Table 25-9] Antenna port(s), transform precoder is disabled, dmrs-Type=1, maxLength=1, rank=1

| Value | Number of DMRS CDM group(s) without data | DMRS port(s) |
|---|---|---|
| 0 | 1 | 0 |
| 1 | 1 | 1 |
| 2 | 2 | 0 |
| 3 | 2 | 1 |
| 4 | 2 | 2 |
| 5 | 2 | 3 |
| 6-7 | Reserved | Reserved |

[Table 25-10] Antenna port(s), transform precoder is disabled, dmrs-Type=1, maxLength=1, rank=2 [514]

| Value | Number of DMRS CDM group(s) without data | DMRS port(s) |
|---|---|---|
| 0 | 1 | 0,1 |
| 1 | 2 | 0,1 |
| 2 | 2 | 2,3 |
| 3 | 2 | 0,2 |
| 4-7 | Reserved | Reserved |

[Table 25-11] Antenna port(s), transform precoder is disabled, dmrs-Type=1, maxLength=1, rank=3

| Value | Number of DMRS CDM group(s) without data | DMRS port(s) |
|---|---|---|
| 0 | 2 | 0-2 |
| 1-7 | Reserved | Reserved |

[Table 25-12] Antenna port(s), transform precoder is disabled, dmrs-Type=1, maxLength=1, rank=4

| Value | Number of DMRS CDM group(s) without data | DMRS port(s) |
|---|---|---|
| 0 | 2 | 0-3 |
| 1-7 | Reserved | Reserved |

[Table 25-13] Antenna port(s), transform precoder is disabled, dmrs-Type=1, maxLength=2, rank=1

| Value | Number of DMRS CDM group(s) without data | DMRS port(s) | Number of front-load symbols |
|---|---|---|---|
| 0 | 1 | 0 | 1 |
| 1 | 1 | 1 | 1 |
| 2 | 2 | 0 | 1 |
| 3 | 2 | 1 | 1 |
| 4 | 2 | 2 | 1 |
| 5 | 2 | 3 | 1 |
| 6 | 2 | 0 | 2 |
| 7 | 2 | 1 | 2 |
| 8 | 2 | 2 | 2 |
| 9 | 2 | 3 | 2 |
| 10 | 2 | 4 | 2 |
| 11 | 2 | 5 | 2 |

(continued)

| Value | Number of DMRS CDM group(s) without data | DMRS port(s) | Number of front-load symbols |
|---|---|---|---|
| 12 | 2 | 6 | 2 |
| 13 | 2 | 7 | 2 |
| 14-15 | Reserved | Reserved | Reserved |

[Table 25-14] Antenna port(s), transform precoder is disabled, dmrs-Type=1, maxLength=2, rank=2

| Value | Number of DMRS CDM group(s) without data | DMRS port(s) | Number of front-load symbols |
|---|---|---|---|
| 0 | 1 | 0,1 | 1 |
| 1 | 2 | 0,1 | 1 |
| 2 | 2 | 2,3 | 1 |
| 3 | 2 | 0,2 | 1 |
| 4 | 2 | 0,1 | 2 |
| 5 | 2 | 2,3 | 2 |
| 6 | 2 | 4,5 | 2 |
| 7 | 2 | 6,7 | 2 |
| 8 | 2 | 0,4 | 2 |
| 9 | 2 | 2,6 | 2 |
| 10-15 | Reserved | Reserved | Reserved |

[Table 25-15] Antenna port(s), transform precoder is disabled, dmrs-Type=1, maxLength=2, rank=3

| Value | Number of DMRS CDM group(s) without data | DMRS port(s) | Number of front-load symbols |
|---|---|---|---|
| 0 | 2 | 0-2 | 1 |
| 1 | 2 | 0,1,4 | 2 |
| 2 | 2 | 2,3,6 | 2 |
| 3-15 | Reserved | Reserved | Reserved |

[Table 25-16] Antenna port(s), transform precoder is disabled, dmrs-Type=1, maxLength=2, rank=4

| Value | Number of DMRS CDM group(s) without data | DMRS port(s) | Number of front-load symbols |
|---|---|---|---|
| 0 | 2 | 0-3 | 1 |
| 1 | 2 | 0,1,4,5 | 2 |
| 2 | 2 | 2,3,6,7 | 2 |
| 3 | 2 | 0,2,4,6 | 2 |
| 4-15 | Reserved | Reserved | Reserved |

[Table 25-17] Antenna port(s), transform precoder is disabled, dmrs-Type=2, maxLength=1, rank=1

| Value | Number of DMRS CDM group(s) without data | DMRS port(s) |
|---|---|---|
| 0 | 1 | 0 |
| 1 | 1 | 1 |
| 2 | 2 | 0 |
| 3 | 2 | 1 |
| 4 | 2 | 2 |

(continued)

| Value | Number of DMRS CDM group(s) without data | DMRS port(s) |
|---|---|---|
| 5 | 2 | 3 |
| 6 | 3 | 0 |
| 7 | 3 | 1 |
| 8 | 3 | 2 |
| 9 | 3 | 3 |
| 10 | 3 | 4 |
| 11 | 3 | 5 |
| 12-15 | Reserved | Reserved |

[Table 25-18] Antenna port(s), transform precoder is disabled, dmrs-Type=2, maxLength=1, rank=2

| Value | Number of DMRS CDM group(s) without data | DMRS port(s) |
|---|---|---|
| 0 | 1 | 0,1 |
| 1 | 2 | 0,1 |
| 2 | 2 | 2,3 |
| 3 | 3 | 0,1 |
| 4 | 3 | 2,3 |
| 5 | 3 | 4,5 |
| 6 | 2 | 0,2 |
| 7-15 | Reserved | Reserved |

[Table 25-19] Antenna port(s), transform precoder is disabled, dmrs-Type=2, maxLength=1, rank =3

| Value | Number of DMRS CDM group(s) without data | DMRS port(s) |
|---|---|---|
| 0 | 2 | 0-2 |
| 1 | 3 | 0-2 |
| 2 | 3 | 3-5 |
| 3-15 | Reserved | Reserved |

[Table 25-20] Antenna port(s), transform precoder is disabled, dmrs-Type=2, maxLength=1, rank =4

| Value | Number of DMRS CDM group(s) without data | DMRS port(s) |
|---|---|---|
| 0 | 2 | 0-3 |
| 1 | 3 | 0-3 |
| 2-15 | Reserved | Reserved |

[Table 25-21] Antenna port(s), transform precoder is disabled, dmrs-Type=2, maxLength=2, rank=1

| Value | Number of DMRS CDM group(s) without data | DMRS port(s) | Number of front-load symbols |
|---|---|---|---|
| 0 | 1 | 0 | 1 |
| 1 | 1 | 1 | 1 |
| 2 | 2 | 0 | 1 |
| 3 | 2 | 1 | 1 |
| 4 | 2 | 2 | 1 |

(continued)

| Value | Number of DMRS CDM group(s) without data | DMRS port(s) | Number of front-load symbols |
|---|---|---|---|
| 5 | 2 | 3 | 1 |
| 6 | 3 | 0 | 1 |
| 7 | 3 | 1 | 1 |
| 8 | 3 | 2 | 1 |
| 9 | 3 | 3 | 1 |
| 10 | 3 | 4 | 1 |
| 11 | 3 | 5 | 1 |
| 12 | 3 | 0 | 2 |
| 13 | 3 | 1 | 2 |
| 14 | 3 | 2 | 2 |
| 15 | 3 | 3 | 2 |
| 16 | 3 | 4 | 2 |
| 17 | 3 | 5 | 2 |
| 18 | 3 | 6 | 2 |
| 19 | 3 | 7 | 2 |
| 20 | 3 | 8 | 2 |
| 21 | 3 | 9 | 2 |
| 22 | 3 | 10 | 2 |
| 23 | 3 | 11 | 2 |
| 24 | 1 | 0 | 2 |
| 25 | 1 | 1 | 2 |
| 26 | 1 | 6 | 2 |
| 27 | 1 | 7 | 2 |
| 28-31 | Reserved | Reserved | Reserved |

[Table 25-22] Antenna port(s), transform precoder is disabled, dmrs-Type=2, maxLength=2, rank=2

| Value | Number of DMRS CDM group(s) without data | DMRS port(s) | Number of front-load symbols |
|---|---|---|---|
| 0 | 1 | 0,1 | 1 |
| 1 | 2 | 0,1 | 1 |
| 2 | 2 | 2,3 | 1 |
| 3 | 3 | 0,1 | 1 |
| 4 | 3 | 2,3 | 1 |
| 5 | 3 | 4,5 | 1 |
| 6 | 2 | 0,2 | 1 |
| 7 | 3 | 0,1 | 2 |
| 8 | 3 | 2,3 | 2 |
| 9 | 3 | 4,5 | 2 |
| 10 | 3 | 6,7 | 2 |
| 11 | 3 | 8,9 | 2 |

(continued)

| Value | Number of DMRS CDM group(s) without data | DMRS port(s) | Number of front-load symbols |
|---|---|---|---|
| 12 | 3 | 10,11 | 2 |
| 13 | 1 | 0,1 | 2 |
| 14 | 1 | 6,7 | 2 |
| 15 | 2 | 0,1 | 2 |
| 16 | 2 | 2,3 | 2 |
| 17 | 2 | 6,7 | 2 |
| 18 | 2 | 8,9 | 2 |
| 19-31 | Reserved | Reserved | Reserved |

[Table 25-23] Antenna port(s), transform precoder is disabled, dmrs-Type=2, maxLength=2, rank=3

| Value | Number of DMRS CDM group(s) without data | DMRS port(s) | Number of front-load symbols |
|---|---|---|---|
| 0 | 2 | 0-2 | 1 |
| 1 | 3 | 0-2 | 1 |
| 2 | 3 | 3-5 | 1 |
| 3 | 3 | 0,1,6 | 2 |
| 4 | 3 | 2,3,8 | 2 |
| 5 | 3 | 4,5,10 | 2 |
| 6-31 | Reserved | Reserved | Reserved |

[Table 25-24] Antenna port(s), transform precoder is disabled, dmrs-Type=2, maxLength=2, rank=4

| Value | Number of DMRS CDM group(s) without data | DMRS port(s) | Number of front-load symbols |
|---|---|---|---|
| 0 | 2 | 0-3 | 1 |
| 1 | 3 | 0-3 | 1 |
| 2 | 3 | 0,1,6,7 | 2 |
| 3 | 3 | 2,3,8,9 | 2 |
| 4 | 3 | 4,5,10,11 | 2 |
| 5-31 | Reserved | Reserved | Reserved |

[Table 25-9] to [Table 25-12] are tables used when dmrs-type is indicated to be 1 and maxLength is indicated to be 1, [Table 25-13] to [Table 25-16] are tables used when dmrs-Type=1 and maxLength=2, [Table 25-17] to [Table 25-20] indicate DMRS ports used when dmrs-type=2 and maxLength=1, and [Table 25-21] to [Table 25-24] indicate DMR ports used when drms-type=2 and maxLength=2.

With respect to DCI format 0_1, if higher layer signaling, *dmrs-UplinkForPUSCH-MappingTypeA* and *dmrs-UplinkForPUSCH MappingTypeB,* are both configured for the UE, a bit length of the antenna port field within DCI format 0_1 may be determined as max{$x_A$, $x_B$}. Here, $x_A$ and $x_B$ may indicate bit lengths of the antenna port field determined through *dmrs-UplinkForPUSCH-MappingTypeA* and *dmrs-UplinkForPUSCH-MappingTypeB,* respetively. If a PUSCH mapping type corresponding to a smaller value between $x_A$ and $x_B$ is scheduled, as many MSB bits as |$x_A$-$x_B$| may be allocated as 0 bits and then transmitted.

With respect to DCI format 0_2, if higher layer signaling, *antennaPortsFieldPresenceDCI-0-2,* is not configured for the UE, an antenna port field may be absent in corresponding DCI format 0_2. That is, in a corresponding case, the length of the antenna port field may be 0 bits and the UE may determine a DMRS port by assuming 0-th entry in [Table 25-9] to [Table 25-24] above. If higher layer signaling, *antennaPortsFieldPresenceDCI-0-2,* is configured for the UE, a bit length of the antenna port field in DCI format 0_2 may be determined similarly to the case of DCI format 0_1. If higher layer signaling, *dmrs-UplinkForPUSCH-MappingTypeA-DCI-0-2* and *dmrs-UplinkForPUSCH-MappingTypeB-DCI-0-2,* are both configured for the UE, the bit length of the antenna port field in DCI format 0_2 may be determined as $\max\{x_A, x_B\}$. Here, $x_A$ and $x_B$ may indicate bit lengths of the antenna port field determined through *dmrs-UplinkForPUSCH-Mapping-TypeA-DCI-0-2* and *dmrs-UplinkForPUSCH-MappingTypeB-DCI-0-2,* respectively. If a PDSCH mapping type corresponding to a smaller value between $x_A$ and $x_B$ is scheduled, as many MSB bits as $|x_A-x_B|$ may be allocated as 0 and then transmitted.

Numbers 1, 2, and 3 indicated by number of DMRS CDM group(s) without data in [Table 25-9] to [Table 25-24] indicate CDMR groups {0}, {0, 1}, and {0, 1, 2}, respectively. DMRS port(s) shows indices of used ports in sequence. Antenna port is indicated by DMRS port + 1000. A CDM group of a DMRS is connected to a method of generating a DMRS sequence and an antenna port as shown in [Table 26-1a] and [Table 26-2a]. [Table 26-1a] shows parameters in the case of using dmrs-type=1 and [Table 26-2a] shows parameters in the case of using dmrs-type=2.

[Table 26-1a]: Parameters for PUSCH DM-RS dmrs-type=1.

| *P* | CDM group $\lambda$ | $\Delta$ | $w_f(k')$ | | $w_t(l')$ | |
|---|---|---|---|---|---|---|
| | | | $k' = 0$ | $k' = 1$ | $l' = 0$ | $l' = 1$ |
| 0 | 0 | 0 | +1 | +1 | +1 | +1 |
| 1 | 0 | 0 | +1 | -1 | +1 | +1 |
| 2 | 1 | 1 | +1 | +1 | +1 | +1 |
| 3 | 1 | 1 | +1 | -1 | +1 | +1 |
| 4 | 0 | 0 | +1 | +1 | +1 | -1 |
| 5 | 0 | 0 | +1 | -1 | +1 | -1 |
| 6 | 1 | 1 | +1 | +1 | +1 | -1 |
| 7 | 1 | 1 | +1 | -1 | +1 | -1 |

[Table 26-2a]: Parameters for PUSCH DM-RS dmrs-type=2.

| $\tilde{p}$ | CDM group $\lambda$ | $\Delta$ | $w_f(k')$ | | $w_t(l')$ | |
|---|---|---|---|---|---|---|
| | | | $k' = 0$ | $k' = 1$ | $l' = 0$ | $l' = 1$ |
| 0 | 0 | 0 | +1 | +1 | +1 | +1 |
| 1 | 0 | 0 | +1 | -1 | +1 | +1 |
| 2 | 1 | 2 | +1 | +1 | +1 | +1 |
| 3 | 1 | 2 | +1 | -1 | +1 | +1 |
| 4 | 2 | 4 | +1 | +1 | +1 | +1 |
| 5 | 2 | 4 | +1 | -1 | +1 | +1 |
| 6 | 0 | 0 | +1 | +1 | +1 | -1 |
| 7 | 0 | 0 | +1 | -1 | +1 | -1 |
| 8 | 1 | 2 | +1 | +1 | +1 | -1 |
| 9 | 1 | 2 | +1 | -1 | +1 | -1 |
| 10 | 2 | 4 | +1 | +1 | +1 | -1 |
| 11 | 2 | 4 | +1 | -1 | +1 | -1 |

A DMRS sequence according to each parameter is determined according to Equation 3-1 below. In Equation 3-1, $\tilde{p}$ denotes a DMRS port, k denotes a subcarrier index, l denotes an OFDM symbol index, $\mu$ denotes a subcarrier spacing, $w_f(k')$ and $w_t(l')$ denote a frequency domain orthogonal cover code (FD-OCC) coefficient and a time domain orthogonal cover code (TD-OCC) coefficient according to a k' value and an l' value, respectively, and $\Delta$ expresses an interval between CDM groups using the number of *DMRS* subcarriers. In [Equation 3-1], $\beta_{PUSCH}^{DMRS}$ is a scaling factor indicating a ratio between EPRE *DMRS* 20 of a PUSCH and EPRE of a DMRS and may be calculated according to $\beta_{PUSCH}^{DMRS} = 10^{-\frac{\beta_{DMRS}}{20}}$ , and a value of $\beta_{DMRS}$ may be 0 dB, -3 dB, or -4.77 dB depending on whether the number of CDM groups is 1, 2, or 3.

[Equation 3-1]

$$\tilde{a}_{k,l}^{(p_j,\mu)} = w_f(k')w_t(l')r(2n+k')$$

$$k = \begin{cases} 4n + 2k' + \Delta & Configuration\ type\ 1 \\ 6n + k' + \Delta & Configuration\ type\ 2 \end{cases}$$

$$k' = 0,1$$

$$l = \bar{l} + l'$$

$$n = 0,1,\dots$$

$$j = 0,1,\dots,v-1$$

$$\begin{bmatrix} a_{k,l}^{(p_0,\mu)} \\ \vdots \\ a_{k,l}^{(p_{\rho-1},\mu)} \end{bmatrix} = \beta_{\text{PUSCH}}^{\text{DMRS}} W \begin{bmatrix} \tilde{a}_{k,l}^{(p_0,\mu)} \\ \vdots \\ \tilde{a}_{k,l}^{(p_{v-1},\mu)} \end{bmatrix}$$

If frequency hopping is not used, the UE may need to assume that higher layer signaling, dmrs-AdditionalPosition, is configured as 'pos2' and a maximum of two additional DMRS symbols may be used for PUSCH transmission. If frequency hopping is used, the UE may need to assume that higher layer signaling, dmrs-AdditionalPosition, is configured as 'pos 1' and a maximum of one additional DMRS symbol may be used for PUSCH transmission.

In the case of the PUCSCH scheduled by DCI formats 0_1 and 0_2, the UE may assume that CDM groups indicated through the column "Number of DMRS CDM group(s) without data" in [Table 25-9] to [Table 25-24] above may include DMRS ports allocated to a different UE that may be co-scheduled through a multi-user MIMO scheme and may not be used for data transmission of the corresponding UE. That values indicated through the column "Number of DMRS CDM group(s) without data" in [Table 25-9] to [Table 25-24] are 1, 2, and 3 may be understood that indices of CDM groups corresponding to the above-described meaning correspond to CDM groups 0, {0,1}, and {0,1,2}, respectively.

<First embodiment: Method of supporting enhanced DMRS types 1 and 2 supporting the increased number of orthogonal ports>

As an embodiment of the disclosure, a method of supporting enhanced DMRS types 1 and 2 supporting the increased number of orthogonal ports is described.

An evolved standard of 5G may support enhanced DMRS type 1 and enhanced DMRS type 2 supporting the increased number of orthogonal ports while maintaining the same RE usage and the same overhead compared to DMRS type 1 and DMRS type 2 that have been supported in an initial standard of 5G for all uplink and downlink. In the case of conventional DMRS type 1, if the number of front-loaded symbols is 1 and 2, maximum four and eight orthogonal DMRS ports may be supported, respectively, and in the case of DMRS type 2, if the number of front-loaded symbols is 1 and 2, maximum six and 12 DMRS ports may be supported, respectively. Referring to these supported items, in the case of enhanced DMRS type 1, if the number of front-loaded symbols is 1 and 2, maximum eight and 16 DMRS ports may be supported, respectively, and in the case of enhanced DMRS type 2, if the number of front-loaded symbols is 1 and 2, maximum 12 and 24 orthogonal DMRS ports may be supported, respectively. Hereinafter, a new DMRS type supporting the increased number of orthogonal ports as described above may be referred to as one of "enhanced DMRS types 1 and 2", "new DMRS types 1 and 2", "new DMRS types 1 and 2", "DMRS types 1-1 and 2-1", or "DMRS types 3 and 4", and other similar expanded names that may be called with the meaning of having a function enhanced compared to that of conventional DMRS types 1 and 2 may not be excluded. In addition, the following items are described mainly for downlink, but may also be applied similarly to uplink DMRS supporting.

When the UE supports enhanced DMRS types 1 and 2, the UE may report UE capability of supporting enhanced DMRS types 1 and 2 to the base station. Here, UE capability report may be transmitted to the base station per band and, more specifically, may be transmitted per feature set (FS) or per feature set per component carrier (FSPC). Also, the corresponding UE capability report may be differently supported for each frequency range (FR), or may be limited to FR1. Also, the corresponding UE capability report may include, as described above, the meaning in which, in the case of enhanced DMRS type 1, if the number of front-loaded symbols is 1 and 2, maximum eight and 16 orthogonal DMRS ports may be supported, respectively, and in the case of enhanced DMRS type 2, if the number of front-loaded symbols is 1 and 2, maximum 12 and 24 orthogonal DMRS ports may be supported, respectively. The UE may perform reporting through common UE capability for enhanced DMRS types 1 and 2, and, here, may report whether the UE supports only enhanced DMRS type 1, supports only enhanced DMRS type 2, or supports both enhanced DMRS types 1 and 2. Alternatively, the UE may report whether the UE supports each of enhanced DMRS types 1 and 2 through individual UE capability.

Also, when the UE supports a dynamic switching function between an enhanced DMRS type and a conventional DMRS type, the UE may report the corresponding function through UE capability. The dynamic switching function between the enhanced DMRS type and the conventional DMRS type may imply that a DMRS type configured through higher layer signaling is changeable through a MAC-CE, that selection between an enhanced type and a conventional type is possible through DCI, or both of them. In the case of reporting whether enhanced DMRS types 1 and 2 are supported through the common UE capability, the UE may report, through one UE capability, whether a dynamic switching function for DMRS types 1 and 2 is supported, while reporting whether the UE supports only dynamic switching between DMRS type 1 and enhanced DMRS type 1, whether the UE supports only dynamic switching between DMRS type 2 and enhanced DMRS type 2, or whether the UE supports dynamic switching between an enhanced type and a conventional type for both types. Unlike this, in the case of reporting, through the common UE capability or the individual UE capability, whether enhanced DMRS types 1 and 2 are supported, the UE may report, through the individual UE capability for each type, that dynamic switching between the conventional type and the enhanced type is possible.

Also, in a case in which the UE operates in enhanced DMRS type 1 or 2, if the UE supports conventional DMRS type 1 or 2 and multi-user MIMO scheduling, the UE may report the corresponding function through the UE capability. Here, the multi-user MIMO scheduling may be co-scheduling between conventional DMRS type 1 and enhanced DMRS type 1 or co-scheduling between conventional DMRS type 2 and enhanced DMRS type 2. Similarly to the above description, the UE may report UE capability related to whether co-scheduling between the conventional type and the enhanced type is possible, through the common UE capability, to report that only co-scheduling between conventional type 1 and enhanced type 1 is possible, report that only co-scheduling between conventional type 2 and enhanced type 2 is possible, or report that co-scheduling between the conventional type and the enhanced type is possible for both types 1 and 2. Alternatively, the UE may perform reporting through the individual UE capability for each type.

With respect to the UE having reported the corresponding UE capability, the base station may configure a scheme of enhanced DMRS types 1 and 2 for the UE through higher layer signaling using the following methods.

- [Higher layer configuration method 1] For example, an enhanced DMRS type being supported may be configured for the UE through higher layer signaling, DMRS-DownlinkConfig.

  ▪ [Higher layer configuration method 1-1] Higher layer signaling, dmrs-Type-r1 8, which is similar to higher layer signaling, dmrs-Type, used to determine a conventional DMRS type, may be configured for the UE, and dmrs-Type-r18 may be used to define an enhanced DMRS type other than DMRS type 1 or 2. An RRC IE that is called dmrs-Type-r18 in addition to dmrs-Type may be newly configured for the UE in higher layer signaling, DMRS-DownlinkConfig. Through dmrs-Type-r18, one of DMRS types 1 and 2 and enhanced DMRS types 1 and 2 may be determined and one of enhanced DMRS types 1 and 2 may be determined. For example, as shown in [Table 26-3] below, if dmrs-Type-r18 is configured, one of DMRS type 2, enhanced DMRS type 1, and enhanced DMRS type 2 may be determined and existing dmrs-Type may be ignored. If dmrs-Type-r18 is not configured, a DMRS type may be determined according to a dmrs-Type configuration scheme. As another example, if dmrs-Type-r18 is configured, one of enhanced DMRS types 1 and 2 may be determined and existing dmrs-Type may be ignored. If dmrs-Type-r18 is not configured, a DMRS type may be determined according to a dmrs-Type configuration scheme. In the case of using the higher layer configuration method described above, the UE may use only one of the conventional DMRS type scheme (e.g., DMRS type 1 or 2) and the enhanced DMRS scheme (e.g., enhanced DMRS type 1 or 2) with respect to each of PDSCH mapping types A and B. This may be a higher layer configuration scheme that disallows dynamic switching between the conventional scheme and the enhanced scheme or does not consider dynamic switching itself. Here, dmrs-Type-r18 that is a name of an RRC IE is only an example and may be different from a real name of the actual RRC IE.

[Table 26-3]

```
DMRS-DownlinkConfig ::=          SEQUENCE {
    dmrs-Type                    ENUMERATED {type2}
OPTIONAL,    -- Need S
    dmrs-AdditionalPosition        ENUMERATED {pos0, pos1, pos3}
OPTIONAL,    -- Need S
    maxLength                    ENUMERATED {len2}
OPTIONAL,    -- Need S
    scramblingID0                INTEGER (0..65535)
OPTIONAL,    -- Need S
    scramblingID1                INTEGER (0..65535)                OPTIONAL,
-- Need S
    phaseTrackingRS              SetupRelease { PTRS-DownlinkConfig }
OPTIONAL,    -- Need M
    ...,
    [[
    dmrs-Downlink-r16            ENUMERATED {enabled}
OPTIONAL    -- Need R
    ]]
    dmrs-Type-r18               ENUMERATED {type2, etype1, etype2}
OPTIONAL,    -- Need S

}
```

- ■ [Higher layer configuration method 1-2] While using existing dmrs-Type to determine one of DMRS types 1 and 2, a new RRC IE indicating whether enhanced DMRS type 1 or 2 is available may be additionally configured for the UE. As shown in [Table 26-4] below, if higher layer signaling, dmrs-Type, is not configured for the UE by the base station and enhanced-Dmrs-Type-r18 is not configured therefor, the UE may support a conventional scheme for DMRS type 1. Also, if dmrs-Type is not configured for the UE and enhanced-Dmrs-Type-r18 is configured to be enabled, this may imply that the UE may support an enhanced scheme for DMRS type 1 (i.e., enhanced DMRS type 1). Here, in a case in which the UE supports dynamic switching between a conventional type and an enhanced type, if enhanced-Dmrs-Type-r18 is configured for the UE, the UE may perform dynamic switching without additional higher layer signaling, or whether to perform dynamic switching may be configured by the base station for the UE through dynamicSwitchType that is additional higher layer signaling.

[Table 26-4]

```
DMRS-DownlinkConfig ::=          SEQUENCE {
    dmrs-Type                    ENUMERATED {type2}
OPTIONAL,    -- Need S
    dmrs-AdditionalPosition        ENUMERATED {pos0, pos1, pos3}
OPTIONAL,    -- Need S
    maxLength                    ENUMERATED {len2}
OPTIONAL,    -- Need S
    scramblingID0                INTEGER (0..65535)
OPTIONAL,    -- Need S
    scramblingID1                INTEGER (0..65535)                OPTIONAL,
-- Need S
    phaseTrackingRS              SetupRelease { PTRS-DownlinkConfig }
OPTIONAL,    -- Need M
    ...,
    [[
    dmrs-Downlink-r16            ENUMERATED {enabled}
OPTIONAL    -- Need R
    ]]
    enhanced-Dmrs-Type-r18       ENUMERATED {enabled}
OPTIONAL,    -- Need S

}
```

- - [Higher layer configuration method 2] Without using higher layer signaling, DMRS-DownlinkConfig, in order to support an enhanced DMRS type, that an enhanced DMRS type is supported may be configured for the UE through a new RRC LE. As shown in [Table 26-5] below, if higher layer signaling, enhanced-Dmrs-Type-r18, is not configured for the UE by the base station, the UE may determine a DMRS type according to existing DMRS-DownlinkConfig configuration. If higher layer signaling, enhanced-Dmrs-Type-r18, is configured for the UE by the base station, the UE may use an enhanced scheme for the DMRS type determined according to the existing DMRS-DownlinkConfig configuration (i.e., enhanced DMRS type 1 or 2). Here, in a case in which the UE supports dynamic switching between a conventional type and an enhanced type, if enhanced-Dmrs-Type-r18 is configured for the UE, the UE may perform dynamic switching without additional higher layer signaling, or whether to perform dynamic switching may be configured by the base station for the UE through dynamicSwitchType that is additional higher layer signaling.

[Table 26-5]

```
PDSCH-Config ::=                         SEQUENCE {
    dataScramblingIdentityPDSCH          INTEGER (0..1023)
OPTIONAL,    -- Need S
    dmrs-DownlinkForPDSCH-MappingTypeA   SetupRelease { DMRS-DownlinkConfig }
OPTIONAL,    -- Need M
    dmrs-DownlinkForPDSCH-MappingTypeB   SetupRelease { DMRS-DownlinkConfig }
OPTIONAL,    -- Need M
    ...
    enhanced-Dmrs-Type-r18       ENUMERATED {enabled}
OPTIONAL,    -- Need S
```

Hereinafter, various supporting methods capable of determining specific RE mapping and an OCC for enhanced DMRS types 1 and 2 are described.

[Enhanced DMRS type 1 supporting method 1]

As an embodiment of a method of supporting enhanced DMRS type 1 described above, time and frequency resource mapping of a DMRS RE and a frequency domain orthogonal cover code (FD-OCC) coefficient and a time domain orthogonal cover code (TD-OCC) coefficient in the case of using enhanced DMRS type 1 may be determined based on [Equation 4] and [Table 26-6] below.

[Equation 4]

$$a_{k,l}^{(p,\mu)} = \beta_{PDSCH}^{DMRS} w_f(k') \; w_t(l') r(2n + k')$$

$$k = 8n + 4k' + \Delta \; \text{(for new DMRS type 1)}$$

$$k' = 0, \; 1$$

$$l = \bar{l} + l'$$

$$n = 0, \; 1, \; ...$$

$$\Delta = 0, \; 1, \; 2, \; 3$$

[Table 26-6]: Parameters for [enhanced DMRS type 1 supporting method]

| $p$ | CDM group $\lambda$ | $\Delta$ | $w_f(k')$ | | $w_t(l')$ | |
|---|---|---|---|---|---|---|
| | | | $k' = 0$ | $k' = 1$ | $l' = 0$ | $l' = 1$ |
| 1000 | 0 | 0 | +1 | +1 | +1 | +1 |
| 1001 | 0 | 0 | +1 | -1 | +1 | +1 |
| 1002 | 1 | 1 | +1 | +1 | +1 | +1 |
| 1003 | 1 | 1 | +1 | -1 | +1 | +1 |
| 1004 | 2 | 2 | +1 | +1 | +1 | +1 |
| 1005 | 2 | 2 | +1 | -1 | +1 | +1 |
| 1006 | 3 | 3 | +1 | +1 | +1 | +1 |
| 1007 | 3 | 3 | +1 | -1 | +1 | +1 |
| 1008 | 0 | 0 | +1 | +1 | +1 | -1 |
| 1009 | 0 | 0 | +1 | -1 | +1 | -1 |
| 1010 | 1 | 1 | +1 | +1 | +1 | -1 |

(continued)

| p | CDM group $\lambda$ | $\Delta$ | $w_f(k')$ | | $w_t(l')$ | |
|---|---|---|---|---|---|---|
| | | | $k' = 0$ | $k' = 1$ | $l' = 0$ | $l' = 1$ |
| 1011 | 1 | 1 | +1 | -1 | +1 | -1 |
| 1012 | 2 | 2 | +1 | +1 | +1 | -1 |
| 1013 | 2 | 2 | +1 | -1 | +1 | -1 |
| 1014 | 3 | 3 | +1 | +1 | +1 | -1 |
| 1015 | 3 | 3 | +1 | -1 | +1 | -1 |

[Enhanced DMRS type 1 supporting method 1] based on [Equation 4] and [Table 26-6] above uses a total of four CDM groups. In the case of one front-loaded DMRS symbol, two DMRS ports may be included in each CDM group and thus a total of eight orthogonal DMRS ports may be supported. Also, in the case of two front-loaded DMRS symbols, four DMRS ports may be included in each CDM group and thus a total of 16 orthogonal DMRS ports may be supported. Compared to that an interval between REs allocated to a specific DMRS port in the same CDM group is two REs in conventional DMRS type 1, four CDM groups are supported, and thus the interval may increase to four REs. Since the number of CDM groups is increased while maintaining the number of DMRS ports in each CDM group, scheduling of a PDSCH transmitted together with a DMRS may be limited to the units of *DMRS* two RBs. In [Equation 4], $\beta_{PDSCH}^{DMRS}$ is a scaling factor indicating a ratio between EPRE of the PDSCH and the EPRE of the DMRS, and may be calculated by $\beta_{PDSCH}^{DMRS} = 10^{-\frac{\beta_{DMRS}}{20}}$, and a value of $\beta_{DMRS}$ may be 0 dB, -3 dB, -4.77 dB, or -6 dB depending on whether the number of CDM groups is 1, 2, 3, or 4.

[Enhanced DMRS type 1 supporting method 2]

As another embodiment of the method of supporting enhanced DMRS type 1 described above, time and frequency resource mapping of a DMRS RE and an FD-OCC coefficient and a TD-OCC coefficient for the mapping in the case of using enhanced DMRS type 1 may be determined based on [Equation 5] and [Table 26-7] below.

[Equation 5]

$$a_{k,l}^{(p,\mu)} = \beta_{PDSCH}^{DMRS} w_f(k')\ w_t(l')r(2n + k')$$

$$k = 8n + 2k' + \Delta \quad \textit{(for new DMRS type 1)}$$

$$k' = 0,\ 1$$

$$l = \bar{l} + l'$$

$$n = 0,\ 1,\ \ldots$$

[Table 26-7]: Parameters for [Enhanced DMRS type 1 supporting method 2]

| p | CDM group $\lambda$ | $\Delta$ | $w_f(k')$ | | $w_t(l')$ | |
|---|---|---|---|---|---|---|
| | | | $k' = 0$ | $k' = 1$ | $l' = 0$ | $l' = 1$ |
| 1000 | 0 | 0 | +1 | +1 | +1 | +1 |
| 1001 | 0 | 0 | +1 | -1 | +1 | +1 |
| 1002 | 1 | 1 | +1 | +1 | +1 | +1 |
| 1003 | 1 | 1 | +1 | -1 | +1 | +1 |
| 1004 | 2 | 4 | +1 | +1 | +1 | +1 |
| 1005 | 2 | 4 | +1 | -1 | +1 | +1 |

(continued)

| p | CDM group $\lambda$ | $\Delta$ | $w_f(k')$ | | $w_t(l')$ | |
|---|---|---|---|---|---|---|
| | | | $k' = 0$ | $k' = 1$ | $l' = 0$ | $l' = 1$ |
| 1006 | 3 | 5 | +1 | +1 | +1 | +1 |
| 1007 | 3 | 5 | +1 | -1 | +1 | +1 |
| 1008 | 0 | 0 | +1 | +1 | +1 | -1 |
| 1009 | 0 | 0 | +1 | -1 | +1 | -1 |
| 1010 | 1 | 1 | +1 | +1 | +1 | -1 |
| 1011 | 1 | 1 | +1 | -1 | +1 | -1 |
| 1012 | 2 | 4 | +1 | +1 | +1 | -1 |
| 1013 | 2 | 4 | +1 | -1 | +1 | -1 |
| 1014 | 3 | 5 | +1 | +1 | +1 | -1 |
| 1015 | 3 | 5 | +1 | -1 | +1 | -1 |

[Enhanced DMRS type 1 supporting method 2] based on [Equation 5] and [Table 26-7] above uses a total of four CDM groups. In the case of one front-loaded DMRS symbol, two DMRS ports may be included in each CDM group and thus a total of eight orthogonal DMRS ports may be supported, and in the case of two front-loaded DMRS symbols, four DMRS ports may be included in each CDM group and thus a total of 16 orthogonal DMRS ports may be supported. Since the number of CDM groups is increased while maintaining the number of DMRS ports in each CDM group, scheduling of a PDSCH transmitted together with a DMRS may be limited to the units of two RBs. As in conventional DMRS type 1, an interval between REs allocated to a specific DMRS port in the same CDM group is maintained to be two REs. However, for each DMRS port, the DMRS density of a specific RB between two RBs may be high and the DMRS density of the other RB may be low. For example, in the case of DMRS ports 1000 to 1003, the DMRS density of even-numbered RBs among allocated RBs is twice the DMRS density of odd-numbered RBs, but in the case of DMRS ports 1004 to 1008, the opposite situation may occur. In [Equation 5], $\beta_{PDSCH}^{DMRS}$ is a scaling factor indicating a ratio between EPRE of the PDSCH and EPRE of the DMRS, and may be calculated by $\beta_{PDSCH}^{DMRS} = 10^{-\frac{\beta_{DMRS}}{20}}$, and a value of $\beta_{DMRS}$ may be 0 dB, -3 dB, -4.77 dB, or -6 dB depending on whether the number of CDM groups is 1, 2, 3, or 4.

[Enhanced DMRS type 1 supporting method3]

As another embodiment of the method of supporting enhanced DMRS type 1 described above, time and frequency resource mapping of a DMRS RE and an FD-OCC coefficient and a TD-OCC coefficient for the mapping in the case of using enhanced DMRS type 1 may be determined based on [Equation 3] above and [Table 26-1-1] below. Here, what is different from conventional DMRS type 1 is that, if the number of front-loaded symbols is 1, indication for DMRS ports 1000 to 1003 is possible for even-numbered RBs to which a PDSCH is scheduled and indication for DMRS ports 1004 to 1007 is possible for odd-numbered RBs, and if the number of front-loaded symbols is 2, indication for DMRS ports 1000 to 1007 is possible for even-numbered RBs to which the PDSCH is scheduled and indication for DMRS ports 1008 to 1015 is possible for odd-numbered RBs. Therefore, as shown in [Table 26-1-1] below, when indices of DMRS ports are different from each other by eight, the FD-OCC and TD-OCC coefficients may be the same. Alternatively, while supporting only indication for DMRS ports 1000 to 1007 using [Table 26-1] described above, a method of distinguishing even the same DMRS port 1000 according to an RB in which a DMRS RE is placed by additionally indicating whether the DMRS RE is placed in an even-numbered RB or an odd-numbered RB in frequency resources to which the PDSCH is scheduled may also be used. A detailed DMRS port indication and RB location indication method will be described later.

[Table 26-1-1] Parameters for [Enhanced DMRS type 1 supporting method3]

| p | CDM group $\lambda$ | $\Delta$ | $w_f(k')$ | | $w_t(l')$ | |
|---|---|---|---|---|---|---|
| | | | $k' = 0$ | $k' = 1$ | $l' = 0$ | $l' = 1$ |
| 1000 | 0 | 0 | +1 | +1 | +1 | +1 |

(continued)

| p | CDM group λ | Δ | $w_f(k')$ | | $w_t(l')$ | |
|---|---|---|---|---|---|---|
| | | | k' = 0 | k' = 1 | l' = 0 | l' = 1 |
| 1001 | 0 | 0 | +1 | -1 | +1 | +1 |
| 1002 | 1 | 1 | +1 | +1 | +1 | +1 |
| 1003 | 1 | 1 | +1 | -1 | +1 | +1 |
| 1004 | 0 | 0 | +1 | +1 | +1 | -1 |
| 1005 | 0 | 0 | +1 | -1 | +1 | -1 |
| 1006 | 1 | 1 | +1 | +1 | +1 | -1 |
| 1007 | 1 | 1 | +1 | -1 | +1 | -1 |
| 1008 | 0 | 0 | +1 | +1 | +1 | +1 |
| 1009 | 0 | 0 | +1 | -1 | +1 | +1 |
| 1010 | 1 | 1 | +1 | +1 | +1 | +1 |
| 1011 | 1 | 1 | +1 | -1 | +1 | +1 |
| 1012 | 0 | 0 | +1 | +1 | +1 | -1 |
| 1013 | 0 | 0 | +1 | -1 | +1 | -1 |
| 1014 | 1 | 1 | +1 | +1 | +1 | -1 |
| 1015 | 1 | 1 | +1 | -1 | +1 | -1 |

[Enhanced DMRS type 1 supporting method 3] based on [Equation 3] and [Table 26-1-1] above uses a total of two CDM groups. In the case of one front-loaded DMRS symbol, two DMRS ports may be included in each CDM group and DMRS ports are dividedly allocated to even-numbered RBs and odd-numbered RBs, and thus a total of eight orthogonal DMRS ports may be supported, and in the case of two front-loaded DMRS symbols, four DMRS ports may be included in each CDM group and thus a total of 16 orthogonal DMRS ports may be supported. Since a DMRS is divided and allocated to even-numbered RBs and odd-numbered RBs while maintaining the number of DMRS ports in each CDM group and the number of CDM groups, scheduling of a PDSCH to be transmitted together with the DMRS may be limited to the units of three or more RBs.

[Enhanced DMRS type 2 supporting method 1]

As an embodiment of the method of supporting enhanced DMRS type 2 described above, time and frequency resource mapping of a DMRS RE and an FD-OCC coefficient and a TD-OCC coefficient for the mapping in the case of using enhanced DMRS type 2 may be determined based on [Equation 6] and [Table 26-8] below.

[Equation 6]

$$a_{k,l}^{(p,\mu)} = \beta_{PDSCH}^{DMRS} w_f(k') \ w_t(l') r(4n + k')$$

$$k = 12n + k' + \Delta \quad (for\ new\ DMRS\ type\ 2)$$

$$k' = 0, 1, 2, 3$$

$$l = \bar{l} + l'$$

$$n = 0, 1, \ ...$$

[Table 26-8]: Parameters [Enhanced DMRS type 2 supporting method 1]

| $p$ | CDM group $\lambda$ | $\Delta$ | $w_f(k')$ | | | | $w_t(l')$ | |
|---|---|---|---|---|---|---|---|---|
| | | | k'=0 | k'=1 | k'=2 | k'=3 | $l'=0$ | $l'=1$ |
| 1000 | 0 | 0 | +1 | +1 | +1 | +1 | +1 | +1 |
| 1001 | 0 | 0 | -1 | -1 | +1 | +1 | +1 | +1 |
| 1002 | 0 | 0 | -1 | +1 | -1 | +1 | +1 | +1 |
| 1003 | 0 | 0 | +1 | -1 | -1 | +1 | +1 | +1 |
| 1004 | 1 | 4 | +1 | +1 | +1 | +1 | +1 | +1 |
| 1005 | 1 | 4 | -1 | -1 | +1 | +1 | +1 | +1 |
| 1006 | 1 | 4 | -1 | +1 | -1 | +1 | +1 | +1 |
| 1007 | 1 | 4 | +1 | -1 | -1 | +1 | +1 | +1 |
| 1008 | 2 | 8 | +1 | +1 | +1 | +1 | +1 | +1 |
| 1009 | 2 | 8 | -1 | -1 | +1 | +1 | +1 | +1 |
| 1010 | 2 | 8 | -1 | +1 | -1 | +1 | +1 | +1 |
| 1011 | 2 | 8 | +1 | -1 | -1 | +1 | +1 | +1 |
| 1012 | 0 | 0 | +1 | +1 | +1 | +1 | +1 | -1 |
| 1013 | 0 | 0 | -1 | -1 | +1 | +1 | +1 | -1 |
| 1014 | 0 | 0 | -1 | +1 | -1 | +1 | +1 | -1 |
| 1015 | 0 | 0 | +1 | -1 | -1 | +1 | +1 | -1 |
| 1016 | 1 | 4 | +1 | +1 | +1 | +1 | +1 | -1 |
| 1017 | 1 | 4 | -1 | -1 | +1 | +1 | +1 | -1 |
| 1018 | 1 | 4 | -1 | +1 | -1 | +1 | +1 | -1 |
| 1019 | 1 | 4 | +1 | -1 | -1 | +1 | +1 | -1 |
| 1020 | 2 | 8 | +1 | +1 | +1 | +1 | +1 | -1 |
| 1021 | 2 | 8 | -1 | -1 | +1 | +1 | +1 | -1 |
| 1022 | 2 | 8 | -1 | +1 | -1 | +1 | +1 | -1 |
| 1023 | 2 | 8 | +1 | -1 | -1 | +1 | +1 | -1 |

[Enhanced DMRS type 2 supporting method 1] based on [Equation 6] and [Table 26-8] uses a total of three CDM groups. In the case of one front-loaded DMRS symbol, four DMRS ports may be included in each CDM group, and thus a total of 12 orthogonal DMRS ports may be supported. In the case of two front-loaded DMRS symbols, eight DMRS ports may be included in each CDM group, and thus a total of 24 orthogonal DMRS ports may be supported. Since the number of DMRS ports in a corresponding CDM group is increased while maintaining the number of CDM groups, scheduling of a PDSCH to be transmitted together with a DMRS may be maintained to the unit of one RB, which is the same as before. Since locations of DMRS REs are concentrated at a specific location in an RB, DMRS channel estimation performance may be secured when performing PDSCH scheduling for two or more RBs. For example, since RE locations of DMRS ports 1000 to 1003 in CDM group #0 are located in 0-th to 4-th subcarriers, DMRSs are concentrated only on low index subcarriers in the RB and accordingly, DMRS channel estimation performance for high index subcarriers may be degraded. In [Equation 6], $\beta_{PDSCH}^{DMRS}$ is a scaling factor indicating a ratio between EPRE of the PDSCH and EPRE of the DMRS and may be calculated by $\beta_{PDSCH}^{DMRS} = 10^{-\frac{\beta_{DMRS}}{20}}$, and a value of $\beta_{DMRS}$ may be 0 dB, -3 dB, or -4.77 dB depending on whether the number of CDM groups is 1, 2, or 3.

[Enhanced DMRS type 2 supporting method 2]

As another embodiment of the method of supporting enhanced DMRS type 2 described above, time and frequency resource mapping of a DMRS RE and an FD-OCC coefficient and a TD-OCC coefficient for the mapping in the case of using enhanced DMRS type 2 may be determined based on [Equation 3] above and [Table 26-2-1] below. Here, similarly to [Enhanced DMRS type 1 supporting method 3] described above, what differs from conventional DMRS type 2 is that indication for DMRS ports 1000 to 1011 is possible for even-numbered RBs to which the PDSCH is scheduled and indication for DMRS ports 1012 to 1023 is possible for odd-numbered RBs. Therefore, as shown in [Table 26-2-1] below, when indices of DMRS ports are different from each other by 12, the FD-OCC and TD-OCC coefficients may be the same. Alternatively, while supporting only indication for DMRS ports 1000 to 1011 using [Table 26-2] described above, a method of distinguishing even the same DMRS port 1000 according to an RB in which a DMRS RE is placed by additionally indicating whether the DMRS RE is placed in an even-numbered RB or an odd-numbered RB to which the PDSCH is scheduled may also be used. A detailed DMRS port indication and RB location indication method will be described below.

[Table 26-2-1] Parameters for [Enhanced DMRS type 2 supporting method 2]

| $p$ | CDM group $\lambda$ | $\Delta$ | $w_f(k')$ | | $w_t(l')$ | |
|------|------|------|------|------|------|------|
| | | | $k' = 0$ | $k' = 1$ | $l' = 0$ | $l' = 1$ |
| 1000 | 0 | 0 | +1 | +1 | +1 | +1 |
| 1001 | 0 | 0 | +1 | -1 | +1 | +1 |
| 1002 | 1 | 2 | +1 | +1 | +1 | +1 |
| 1003 | 1 | 2 | +1 | -1 | +1 | +1 |
| 1004 | 2 | 4 | +1 | +1 | +1 | +1 |
| 1005 | 2 | 4 | +1 | -1 | +1 | +1 |
| 1006 | 0 | 0 | +1 | +1 | +1 | -1 |
| 1007 | 0 | 0 | +1 | -1 | +1 | -1 |
| 1008 | 1 | 2 | +1 | +1 | +1 | -1 |
| 1009 | 1 | 2 | +1 | -1 | +1 | -1 |
| 1010 | 2 | 4 | +1 | +1 | +1 | -1 |
| 1011 | 2 | 4 | +1 | -1 | +1 | -1 |
| 1012 | 0 | 0 | +1 | +1 | +1 | +1 |
| 1013 | 0 | 0 | +1 | -1 | +1 | +1 |
| 1014 | 1 | 2 | +1 | +1 | +1 | +1 |
| 1015 | 1 | 2 | +1 | -1 | +1 | +1 |
| 1016 | 2 | 4 | +1 | +1 | +1 | +1 |
| 1017 | 2 | 4 | +1 | -1 | +1 | +1 |
| 1018 | 0 | 0 | +1 | +1 | +1 | -1 |
| 1019 | 0 | 0 | +1 | -1 | +1 | -1 |
| 1020 | 1 | 2 | +1 | +1 | +1 | -1 |
| 1021 | 1 | 2 | +1 | -1 | +1 | -1 |
| 1022 | 2 | 4 | +1 | +1 | +1 | -1 |
| 1023 | 2 | 4 | +1 | -1 | +1 | -1 |

[Enhanced DMRS type 2 supporting method 2] based on [Equation 3] and [Table 26-2-1] above uses a total of three CDM groups. In the case of one front-loaded DMRS symbol, two DMRS ports may be included in each CDM group and the DMRS ports are dividedly allocated to even-numbered RBs and odd-numbered RBs, and thus a total of 12 orthogonal DMRS ports may be supported, and in the case of two front-loaded DMRS symbols, four DMRS ports may be included in each CDM group, and thus a total of 24 orthogonal DMRS ports may be supported. Since a DMRS is divided and allocated to even-numbered RBs and odd-numbered RBs while maintaining the number of DMRS ports in each CDM group and the number of CDM groups, scheduling of a PDSCH to be transmitted together with the DMRS may be limited to the units of three or more RBs.

<(1-1)-th embodiment: Enhanced DMRS types 1 and 2 additional supporting method for supporting the increased number of orthogonal ports>

As an embodiment of the disclosure, in addition to [Enhanced DMRS type 1 supporting method 1], [Enhanced DMRS type 1 supporting method 2], [Enhanced DMRS type 1 supporting method 3], [Enhanced DMRS type 2 supporting method 1], and [Enhanced DMRS type 2 supporting method 2] included in the above-described first embodiment, an additional supporting method for enhanced DMRS types 1 and 2 supporting the increased number of orthogonal ports is described.

[Enhanced DMRS type 1 supporting method 4]

As another embodiment of the method of supporting enhanced DMRS type 1 described above, time and frequency resource mapping of a DMRS RE and an FD-OCC coefficient and a TD-OCC coefficient for the mapping in the case of using enhanced DMRS type 1 may be determined based on [Equation 5-1] and [Table 26-1-2] below.

$$[\text{Equation } 5\text{-}1]$$

$$a_{k,l}^{(p,\mu)} = \beta_{\text{PDSCH}}^{\text{DMRS}} w_f(k')\ w_t(l')r(2n + k')$$

$$k = 12n + 2k' + \Delta \quad \textit{(for new DMRS type 1)}$$

$$k' = 0,\ 1, 2, 3, 4, 5$$

$$l = \bar{l} + l'$$

$$n = 0,\ 1,\ \ldots$$

[Table 26-1-2] Parameters for [Enhanced DMRS type 1 supporting method 4] [612]

| $p$ | CDM group $\lambda$ | $\Delta$ | $w_f(k')$ | | | | | | $w_t(l')$ | |
|---|---|---|---|---|---|---|---|---|---|---|
| | | | $k' = 0$ | $k' = 1$ | k'=2 | k'=3 | k'=4 | k'=5 | $l' = 0$ | $l' = 1$ |
| 1000 | 0 | 0 | +1 | +1 | +1 | +1 | +1 | +1 | +1 | +1 |
| 1001 | 0 | 0 | +1 | -1 | +1 | -1 | +1 | -1 | +1 | +1 |
| 1002 | 1 | 1 | +1 | +1 | +1 | +1 | +1 | +1 | +1 | +1 |
| 1003 | 1 | 1 | +1 | -1 | +1 | -1 | +1 | -1 | +1 | +1 |
| 1004 | 0 | 0 | +1 | +1 | +1 | +1 | +1 | +1 | +1 | -1 |
| 1005 | 0 | 0 | +1 | -1 | +1 | -1 | +1 | -1 | +1 | -1 |
| 1006 | 1 | 1 | +1 | +1 | +1 | +1 | +1 | +1 | +1 | -1 |
| 1007 | 1 | 1 | +1 | -1 | +1 | -1 | +1 | -1 | +1 | -1 |
| 1008 | 0 | 0 | +A | +A | +B | +B | +C | +C | +1 | +1 |
| 1009 | 0 | 0 | +A | -A | +B | -B | +C | -C | +1 | +1 |
| 1010 | 1 | 1 | +A | +A | +B | +B | +C | +C | +1 | +1 |
| 1011 | 1 | 1 | +A | -A | +B | -B | +C | -C | +1 | +1 |
| 1012 | 0 | 0 | +A | +A | +B | +B | +C | +C | +1 | -1 |
| 1013 | 0 | 0 | +A | -A | +B | -B | +C | -C | +1 | -1 |
| 1014 | 1 | 1 | +A | +A | +B | +B | +C | +C | +1 | -1 |

(continued)

| p | CDM group $\lambda$ | $\Delta$ | $w_f(k')$ | | | | | | $w_t(l')$ | |
|---|---|---|---|---|---|---|---|---|---|---|
| | | | $k' = 0$ | $k' = 1$ | k'=2 | k'=3 | k'=4 | k'=5 | $l' = 0$ | $l' = 1$ |
| 1015 | 1 | 1 | +A | -A | +B | -B | +C | -C | +1 | -1 |

[Enhanced DMRS type 1 supporting method 4] based on [Equation 5-1] and [Table 26-1-2] above uses a total of two CDM groups. In the case of one front-loaded DMRS symbol, four DMRS ports may be included in each CDM group, and in the case of two front-loaded DMRS symbols, eight DMRS ports may be included in each CDM group and thus a total of 16 orthogonal DMRS ports may be supported. Since the number of DMRS ports in each CDM group is increased while maintaining the number of CDM groups of conventional DMRS type 1 as 2, scheduling of a PDSCH to be transmitted together with a DMRS may be maintained in the unit of one RB identically to the conventional unit, and a DMRS may be mapped to the same RE location as that of conventional DMRS type 1. However, in conventional DMRS type 1, with the assumption that channels of two REs (e.g., RE #0 and RE #2) positioned to be spaced by two REs apart from each other are the same, an OCC is applied to the two REs to distinguish between orthogonal ports, and in the case of one front-loaded DMRS symbol, a total of six REs in one RB are used per port, and three OCCs with the length of 2 are used. Meanwhile, if [Enhanced DMRS type 1 supporting method 4] is used, in the case of one front-loaded DMRS symbol, a total of six REs in one RB are used per port, and one OCC with the length of 6 is used to distinguish between a total of four orthogonal ports. Here, an OCC with the length of 6 is applied to six REs, and adjacent REs may be spaced by two REs apart from each other. That is, an OCC is required to be applied to six REs with the assumption that the six REs of which relative RE locations are 0, 2, 4, 6, 8 and 10, belong to the same channel, and thus channel estimation performance may be degraded compared to conventional DMRS type 1. Therefore, this enhanced DMRS type 1 may be used for multi-user MIMO in a channel with a small frequency-selective characteristic. In [Table 26-1-2] above, values of A, B, and C in the OCC with the length of 6 may be determined so that all ports are orthogonal. For example, A=1, B= $e^{j2\pi/3}$3, and C= $e^{j4\pi/3}$ may be possible, and other values are not excluded. The values of A, B, and C may be pre-defined in a standard and promised between the base station and the UE, may be configured for the UE through higher layer signaling, may be activated to the UE through a MAC-CE, may be dynamically indicated to the UE through DCI, and may be notified of to the UE through such a signaling combination. In [Equation 5-1] above, $\beta_{PDSCH}^{DMRS}$ is a scaling factor indicating a ratio between EPRE of the PDSCH and EPRE of the DMRS, and may be calculated by $\beta_{PDSCH}^{DMRS} = 10^{-\frac{\beta_{DMRS}}{20}}$ , and a value of $\beta_{DMRS}$ may be 0 dB or -3 dB depending on whether the number of CDM groups is 1 or 2.

[Enhanced DMRS type 1 supporting method 5]

As another embodiment of the method of supporting enhanced DMRS type 1 described above, time and frequency resource mapping of a DMRS RE and an FD-OCC coefficient and a TD-OCC coefficient for the mapping in the case of using enhanced DMRS type 1 may be determined based on [Equation 5-2] and [Table 26-1-3] below.

[Equation 5-2]

$$a_{k,l}^{(p,\mu)} = \beta_{PDSCH}^{DMRS} w_o(m) w_f(k') w_t(l') r(2n + k')$$

$$k = 4n + 2k' + \Delta \quad \textit{(for new DMRS type 1)}$$

$$k' = 0,\ 1$$

$$l = \bar{l} + l'$$

$$n = 0,\ 1,\ \ ...$$

$$m = mod(n, 3)$$

[Table 26-1-3] Parameters for [Enhanced DMRS type 1 supporting method 5]

| $p$ | CDM group $\lambda$ | $\Delta$ | $w_f(k')$ | | $w_t(l')$ | | $w_o(m)$ | | |
|---|---|---|---|---|---|---|---|---|---|
| | | | $k' = 0$ | $k' = 1$ | $l' = 0$ | $l' = 1$ | m=0 | m=1 | m=2 |
| 1000 | 0 | 0 | +1 | +1 | +1 | +1 | +1 | +1 | +1 |
| 1001 | 0 | 0 | +1 | -1 | +1 | +1 | +1 | +1 | +1 |
| 1002 | 1 | 1 | +1 | +1 | +1 | +1 | +1 | +1 | +1 |
| 1003 | 1 | 1 | +1 | -1 | +1 | +1 | +1 | +1 | +1 |
| 1004 | 0 | 0 | +1 | +1 | +1 | -1 | +1 | +1 | +1 |
| 1005 | 0 | 0 | +1 | -1 | +1 | -1 | +1 | +1 | +1 |
| 1006 | 1 | 1 | +1 | +1 | +1 | -1 | +1 | +1 | +1 |
| 1007 | 1 | 1 | +1 | -1 | +1 | -1 | +1 | +1 | +1 |
| 1008 | 0 | 0 | +1 | +1 | +1 | +1 | +A | +B | +C |
| 1009 | 0 | 0 | +1 | -1 | +1 | +1 | +A | +B | +C |
| 1010 | 1 | 1 | +1 | +1 | +1 | +1 | +A | +B | +C |
| 1011 | 1 | 1 | +1 | -1 | +1 | +1 | +A | +B | +C |
| 1012 | 0 | 0 | +1 | +1 | +1 | -1 | +A | +B | +C |
| 1013 | 0 | 0 | +1 | -1 | +1 | -1 | +A | +B | +C |
| 1014 | 1 | 1 | +1 | +1 | +1 | -1 | +A | +B | +C |
| 1015 | 1 | 1 | +1 | -1 | +1 | -1 | +A | +B | +C |

[Enhanced DMRS type 1 supporting method 5] based on [Equation 5-2] and [Table 26-1-3] above uses a total of two CDM groups. In the case of one front-loaded DMRS symbol, four DMRS ports may be included in each CDM group, and in the case of two front-loaded DMRS symbols, eight DMRS ports may be included in each CDM group and thus a total of 16 orthogonal DMRS ports may be supported. Since the number of DMRS ports in each CDM group is increased while maintaining the number of CDM groups of conventional DMRS type 1 as 2, scheduling of a PDSCH to be transmitted together with a DMRS may be maintained in the unit of one RB identically to the conventional unit, and a DMRS may be mapped to the same RE location as that of conventional DMRS type 1. However, in conventional DMRS type 1, with the assumption that channels of two REs (e.g., RE #0 and RE #2) positioned to be spaced by two REs apart from each other are the same, an OCC is applied to the two REs to distinguish between orthogonal ports, and in the case of one front-loaded DMRS symbol, a total of six REs in one RB are used per port, and three OCCs with the length of 2 are used. Meanwhile, if [Enhanced DMRS type 1 supporting method 5] is used, in the case of one front-loaded DMRS symbol, a total of six REs in one RB are used per port, and one OCC with the length of 6 is used to distinguish between a total of four orthogonal ports. Here, the OCC with the length of 6 is applied to six REs, and adjacent REs may be spaced by two REs apart from each other. That is, an OCC is required to be applied to six REs with the assumption that the six REs of which relative RE locations are 0, 2, 4, 6, 8, and 10 belong to the same channel, and thus channel estimation performance may be degraded compared to conventional DMRS type 1. Therefore, this enhanced DMRS type 1 may be used for multi-user MIMO in a channel with a small frequency-selective characteristic. In [Table 26-1-3] above, values of A, B, and C in the OCC with the length of 6 may be determined so that all ports are orthogonal. For example, A=1, B= $e^{j2\pi/3}$, and C= $e^{j4\pi/3}$ may be possible, and other values are not excluded. The values of A, B, and C may be pre-defined in a standard and promised between the base station and the UE, may be configured for the UE through higher layer signaling, may be activated to the UE through a MAC-CE, may be dynamically indicated to the UE through DCI, and may be notified of to the UE through such a signaling combination. In [Equation 5-2] above, $\beta_{PDSCH}^{DMRS}$ is a scaling factor indicating a ratio between EPRE of the PDSCH and EPRE of a DMRS, and may be calculated by $\beta_{PDSCH}^{DMRS} = 10^{-\frac{\beta_{DMRS}}{20}}$, and a value of $\beta_{DMRS}$ may be 0 dB or -3 dB depending on whether the number of CDM groups is 1 or 2.

[Enhanced DMRS type 1 supporting method 6]

As another embodiment of the method of supporting enhanced DMRS type 1 described above, time and frequency resource mapping of a DMRS RE and an FD OCC coefficient and a TD-OCC coefficient for the mapping in the case of using enhanced DMRS type 1 may be determined based on [Equation 5-3] and [Table 26-1-4] below.
[Equation 5-3]

$$a_{k,l}^{(p,\mu)} = \beta_{\text{PDSCH}}^{\text{DMRS}} w_f(k') w_t(l') r(2n + k')$$

$$k = 8n + 2k' + \Delta \quad (for\ new\ DMRS\ type\ 1)$$

$$k' = 0,\ 1, 2, 3$$

$$l = \bar{l} + l'$$

$$n = 0,\ 1,\ \ldots$$

[Table 26-1-4] Parameters for [Enhanced DMRS type 1 supporting method 6]

| p | CDM group $\lambda$ | $\Delta$ | $w_f(k')$ | | | | $w_t(l')$ | |
|---|---|---|---|---|---|---|---|---|
| | | | k' = 0 | k' = 1 | k' = 2 | k' = 3 | l' = 0 | l' = 1 |
| 1000 | 0 | 0 | +1 | +1 | +1 | +1 | +1 | +1 |
| 1001 | 0 | 0 | +1 | -1 | +1 | -1 | +1 | +1 |
| 1002 | 1 | 1 | +1 | +1 | +1 | +1 | +1 | +1 |
| 1003 | 1 | 1 | +1 | -1 | +1 | -1 | +1 | +1 |
| 1004 | 0 | 0 | +1 | +1 | +1 | +1 | +1 | -1 |
| 1005 | 0 | 0 | +1 | -1 | +1 | -1 | +1 | -1 |
| 1006 | 1 | 1 | +1 | +1 | +1 | +1 | +1 | -1 |
| 1007 | 1 | 1 | +1 | -1 | +1 | -1 | +1 | -1 |
| 1008 | 0 | 0 | +1 | +1 | -1 | -1 | +1 | +1 |
| 1009 | 0 | 0 | +1 | +1 | -1 | -1 | +1 | +1 |
| 1010 | 1 | 1 | +1 | -1 | -1 | +1 | +1 | +1 |
| 1011 | 1 | 1 | +1 | -1 | -1 | +1 | +1 | +1 |
| 1012 | 0 | 0 | +1 | +1 | -1 | -1 | +1 | -1 |
| 1013 | 0 | 0 | +1 | +1 | -1 | -1 | +1 | -1 |
| 1014 | 1 | 1 | +1 | -1 | -1 | +1 | +1 | -1 |
| 1015 | 1 | 1 | +1 | -1 | -1 | +1 | +1 | -1 |

[Enhanced DMRS type 1 supporting method 6] based on [Equation 5-3] and [Table 26-1-4] above uses a total of two CDM groups. In the case of one front-loaded DMRS symbol, four DMRS ports may be included in each CDM group, and thus up to eight orthogonal DMRS ports may be supported. In the case of two front-loaded DMRS symbols, eight DMRS ports may be included in each CDM group, and thus a total of 16 orthogonal DMRS ports may be supported. Since the number of DMRS ports in a corresponding CDM group is increased and an OCC length for this is increased to 4 while maintaining the number of CDM groups of conventional DMRS type 1 as two, scheduling of a PDSCH to be transmitted together with a DMRS may be used in the units of two RBs and the DMRS may be mapped to the same RE location as conventional DMRS type 1. However, in conventional DMRS type 1, with the assumption that channels of two REs (e.g., RE#0 and RE#2) positioned to be spaced by two REs from each other are the same, an OCC is applied to the two REs to distinguish between orthogonal ports, and in the case of one front-loaded DMRS symbol, a total of six REs in one RB are used per port, and thus three OCCs with the length of 2 are used. Meanwhile, if [Enhanced DMRS type 1 supporting method 6] is used, in the case of one front-loaded DMRS symbol, a total of 12 REs in two RBs are used per port and an OCC with the length of 4, applied to adjacent four REs, is used to distinguish a total of four orthogonal antenna ports. Here, the OCC with the length of 4 is applied to four REs and the four REs may be spaced by two REs apart from each other. That is, the OCC needs to be applied with the assumption that the four REs of which relative RE locations are 0, 2, 4, and 6 belong to the same channel, and thus channel estimation performance may be degraded compared to conventional DMRS type 1. Therefore, this enhanced DMRS type 1 may be used for multi-user MIMO in a channel with a small frequency-selective characteristic. In [Table 26-1-4] above, $w_f(k')$ values of ports 1000 to 1015 in the OCC with the length of 4 may be determined so that all ports are orthogonal, and other values are not excluded. In [Equation 5-3] above, $\beta_{PDSCH}^{DMRS}$ is a scaling factor indicating a ratio between EPRE of the PDSCH and EPRE of the DMRS, and may be calculated by

$$\beta_{PDSCH}^{DMRS} = 10^{-\frac{\beta_{DMRS}}{20}}$$

, and a value of $\beta_{DMRS}$ may be 0 dB or -3 dB depending on whether the number of CDM groups is 1 or 2.

[Enhanced DMRS type 2 supporting method 3]

Time and frequency resource mapping of a DMRS RE and an FD-OCC coefficient and a TD-OCC coefficient for the mapping in the case of using enhanced DMRS type 2 may be determined based on [Equation 5-4] and [Table 26-2-2] below.

$$[Equation\ 5\text{-}4]$$

$$a_{k,l}^{(p,\mu)} = \beta_{PDSCH}^{DMRS} w_f(k')\ w_t(l')r(2n + k')$$

$$k = 12n + 6\left\lfloor \frac{k'}{2} \right\rfloor + mod(k', 2) + \Delta\ \ (for\ new\ DMRS\ type\ 2)$$

$$k' = 0,\ 1,\ 2,\ 3$$

$$l = \bar{l} + l'$$

$$n = 0,\ 1,\ ...$$

[Table 26-2-2]: Parameters for [Enhanced DMRS type 2 supporting method 3]

| $p$ | CDM group $\lambda$ | $\Delta$ | $w_f(k')$ | | | | $w_t(l')$ | |
|------|------|------|------|------|------|------|------|------|
| | | | k'=0 | k'=1 | k'=2 | k'=3 | l' = 0 | l' = 1 |
| 1000 | 0 | 0 | +1 | +1 | +1 | +1 | +1 | +1 |
| 1001 | 0 | 0 | +1 | -1 | +1 | -1 | +1 | +1 |
| 1002 | 1 | 2 | +1 | +1 | +1 | +1 | +1 | +1 |
| 1003 | 1 | 2 | +1 | -1 | +1 | -1 | +1 | +1 |
| 1004 | 2 | 4 | +1 | +1 | +1 | +1 | +1 | +1 |
| 1005 | 2 | 4 | +1 | -1 | +1 | -1 | +1 | +1 |
| 1006 | 0 | 0 | +1 | +1 | +1 | +1 | +1 | -1 |
| 1007 | 0 | 0 | +1 | -1 | +1 | -1 | +1 | -1 |
| 1008 | 1 | 2 | +1 | +1 | +1 | +1 | +1 | -1 |
| 1009 | 1 | 2 | +1 | -1 | +1 | -1 | +1 | -1 |
| 1010 | 2 | 4 | +1 | +1 | +1 | +1 | +1 | -1 |
| 1011 | 2 | 4 | +1 | -1 | +1 | -1 | +1 | -1 |
| 1012 | 0 | 0 | +1 | +1 | -1 | +1 | +1 | +1 |

(continued)

| $p$ | CDM group $\lambda$ | $\Delta$ | $w_f(k')$ | | | | $w_t(l')$ | |
|------|------|------|------|------|------|------|------|------|
| | | | k'=0 | k'=1 | k'=2 | k'=3 | l' = 0 | l' = 1 |
| 1013 | 0 | 0 | +1 | -1 | -1 | -1 | +1 | +1 |
| 1014 | 1 | 2 | +1 | +1 | -1 | +1 | +1 | +1 |
| 1015 | 1 | 2 | +1 | -1 | -1 | -1 | +1 | +1 |
| 1016 | 2 | 4 | +1 | +1 | -1 | +1 | +1 | +1 |
| 1017 | 2 | 4 | +1 | -1 | -1 | -1 | +1 | +1 |
| 1018 | 0 | 0 | +1 | +1 | -1 | +1 | +1 | -1 |
| 1019 | 0 | 0 | +1 | -1 | -1 | -1 | +1 | -1 |
| 1020 | 1 | 2 | +1 | +1 | -1 | +1 | +1 | -1 |
| 1021 | 1 | 2 | +1 | -1 | -1 | -1 | +1 | -1 |
| 1022 | 2 | 4 | +1 | +1 | -1 | +1 | +1 | -1 |
| 1023 | 2 | 4 | +1 | -1 | -1 | -1 | +1 | -1 |

[Enhanced DMRS type 2 supporting method 3] based on [Equation 5-4] and [Table 26-2-2] above uses a total of three CDM groups. In the case of one front-loaded DMRS symbol, four DMRS ports may be included in each CDM group and thus a total of 12 orthogonal DMRS ports may be supported, and in the case of two front-loaded DMRS symbols, eight DMRS ports may be included in each CDM group and thus a total of 24 orthogonal DMRS ports may be supported. Since the number of DMRS ports in each CDM group is increased while maintaining the number of CDM groups, scheduling of a PDSCH to be transmitted together with a DMRS may be maintained in the unit of one RB identically to the conventional unit, and a DMRS may be mapped to the same RE location as that of conventional DMRS type 2. However, in conventional DMRS type 2, with the assumption that channels of two consecutive REs are the same, an OCC is applied to the two REs to distinguish between orthogonal ports, and in the case of one front-loaded DMRS symbol, a total of four REs in one RB are used per port, and two OCCs each with the length of 2 are used. Meanwhile, if [Enhanced DMRS type 2 supporting method 3] is used, in the case of one front-loaded DMRS symbol, a total of four REs in one RB are used per port, and one OCC with the length of 4 is used to distinguish between a total of four orthogonal ports. That is, the OCC with the length of 4 is applied to consecutive two RE sets spaced apart by six REs from each other, that is, an OCC is required to be applied to four REs with the assumption that the four REs of which relative RE locations are 0, 1, 6, and 7 belong to the same channel, and thus channel estimation performance may be degraded compared to conventional DMRS type 2. Therefore, this enhanced DMRS type 2 may be used for multi-user MIMO in a channel with a small frequency-selective characteristic. In [Equation 5-4], $\beta_{PDSCH}^{DMRS}$ is a scaling factor indicating a ratio between EPRE of the PDSCH and EPRE of the

DMRS, and may be calculated by $$\beta_{PDSCH}^{DMRS} = 10^{-\frac{\beta_{DMRS}}{20}}$$ , and a value of $\beta$ $\beta_{DMRS}$ may be 0 dB, -3 dB, or -4.77 dB depending on whether the number of CDM groups is 1, 2, or 3.

[Enhanced DMRS type 2 supporting method 4]

Time and frequency resource mapping of a DMRS RE and an FD-OCC coefficient and a TD-OCC coefficient for the mapping in the case of using enhanced DMRS type 2 may be determined based on [Equation 5-5] and [Table 26-2-3] or [Table 26-2-4] below.

[Equation 5-5]

$$a_{k,l}^{(p,\mu)} = \beta_{PDSCH}^{DMRS} w_f(k') \ w_t(l') r(2n + k')$$

$$k = 12n + k' + \Delta \quad \text{(for new DMRS type 2)}$$

$$k' = 0, \ 1$$

$$l = \bar{l} + l'$$

$$n = 0, \ 1, \dots$$

[Table 26-2-3]: Parameters for [Enhanced DMRS type 2 supporting method 4]

| p | CDM group $\lambda$ | $\Delta$ | $w_f(k')$ | | $w_t(l')$ | |
|---|---|---|---|---|---|---|
| | | | k'=0 | k'=1 | l' = 0 | l' = 1 |
| 1000 | 0 | 0 | +1 | +1 | +1 | +1 |
| 1001 | 0 | 0 | +1 | -1 | +1 | +1 |
| 1002 | 1 | 2 | +1 | +1 | +1 | +1 |
| 1003 | 1 | 2 | +1 | -1 | +1 | +1 |
| 1004 | 2 | 4 | +1 | +1 | +1 | +1 |
| 1005 | 2 | 4 | +1 | -1 | +1 | +1 |
| 1006 | 0 | 0 | +1 | +1 | +1 | -1 |
| 1007 | 0 | 0 | +1 | -1 | +1 | -1 |
| 1008 | 1 | 2 | +1 | +1 | +1 | -1 |
| 1009 | 1 | 2 | +1 | -1 | +1 | -1 |
| 1010 | 2 | 4 | +1 | +1 | +1 | -1 |
| 1011 | 2 | 4 | +1 | -1 | +1 | -1 |
| 1012 | 3 | 6 | +1 | +1 | +1 | +1 |
| 1013 | 3 | 6 | +1 | -1 | +1 | +1 |
| 1014 | 4 | 8 | +1 | +1 | +1 | +1 |
| 1015 | 4 | 8 | +1 | -1 | +1 | +1 |
| 1016 | 5 | 10 | +1 | +1 | +1 | +1 |
| 1017 | 5 | 10 | +1 | -1 | +1 | +1 |
| 1018 | 3 | 6 | +1 | +1 | +1 | -1 |
| 1019 | 3 | 6 | +1 | -1 | +1 | -1 |
| 1020 | 4 | 8 | +1 | +1 | +1 | -1 |
| 1021 | 4 | 8 | +1 | -1 | +1 | -1 |
| 1022 | 5 | 10 | +1 | +1 | +1 | -1 |
| 1023 | 5 | 10 | +1 | -1 | +1 | -1 |

[Table 26-2-4]: Parameters for [Enhanced DMRS type 2 supporting method 4]

| p | CDM group $\lambda$ | $\Delta$ | $w_f(k')$ | | $w_t(l')$ | |
|---|---|---|---|---|---|---|
| | | | k'=0 | k'=1 | l' = 0 | l' = 1 |
| 1000 | 0 | 0 | +1 | +1 | +1 | +1 |

(continued)

| p | CDM group $\lambda$ | $\Delta$ | $w_f(k')$ | | $w_t(l')$ | |
|---|---|---|---|---|---|---|
| | | | k'=0 | k'=1 | l' = 0 | l' = 1 |
| 1001 | 0 | 0 | +1 | -1 | +1 | +1 |
| 1002 | 1 | 2 | +1 | +1 | +1 | +1 |
| 1003 | 1 | 2 | +1 | -1 | +1 | +1 |
| 1004 | 2 | 4 | +1 | +1 | +1 | +1 |
| 1005 | 2 | 4 | +1 | -1 | +1 | +1 |
| 1006 | 3 | 6 | +1 | +1 | +1 | +1 |
| 1007 | 3 | 6 | +1 | -1 | +1 | +1 |
| 1008 | 4 | 8 | +1 | +1 | +1 | +1 |
| 1009 | 4 | 8 | +1 | -1 | +1 | +1 |
| 1010 | 5 | 10 | +1 | +1 | +1 | +1 |
| 1011 | 5 | 10 | +1 | -1 | +1 | +1 |
| 1012 | 0 | 0 | +1 | +1 | +1 | -1 |
| 1013 | 0 | 0 | +1 | -1 | +1 | -1 |
| 1014 | 1 | 2 | +1 | +1 | +1 | -1 |
| 1015 | 1 | 2 | +1 | -1 | +1 | -1 |
| 1016 | 2 | 4 | +1 | +1 | +1 | -1 |
| 1017 | 2 | 4 | +1 | -1 | +1 | -1 |
| 1018 | 3 | 6 | +1 | +1 | +1 | -1 |
| 1019 | 3 | 6 | +1 | -1 | +1 | -1 |
| 1020 | 4 | 8 | +1 | +1 | +1 | -1 |
| 1021 | 4 | 8 | +1 | -1 | +1 | -1 |
| 1022 | 5 | 10 | +1 | +1 | +1 | -1 |
| 1023 | 5 | 10 | +1 | -1 | +1 | -1 |

[Enhanced DMRS type 2 supporting method 4] based on [Equation 5-5] and [Table 26-2-3] or [Table 26-2-4] above uses a total of six CDM groups. In the case of one front-loaded DMRS symbol, two DMRS ports are included in each CDM group and thus a total of 12 orthogonal DMRS ports may be supported, and in the case of two front-loaded DMRS symbols, four DMRS ports may be included in each CDM group and a total of 24 orthogonal DMRS ports may be supported. Since the number of CDM groups is increased while maintaining the number of DMRS ports in a corresponding CDM group, scheduling of a PDSCH to be transmitted together with a DMRS may be maintained in the unit of one RB identically to the conventional unit and the DMRS may be mapped to some RE locations among RE locations of conventional DMRS type 2. However, in conventional DMRS type 2, channel estimation is performed using a total of four REs in one RB. Meanwhile, if [Enhanced DMRS type 2 supporting method 4] is used, a total of two REs, which is half that of conventional DMRS type 2, in one RB are used per port and one OCC with the length of 2 is used to distinguish a total of two orthogonal ports. Here, since only two DMRS REs are present in one RB, channel estimation performance may be degraded compared to conventional DMRS type 2. Therefore, this enhanced DMRS type 2 may be used for multi-user MIMO in a channel with a small frequency-selective characteristic. In [Equation 5-5], $\beta_{PDSCH}^{DMRS}$ is a scaling factor indicating a ratio between EPRE of the PDSCH and EPRE of the DMRS, and may be calculated by $\beta_{PDSCH}^{DMRS} = 10^{-\frac{\beta_{DMRS}}{20}}$, and a value of $\beta_{DMRS}$ may be 0 dB, -3 dB, -4.77 dB, -6 dB, -6.99 dB, or -7.7 dB depending on whether the number of CDM groups is 1, 2, 3, 4, 5, or 6. Here, if the number of CDM groups exceeds a specific number (e.g., 4 or more), the value of $\beta_{DMRS}$ may be limited to a specific upper limit value. Here, the specific number of CDM groups and the specific upper limit value of $\beta_{DMRS}$

corresponding thereto may be configured for the UE by the base station through higher layer signaling, may be activated through MAC-CE signaling, may be indicated through L1 signaling, may be notified through combination of higher layer signaling and L1 signaling, or may be fixedly defined in a standard.

With respect to [Enhanced DMRS type 1 supporting method 1] to [Enhanced DMRS type 1 supporting method 6] and [Enhanced DMRS type 2 supporting method 1] to [Enhanced DMRS type 2 supporting method 4] described above, the UE may report, to the base station, UE capability indicating that each supporting method is possible. The UE capability may be valid only for FR1, or may be valid for both FR1 and FR2. The UE capability may include the meaning in which, as a maximum number of supported ports, for enhanced DMRS type 1, eight ports are possible when one front-loaded DMRS symbol is used and 16 ports are possible when two front-loaded DMRS symbols are used, and for enhanced DMRS type 2, 12 ports are possible when one front-loaded DMRS symbol is used and 24 ports are possible when two front-loaded DMRS symbols are used. After receiving the corresponding UE capability, the base station may configure higher layer signaling corresponding thereto, and this may be one of the described-above higher layer signaling configuration methods described above, or may be independent higher layer signaling.

The base station and the UE may support at least one method among supporting methods ([Enhanced DMRS type 1 supporting method 1], [Enhanced DMRS type 1 supporting method 2], [Enhanced DMRS type 1 supporting method 3], [Enhanced DMRS type 2 supporting method 1], and [Enhanced DMRS type 2 supporting method 2]) described in the first embodiment and additional supporting methods for enhanced DMRS types 1 and 2 ([Enhanced DMRS type 1 supporting method 4], [Enhanced DMRS type 1 supporting method 5], [Enhanced DMRS type 1 supporting method 6], and [Enhanced DMRS type 2 supporting method 3], and [Enhanced DMRS type 2 supporting method 4]) described in this embodiment, using a configuration scheme through higher layer signaling, using an L1 signaling-based indication scheme, using a combination scheme of higher layer signaling and L1 signaling, or using a scheme fixedly specified in the standard.

<(1-2)-th embodiment: Additional supporting method for enhanced DMRS types 1 and 2 supporting the increased number of orthogonal ports>

As an embodiment of the disclosure, an additional supporting method for enhanced DMRS types 1 and 2 supporting the increased number of orthogonal ports is described.

As additional parameters for [Enhanced DMRS type 1 supporting method 6] described above, relationship regarding in which CDM group it is included depending on which DMRS port is used and which FD-OCC index or which TD-OCC index may be used may be additionally defined, through [Table 26-9-1] below. Also, as additional parameters for [Enhanced DMRS type 2 supporting method 3] described above, relationship regarding in which CDM group it is included depending on which DMRS port is used and which FD-OCC index or which TD-OCC index may be used may be additionally defined, through [Table 26-9-2] below. [Table 26-9-3] and [Table 26-9-4] below may define FD-OCC indices available in [Table 26-9-1] and [Table 26-9-2], and [Table 26-9-5] and [Table 26-9-6] below may define TD-OCC indices available in [Table 26-9-1] and [Table 26-9-2]. In [Table 26-9-1] and [Table 26-9-2] below, p denotes a DMRS port, a PDSCH may use p, and a PUSCH may use a value acquired by subtracting 1000 from p.

In [Table 26-9-1] below, DMRS ports 1000 to 1003 and 1008 to 1011 may be used in the case of single or double front-loaded DMRS symbols, and DMRS ports 1004 to 1007 and 1012 to 1015 may be used in the case of double front-loaded DMRS symbols.

In [Table 26-9-2] below, DMRS ports 1000 to 1005 and 1012 to 1017 may be used in the case of single or double front-loaded DMRS symbols, and DMRS ports 1006 to 1011 and 1018 to 1023 may be used in the case of double front-loaded DMRS symbols.

j used in [Table 26-9-3] to [Table 26-9-6] below is an imaginary number and may denote sqrt(-1).

To support [Enhanced DMRS type 1 supporting method 6] and [Enhanced DMRS type 2 supporting method 3] described above, [Table 26-9-1] and [Table 26-9-2] below may be used, respectively, and FD-OCC and TD-OCC indices to be used in each of [Table 26-9-1] and [Table 26-9-2] may be determined using at least one of [Table 26-9-3] to [Table 26-9-6] below. Corresponding decision may be configured for the UE from the base station through higher layer signaling, dynamically indicated through L1 signaling, notified through combination of higher layer signaling and L1 signaling, or defined in the standard.

When performing PDSCH or PUSCH scheduling of the base station, the UE may determine FD-OCC and TD-OCC of one of [Table 26-9-3] to [Table 26-9-6] below and may commonly apply the same to PDSCH and PUSCH scheduling.

When performing PDSCH and PUSCH scheduling of the base station, the UE may determine FD-OCC and TD-OCC of one of [Table 26-9-3] to [Table 26-9-6] below and apply the same to PDSCH scheduling and may determine FD-OCC and TD-OCC of another one of [Table 26-9-3] to [Table 26-9-6] below and apply the same to PUSCH scheduling. For example, when performing PDSCH scheduling of the base station, the UE may use FD-OCC indices and values of [Table 26-9-3] for the above-described enhanced DMRS types 1 and 2 and when performing PUSCH scheduling of the base station, the UE may use FD-OCC indices and values of [Table 26-9-4] for the above-described enhanced DMRS types 1 and 2. It is only an example and any other combination, such as using the same FD-OCC for the PDSCH and the PUSCH and using different TD-OCC for each of the PDSCH and the PUSCH, may not be excluded.

[Table 26-9-1] Additional parameters for [Enhanced DMRS type 1 supporting method 6]

| $p$ | CDM group $\lambda$ | $\Delta$ | FD-OCC index | TD-OCC index |
|------|------|------|------|------|
| 1000 | 0 | 0 | 0 | 0 |
| 1001 | 0 | 0 | 1 | 0 |
| 1002 | 1 | 1 | 0 | 0 |
| 1003 | 1 | 1 | 1 | 0 |
| 1004 | 0 | 0 | 0 | 1 |
| 1005 | 0 | 0 | 1 | 1 |
| 1006 | 1 | 1 | 0 | 1 |
| 1007 | 1 | 1 | 1 | 1 |
| 1008 | 0 | 0 | 2 | 0 |
| 1009 | 0 | 0 | 3 | 0 |
| 1010 | 1 | 1 | 2 | 0 |
| 1011 | 1 | 1 | 3 | 0 |
| 1012 | 0 | 0 | 2 | 1 |
| 1013 | 0 | 0 | 3 | 1 |
| 1014 | 1 | 1 | 2 | 1 |
| 1015 | 1 | 1 | 3 | 1 |

[Table 26-9-2] Additional parameters for [Enhanced DMRS type 2 supporting method 3]

| $p$ | CDM group $\lambda$ | $\Delta$ | FD-OCC index | TD-OCC index |
|------|------|------|------|------|
| 1000 | 0 | 0 | 0 | 0 |
| 1001 | 0 | 0 | 1 | 0 |
| 1002 | 1 | 2 | 0 | 0 |
| 1003 | 1 | 2 | 1 | 0 |
| 1004 | 2 | 4 | 0 | 0 |
| 1005 | 2 | 4 | 1 | 0 |
| 1006 | 0 | 0 | 0 | 1 |
| 1007 | 0 | 0 | 1 | 1 |
| 1008 | 1 | 2 | 0 | 1 |
| 1009 | 1 | 2 | 1 | 1 |
| 1010 | 2 | 4 | 0 | 1 |
| 1011 | 2 | 4 | 1 | 1 |
| 1012 | 0 | 0 | 2 | 0 |
| 1013 | 0 | 0 | 3 | 0 |
| 1014 | 1 | 2 | 2 | 0 |
| 1015 | 1 | 2 | 3 | 0 |
| 1016 | 2 | 4 | 2 | 0 |
| 1017 | 2 | 4 | 3 | 0 |

(continued)

| p | CDM group λ | Δ | FD-OCC index | TD-OCC index |
|---|---|---|---|---|
| 1018 | 0 | 0 | 2 | 1 |
| 1019 | 0 | 0 | 3 | 1 |
| 1020 | 1 | 2 | 2 | 1 |
| 1021 | 1 | 2 | 3 | 1 |
| 1022 | 2 | 4 | 2 | 1 |
| 1023 | 2 | 4 | 3 | 1 |

[Table 26-9-3] Available FD-OCC indices and coefficients

| FD-OCC index | $w_f(0)$ | $w_f(1)$ | $w_f(2)$ | $w_f(3)$ |
|---|---|---|---|---|
| 0 | +1 | +1 | +1 | +1 |
| 1 | +1 | -1 | +1 | -1 |
| 2 | +1 | +1 | -1 | -1 |
| 3 | +1 | -1 | -1 | +1 |

[Table 26-9-4] Other available FD-OCC indices and coefficients

| FD-OCC index | $w_f(0)$ | $w_f(1)$ | $w_f(2)$ | $w_f(3)$ |
|---|---|---|---|---|
| 0 | +1 | +1 | +1 | +1 |
| 1 | +1 | -1 | +1 | -1 |
| 2 | +1 | +j | -1 | -j |
| 3 | +1 | -j | -1 | +j |

[Table 26-9-5] FD-OCC indices and coefficients for [Enhanced DMRS type 1 supporting method 6]

| TD-OCC index | $w_t(0)$ | $w_t(1)$ |
|---|---|---|
| 0 | +1 | +1 |
| 1 | +1 | -1 |

[Table 26-9-6] Other FD-OCC indices and coefficients for [Enhanced DMRS type 1 supporting method 6]

| | DMRS port 0~7 (enhanced DMRS type 1) DMRS port 0~11 (enhanced DMRS type 2) | | DMRS port 8~15 (enhanced DMRS type 1) DMRS port 12~23 (enhanced DMRS type 2) | |
|---|---|---|---|---|
| TD-OCC index | $w_f(0)$ | $w_f(1)$ | $w_f(0)$ | $w_f(1)$ |
| 0 | +1 | +1 | +1 | +j |
| 1 | +1 | -1 | +1 | -j |

<Second embodiment: DCI-based dynamic indication method for enhanced DMRS types 1 and 2>

As an embodiment of the disclosure, a DCI-based DMRS port indication method for the enhanced DMRS types 1 and 2 described above is described. The UE may receive indication for a DMRS port allocated for PDSCH scheduling from the base station through DCI format 1_1 or DCI format 1_2. As described above, conventional DMRS port indication based on DMRS types 1 and 2 was possible through the antenna port field in DCI format 1_1 and DCI format 1_2 using one of [Table 25-1] to [Table 25-8].

When the UE receives DCI-based DMRS port indication for enhanced DMRS types 1 and 2 from the base station, it may be expected to support up to one codeword. That is, the UE may expect that n1 is configured for higher layer signaling, maxNrofCodeWordsScheduledByDCI, from the base station.

With respect to various methods that support enhanced DMRS types 1 and 2 defined in the above-described first embodiment, methods indicated through the antenna port field in DCI format 1_1 and DCI format 1_2 are described in detail.

[DMRS port indication method 1]

If [Enhanced DMRS type 1 supporting scheme 1] or [Enhanced DMRS type 1 supporting scheme 2] is configured for the UE, the UE may perform DMRS port indication based on [Table 27-1] and [Table 27-2] below. [Table 27-1] and [Table 27-2] represent DMRS port indication tables available when maxLength =1 and 2, respectively, and maxLength denotes a maximum number of front-loaded symbols.

[Table 27-1] When using [DMRS port indication method 1], maxLength=1

| One Codeword: Codeword 0 enabled, Codeword 1 disabled | | |
|---|---|---|
| Value | Number of DMRS CDM group(s) without data | DMRS port(s) |
| 0 | 1 | 0 |
| 1 | 1 | 1 |
| 2 | 1 | 0,1 |
| 3 | 2 | 0 |
| 4 | 2 | 1 |
| 5 | 2 | 2 |
| 6 | 2 | 3 |
| 7 | 2 | 0,1 |
| 8 | 2 | 2,3 |
| 9 | 2 | 0-2 |
| 10 | 2 | 0-3 |
| 11 | 2 | 0,2 |
| 12 | 2 | 0,2,3 |
| 13 | 3 | 0 |
| 14 | 3 | 1 |
| 15 | 3 | 2 |
| 16 | 3 | 3 |
| 17 | 3 | 4 |
| 18 | 3 | 5 |
| 19 | 3 | 0,1 |
| 20 | 3 | 2,3 |
| 21 | 3 | 4,5 |
| 22 | 3 | 0,2 |
| 23 | 3 | 0,4 |
| 24 | 3 | 2,4 |
| 25 | 3 | 0-2 |
| 26 | 3 | 3-5 |
| 27 | 3 | 0-3 |
| 28 | 3 | 2-5 |

(continued)

| One Codeword: Codeword 0 enabled, Codeword 1 disabled | | |
| --- | --- | --- |
| Value | Number of DMRS CDM group(s) without data | DMRS port(s) |
| 29 | 4 | 0 |
| 30 | 4 | 1 |
| 31 | 4 | 2 |
| 32 | 4 | 3 |
| 33 | 4 | 4 |
| 34 | 4 | 5 |
| 35 | 4 | 6 |
| 36 | 4 | 7 |
| 37 | 4 | 0,1 |
| 38 | 4 | 2,3 |
| 39 | 4 | 4,5 |
| 40 | 4 | 6,7 |
| 41 | 4 | 0,2 |
| 42 | 4 | 0,4 |
| 43 | 4 | 0,6 |
| 44 | 4 | 2,4 |
| 45 | 4 | 2,6 |
| 46 | 4 | 4,6 |
| 47 | 4 | 0-2 |
| 48 | 4 | 3-5 |
| 49 | 4 | 5-7 |
| 50 | 4 | 0-3 |
| 51 | 4 | 4-7 |
| 52-63 | Reserved | Reserved |

[Table 27-1] above may be expressed in 6 bits capable of indicating a total of 64 entries, as described above, and may also be expressed in 4, 5, 6, or 7 bits in the case of considering various alternatives of [Table 27-1] in consideration of at least one of the following items.

- [Consideration 1-1] Related to processing entry #12 (Number of DMRS CDM group(s) without data=2, DMRS port: 0, 2, 3) in [Table 27-1] above

■ Entry #12 (Number of DMRS CDM group(s) without data=2, DMRS port: 0, 2, 3) in [Table 27-1] above may be present in entry #12 as in [Table 27-1] above, may be present in a last entry rather than a reserved entry after listing all entries excluding the corresponding entry, and may be excluded from the DMRS port indication table for supporting enhanced DMRS type 1 since the corresponding entry is an entry used for multiple TRP purposes.

■ Corresponding [Consideration 1-1] may be based on independent higher layer signaling for corresponding [Consideration 1-1], may be based on the above-described higher layer signaling for supporting enhanced DMRS types 1 and 2, may be activated or deactivated based on MAC-CE, may be dynamically indicated through the PDCCH, or may be defined in the standard.

■ For example, in the case of considering a method of deleting entry #12 (Number of DMRS CDM group(s) without data=2, DMRS port: 0, 2, 3) in corresponding [Consideration 1-1], alternatives of [Table 27-1], as shown in [Table 27-1a] below, may be generated.

[Table 27-1a] [DMRS port indication method 1] use and [Consideration 1-1] applied alternative example, maxLength=1 [681]

| One Codeword: Codeword 0 enabled, Codeword 1 disabled | | |
|---|---|---|
| Value | Number of DMRS CDM group(s) without data | DMRS port(s) |
| 0 | 1 | 0 |
| 1 | 1 | 1 |
| 2 | 1 | 0,1 |
| 3 | 2 | 0 |
| 4 | 2 | 1 |
| 5 | 2 | 2 |
| 6 | 2 | 3 |
| 7 | 2 | 0,1 |
| 8 | 2 | 2,3 |
| 9 | 2 | 0-2 |
| 10 | 2 | 0-3 |
| 11 | 2 | 0,2 |
| 12 | 3 | 0 |
| 13 | 3 | 1 |
| 14 | 3 | 2 |
| 15 | 3 | 3 |
| 16 | 3 | 4 |
| 17 | 3 | 5 |
| 18 | 3 | 0,1 |
| 19 | 3 | 2,3 |
| 20 | 3 | 4,5 |
| 21 | 3 | 0,2 |
| 22 | 3 | 0,4 |
| 23 | 3 | 2,4 |
| 24 | 3 | 0-2 |
| 25 | 3 | 3-5 |
| 26 | 3 | 0-3 |
| 27 | 3 | 2-5 |
| 28 | 4 | 0 |
| 29 | 4 | 1 |
| 30 | 4 | 2 |
| 31 | 4 | 3 |
| 32 | 4 | 4 |
| 33 | 4 | 5 |
| 34 | 4 | 6 |
| 35 | 4 | 7 |

(continued)

| One Codeword: Codeword 0 enabled, Codeword 1 disabled | | |
|---|---|---|
| Value | Number of DMRS CDM group(s) without data | DMRS port(s) |
| 36 | 4 | 0,1 |
| 37 | 4 | 2,3 |
| 38 | 4 | 4,5 |
| 39 | 4 | 6,7 |
| 40 | 4 | 0,2 |
| 41 | 4 | 0,4 |
| 42 | 4 | 0,6 |
| 43 | 4 | 2,4 |
| 44 | 4 | 2,6 |
| 45 | 4 | 4,6 |
| 46 | 4 | 0-2 |
| 47 | 4 | 3-5 |
| 48 | 4 | 5-7 |
| 49 | 4 | 0-3 |
| 50 | 4 | 4-7 |
| 51-63 | Reserved | Reserved |

- [Consideration 1-2] When defining a new entry, all combinations or some combinations are expressed for entries that may indicate ranks 2, 3, and 4

■ When defining a new entry in [Table 27-1] above, all combinations or some combinations may be expressed for entries that may indicate rank 2. As in [Table 27-1] described above, if number of DMRS CDM group(s) without data=3, entry configuration may be possible for some six combinations ({0,1},{2,3},{4,5},{0,2},{0,4}, and {2,4}) that may indicate, for example, rank 2, such as entries #19 to #24. As another example, entry configuration may be possible for some three combinations ({0,1},{2,3}, and {4,5}), considering only combinations for DMRS ports in the same CDM group among all combinations that may indicate rank 2. As another example, entry configuration may be possible for combinations ({0,1},{2,3}, and {4,5}) for DMRS ports in the same CDM group among all combinations that may indicate rank 2 and one combination ({0,2}) considering first two DMRS ports in CDM groups 1 and 2. As another example, entry configuration may be possible for all 15 combinations that may indicate rank 2. In addition, a newly added case in which number of DMRS CDM group(s) without data=4 may be similarly considered, and entry configuration according to a different expression scheme for some combinations for rank 2 indication may not be excluded.

■ When defining a new entry in [Table 27-1] above, all combinations or some combinations may be expressed for entries that may indicate rank 3. As in [Table 27-1] described above, if number of DMRS CDM group(s) without data=3, entry configuration may be possible for two combinations ({0-2} and {3-5}), considering only combinations having consecutive DMRS port indices among all combinations that may indicate rank 3. As another example, entry configuration may be possible for all 20 combinations that may indicate rank 3. In addition, a newly added case in which number of DMRS CDM group(s) without data=4 may be similarly considered and entry configuration according to a different expression scheme for some combinations for rank 3 indication may not be excluded.

■ When defining a new entry in [Table 27-1] above, all combinations or some combinations may be expressed for entries that may indicate rank 4. As in [Table 27-1] described above, if number of DMRS CDM group(s) without data=3, entry configuration may be possible for two combinations ({0-3} and {2-5}) among all combinations that may indicate rank 4, such as entries #27 and #28. As another example, entry configuration may be possible for one combination ({0-3}) considering only a combination having consecutive DMRS port indices among all combinations that may indicate rank 4. As another example, entry configuration may be possible for all 15 combinations that may indicate rank 4. In addition, a newly added case in which number of DMRS CDM group(s) without data=4 may be similarly considered and entry configuration according to a different expression scheme for some combinations for rank 4 indication may not be excluded.

■ Corresponding [Consideration 1-2] may be based on independent higher layer signaling for corresponding [Consideration 1-2], may be based on the above-described higher layer signaling for supporting enhanced DMRS types 1 and 2, may be activated or deactivated based on MAC-CE, may be dynamically indicated through the PDCCH, or may be defined in the standard.

■ For example, in corresponding [Consideration 1-2], when considering entry configuration for combinations ({0,1},{2,3}, and {4,5}) for DMRS ports in the same CDM group and one combination ({ 0,2}) considering first two DMRS ports in CDM groups 1 and 2 among all combinations that may indicate rank 2, entry configuration for two combinations ({0-2} and {3-5}) considering only combinations having consecutive DMRS port indices among all combinations that may indicate rank 3, and entry configuration for one combination ({0-3}) considering only a combination having consecutive DMRS port indices among all combinations that may indicate rank 4 in a case in which number of DMRS CDM group(s) without data=3, and when considering entry configuration for combinations ({0,1 }, {2,3},{4,5}, and f 6,7}) for DMRS ports in the same CDM group and one combination ({ 0,2}) considering first two DMRS ports in CDM groups 1 and 2 among all combinations that may indicate rank 2, entry configuration for two combinations ({0-2} and {3-5}) considering combinations having consecutive DMRS port indices among all combinations that may indicate rank 3, and entry configuration for one combination ({0-3} or {4-7}) considering only a combination having consecutive DMRS port indices among all combinations that may indicate rank 4 in a case in which number of DMRS CDM group(s) without data=4, alternatives of [Table 27-1] may be generated as shown in [Table 27-1b] below.

[Table 27-1b] [DMRS port indication method 1] use and [Consideration 1-2] applied alternative example, maxLength=1

| One Codeword: Codeword 0 enabled, Codeword 1 disabled | | |
|---|---|---|
| Value | Number of DMRS CDM group(s) without data | DMRS port(s) |
| 0 | 1 | 0 |
| 1 | 1 | 1 |
| 2 | 1 | 0,1 |
| 3 | 2 | 0 |
| 4 | 2 | 1 |
| 5 | 2 | 2 |
| 6 | 2 | 3 |
| 7 | 2 | 0,1 |
| 8 | 2 | 2,3 |
| 9 | 2 | 0-2 |
| 10 | 2 | 0-3 |
| 11 | 2 | 0,2 |
| 12 | 3 | 0 |
| 13 | 3 | 1 |
| 14 | 3 | 2 |
| 15 | 3 | 3 |
| 16 | 3 | 4 |
| 17 | 3 | 5 |
| 18 | 3 | 0,1 |
| 19 | 3 | 2,3 |
| 20 | 3 | 4,5 |
| 21 | 3 | 0,2 |
| 22 | 3 | 0-2 |
| 23 | 3 | 3-5 |

(continued)

| One Codeword: Codeword 0 enabled, Codeword 1 disabled | | |
|---|---|---|
| Value | Number of DMRS CDM group(s) without data | DMRS port(s) |
| 24 | 3 | 0-3 |
| 25 | 4 | 0 |
| 26 | 4 | 1 |
| 27 | 4 | 2 |
| 28 | 4 | 3 |
| 29 | 4 | 4 |
| 30 | 4 | 5 |
| 31 | 4 | 6 |
| 32 | 4 | 7 |
| 33 | 4 | 0,1 |
| 34 | 4 | 2,3 |
| 35 | 4 | 4,5 |
| 36 | 4 | 6,7 |
| 37 | 4 | 0,2 |
| 38 | 4 | 0-2 |
| 39 | 4 | 3-5 |
| 40 | 4 | 0-3 |
| 41 | 4 | 4-7 |
| 42-63 | Reserved | Reserved |

- [Consideration 1-3] Priority when sorting existing and new entries according to a rank value (indicated number of DMRS ports) and a value of the number of DMRS CDM group(s) without data

▪ In [Table 27-1] above, in the case of sorting entry indices of existing and new entries according to a rank value and a value of the number of DMRS CDM group(s) without data, which one to sort with high priority may be considered. As in [Table 27-1] described above, a method of initially sorting according to the value of the number of DMRS CDM group(s) without data and then sorting according to the rank value may be used. As another example, a method of initially sorting according to the rank value and then sorting according to the value of the number of DMRS CDM group(s) without data may also be used.

▪ Corresponding [Consideration 1-3] may be based on independent higher layer signaling for corresponding [Consideration 1-3], may be based on the above-described higher layer signaling for supporting enhanced DMRS types 1 and 2, may be activated or deactivated based on MAC-CE, may be dynamically indicated through the PDCCH, or may be defined in the standard.

▪ For example, a method of subsequently sorting according to the rank value may be used, and as another example, a method of initially sorting according to the rank value and then sorting according to the value of the number of DMRS CDM group(s) without data may be used to generate alternatives of [Table 27-1] as shown in [Table 27-1c] below.

[Table 27-1c] [DMRS port indication method 1] use and [Consideration 1-3] applied alternative example, maxLength=1

| One Codeword: Codeword 0 enabled, Codeword 1 disabled | | |
|---|---|---|
| Value | Number of DMRS CDM group(s) without data | DMRS port(s) |
| 0 | 1 | 0 |

(continued)

| One Codeword:<br>Codeword 0 enabled,<br>Codeword 1 disabled | | |
|---|---|---|
| Value | Number of DMRS CDM group(s) without data | DMRS port(s) |
| 1 | 1 | 1 |
| 2 | 2 | 0 |
| 3 | 2 | 1 |
| 4 | 2 | 2 |
| 5 | 2 | 3 |
| 6 | 3 | 0 |
| 7 | 3 | 1 |
| 8 | 3 | 2 |
| 9 | 3 | 3 |
| 10 | 3 | 4 |
| 11 | 3 | 5 |
| 12 | 4 | 0 |
| 13 | 4 | 1 |
| 14 | 4 | 2 |
| 15 | 4 | 3 |
| 16 | 4 | 4 |
| 17 | 4 | 5 |
| 18 | 4 | 6 |
| 19 | 4 | 7 |
| 20 | 1 | 0,1 |
| 21 | 2 | 0,1 |
| 22 | 2 | 2,3 |
| 23 | 2 | 0,2 |
| 24 | 3 | 0,1 |
| 25 | 3 | 2,3 |
| 26 | 3 | 4,5 |
| 27 | 3 | 0,2 |
| 28 | 3 | 0,4 |
| 29 | 3 | 2,4 |
| 30 | 4 | 0,1 |
| 31 | 4 | 2,3 |
| 32 | 4 | 4,5 |
| 33 | 4 | 6,7 |
| 34 | 4 | 0,2 |
| 35 | 4 | 0,4 |
| 36 | 4 | 0,6 |
| 37 | 4 | 2,4 |

(continued)

| One Codeword: Codeword 0 enabled, Codeword 1 disabled | | |
|---|---|---|
| Value | Number of DMRS CDM group(s) without data | DMRS port(s) |
| 38 | 4 | 2,6 |
| 39 | 4 | 4,6 |
| 40 | 2 | 0-2 |
| 41 | 2 | 0,2,3 |
| 42 | 3 | 0-2 |
| 43 | 3 | 3-5 |
| 44 | 4 | 0-2 |
| 45 | 4 | 3-5 |
| 46 | 4 | 5-7 |
| 47 | 2 | 0-3 |
| 48 | 3 | 0-3 |
| 49 | 3 | 2-5 |
| 50 | 4 | 0-3 |
| 51 | 4 | 4-7 |
| 52-63 | Reserved | Reserved |

- [Consideration 1-4] Excluding specific rank value for existing and new entries

■ In [Table 27-1] above, a method of excluding a specific rank value not suitable for multi-user MIMO for existing and new entries may be considered. The excluded rank value may include at least one of ranks 2, 3, and 4, and a combination of excluded rank values and a minimum rank value excluded may be defined in the standard or configured through higher layer signaling.

■ Alternatively, the specific rank value may be excluded for a specific value of the number of DMRS CDM group(s) without data. For example, in the case of a large value of the number of DMRS CDM group(s) without data, such as 3 or 4, it may be expected that a large number of UEs may be supported with multi-user MIMO. However, in this case, use of a large rank value may reduce the number of CDM groups that may schedule other users.

■ Corresponding [Consideration 1-4] may be based on independent higher layer signaling for corresponding [Consideration 1-4], may be based on the above-described higher layer signaling for supporting enhanced DMRS types 1 and 2, may be activated or deactivated based on MAC-CE, may be dynamically indicated through the PDCCH, or may be defined in the standard.

■ For example, a method of excluding values of ranks 3 and 4 for all values of the number of DMRS CDM group(s) without data from existing and new entries may be used to generate alternatives of [Table 27-1] as shown in [Table 27-1d] below.

[Table 27-1d] [DMRS port indication method 1] use and [Consideration 1-4] applied alternative example, maxLength=1

| One Codeword: Codeword 0 enabled, Codeword 1 disabled | | |
|---|---|---|
| Value | Number of DMRS CDM group(s) without data | DMRS port(s) |
| 0 | 1 | 0 |
| 1 | 1 | 1 |
| 2 | 1 | 0,1 |
| 3 | 2 | 0 |
| 4 | 2 | 1 |

(continued)

| One Codeword: Codeword 0 enabled, Codeword 1 disabled | | |
|---|---|---|
| Value | Number of DMRS CDM group(s) without data | DMRS port(s) |
| 5 | 2 | 2 |
| 6 | 2 | 3 |
| 7 | 2 | 0,1 |
| 8 | 2 | 2,3 |
| 9 | 2 | 0,2 |
| 10 | 3 | 0 |
| 11 | 3 | 1 |
| 12 | 3 | 2 |
| 13 | 3 | 3 |
| 14 | 3 | 4 |
| 15 | 3 | 5 |
| 16 | 3 | 0,1 |
| 17 | 3 | 2,3 |
| 18 | 3 | 4,5 |
| 19 | 3 | 0,2 |
| 20 | 3 | 0,4 |
| 21 | 3 | 2,4 |
| 22 | 4 | 0 |
| 23 | 4 | 1 |
| 24 | 4 | 2 |
| 25 | 4 | 3 |
| 26 | 4 | 4 |
| 27 | 4 | 5 |
| 28 | 4 | 6 |
| 29 | 4 | 7 |
| 30 | 4 | 0,1 |
| 31 | 4 | 2,3 |
| 32 | 4 | 4,5 |
| 33 | 4 | 6,7 |
| 34 | 4 | 0,2 |
| 35 | 4 | 0,4 |
| 36 | 4 | 0,6 |
| 37 | 4 | 2,4 |
| 38 | 4 | 2,6 |
| 39 | 4 | 4,6 |
| 40-63 | Reserved | Reserved |

- [Consideration 1-5] Excluding single-user MIMO only entries from existing and new entries

■ In [Table 27-1] above, a method of excluding single-user MIMO only entries from existing and new entries may be considered. Among existing entries, entry indices that may be excluded as entries used for single-user MIMO only are numbers 2, 9, 10, 11, and 12. The corresponding entries may correspond to a case in which a DMRS port allocated to the UE is included in all CDM groups allocatable to the UE (e.g., if number of DMRS CDM group(s) without data=2, and if DMRS ports allocated to the UE are included in two CDM groups), and if there is no remaining DMRS port orthogonal to the DMRS port in addition to the allocated DMRS port.

■ Corresponding [Consideration 1-5] may be based on independent higher layer signaling for corresponding [Consideration 1-5], may be based on the above-described higher layer signaling for supporting enhanced DMRS types 1 and 2, may be activated or deactivated based on MAC-CE, may be dynamically indicated through the PDCCH, or may be defined in the standard.

■ For example, a method of excluding all entries used for single-user MIMO only from existing and new entries may be used to generate alternatives of [Table 27-1] as shown in [Table 27-1e] below.

[Table 27-1e] [DMRS port indication method 1] use and [Consideration 1-5] applied alternative example, maxLength=1

| One Codeword: Codeword 0 enabled, Codeword 1 disabled | | |
|---|---|---|
| Value | Number of DMRS CDM group(s) without data | DMRS port(s) |
| 0 | 1 | 0 |
| 1 | 1 | 1 |
| 2 | 2 | 0 |
| 3 | 2 | 1 |
| 4 | 2 | 2 |
| 5 | 2 | 3 |
| 6 | 2 | 0,1 |
| 7 | 2 | 2,3 |
| 8 | 3 | 0 |
| 9 | 3 | 1 |
| 10 | 3 | 2 |
| 11 | 3 | 3 |
| 12 | 3 | 4 |
| 13 | 3 | 5 |
| 14 | 3 | 0,1 |
| 15 | 3 | 2,3 |
| 16 | 3 | 4,5 |
| 17 | 4 | 0 |
| 18 | 4 | 1 |
| 19 | 4 | 2 |
| 20 | 4 | 3 |
| 21 | 4 | 4 |
| 22 | 4 | 5 |
| 23 | 4 | 6 |
| 24 | 4 | 7 |
| 25 | 4 | 0,1 |
| 26 | 4 | 2,3 |

(continued)

| One Codeword: Codeword 0 enabled, Codeword 1 disabled | | |
|---|---|---|
| **Value** | **Number of DMRS CDM group(s) without data** | **DMRS port(s)** |
| 27 | 4 | 4,5 |
| 28 | 4 | 6,7 |
| 29-31 | Reserved | Reserved |

- [Consideration 1-6] Method of considering at least one combination of [Consideration 1-1] to [Consideration 1-5] described above

■ In [Table 27-1] above, a method of considering at least one or a plurality of considerations among [Consideration 1-1] to [Consideration 1-5] described above may be used.

■ Corresponding [Consideration 1-6] may be based on independent higher layer signaling for corresponding [Consideration 1-6], may be based on the above-described higher layer signaling for supporting enhanced DMRS types 1 and 2, may be based on a situation in which at least one combination of independent higher layer signaling for [Consideration 1-1] to [Consideration 1-5] described above is simultaneously configured, may be activated or deactivated based on MAC-CE, may be dynamically indicated through the PDCCH, or may be defined in the standard.

■ For example, the above-described method of deleting entry #12 (number of DMRS CDM group(s) without data=2, DMRS port: 0, 2, 3) for [Consideration 1-1], method of using entry configuration for combinations ({0,1},{2,3},and {4,5}) for DMRS ports in the same CDM group and one combination ({0,2}) considering first two DMRS ports in CDM groups 1 and 2 among all combinations that may indicate rank 2 in a case in which number of DMRS CDM group(s) without data=3 and using entry configuration for combinations ({0,1}, {2,3},{4,5}, and {6,7}) for DMRS ports in the same CDM group and one combination ({0,2}) considering first two DMRS ports in CDM groups 1 and 2 in a case in which number of DMRS CDM group(s) without data=4 for [Consideration 1-2], and method of excluding values of ranks 3 and 4 for all values of the number of DMRS CDM group(s) without data from existing and new entries for [Consideration 1-4] may be used to generate alternatives of [Table 27-1] as shown in [Table 27-1f] below.

[Table 27-1f] [DMRS port indication method 1] use and [Consideration 1-6] applied alternative example, maxLength=1

| One Codeword: Codeword 0 enabled, Codeword 1 disabled | | |
|---|---|---|
| **Value** | **Number of DMRS CDM group(s) without data** | **DMRS port(s)** |
| 0 | 1 | 0 |
| 1 | 1 | 1 |
| 2 | 1 | 0,1 |
| 3 | 2 | 0 |
| 4 | 2 | 1 |
| 5 | 2 | 2 |
| 6 | 2 | 3 |
| 7 | 2 | 0,1 |
| 8 | 2 | 2,3 |
| 9 | 2 | 0,2 |
| 10 | 3 | 0 |
| 11 | 3 | 1 |
| 12 | 3 | 2 |

(continued)

| One Codeword: Codeword 0 enabled, Codeword 1 disabled | | |
|---|---|---|
| Value | Number of DMRS CDM group(s) without data | DMRS port(s) |
| 13 | 3 | 3 |
| 14 | 3 | 4 |
| 15 | 3 | 5 |
| 16 | 3 | 0,1 |
| 17 | 3 | 2,3 |
| 18 | 3 | 4,5 |
| 19 | 3 | 0,2 |
| 22 | 4 | 0 |
| 23 | 4 | 1 |
| 24 | 4 | 2 |
| 25 | 4 | 3 |
| 26 | 4 | 4 |
| 27 | 4 | 5 |
| 28 | 4 | 6 |
| 29 | 4 | 7 |
| 30 | 4 | 0,1 |
| 31 | 4 | 2,3 |
| 32 | 4 | 4,5 |
| 33 | 4 | 6,7 |
| 34 | 4 | 0,2 |
| 35-63 | Reserved | Reserved |

[Table 27-2] When using [DMRS port indication method 1], maxLength=2

| One Codeword: Codeword 0 enabled, Codeword 1 disabled | | | |
|---|---|---|---|
| Value | Number of DMRS CDM group(s) without data | DMRS port(s) | Number of front-load symbols |
| 0 | 1 | 0 | 1 |
| 1 | 1 | 1 | 1 |
| 2 | 1 | 0,1 | 1 |
| 3 | 2 | 0 | 1 |
| 4 | 2 | 1 | 1 |
| 5 | 2 | 2 | 1 |
| 6 | 2 | 3 | 1 |
| 7 | 2 | 0,1 | 1 |
| 8 | 2 | 2,3 | 1 |
| 9 | 2 | 0-2 | 1 |

(continued)

| One Codeword: Codeword 0 enabled, Codeword 1 disabled | | | |
|---|---|---|---|
| Value | Number of DMRS CDM group(s) without data | DMRS port(s) | Number of front-load symbols |
| 10 | 2 | 0-3 | 1 |
| 11 | 2 | 0,2 | 1 |
| 12 | 2 | 0,2,3 | 1 |
| 13 | 3 | 0 | 1 |
| 14 | 3 | 1 | 1 |
| 15 | 3 | 2 | 1 |
| 16 | 3 | 3 | 1 |
| 17 | 3 | 4 | 1 |
| 18 | 3 | 5 | 1 |
| 19 | 3 | 0,1 | 1 |
| 20 | 3 | 2,3 | 1 |
| 21 | 3 | 4,5 | 1 |
| 22 | 3 | 0,2 | 1 |
| 23 | 3 | 0,4 | 1 |
| 24 | 3 | 2,4 | 1 |
| 25 | 3 | 0-2 | 1 |
| 26 | 3 | 3-5 | 1 |
| 27 | 3 | 0-3 | 1 |
| 28 | 3 | 2-5 | 1 |
| 29 | 4 | 0 | 1 |
| 30 | 4 | 1 | 1 |
| 31 | 4 | 2 | 1 |
| 32 | 4 | 3 | 1 |
| 33 | 4 | 4 | 1 |
| 34 | 4 | 5 | 1 |
| 35 | 4 | 6 | 1 |
| 36 | 4 | 7 | 1 |
| 37 | 4 | 0,1 | 1 |
| 38 | 4 | 2,3 | 1 |
| 39 | 4 | 4,5 | 1 |
| 40 | 4 | 6,7 | 1 |
| 41 | 4 | 0,2 | 1 |
| 42 | 4 | 0,4 | 1 |
| 43 | 4 | 0,6 | 1 |
| 44 | 4 | 2,4 | 1 |
| 45 | 4 | 2,6 | 1 |
| 46 | 4 | 4,6 | 1 |

(continued)

| Value | Number of DMRS CDM group(s) without data | DMRS port(s) | Number of front-load symbols |
|---|---|---|---|
| | **One Codeword:** Codeword 0 enabled, Codeword 1 disabled | | |
| 47 | 4 | 0-2 | 1 |
| 48 | 4 | 3-5 | 1 |
| 49 | 4 | 5-7 | 1 |
| 50 | 4 | 0-3 | 1 |
| 51 | 4 | 4-7 | 1 |
| 52 | 4 | 0 | 2 |
| 53 | 4 | 1 | 2 |
| 54 | 4 | 2 | 2 |
| 55 | 4 | 3 | 2 |
| 56 | 4 | 4 | 2 |
| 57 | 4 | 5 | 2 |
| 58 | 4 | 6 | 2 |
| 59 | 4 | 7 | 2 |
| 60 | 4 | 8 | 2 |
| 61 | 4 | 9 | 2 |
| 62 | 4 | 10 | 2 |
| 63 | 4 | 11 | 2 |
| 64 | 4 | 12 | 2 |
| 65 | 4 | 13 | 2 |
| 66 | 4 | 14 | 2 |
| 67 | 4 | 15 | 2 |
| 68 | 4 | 0,1 | 2 |
| 69 | 4 | 2,3 | 2 |
| 70 | 4 | 4,5 | 2 |
| 71 | 4 | 6,7 | 2 |
| 72 | 4 | 8,9 | 2 |
| 73 | 4 | 10,11 | 2 |
| 74 | 4 | 12,13 | 2 |
| 75 | 4 | 14,15 | 2 |
| 76 | 4 | 0,1,8 | 2 |
| 77 | 4 | 2,3,10 | 2 |
| 78 | 4 | 4,5,12 | 2 |
| 79 | 4 | 6,7,14 | 2 |
| 80 | 4 | 0,1,8,9 | 2 |
| 81 | 4 | 2,3,10,11 | 2 |
| 82 | 4 | 4,5,12,13 | 2 |
| 83 | 4 | 6,7,14,15 | 2 |

(continued)

| Value | Number of DMRS CDM group(s) without data | DMRS port(s) | Number of front-load symbols |
|---|---|---|---|
| One Codeword: Codeword 0 enabled, Codeword 1 disabled | | | |
| 84 | 4 | 0,2,4,6 | 2 |
| 85 | 1 | 0 | 2 |
| 86 | 1 | 1 | 2 |
| 87 | 1 | 8 | 2 |
| 88 | 1 | 9 | 2 |
| 89 | 1 | 0,1 | 2 |
| 90 | 1 | 8,9 | 2 |
| 91 | 2 | 0 | 2 |
| 92 | 2 | 1 | 2 |
| 93 | 2 | 2 | 2 |
| 94 | 2 | 3 | 2 |
| 95 | 2 | 8 | 2 |
| 96 | 2 | 9 | 2 |
| 97 | 2 | 10 | 2 |
| 98 | 2 | 11 | 2 |
| 99 | 2 | 0,1 | 2 |
| 100 | 2 | 2,3 | 2 |
| 101 | 2 | 8,9 | 2 |
| 102 | 2 | 10,11 | 2 |
| 103 | 3 | 0 | 2 |
| 104 | 3 | 1 | 2 |
| 105 | 3 | 2 | 2 |
| 106 | 3 | 3 | 2 |
| 107 | 3 | 4 | 2 |
| 108 | 3 | 5 | 2 |
| 109 | 3 | 8 | 2 |
| 110 | 3 | 9 | 2 |
| 111 | 3 | 10 | 2 |
| 112 | 3 | 11 | 2 |
| 113 | 3 | 12 | 2 |
| 114 | 3 | 13 | 2 |
| 115 | 3 | 0,1 | 2 |
| 116 | 3 | 2,3 | 2 |
| 117 | 3 | 4,5 | 2 |
| 118 | 3 | 8,9 | 2 |
| 119 | 3 | 10,11 | 2 |
| 120 | 3 | 12,13 | 2 |

(continued)

| One Codeword:<br>Codeword 0 enabled,<br>Codeword 1 disabled | | | |
|---|---|---|---|
| Value | Number of DMRS CDM group(s) without data | DMRS port(s) | Number of front-load symbols |
| 121-127 | Reserved | Reserved | Reserved |

[Table 27-2] above may be expressed in 7 bits capable of indicating a total of 128 entries and may be expressed in 5, 6, 7, or 8 bits in the case of considering various alternatives of [Table 27-2] in consideration of at least one of the following items.

- [Consideration 2-1] Related to processing entry #12 (Number of DMRS CDM group(s) without data=2, DMRS port: 0, 2, 3) in [Table 27-2] above

■ Entry #12 (Number of DMRS CDM group(s) without data=2, DMRS port: 0, 2, 3) in [Table 27-2] above may be present in entry #12 as in [Table 27-2] described above, may be present in a last entry rather than a reserved entry after listing all entries excluding the corresponding entry, and may be excluded from the DMRS port indication table for supporting enhanced DMRS type 1 since the corresponding entry is an entry used for multiple TRP purposes.

■ Corresponding [Consideration 2-1] may be based on independent higher layer signaling for corresponding [Consideration 2-1], may be based on the above-described higher layer signaling for supporting enhanced DMRS types 1 and 2, may be activated or deactivated based on MAC-CE, may be dynamically indicated through the PDCCH, or may be defined in the standard.

■ For example, in the case of considering a method of deleting entry #12 (Number of DMRS CDM group(s) without data=2, DMRS port: 0, 2, 3) in corresponding [Consideration 2-1], alternatives of [Table 27-2] may be generated as shown in [Table 27-2a] below.

[Table 27-2a] [DMRS port indication method 1] use and [Consideration 2-1] applied alternative example, maxLength=2

| One Codeword:<br>Codeword 0 enabled,<br>Codeword 1 disabled | | | |
|---|---|---|---|
| Value | Number of DMRS CDM group(s) without data | DMRS part(s) | Number of front-load symbols |
| 0 | 1 | 0 | 1 |
| 1 | 1 | 1 | 1 |
| 2 | 1 | 0,1 | 1 |
| 3 | 2 | 0 | 1 |
| 4 | 2 | 1 | 1 |
| 5 | 2 | 2 | 1 |
| 6 | 2 | 3 | 1 |
| 7 | 2 | 0,1 | 1 |
| 8 | 2 | 2,3 | 1 |
| 9 | 2 | 0-2 | 1 |
| 10 | 2 | 0-3 | 1 |
| 11 | 2 | 0,2 | 1 |
| 12 | 3 | 0 | 1 |
| 13 | 3 | 1 | 1 |
| 14 | 3 | 2 | 1 |
| 15 | 3 | 3 | 1 |
| 16 | 3 | 4 | 1 |
| 17 | 3 | 5 | 1 |

(continued)

| One Codeword: Codeword 0 enabled, Codeword 1 disabled | | | |
|---|---|---|---|
| Value | Number of DMRS CDM group(s) without data | DMRS part(s) | Number of front-load symbols |
| 18 | 3 | 0,1 | 1 |
| 19 | 3 | 2,3 | 1 |
| 20 | 3 | 4,5 | 1 |
| 21 | 3 | 0,2 | 1 |
| 22 | 3 | 0,4 | 1 |
| 23 | 3 | 2,4 | 1 |
| 24 | 3 | 0-2 | 1 |
| 25 | 3 | 3-5 | 1 |
| 26 | 3 | 0-3 | 1 |
| 27 | 3 | 2-5 | 1 |
| 28 | 4 | 0 | 1 |
| 29 | 4 | 1 | 1 |
| 30 | 4 | 2 | 1 |
| 31 | 4 | 3 | 1 |
| 32 | 4 | 4 | 1 |
| 33 | 4 | 5 | 1 |
| 34 | 4 | 6 | 1 |
| 35 | 4 | 7 | 1 |
| 36 | 4 | 0,1 | 1 |
| 37 | 4 | 2,3 | 1 |
| 38 | 4 | 4,5 | 1 |
| 39 | 4 | 6,7 | 1 |
| 40 | 4 | 0,2 | 1 |
| 41 | 4 | 0,4 | 1 |
| 42 | 4 | 0,6 | 1 |
| 43 | 4 | 2,4 | 1 |
| 44 | 4 | 2,6 | 1 |
| 45 | 4 | 4,6 | 1 |
| 46 | 4 | 0-2 | 1 |
| 47 | 4 | 3-5 | 1 |
| 48 | 4 | 5-7 | 1 |
| 49 | 4 | 0-3 | 1 |
| 50 | 4 | 4-7 | 1 |
| 51 | 4 | 0 | 2 |
| 52 | 4 | 1 | 2 |
| 53 | 4 | 2 | 2 |
| 54 | 4 | 3 | 2 |

(continued)

| One Codeword: Codeword 0 enabled, Codeword 1 disabled | | | |
|---|---|---|---|
| Value | Number of DMRS CDM group(s) without data | DMRS part(s) | Number of front-load symbols |
| 55 | 4 | 4 | 2 |
| 56 | 4 | 5 | 2 |
| 57 | 4 | 6 | 2 |
| 58 | 4 | 7 | 2 |
| 59 | 4 | 8 | 2 |
| 60 | 4 | 9 | 2 |
| 61 | 4 | 10 | 2 |
| 62 | 4 | 11 | 2 |
| 63 | 4 | 12 | 2 |
| 64 | 4 | 13 | 2 |
| 65 | 4 | 14 | 2 |
| 66 | 4 | 15 | 2 |
| 67 | 4 | 0,1 | 2 |
| 68 | 4 | 2,3 | 2 |
| 69 | 4 | 4,5 | 2 |
| 70 | 4 | 6,7 | 2 |
| 71 | 4 | 8,9 | 2 |
| 72 | 4 | 10,11 | 2 |
| 73 | 4 | 12,13 | 2 |
| 74 | 4 | 14,15 | 2 |
| 75 | 4 | 0,1,8 | 2 |
| 76 | 4 | 2,3,10 | 2 |
| 77 | 4 | 4,5,12 | 2 |
| 78 | 4 | 6,7,14 | 2 |
| 79 | 4 | 0,1,8,9 | 2 |
| 80 | 4 | 2,3,10,11 | 2 |
| 81 | 4 | 4,5,12,13 | 2 |
| 82 | 4 | 6,7,14,15 | 2 |
| 83 | 4 | 0,2,4,6 | 2 |
| 84 | 1 | 0 | 2 |
| 85 | 1 | 1 | 2 |
| 86 | 1 | 8 | 2 |
| 87 | 1 | 9 | 2 |
| 88 | 1 | 0,1 | 2 |
| 89 | 1 | 8,9 | 2 |
| 90 | 2 | 0 | 2 |
| 91 | 2 | 1 | 2 |

(continued)

| One Codeword: Codeword 0 enabled, Codeword 1 disabled | | | |
| --- | --- | --- | --- |
| Value | Number of DMRS CDM group(s) without data | DMRS part(s) | Number of front-load symbols |
| 92 | 2 | 2 | 2 |
| 93 | 2 | 3 | 2 |
| 94 | 2 | 8 | 2 |
| 95 | 2 | 9 | 2 |
| 96 | 2 | 10 | 2 |
| 97 | 2 | 11 | 2 |
| 98 | 2 | 0,1 | 2 |
| 99 | 2 | 2,3 | 2 |
| 100 | 2 | 8,9 | 2 |
| 101 | 2 | 10,11 | 2 |
| 102 | 3 | 0 | 2 |
| 103 | 3 | 1 | 2 |
| 104 | 3 | 2 | 2 |
| 105 | 3 | 3 | 2 |
| 106 | 3 | 4 | 2 |
| 107 | 3 | 5 | 2 |
| 108 | 3 | 8 | 2 |
| 109 | 3 | 8 | 2 |
| 110 | 3 | 10 | 2 |
| 111 | 3 | 11 | 2 |
| 112 | 3 | 12 | 2 |
| 113 | 3 | 13 | 2 |
| 114 | 3 | 0,1 | 2 |
| 115 | 3 | 2,3 | 2 |
| 116 | 3 | 4,5 | 2 |
| 117 | 3 | 8,9 | 2 |
| 118 | 3 | 10,11 | 2 |
| 119 | 3 | 12,13 | 2 |
| 120-127 | Reserved | Reserved | Reserved |

- [Consideration 2-2] When defining a new entry, all combinations or some combinations are expressed for entries that may indicate ranks rank 2, 3, and 4.

■ When defining a new entry in [Table 27-2] above, all combinations or some combinations may be expressed for entries that may indicate rank 2. As in [Table 27-2] described above, if number of DMRS CDM group(s) without data=3 and number of front-load symbols=1, entry configuration may be possible for some six combinations ({0,1},{2,3},{4,5},{0,2},{0,4}, and {2,4}) that may indicate, for example, rank 2, such as entries #19 to# 24. As another example, entry configuration may be possible for some three combinations ({0,1},{2,3}, and {4,5}), considering only combinations for DMRS ports in the same CDM group among all combinations that may indicate rank 2. As another example, entry configuration may be possible for combinations ({0,1},{2,3}, and {4,5}) for DMRS ports in the same CDM group among all combinations that may indicate rank 2 and one combination ({ 0,2}) considering first two DMRS ports in CDM groups 1 and 2. As another example, entry configuration may be possible for all 15 combinations that may indicate rank 2. In addition, a newly added case in which number of DMRS CDM group(s) without data=4 and number of front-load symbols=1 and 2 may be similarly considered, and entry configuration according to a different expression scheme for some combinations for rank 2 indication may not be excluded.

■ When defining a new entry in [Table 27-2] above, all combinations or some combinations may be expressed for entries that may indicate rank 3. As in [Table 27-2] described above, if number of DMRS CDM group(s) without data=3 and number of front-load symbols=1, entry configuration may be possible for two combinations ({0-2} and {3-5}) considering only combinations having consecutive DMRS port indices among all combinations that may indicate, for example, rank 3, such as entries #25 and #26. As another example, entry configuration may be possible for all 20 combinations that may indicate rank 3. In addition, a newly added case in which number of DMRS CDM group(s) without data=4 and number of front-load symbols=1 and 2 may be similarly considered and entry configuration according to a different expression scheme for some combinations for rank 3 indication may not be excluded.

■ When defining a new entry in [Table 27-2] above, all combinations or some combinations may be expressed for entries that may indicate rank 4. As in [Table 27-2] described above, if number of DMRS CDM group(s) without data=3 and number of front-load symbols=1, entry configuration may be possible for two combinations ({0-3} and {2-5}) among all combinations that may indicate rank 4, such as entries #27 and #28. As another example, entry configuration may be possible for one combination ({0-3}) considering only a combination having consecutive DMRS port indices among all combinations that may indicate rank 4. As another example, entry configuration may be possible for all 15 combinations that may indicate rank 4. In addition, a newly added case in which number of DMRS CDM group(s) without data=4 and number of front-load symbols=1 and 2 may be similarly considered and entry configuration according to a different expression scheme for some combinations for rank 4 indication may not be excluded.

■ Corresponding [Consideration 2-2] may be based on independent higher layer signaling for corresponding [Consideration 2-2], may be based on the above-described higher layer signaling for supporting enhanced DMRS types 1 and 2, may be activated or deactivated based on MAC-CE, may be dynamically indicated through the PDCCH, or may be defined in the standard.

■ For example, in corresponding [Consideration 2-2], when considering entry configuration for combinations ({0,1},{2,3}, and{4,5}) for DMRS ports in the same CDM group and one combination ({ 0,2}) considering first two DMRS ports in CDM groups 1 and 2 among all combinations that may indicate rank 2, entry configuration for two combinations ({0-2} and {3-5}) considering only combinations having consecutive DMRS port indices among all combinations that may indicate rank 3, and entry configuration for one combination ({0-3}) considering only a combination having consecutive DMRS port indices among all combinations that may indicate rank 4 in a case in which number of DMRS CDM group(s) without data=3 and Number of front-load symbols=1; and when considering entry configuration for combinations ({0,1},{2,3},{4,5}, and {6,7}) for DMRS ports in the same CDM group and one combination ({ 0,2}) considering first two DMRS ports in CDM groups 1 and 2 among all combinations that may indicate rank 2, entry configuration for two combinations ({0-2} and{3-5}) considering combinations having consecutive DMRS port indices among all combinations that may indicate rank 3, and entry configuration entry configuration for one combination ({0-3} or {4-7}) considering only a combination having consecutive DMRS port indices among all combinations that may indicate rank 4 in a case in which number of DMRS CDM group(s) without data=4 and number of front-load symbols=1; entry configuration for combinations ({0,1} and {8,9}) for DMRS ports in the same CDM group among all combinations that may indicate rank 2 in a case in which number of DMRS CDM group(s) without data=1 and number of front-load symbols=2; entry configuration for combinations ({0,1},{2,3},{8,9}, and {10,11}) for DMRS ports in the same CDM group among all combinations that may indicate rank 2 in a case in which number of DMRS CDM group(s) without data=2 and number of front-load symbols=2; entry configuration for combinations ({0,1},{2,3},{4,5},{8,9},{10,11}, and {12,13}) for DMRS ports in the same CDM group among all combinations that may indicate rank 2 in a case in which number of DMRS CDM group(s) without data=3 and number of front-load symbols=2; entry configuration for combinations ({0,1}, {2,3},{4,5},{6,7},{8,9},{10,11},{12,13}, and {14,15}) for DMRS ports in the same CDM group among all combinations that may indicate rank 2 in a case in which number of DMRS CDM group(s) without data=4 and number of front-load symbols=2; entry configuration for combinations ({0,1,8},{2,3,10},{4,5,12},and {6, 7,14}) for DMRS ports in the same CDM group among all combinations that may indicate rank 3 in a case in which number of DMRS CDM group(s) without data=4 and number of front-load symbols=2; and entry configuration for combinations({0,1,8,9},{2,3,10,11},{4,5,12,13}, and {6,7,14,15}) for DMRS ports having consecutive indices in the same CDM group among all combinations that may indicate rank 4 in a case in which number of DMRS CDM group(s) without data=4 and number of front-load symbols=2, alternatives of [Table 27-2] may be generated as shown in [Table 27-2b] below.

[Table 27-2b] [DMRS port indication method 1] use and [Consideration 2-2] applied alternative example, maxLength=2

| One Codeword: Codeword 0 enabled, Codeword 1 disabled | | | |
|---|---|---|---|
| Value | Number of DMRS CDM group(s) without data | DMRS port(s) | Number of front-load symbols |
| 0 | 1 | 0 | 1 |
| 1 | 1 | 1 | 1 |
| 2 | 1 | 0,1 | 1 |
| 3 | 2 | 0 | 1 |
| 4 | 2 | 1 | 1 |
| 5 | 2 | 2 | 1 |
| 6 | 2 | 3 | 1 |
| 7 | 2 | 0,1 | 1 |
| 8 | 2 | 2,3 | 1 |
| 9 | 2 | 0-2 | 1 |
| 10 | 2 | 0-3 | 1 |
| 11 | 2 | 0,2 | 1 |
| 12 | 3 | 0 | 1 |
| 13 | 3 | 1 | 1 |
| 14 | 3 | 2 | 1 |
| 15 | 3 | 3 | 1 |
| 16 | 3 | 4 | 1 |
| 17 | 3 | 5 | 1 |
| 18 | 3 | 0,1 | 1 |
| 19 | 3 | 2,3 | 1 |
| 20 | 3 | 4,5 | 1 |
| 21 | 3 | 0,2 | 1 |
| 22 | 3 | 3-5 | 1 |
| 23 | 3 | 0-3 | 1 |
| 24 | 4 | 0 | 1 |
| 25 | 4 | 1 | 1 |
| 26 | 4 | 2 | 1 |
| 27 | 4 | 3 | 1 |
| 28 | 4 | 4 | 1 |
| 29 | 4 | 5 | 1 |
| 30 | 4 | 6 | 1 |
| 31 | 4 | 7 | 1 |
| 32 | 4 | 0,1 | 1 |
| 33 | 4 | 2,3 | 1 |
| 34 | 4 | 4,5 | 1 |
| 35 | 4 | 6,7 | 1 |
| 36 | 4 | 0,2 | 1 |

| One Codeword: Codeword 0 enabled, Codeword 1 disabled | | | |
|---|---|---|---|
| Value | Number of DMRS CDM group(s) without data | DMRS port(s) | Number of front-load symbols |
| 37 | 4 | 0-2 | 1 |
| 38 | 4 | 3-5 | 1 |
| 39 | 4 | 0-3 | 1 |
| 40 | 4 | 4-7 | 1 |
| 41 | 4 | 0 | 2 |
| 42 | 4 | 1 | 2 |
| 43 | 4 | 2 | 2 |
| 44 | 4 | 3 | 2 |
| 45 | 4 | 4 | 2 |
| 46 | 4 | 5 | 2 |
| 47 | 4 | 6 | 2 |
| 48 | 4 | 7 | 2 |
| 49 | 4 | 8 | 2 |
| 50 | 4 | 9 | 2 |
| 51 | 4 | 10 | 2 |
| 52 | 4 | 11 | 2 |
| 53 | 4 | 12 | 2 |
| 54 | 4 | 13 | 2 |
| 55 | 4 | 14 | 2 |
| 56 | 4 | 15 | 2 |
| 57 | 4 | 0,1 | 2 |
| 58 | 4 | 2,3 | 2 |
| 59 | 4 | 4,5 | 2 |
| 60 | 4 | 6,7 | 2 |
| 61 | 4 | 8,9 | 2 |
| 62 | 4 | 10,11 | 2 |
| 63 | 4 | 12,13 | 2 |
| 64 | 4 | 14,15 | 2 |
| 65 | 4 | 0,1,8 | 2 |
| 66 | 4 | 2,3,10 | 2 |
| 67 | 4 | 4,5,12 | 2 |
| 68 | 4 | 6,7,14 | 2 |
| 69 | 4 | 0,1,8,9 | 2 |
| 70 | 4 | 2,3,10,11 | 2 |
| 71 | 4 | 4,5,12,13 | 2 |
| 72 | 4 | 6,7,14,15 | 2 |
| 73 | 1 | 0 | 2 |

(continued)

| One Codeword: Codeword 0 enabled, Codeword 1 disabled | | | |
|---|---|---|---|
| Value | Number of DMRS CDM group(s) without data | DMRS port(s) | Number of front-load symbols |
| 74 | 1 | 1 | 2 |
| 75 | 1 | 8 | 2 |
| 76 | 1 | 9 | 2 |
| 77 | 1 | 0,1 | 2 |
| 78 | 1 | 8,9 | 2 |
| 79 | 2 | 0 | 2 |
| 80 | 2 | 1 | 2 |
| 81 | 2 | 2 | 2 |
| 82 | 2 | 3 | 2 |
| 83 | 2 | 8 | 2 |
| 84 | 2 | 9 | 2 |
| 85 | 2 | 10 | 2 |
| 86 | 2 | 11 | 2 |
| 87 | 2 | 0,1 | 2 |
| 88 | 2 | 2,3 | 2 |
| 89 | 2 | 8,9 | 2 |
| 90 | 2 | 10,11 | 2 |
| 91 | 3 | 0 | 2 |
| 92 | 3 | 1 | 2 |
| 93 | 3 | 2 | 2 |
| 94 | 3 | 3 | 2 |
| 95 | 3 | 4 | 2 |
| 96 | 3 | 5 | 2 |
| 97 | 3 | 8 | 2 |
| 98 | 3 | 9 | 2 |
| 99 | 3 | 10 | 2 |
| 100 | 3 | 11 | 2 |
| 101 | 3 | 12 | 2 |
| 102 | 3 | 13 | 2 |
| 103 | 3 | 0,1 | 2 |
| 104 | 3 | 2,3 | 2 |
| 105 | 3 | 4,5 | 2 |
| 106 | 3 | 8,9 | 2 |
| 107 | 3 | 10,11 | 2 |
| 108 | 3 | 12,13 | 2 |
| 109-127 | Reserved | Reserved | Reserved |

- [Consideration 2-3] Priority when sorting existing and new entries according to a rank value (indicated number of DMRS ports) and a value of the number of DMRS CDM group(s) without data

▪ In [Table 27-2] above, in the case of sorting entry indices of existing and new entries according to a rank value and a value of the number of DMRS CDM group(s) without data, which one to sort with high priority may be considered. [Table 27-2] described above may use a method of initially sorting in ascending order for the value of the number of front-loaded symbols and, for entries with number of front-load symbols=1, sorting in ascending order according to the value of the number of DMRS CDM group(s) without data within the same value of the number of front-load symbols and then sorting in ascending order according to the rank value (indicated number of DMRS ports) within the same value of the number of DMRS CDM group(s) without data and then, use a method of, for entries with number of front-load symbols=2, initially sorting and placing entries with number of DMRS CDM group(s) without data=4 in ascending order according to the rank value and then sorting in ascending order for number of DMRS CDM group(s) without data=1, 2, 3 and sorting in ascending order according to the rank value within the same value of the number of DMRS CDM group(s) without data when number of DMRS CDM group(s) without data=1, 2, 3.

▪ As another example, a method of initially sorting in ascending order for the value of the number of front-load symbols and sorting in ascending order according to the value of the number of DMRS CDM group(s) without data within the same value of the number of front-load symbols and then sorting in ascending order according to the rank value (indicated number of DMRS ports) within the same value of the number of DMRS CDM group(s) without data may be used.

▪ As another example, a method of initially sorting in ascending order for the value of the number of front-load symbols and sorting in ascending order according to the value of the number of DMRS CDM group(s) without data within the same value of the number of front-load symbols and then sorting in ascending order according to the rank value (indicated number of DMRS ports) within the same value of the number of DMRS CDM group(s) without data may be used and an individual table may be defined and used for number of front-load symbols=1 and 2.

▪ Corresponding [Consideration 2-3] may be based on independent higher layer signaling for corresponding [Consideration 2-3], may be based on the above-described higher layer signaling for supporting enhanced DMRS types 1 and 2, may be activated or deactivated based on MAC-CE, may be dynamically indicated through the PDCCH, or may be defined in the standard.

▪ For example, a method of initially sorting in ascending order for the value of the number of front-load symbols and sorting in ascending order according to the value of the number of DMRS CDM group(s) without data within the same value of the number of front-load symbols and then sorting in ascending order according to the rank value (indicated number of DMRS ports) within the same value of the number of DMRS CDM group(s) without data may be used to generate alternatives of [Table 27-2] as shown in [Table 27-2c] below.

[Table 27-2c] [DMRS port indication method 1] use and [Consideration 2-3] applied alternative example, maxLength=2

| One Codeword: Codeword 0 enabled, Codeword 1 disabled | | | |
|---|---|---|---|
| Value | Number of DMRS CDM group(s) without data | DMRS port(s) | Number of front-load symbols |
| 0 | 1 | 0 | 1 |
| 1 | 1 | 1 | 1 |
| 2 | 1 | 0,1 | 1 |
| 3 | 2 | 0 | 1 |
| 4 | 2 | 1 | 1 |
| 5 | 2 | 2 | 1 |
| 6 | 2 | 3 | 1 |
| 7 | 2 | 0,1 | 1 |
| 8 | 2 | 2,3 | 1 |
| 9 | 2 | 0-2 | 1 |
| 10 | 2 | 0-3 | 1 |
| 11 | 2 | 0,2 | 1 |
| 12 | 2 | 0,2,3 | 1 |
| 13 | 3 | 0 | 1 |

(continued)

| One Codeword:<br>Codeword 0 enabled,<br>Codeword 1 disabled | | | |
| --- | --- | --- | --- |
| Value | Number of DMRS CDM group(s) without data | DMRS port(s) | Number of front-load symbols |
| 14 | 3 | 1 | 1 |
| 15 | 3 | 2 | 1 |
| 16 | 3 | 3 | 1 |
| 17 | 3 | 4 | 1 |
| 18 | 3 | 5 | 1 |
| 19 | 3 | 0,1 | 1 |
| 20 | 3 | 2,3 | 1 |
| 21 | 3 | 4,5 | 1 |
| 22 | 3 | 0,2 | 1 |
| 23 | 3 | 0,4 | 1 |
| 24 | 3 | 2,4 | 1 |
| 25 | 3 | 0-2 | 1 |
| 26 | 3 | 3-5 | 1 |
| 27 | 3 | 0-3 | 1 |
| 28 | 3 | 2-5 | 1 |
| 29 | 4 | 0 | 1 |
| 30 | 4 | 1 | 1 |
| 31 | 4 | 2 | 1 |
| 32 | 4 | 3 | 1 |
| 33 | 4 | 4 | 1 |
| 34 | 4 | 5 | 1 |
| 35 | 4 | 6 | 1 |
| 36 | 4 | 7 | 1 |
| 37 | 4 | 0,1 | 1 |
| 38 | 4 | 2,3 | 1 |
| 39 | 4 | 4,5 | 1 |
| 40 | 4 | 6,7 | 1 |
| 41 | 4 | 0,2 | 1 |
| 42 | 4 | 0,4 | 1 |
| 43 | 4 | 0,6 | 1 |
| 44 | 4 | 2,4 | 1 |
| 45 | 4 | 2,6 | 1 |
| 46 | 4 | 4,6 | 1 |
| 47 | 4 | 0-2 | 1 |
| 48 | 4 | 3-5 | 1 |
| 49 | 4 | 5-7 | 1 |
| 50 | 4 | 0-3 | 1 |

(continued)

| One Codeword: Codeword 0 enabled, Codeword 1 disabled | | | |
|---|---|---|---|
| Value | Number of DMRS CDM group(s) without data | DMRS port(s) | Number of front-load symbols |
| 51 | 4 | 4-7 | 1 |
| 52 | 1 | 0 | 2 |
| 53 | 1 | 1 | 2 |
| 54 | 1 | 8 | 2 |
| 55 | 1 | 9 | 2 |
| 56 | 1 | 0,1 | 2 |
| 57 | 1 | 8,9 | 2 |
| 58 | 2 | 0 | 2 |
| 59 | 2 | 1 | 2 |
| 60 | 2 | 2 | 2 |
| 61 | 2 | 3 | 2 |
| 62 | 2 | 8 | 2 |
| 63 | 2 | 9 | 2 |
| 64 | 2 | 10 | 2 |
| 65 | 2 | 11 | 2 |
| 66 | 2 | 0,1 | 2 |
| 67 | 2 | 2,3 | 2 |
| 68 | 2 | 8,9 | 2 |
| 69 | 2 | 10,11 | 2 |
| 70 | 3 | 0 | 2 |
| 71 | 3 | 1 | 2 |
| 72 | 3 | 2 | 2 |
| 73 | 3 | 3 | 2 |
| 74 | 3 | 4 | 2 |
| 75 | 3 | 5 | 2 |
| 76 | 3 | 8 | 2 |
| 77 | 3 | 9 | 2 |
| 78 | 3 | 10 | 2 |
| 79 | 3 | 11 | 2 |
| 80 | 3 | 12 | 2 |
| 81 | 3 | 13 | 2 |
| 82 | 3 | 0,1 | 2 |
| 83 | 3 | 2,3 | 2 |
| 84 | 3 | 4,5 | 2 |
| 85 | 3 | 8,9 | 2 |
| 86 | 3 | 10,11 | 2 |
| 87 | 3 | 12,13 | 2 |

(continued)

| Value | Number of DMRS CDM group(s) without data | DMRS port(s) | Number of front-load symbols |
|---|---|---|---|
| One Codeword: Codeword 0 enabled, Codeword 1 disabled | | | |
| 88 | 4 | 0 | 2 |
| 89 | 4 | 1 | 2 |
| 90 | 4 | 2 | 2 |
| 91 | 4 | 3 | 2 |
| 92 | 4 | 4 | 2 |
| 93 | 4 | 5 | 2 |
| 94 | 4 | 6 | 2 |
| 95 | 4 | 7 | 2 |
| 96 | 4 | 8 | 2 |
| 97 | 4 | 9 | 2 |
| 98 | 4 | 10 | 2 |
| 99 | 4 | 11 | 2 |
| 100 | 4 | 12 | 2 |
| 101 | 4 | 13 | 2 |
| 102 | 4 | 14 | 2 |
| 103 | 4 | 15 | 2 |
| 104 | 4 | 0,1 | 2 |
| 105 | 4 | 2,3 | 2 |
| 106 | 4 | 4,5 | 2 |
| 107 | 4 | 6,7 | 2 |
| 108 | 4 | 8,9 | 2 |
| 109 | 4 | 10,11 | 2 |
| 110 | 4 | 12,13 | 2 |
| 111 | 4 | 14,15 | 2 |
| 112 | 4 | 0,1,8 | 2 |
| 113 | 4 | 2,3,10 | 2 |
| 114 | 4 | 4,5,12 | 2 |
| 115 | 4 | 6,7,14 | 2 |
| 116 | 4 | 0,1,8,9 | 2 |
| 117 | 4 | 2,3,10,11 | 2 |
| 118 | 4 | 4,5,12,13 | 2 |
| 119 | 4 | 6,7,14,15 | 2 |
| 120 | 4 | 0,2,4,6 | 2 |
| 121-127 | Reserved | Reserved | Reserved |

- [Consideration 2-4] Excluding a specific rank value for existing and new entries

▪ In [Table 27-2] above, a method of excluding a specific rank value not suitable for multi-user MIMO for existing and new entries may be considered. The excluded rank value may include at least one of ranks 2, 3, and 4, and a combination of excluded rank values and a minimum rank value excluded may be defined in the standard or configured through higher layer signaling.

- Alternatively, the specific rank value may be excluded for a specific value of the number of DMRS CDM group(s) without data or a specific value of the number of front-load symbols. For example, in the case of a large value of the number of DMRS CDM group(s) without data, such as 3 or 4 or number of front-load symbols=2, it may be expected that a large number of UEs may be supported with multi-user MIMO. However, in this case, use of a large rank value may reduce the number of CDM groups that may schedule other users.

- Corresponding [Consideration 2-4] may be based on independent higher layer signaling for corresponding [Consideration 2-4], may be based on the above-described higher layer signaling for supporting enhanced DMRS types 1 and 2, may be activated or deactivated based on MAC-CE, may be dynamically indicated through the PDCCH, or may be defined in the standard.

- For example, a method of excluding values of ranks 3 and 4 for all values of the number of DMRS CDM group(s) without data and all values of the number of front-load symbols from existing and new entries may be used to generate alternatives of [Table 27-2] as shown in [Table 27-2d] below.

[Table 27-2d] [DMRS port indication method 1] use and [Consideration 2-4] applied alternative example, maxLength=2

| One Codeword: Codeword 0 enabled, Codeword 1 disabled | | | |
|---|---|---|---|
| Value | Number of DMRS CDM group(s) without data | DMRS port(s) | Number of front-load symbols |
| 0 | 1 | 0 | 1 |
| 1 | 1 | 1 | 1 |
| 2 | 1 | 0,1 | 1 |
| 3 | 2 | 0 | 1 |
| 4 | 2 | 1 | 1 |
| 5 | 2 | 2 | 1 |
| 6 | 2 | 3 | 1 |
| 7 | 2 | 0,1 | 1 |
| 8 | 2 | 2,3 | 1 |
| 9 | 2 | 0,2 | 1 |
| 10 | 3 | 0 | 1 |
| 11 | 3 | 1 | 1 |
| 12 | 3 | 2 | 1 |
| 13 | 3 | 3 | 1 |
| 14 | 3 | 4 | 1 |
| 15 | 3 | 5 | 1 |
| 16 | 3 | 0,1 | 1 |
| 17 | 3 | 2,3 | 1 |
| 18 | 3 | 4,5 | 1 |
| 19 | 3 | 0,2 | 1 |
| 20 | 3 | 0,4 | 1 |
| 21 | 3 | 2,4 | 1 |
| 22 | 4 | 0 | 1 |
| 23 | 4 | 1 | 1 |
| 24 | 4 | 2 | 1 |
| 25 | 4 | 3 | 1 |

(continued)

| | One Codeword: Codeword 0 enabled, Codeword 1 disabled | | |
|---|---|---|---|
| Value | Number of DMRS CDM group(s) without data | DMRS port(s) | Number of front-load symbols |
| 26 | 4 | 4 | 1 |
| 27 | 4 | 5 | 1 |
| 28 | 4 | 6 | 1 |
| 29 | 4 | 7 | 1 |
| 30 | 4 | 0,1 | 1 |
| 31 | 4 | 2,3 | 1 |
| 32 | 4 | 4,5 | 1 |
| 33 | 4 | 6,7 | 1 |
| 34 | 4 | 0,2 | 1 |
| 35 | 4 | 0,4 | 1 |
| 36 | 4 | 0,6 | 1 |
| 37 | 4 | 2,4 | 1 |
| 38 | 4 | 2,6 | 1 |
| 39 | 4 | 4,6 | 1 |
| 40 | 4 | 0 | 2 |
| 41 | 4 | 1 | 2 |
| 42 | 4 | 2 | 2 |
| 43 | 4 | 3 | 2 |
| 44 | 4 | 4 | 2 |
| 45 | 4 | 5 | 2 |
| 46 | 4 | 6 | 2 |
| 47 | 4 | 7 | 2 |
| 48 | 4 | 8 | 2 |
| 49 | 4 | 9 | 2 |
| 50 | 4 | 10 | 2 |
| 51 | 4 | 11 | 2 |
| 52 | 4 | 12 | 2 |
| 53 | 4 | 13 | 2 |
| 54 | 4 | 14 | 2 |
| 55 | 4 | 15 | 2 |
| 56 | 4 | 0,1 | 2 |
| 57 | 4 | 2,3 | 2 |
| 58 | 4 | 4,5 | 2 |
| 59 | 4 | 6,7 | 2 |
| 60 | 4 | 8,9 | 2 |
| 61 | 4 | 10,11 | 2 |
| 62 | 4 | 12,13 | 2 |

(continued)

| Value | Number of DMRS CDM group(s) without data | DMRS port(s) | Number of front-load symbols |
|---|---|---|---|
| | One Codeword: Codeword 0 enabled, Codeword 1 disabled | | |
| 63 | 4 | 14,15 | 2 |
| 64 | 1 | 0 | 2 |
| 65 | 1 | 1 | 2 |
| 66 | 1 | 8 | 2 |
| 67 | 1 | 9 | 2 |
| 68 | 1 | 0,1 | 2 |
| 69 | 1 | 8,9 | 2 |
| 70 | 2 | 0 | 2 |
| 71 | 2 | 1 | 2 |
| 72 | 2 | 2 | 2 |
| 73 | 2 | 3 | 2 |
| 74 | 2 | 8 | 2 |
| 75 | 2 | 9 | 2 |
| 76 | 2 | 10 | 2 |
| 77 | 2 | 11 | 2 |
| 78 | 2 | 0,1 | 2 |
| 79 | 2 | 2,3 | 2 |
| 80 | 2 | 8,9 | 2 |
| 81 | 2 | 10,11 | 2 |
| 82 | 3 | 0 | 2 |
| 83 | 3 | 1 | 2 |
| 84 | 3 | 2 | 2 |
| 85 | 3 | 3 | 2 |
| 86 | 3 | 4 | 2 |
| 87 | 3 | 5 | 2 |
| 88 | 3 | 8 | 2 |
| 89 | 3 | 9 | 2 |
| 90 | 3 | 10 | 2 |
| 91 | 3 | 11 | 2 |
| 92 | 3 | 12 | 2 |
| 93 | 3 | 13 | 2 |
| 94 | 3 | 0,1 | 2 |
| 95 | 3 | 2,3 | 2 |
| 96 | 3 | 4,5 | 2 |
| 97 | 3 | 8,9 | 2 |
| 98 | 3 | 10,11 | 2 |
| 99 | 3 | 12,13 | 2 |

(continued)

| One Codeword: Codeword 0 enabled, Codeword 1 disabled | | | |
|---|---|---|---|
| **Value** | **Number of DMRS CDM group(s) without data** | **DMRS port(s)** | **Number of front-load symbols** |
| 100-127 | Reserved | Reserved | Reserved |

- [Consideration 2-5] Excluding single-user MIMO only entries from existing and new entries

■ In [Table 27-2] above, a method of excluding single-user MIMO only entries from existing and new entries may be considered. Among existing entries, entry indices that may be excluded as entries used for single-user MIMO only are numbers 2, 9, 10, 11, 12, and 30. The corresponding entries may correspond to a case in which a DMRS port allocated to the UE is included in all CDM groups allocatable to the UE (e.g., if number of DMRS CDM group(s) without data=2 and Number of front-load symbols=1, and if DMRS ports allocated to the UE are included in two CDM groups), a case in which there is no remaining DMRS port orthogonal to the DMRS port in addition to the allocated DMRS port, or entries indicating ranks 3 and 4.

■ Corresponding [Consideration 2-5] may be based on independent higher layer signaling for corresponding [Consideration 2-5], may be based on the above-described higher layer signaling for supporting enhanced DMRS types 1 and 2, may be activated or deactivated based on MAC-CE, may be dynamically indicated through the PDCCH, or may be defined in the standard.

■ For example, a method of excluding all entries used for single-user MIMO only from existing and new entries may be used to generate alternatives of [Table 27-2] as shown in [Table 27-2e] below.

[Table 27-2e] [DMRS port indication method 1] use [Consideration 2-5] applied alternative example, maxLength=2

| One Codeword: Codeword 0 enabled, Codeword 1 disabled | | | |
|---|---|---|---|
| **Value** | **Number of DMRS CDM group(s) without data** | **DMRS port(s)** | **Number of front-load symbols** |
| 0 | 1 | 0 | 1 |
| 1 | 1 | 1 | 1 |
| 3 | 2 | 0 | 1 |
| 4 | 2 | 1 | 1 |
| 5 | 2 | 2 | 1 |
| 6 | 2 | 3 | 1 |
| 7 | 2 | 0,1 | 1 |
| 8 | 2 | 2,3 | 1 |
| 13 | 3 | 0 | 1 |
| 14 | 3 | 1 | 1 |
| 15 | 3 | 2 | 1 |
| 16 | 3 | 3 | 1 |
| 17 | 3 | 4 | 1 |
| 18 | 3 | 5 | 1 |
| 19 | 3 | 0,1 | 1 |
| 20 | 3 | 2,3 | 1 |
| 21 | 3 | 4,5 | 1 |
| 22 | 3 | 0,2 | 1 |
| 23 | 3 | 0,4 | 1 |
| 24 | 3 | 2,4 | 1 |

(continued)

| | One Codeword: Codeword 0 enabled, Codeword 1 disabled | | |
|---|---|---|---|
| Value | Number of DMRS CDM group(s) without data | DMRS port(s) | Number of front-load symbols |
| 29 | 4 | 0 | 1 |
| 30 | 4 | 1 | 1 |
| 31 | 4 | 2 | 1 |
| 32 | 4 | 3 | 1 |
| 33 | 4 | 4 | 1 |
| 34 | 4 | 5 | 1 |
| 35 | 4 | 6 | 1 |
| 36 | 4 | 7 | 1 |
| 37 | 4 | 0,1 | 1 |
| 38 | 4 | 2,3 | 1 |
| 39 | 4 | 4,5 | 1 |
| 40 | 4 | 6,7 | 1 |
| 41 | 4 | 0,2 | 1 |
| 42 | 4 | 0,4 | 1 |
| 43 | 4 | 0,6 | 1 |
| 44 | 4 | 2,4 | 1 |
| 45 | 4 | 2,6 | 1 |
| 46 | 4 | 4,6 | 1 |
| 52 | 4 | 0 | 2 |
| 53 | 4 | 1 | 2 |
| 54 | 4 | 2 | 2 |
| 55 | 4 | 3 | 2 |
| 56 | 4 | 4 | 2 |
| 57 | 4 | 5 | 2 |
| 58 | 4 | 6 | 2 |
| 59 | 4 | 7 | 2 |
| 60 | 4 | 8 | 2 |
| 61 | 4 | 9 | 2 |
| 62 | 4 | 10 | 2 |
| 63 | 4 | 11 | 2 |
| 64 | 4 | 12 | 2 |
| 65 | 4 | 13 | 2 |
| 66 | 4 | 14 | 2 |
| 67 | 4 | 15 | 2 |
| 68 | 4 | 0,1 | 2 |
| 69 | 4 | 2,3 | 2 |
| 70 | 4 | 4,5 | 2 |

(continued)

| Value | Number of DMRS CDM group(s) without data | DMRS port(s) | Number of front-load symbols |
|---|---|---|---|
| | **One Codeword:** Codeword 0 enabled, Codeword 1 disabled | | |
| 71 | 4 | 6,7 | 2 |
| 72 | 4 | 8,9 | 2 |
| 73 | 4 | 10,11 | 2 |
| 74 | 4 | 12,13 | 2 |
| 75 | 4 | 14,15 | 2 |
| 85 | 1 | 0 | 2 |
| 86 | 1 | 1 | 2 |
| 87 | 1 | 8 | 2 |
| 88 | 1 | 9 | 2 |
| 89 | 1 | 0,1 | 2 |
| 90 | 1 | 8,9 | 2 |
| 91 | 2 | 0 | 2 |
| 92 | 2 | 1 | 2 |
| 93 | 2 | 2 | 2 |
| 94 | 2 | 3 | 2 |
| 95 | 2 | 8 | 2 |
| 96 | 2 | 9 | 2 |
| 97 | 2 | 10 | 2 |
| 98 | 2 | 11 | 2 |
| 99 | 2 | 0,1 | 2 |
| 100 | 2 | 2,3 | 2 |
| 101 | 2 | 8,9 | 2 |
| 102 | 2 | 10,11 | 2 |
| 103 | 3 | 0 | 2 |
| 104 | 3 | 1 | 2 |
| 105 | 3 | 2 | 2 |
| 106 | 3 | 3 | 2 |
| 107 | 3 | 4 | 2 |
| 108 | 3 | 5 | 2 |
| 109 | 3 | 8 | 2 |
| 110 | 3 | 9 | 2 |
| 111 | 3 | 10 | 2 |
| 112 | 3 | 11 | 2 |
| 113 | 3 | 12 | 2 |
| 114 | 3 | 13 | 2 |
| 115 | 3 | 0,1 | 2 |
| 116 | 3 | 2,3 | 2 |

(continued)

| One Codeword: Codeword 0 enabled, Codeword 1 disabled | | | |
|---|---|---|---|
| Value | Number of DMRS CDM group(s) without data | DMRS port(s) | Number of front-load symbols |
| 117 | 3 | 4,5 | 2 |
| 118 | 3 | 8,9 | 2 |
| 119 | 3 | 10,11 | 2 |
| 120 | 3 | 12,13 | 2 |
| 121-127 | Reserved | Reserved | Reserved |

- [Consideration 2-6] Method of considering at least one combination of [Consideration 2-1] to [Consideration 2-5] described above

■ In [Table 27-2] above, a method of considering at least one or a plurality of considerations among [Consideration 2-1] to [Consideration 2-5] described above may be used.
■ Corresponding [Consideration 2-6] may be based on independent higher layer signaling for corresponding [Consideration 2-6], may be based on the above-described higher layer signaling for supporting enhanced DMRS types 1 and 2, may be based on a situation in which at least one combination of independent higher layer signaling for [Consideration 2-1] to [Consideration 2-5] described above is simultaneously configured, may be activated or deactivated based on MAC-CE, may be dynamically indicated through the PDCCH, or may be defined in the standard.
■ For example, the above-described method of deleting entry #12 (number of DMRS CDM group(s) without data=2, DMRS port: 0, 2, 3) for [Consideration 2-1] and method of excluding single-user MIMO only entries from existing and new entries [Consideration 2-5] may be used.

[DMRS port indication method 2]

In addition to [DMRS port indication method 1] described above, the UE may generate alternatives of [Table 27-1] and [Table 27-2] through a method of adding a new column to [Table 27-1] and [Table 27-2] above. The newly added column may contain indication related to an RE location corresponding to which CDM group that is not used for data transmission if CDM group without data > 1.

As described above, if values indicated by the column corresponding to the number of DMRS CDM group(s) without data are 1, 2, 3, and 4, respectively, CDM groups not used for data transmission stand for {0}, {0, 1}, {0, 1, 2}, and {0, 1, 2, 3}, respectively. It indicates that the UE may acquire information on an RE location to which data is not transmitted only with indication of the value of the number of DMRS CDM group(s) without data, but a location of a CDM group not used for data transmission is fixed according to the indicated value. Therefore, to help support multi-user MIMO requiring more flexible scheduling, when a specific value of the number of DMRS CDM group(s) without data is indicated, it may be more advantageous to explicitly indicate which CDM group location is not used for data transmission rather than a method of implying that a fixed CDM group location is not used for data transmission. If the maximum number of CDM groups for a DMRS type configured for the UE is N and if the number of DMRS CDM group(s) without data is not 1 or N but a natural number therebetween (i.e., if 2, 3, ..., N-1), the UE may generate alternatives of [Table 27-1] and [Table 27-2] that include an additional column indicating a location of a CDM group not used for data transmission. Number of DMRS CDM group(s) without data=1 implies that all CDM groups excluding one CDM group including the indicated DMRS port are available for data transmission and number of DMRS CDM group(s) without data=N implies that all N CDM groups are unavailable for data transmission, and thus there is no need to additionally indicate a location of a CDM group not used for data transmission as described above.

For example, if [Enhanced DMRS type 1 supporting method 1] and [Enhanced DMRS type 1 supporting method 2] are configured for the UE, the UE may consider the maximum number of CDM groups to be four and, here, may additionally consider entries considering location indication information of a CDM group not used for data transmission for entries with number of DMRS CDM group(s) without data=2 or 3 in [Table 27-1] and [Table 27-2] above. In [Table 27-1], for entry 7, number of DMRS CDM group(s) without data=2 and a number of an indicated DMRS port(s) is {0,1}, so if interpreted as the conventional meaning of the number of DMRS CDM group(s) without data, CDM groups {0} and {1} are not used for data transmission, but one of indices, {1}, {2}, and {3}, of the CDM group not used for data transmission other than the CDM group {0} to which the indicated DMRS ports belong may be defined and indicated as a new column in [Table 27-1]. In the case of using a method of excluding a CDM group to which an indicated DMRS port is transmitted and defining and indicating an index of a CDM group not used for data transmission as a new column for all entries with the value of the number of DMRS CDM group(s) without data=2 or 3, alternatives of [Table 27-1] above may be generated as shown in [Table 28-1a] below.

[Table 28-la] When using [DMRS port indication method 2], maxLength=1

| One Codeword: Codeword 0 enabled, Codeword 1 disabled | | | |
|---|---|---|---|
| Value | Number of DMRS CDM group(s) without data | DMRS port(s) | Index of CDM group(s) without data (other than CDM group(s) indicated DMRS port(s)) |
| 0 | 1 | 0 | |
| 1 | 1 | 1 | |
| 2 | 1 | 0,1 | |
| 3 | 2 | 0 | 1 |
| 4 | 2 | 0 | 2 |
| 5 | 2 | 0 | 3 |
| 6 | 2 | 1 | 1 |
| 7 | 2 | 1 | 2 |
| 8 | 2 | 1 | 3 |
| 9 | 2 | 2 | 0 |
| 10 | 2 | 2 | 2 |
| 11 | 2 | 2 | 3 |
| 12 | 2 | 3 | 0 |
| 13 | 2 | 3 | 2 |
| 14 | 2 | 3 | 3 |
| 15 | 2 | 0,1 | 1 |
| 16 | 2 | 0,1 | 2 |
| 17 | 2 | 0,1 | 3 |
| 18 | 2 | 2,3 | 0 |
| 19 | 2 | 2,3 | 2 |
| 20 | 2 | 2,3 | 3 |
| 21 | 2 | 0-2 | |
| 22 | 2 | 0-3 | |
| 23 | 2 | 0,2 | |
| 24 | 2 | 0,2,3 | |
| 25 | 3 | 0 | 1,2 |
| 26 | 3 | 0 | 1,3 |
| 27 | 3 | 0 | 2,3 |
| 28 | 3 | 1 | 1,2 |
| 29 | 3 | 1 | 1,3 |
| 30 | 3 | 1 | 2,3 |
| 31 | 3 | 2 | 0,2 |

(continued)

| | One Codeword: Codeword 0 enabled, Codeword 1 disabled | | |
|---|---|---|---|
| Value | Number of DMRS CDM group(s) without data | DMRS port(s) | Index of CDM group(s) without data (other than CDM group(s) indicated DMRS port(s)) |
| 32 | 3 | 2 | 0,3 |
| 33 | 3 | 2 | 2,3 |
| 34 | 3 | 3 | 0,2 |
| 35 | 3 | 3 | 0,3 |
| 36 | 3 | 3 | 2,3 |
| 37 | 3 | 4 | 0,1 |
| 38 | 3 | 4 | 0,2 |
| 39 | 3 | 4 | 1,2 |
| 40 | 3 | 5 | 0,1 |
| 41 | 3 | 5 | 0,2 |
| 42 | 3 | 5 | 1,2 |
| 43 | 3 | 0,1 | 1,2 |
| 44 | 3 | 0,1 | 1,3 |
| 45 | 3 | 0,1 | 2,3 |
| 46 | 3 | 2,3 | 0,2 |
| 47 | 3 | 2,3 | 0,3 |
| 48 | 3 | 2,3 | 2,3 |
| 49 | 3 | 4,5 | 0,1 |
| 50 | 3 | 4,5 | 0,2 |
| 51 | 3 | 4,5 | 1,2 |
| 52 | 3 | 0-2 | |
| 53 | 3 | 3-5 | |
| 54 | 3 | 0-3 | |
| 55 | 3 | 2-5 | |
| 56 | 4 | 0 | |
| 57 | 4 | 1 | |
| 58 | 4 | 2 | |
| 59 | 4 | 3 | |
| 60 | 4 | 4 | |
| 61 | 4 | 5 | |
| 62 | 4 | 6 | |
| 63 | 4 | 7 | |
| 64 | 4 | 0,1 | |
| 65 | 4 | 2,3 | |
| 66 | 4 | 4,5 | |
| 67 | 4 | 6,7 | |

(continued)

| Value | Number of DMRS CDM group(s) without data | DMRS port(s) | Index of CDM group(s) without data (other than CDM group(s) indicated DMRS port(s)) |
|---|---|---|---|
| One Codeword: Codeword 0 enabled, Codeword 1 disabled | | | |
| 68 | 4 | 0,2 | |
| 69 | 4 | 0,4 | |
| 70 | 4 | 0,6 | |
| 71 | 4 | 2,4 | |
| 72 | 4 | 2,6 | |
| 73 | 4 | 4,6 | |
| 74 | 4 | 0-2 | |
| 75 | 4 | 3-5 | |
| 76 | 4 | 5-7 | |
| 77 | 4 | 0-3 | |
| 78 | 4 | 4-7 | |
| 79-127 | Reserved | Reserved | |

If maxLength=1, [DMRS port indication method 2] above may be applied together with at least one of [Consideration 1-1] to [Consideration 1-6] described above and used for DMRS port indication and may additionally generate alternatives of [Table 27-1] accordingly.

Similarly to generation of [Table 28-1a] above, if maxLength=2, [DMRS port indication method 2] above may be applied together with at least one of [Consideration 2-1] to [Consideration 2-6] described above and used for DMRS port indication and may additionally generate alternatives of [Table 27-2] accordingly.

Also, [DMRS port indication method 2] above may indicate the number of DMRS CDM group without data and DMRS port(s) using the existing [Table 27-1] without adding a new column as in [Table 28-1a] above, and may indicate an index of a CDM group not used for data transmission, excluding a CDM group to which a DMRS port indicated through the antenna port field is transmitted, using an additional field in addition to the antenna port field in DCI.

[DMRS port indication method 3]

For [Enhanced DMRS type 1 supporting method 3] described above, if maxLength=1, the UE may indicate DMRS ports 1000 to 1007 using [Table 27-1] above. Here, the UE may interpret DMRS port indication such that if at least one of DMRS ports 1000 to 1003 is indicated, a DMRS RE is located in an even-numbered RB to which the PDSCH is scheduled and if at least one of DMRS ports 1004 to 1007 is indicated, a DMRS RE is located in an odd-numbered RB to which the PDSCH is scheduled. As another method, the UE may indicate the even-numbered RB or the odd-numbered RB using an additional column in [Table 25-1] or [Table 25-2] above. For example, alternatives of [Table 25-1] above may be generated as shown in [Table 29-la] below.

[Table 29-la] When using [DMRS port indication method 3], maxLength=1

| Value | Number of DMRS CDM group(s) without data | DMRS port(s) | RB index |
|---|---|---|---|
| One Codeword: Codeword 0 enabled, Codeword 1 disabled | | | |
| 0 | 1 | 0 | Even |
| 1 | 1 | 0 | Odd |
| 2 | 1 | 1 | Even |
| 3 | 1 | 1 | odd |

(continued)

| One Codeword: Codeword 0 enabled, Codeword 1 disabled | | | |
|---|---|---|---|
| Value | Number of DMRS CDM group(s) without data | DMRS port(s) | RB index |
| 4 | 1 | 0,1 | Even |
| 5 | 1 | 0,1 | odd |
| 6 | 2 | 0 | Even |
| 7 | 2 | 0 | odd |
| 8 | 2 | 1 | Even |
| 9 | 2 | 1 | odd |
| 10 | 2 | 2 | Even |
| 11 | 2 | 2 | odd |
| 12 | 2 | 3 | Even |
| 13 | 2 | 3 | odd |
| 14 | 2 | 0,1 | Even |
| 15 | 2 | 0,1 | odd |
| 16 | 2 | 2,3 | Even |
| 17 | 2 | 2,3 | odd |
| 18 | 2 | 0-2 | Even |
| 19 | 2 | 0-2 | odd |
| 20 | 2 | 0-3 | Even |
| 21 | 2 | 0-3 | odd |
| 22 | 2 | 0,2 | Even |
| 23 | 2 | 0,2 | odd |
| 24-31 | Reserved | Reserved | |

As another method, the UE may use [Table 25-1] or [Table 25-2] above and may add 1 bit to the antenna port field in DCI and may receive indication regarding whether to place a DMRS RE in an even-numbered RB or an odd-numbered RB to which the PDSCH is scheduled depending whether a value of 1 bit is 0 or 1.

If maxLength=1, [DMRS port indication method 3] above may be applied together with at least one of [Consideration 1-1] to [Consideration 1-6] described above and used for DMRS port indication and may additionally generate alternatives of [Table 27-1], [Table 25-1], and [Table 25-2] accordingly.

For [Enhanced DMRS type 1 supporting method 3] described above, if maxLength=2, the UE may indicate DMRS ports 1000 to 1015 using [Table 27-2] above. Here, the UE may interpret DMRS port indication such that if at least one of DMRS ports 1000 to 1007 is indicated, a DMRS RE is located in an even-numbered RB to which the PDSCH is scheduled and if at least one of DMRS ports 1008 to 1015, a DMRS RE is located in an odd-numbered RB to which the PDSCH is scheduled. As another method, the UE may indicate the even-numbered RB or the odd-numbered RB using an additional column in [Table 25-3] above. As another method, the UE may use [Table 25-3] above and may add 1 bit to the antenna port field in DCI and may receive indication regarding whether to place a DMRS RE in the even-numbered RB or the odd-numbered RB to which the PDSCH is scheduled depending on whether a value of 1 bit is 0 or 1.

Even for [Enhanced DMRS type 2 supporting method 2] described above, if maxLength=1 or 2, the UE may perform similar application as a method of applying [DMRS port indication method 3] to [Enhanced DMRS type 1 supporting method 3] described above and may receive indication regarding which location among RBs to which the PDSCH is scheduled a DMRS RE corresponding to an indicated DMRS port is to be placed.

If maxLength=2, [DMRS port indication method 3] above may be applied together with at least one of [Consideration 2-1] to [Consideration 2-6] described above and used for DMRS port indication and may additionally generate alternatives of [Table 27-2], [Table 25-3], and [Table 25-4] accordingly.

<(2-1)-th embodiment: Additional DCI-based dynamic indication method for enhanced DMRS type 1>

As an embodiment of the disclosure, a DCI-based additional dynamic indication method for enhanced DMRS type 1 is described.

In a case in which the UE is notified of the higher layer signaling scheme and the enhanced DMRS type 1 supporting scheme in the first embodiment from the base station, if higher layer signaling, maxLength, is 1, the UE may newly define or additionally define modification of [Table 27-1] based on [Table 27-1] described above by applying [Consideration 1-7] in addition to [Consideration 1-1] to [Consideration 1-6] described above.

[Consideration 1-7] refers to a scheme in which the UE is notified of information on a maximum rank value when supporting multi-user MIMO from the base station and uses an individual DMRS indication table according to the information (maximum rank value when supporting multi-user MIMO).

- The UE may receive configuration of the maximum rank value when supporting multi-user MIMO through independent higher layer signaling, through higher layer signaling for supporting enhanced DMRS types 1 and 2 described above, or through at least one combination of independent higher layer signaling for [Consideration 1-1] to [Consideration 1-7] described above, or may use a value that is activated or deactivated based on MAC-CE, dynamically indicated through the PDCCH, or fixedly defined in the standard.
- The maximum rank value when supporting multi-user MIMO that may be notified to the UE as above may be a natural number from 1 to N, and N may be one value from 1 to 8. As described above in relation to N, the UE may use a largest value among maximum rank values when supporting multi-user MIMO, which may be notified from the base station or may be a value fixedly defined in the standard, as a value of N. Even for the value of N, the UE may receive configuration thereof through independent higher layer signaling, through higher layer signaling for supporting enhanced DMRS types 1 and 2 described above, or through at least one combination of independent higher layer signaling for [Consideration 1-1] to [Consideration 1-7] described above, or may use a value that is activated or deactivated based on MAC-CE, dynamically indicated through the PDCCH, or fixedly defined in the standard.
- The base station and the UE may define a plurality of DMRS indication tables as many as the above-described value of N. For example, if the value of N (commonly understood by) given to the base station and the UE is 4, a total of four DMRS indication tables modified from [Table 27-1] above in consideration of the maximum rank value when supporting multi-user MIMO from 1 to N (=4) may be defined and used. If these four DMRS indication tables are [Table 27-1-1] to [Table 27-1-4], [Table 27-1-1] to [Table 27-1-4] may be DMRS indication tables indicating that the maximum rank values when supporting multi-user MIMO are 1 to 4, respectively. That is, [Table 27-1-1] to [Table 27-1-4] may be DMRS indication tables including only entries capable of expressing up to 1 to 4 among rank values that [Table 27-1] may express, respectively. For example, [Table 27-1-1] is a DMRS indication table indicating that the maximum rank value when supporting multi-user MIMO is 1, and thus may be defined as a table including only entries #0, #1, #3, # 4, #5, #6, #13, #14, #15, #16, #17, #18, #29, #30, #31, #32, #33, #34, #35, and #36 among entries in [Table 27-1]. As another example, [Table 27-1-2] is a DMRS indication table indicating that the maximum rank value when supporting multi-user MIMO is 2, and thus may be defined as a table including not only entries #0, #1, #3, #4, #5, #6, #13, #14, #15, #16, #17, #18, #29, #30, #31, #32, #33, #34, #35, and #36 included in [Table 27-1-1] but also entries #2, #7, #8, #11, #19, #20, #21, #22, #23, #24, #37, #38, #39, #40, #41, #42, #43, #44, #45, and #46 among entries in [Table 27-1]. In the same manner as defining [Table 27-1-1] and [Table 27-1-2] above, [Table 27-1-3] and [Table 27-1-4] may be defined as DMRS indication tables including entries corresponding to the maximum rank values 3 and 4, respectively, among entries in [Table 27-1].
- In the above-described manner, the base station and the UE may newly define and use N DMRS indication tables. If the UE acquires the maximum rank value when supporting multi-user MIMO as described above, the UE may handle DMRS-related information decision using a corresponding DMRS indication table when receiving scheduling information from the base station.

In a case in which the UE is notified of the higher layer signaling scheme and the enhanced DMRS type 1 supporting scheme in the first embodiment from the base station, if higher layer signaling, maxLength, is 1, the UE may define alternatives (or modification) of [Table 27-1] above in consideration of at least one of [Consideration 1-1] to [Consideration 1-7] described above, based on [Table 27-1] described above, as [Table 27-la] to [Table 27-1f] and [Table 27-1-1] to [Table 27-1-4] (of course, [Table 27-la] to [Table 27-1f] and [Table 27-1-1] to [Table 27-1-4] are examples only and the disclosure may not be limited thereto). If the UE receives dynamic indication for enhanced DMRS type 1 from the base station, the UE may receive and handle the dynamic indication for enhanced DMRS type 1 from the base station using alternatives of [Table 27-1] that may be defined in consideration of at least one of [Consideration 1-1] to [Consideration 1-7] described above.

In a case in which the UE is notified of the higher layer signaling scheme and the enhanced DMRS type 1 supporting scheme in the first embodiment from the base station, if higher layer signaling, maxLength, is 2, the UE may newly define or additionally define modification of [Table 27-2] based on [Table 27-2] by applying [Consideration 2-7] in addition to [Consideration 2-1] to [Consideration 2-6] described above.

[Consideration 2-7] may be a scheme in which the UE receives information on a maximum rank value when supporting multi-user MIMO from the base station and uses an individual DMRS indication table according to the information (maximum rank value when supporting multi-user MIMO).

- The UE may receive configuration of the maximum rank value when supporting multi-user MIMO through independent higher layer signaling, through higher layer signaling for supporting enhanced DMRS types 1 and 2 described above, or through at least one combination of independent higher layer signaling for [Consideration 2-1] to [Consideration 2-7] described above, or may use a value that is activated or deactivated based on MAC-CE, dynamically indicated through the PDCCH, or fixedly defined in the standard.
- The maximum rank value when supporting multi-user MIMO that may be notified to the UE as above may be a natural number from 1 to N, and N may be one value from 1 to 8. As described above in relation to N, the UE may use a largest value among maximum rank values when supporting multi-user MIMO, which may be notified from the base station or may be a value fixedly defined in the standard, as a value of N. Even for the value of N, the UE may receive configuration thereof through independent higher layer signaling, through higher layer signaling for supporting enhanced DMRS types 1 and 2 described above, or through at least one combination of independent higher layer signaling for [Consideration 2-1] to [Consideration 2-7] described above, or may use a value that is activated or deactivated based on MAC-CE, dynamically indicated through the PDCCH, or fixedly defined in the standard.
- The base station and the UE may define a plurality of DMRS indication tables as many as the above-described value of N. For example, if the value of N (commonly understood by) given to the base station and the UE is 4, a total of four DMRS indication tables modified from [Table 27-2] above in consideration of the maximum rank value when supporting multi-user MIMO from 1 to N (=4) may be defined and used. If these four DMRS indication tables are [Table 27-2-1] to [Table 27-2-4], [Table 27-2-1] to [Table 27-2-4] may be DMRS indication tables indicating that the maximum rank values when supporting multi-user MIMO are 1 to 4, respectively. That is, [Table 27-2-1] to [Table 27-2-4] may be DMRS indication tables including only entries capable of expressing up to 1 to 4 among rank values that [Table 27-2] may express, respectively. For example, [Table 27-2-1] is a DMRS indication table indicating that the maximum rank value when supporting multi-user MIMO is 1, and thus may be defined as a table including only entries #0, #1, #3 to #6, #13 to #18, #29 to #36, #51 to #67, #85 to #98, and #103 to #114 among entries in [Table 27-2]. In the same manner as defining [Table 27-2-1] above, [Table 27-2-2], [Table 27-2-3], and [Table 27-2-4] may be defined as DMRS indication tables including entries corresponding to the maximum rank values 2, 3, and 4, respectively, among entries in [Table 27-2].
- In the above-described manner, the base station and the UE may newly define and use N DMRS indication tables. If the UE acquires the maximum rank value when supporting multi-user MIMO as described above, the UE may handle DMRS-related information decision using a corresponding DMRS indication table when receiving scheduling information from the base station.

In a case in which the UE is notified of the higher layer signaling scheme and the enhanced DMRS type 1 supporting scheme in the first embodiment from the base station, if higher layer signaling, maxLength, is 2, the UE may define alternatives (or modification) of [Table 27-2] above in consideration of at least one of [Consideration 2-1] to [Consideration 2-7] described above, based on [Table 27-2] described above, as [Table 27-2a] to [Table 27-2e] and [Table 27-2-1] to [Table 27-2-4] (of course, [Table 27-2a] to [Table 27-2e] and [Table 27-2-1] to [Table 27-2-4] are examples only and the disclosure may not be limited thereto). If the UE receives dynamic indication for enhanced DMRS type 1 from the base station, the UE may receive and handle the dynamic indication for enhanced DMRS type 1 from the base station using alternatives of [Table 27-2] that may be defined in consideration of at least one of [Consideration 2-1] to [Consideration 2-7] described above.

[DMRS port indication method 4]

If [Enhanced DMRS type 1 supporting method 4] to [Enhanced DMRS type 1 supporting method 6] are configured for the UE, the UE may perform DMRS port indication based on [Table 30-1] and [Table 30-2] below. [Table 30-1] and [Table 30-2] may be DMRS port indication tables that may be used when maxLength =1 and 2, respectively, and maxLength may denote the maximum number of front-loaded symbols.

[Table 30-1] When using [DMRS port indication method 4], maxLength=1

| One Codeword: Codeword 0 enabled, Codeword 1 disabled | | |
|---|---|---|
| Value | Number of DMRS CDM group(s) without data | DMRS port(s) |
| 0 | 1 | 0 |
| 1 | 1 | 1 |
| 2 | 1 | 8 |
| 3 | 1 | 9 |
| 4 | 1 | 0,1 |
| 5 | 1 | 0,8 |
| 6 | 1 | 0,9 |
| 7 | 1 | 1,8 |
| 8 | 1 | 1,9 |
| 9 | 1 | 8,9 |
| 10 | 1 | 0,1,8 |
| 11 | 1 | 0,1,9 |
| 12 | 1 | 0,8,9 |
| 13 | 1 | 1,8,9 |
| 14 | 1 | 0,1,8,9 |
| 15 | 2 | 0 |
| 16 | 2 | 1 |
| 17 | 2 | 2 |
| 18 | 2 | 3 |
| 19 | 2 | 8 |
| 20 | 2 | 9 |
| 21 | 2 | 10 |
| 22 | 2 | 11 |
| 23 | 2 | 0,1 |
| ... | ... | ... |
| 50 | 2 | 10,11 |
| 51 | 2 | 0-2 |
| ... | ... | ... |
| 106 | 2 | 9-11 |
| 107 | 2 | 0-3 |
| ... | ... | ... |
| 176 | 2 | 8-11 |
| 177-255 | Reserved | Reserved |

[Table 30-1] above may be applied to [Enhanced DMRS type 1 supporting method 4] to [Enhanced DMRS type 1 supporting method 6] using two CDM groups. If based on [Table 26-1-2] to [Table 26-1-4], in the case of using one front-loaded DMRS symbol, numbers of DMRS ports included in a first CDM group may be 0, 1, 8, and 9, and numbers of DMRS ports included in a second CDM group may be 2, 3, 10, and 11. In [Table 30-1] above, entries #0 to #3 may indicate a case of using only one DMRS port among a total of four DMRS ports in the first CDM group, entries #4 to #9 may indicate a case of using two DMRS ports among a total of four DMRS ports, entries #10 to #14 may indicate a case of using three DMRS ports among a total of four DMRS ports, and entry #15 may indicate a case of using four DMRS ports. Similarly, entries #15 to #22 may indicate a case of using only one DMRS port among a total of eight DRMS ports in two CDM groups, entries #23 to #50 may include a total of 28 cases, and in the case of using two DMRS ports among a total of eight DMRS ports in two CDM groups, entries #51 to #106 may include a total of 56 cases, and in the case of using three DMRS ports among a total of eight DMRS ports in two CDM groups, entries #107 to #176 may include a total of 70 cases and may indicate a case of using four DMRS ports among a total of eight DMRS ports in two CDM groups. This represents the number of cases for all combinations of DMRS ports capable of indicating ranks 1 to 4 when higher layer signaling, maxLength, is configured to be 1, and [Table 30-1] above may be expressed in eight bits capable of indicating a total of 177 entries as described above and may be expressed in fewer or more bits than 8 bits that may be used to express [Table 30-1] above in the case of considering various alternatives of [Table 30-1] in consideration of at least one of [Consideration 1-1] to [Consideration 1-7] described above. 0, 1, 8, and 9, which are numbers of DMRS ports included in the first CDM group, and 2, 3, 10, and 11, which are numbers of DMRS ports included in the second CDM group, are only one example and configuring a DMRS indication table using other DMRS port numbers may not be excluded (e.g., DMRS ports #0 to #3 in the first CDM group and DMRS ports #4 to #7 in the second CDM group, or DMRS ports #0, #1, #4, and #5 in the first CDM group and DMRS ports #2, #3, #6, and #7 in the second CDM group).

[Table 30-2] When using [DMRS port indication method 4], maxLength=2

| One Codeword: Codeword 4 enabled, Codeword 1 disabled | | | |
|---|---|---|---|
| Value | Number of DMRS CDM group(s) without data | DMRS port(s) | Number of front-load symbols |
| 0 | 1 | 0 | 1 |
| 1 | 1 | 1 | 1 |
| 2 | 1 | 8 | 1 |
| 3 | 1 | 9 | 1 |
| 4 | 1 | 0,1 | 1 |
| 5 | 1 | 0,8 | 1 |
| 6 | 1 | 0,9 | 1 |
| 7 | 1 | 1,8 | 1 |
| 8 | 1 | 1,9 | 1 |
| 9 | 1 | 8,9 | 1 |
| 10 | 1 | 0,1,8 | 1 |
| 11 | 1 | 0,1,9 | 1 |
| 12 | 1 | 0,8,9 | 1 |
| 13 | 1 | 1,8,9 | 1 |
| 14 | 1 | 0,1,8,9 | 1 |
| 15 | 2 | 0 | 1 |
| 16 | 2 | 1 | 1 |
| 17 | 2 | 2 | 1 |
| 18 | 2 | 3 | 1 |
| 19 | 2 | 8 | 1 |
| 20 | 2 | 9 | 1 |
| 21 | 2 | 10 | 1 |
| 22 | 2 | 11 | 1 |
| 23 | 2 | 0,1 | 1 |

(continued)

| Value | Number of DMRS CDM group(s) without data | DMRS port(s) | Number of front-load symbols |
|---|---|---|---|
| **One Codeword: Codeword 4 enabled, Codeword 1 disabled** | | | |
| ... | ... | ... | 1 |
| 50 | 2 | 10,11 | 1 |
| 51 | 2 | 0-2 | 1 |
| ... | ... | ... | 1 |
| 106 | 2 | 9-11 | 1 |
| 107 | 2 | 0-3 | 1 |
| ... | ... | ... | 1 |
| 176 | 2 | 8-11 | 1 |
| 177 | 1 | 0 | 2 |
| 178 | 1 | 1 | 2 |
| 179 | 1 | 4 | 2 |
| 180 | 1 | 5 | 2 |
| 181 | 1 | 8 | 2 |
| 182 | 1 | 9 | 2 |
| 183 | 1 | 12 | 2 |
| 184 | 1 | 13 | 2 |
| 185 | 1 | 0,1 | 2 |
| ... | ... | ... | ... |
| 212 | 1 | 12,13 | 2 |
| 213 | 1 | 0,1,4 | 2 |
| ... | ... | ... | ... |
| 268 | 1 | 9,12,13 | 2 |
| 269 | 1 | 0,1,4,5 | 2 |
| ... | ... | ... | ... |
| 338 | 1 | 8,9,12,13 | 2 |
| 339 | 2 | 0 | 2 |
| | | | |
| ... | ... | ... | ... |
| 354 | 2 | 15 | 2 |
| 355 | 4 | 0,1 | 2 |
| ... | ... | ... | 2 |
| 474 | 4 | 14,15 | 2 |
| 475 | 4 | 0-2 | 2 |
| ... | ... | ... | 2 |
| 1034 | 4 | 13-15 | 2 |
| 1035 | 4 | 0-3 | 2 |
| ... | ... | ... | 2 |

(continued)

| One Codeword: Codeword 4 enabled, Codeword 1 disabled | | | |
| --- | --- | --- | --- |
| Value | Number of DMRS CDM group(s) without data | DMRS port(s) | Number of front-load symbols |
| 2854 | 4 | 12-15 | 2 |
| 2855-4095 | Reserved | Reserved | Reserved |

[Table 30-2] above may be applied to [Enhanced DMRS type 1 supporting method 4] to [Enhanced DMRS type 1 supporting method 6] using two CDM groups. If based on [Table 26-1-2] to [Table 26-1-4], in the case of using two front-loaded DMRS symbol, numbers of DMRS ports included in a first CDM group may be 0, 1, 4, 5, 8, 9, 12, and 13, and numbers of DMRS ports included in a second CDM group may be 2, 3, 6, 7, 10, 11, 14, and 15. Entries #0 to #176 of [Table 30-2] above correspond to a case of using one front-loaded DMRS symbol, and thus may be the same as entries of [Table 30-1]. In [Table 30-2] above, entries #177 to #338 correspond to a case of using two front-loaded DMRS symbols and a value of the number of DMRS CDM group(s) without data=1, and thus may indicate a case of using one to four DMRS ports among a total of eight DMRS ports in the first CDM group. Entries #339 to #2854 correspond to a case of using two front-loaded DMRS symbols and the value of the number of DMRS CDM group(s) without data=2, and thus may indicate a case of using one to four DMRS ports among a total of 16 DMRS ports in the first and the second CDM groups. This indicates the number of cases for all combinations of DMRS ports capable of indicating ranks 1 to 4 when higher layer signaling, maxLength, is configured to be 2, and [Table 30-2] above may be expressed in 12 bits capable of indicating a total of 2854 entries as described above and may be expressed in fewer or more bits than 12 bits that may be used to express [Table 30-2] above in the case of considering various alternatives of [Table 30-2] in consideration of at least one of [Consideration 2-1] to [Consideration 2-7] described above. 0, 1, 4, 5, 8, 9, 12, and 13, which are numbers of DMRS ports included in the first CDM group, and 2, 3, 6, 7, 10, 11, 14, and 15, which are numbers of DMRS ports included in the second CDM group, are only one example and configuring a DMRS indication table using other DMRS port numbers may not be excluded (e.g., DMRS ports #0 to #7 in the first CDM group and DMRS ports #8 to #15 in the second CDM group, or DMRS ports #0, #1, #2, #3, #8, #9, #10, and #11 in the first CDM group and DMRS ports #4, #5, #6, #7, #12, #13, #14, and #15 in the second CDM group).

As described above, [DMRS port indication method 1] may be applied to a case in which [Enhanced DMRS type 1 supporting method 1] or [Enhanced DMRS type 1 supporting method 2] is configured and, in addition thereto, may also be applied to other supporting methods for enhanced DMRS type 1, such as [Enhanced DMRS type 1 supporting method 3] to [Enhanced DMRS type 1 supporting method 6]. Similarly, [DMRS port indication method 2] to [DMRS port indication method 4] may be all applied to [Enhanced DMRS type 1 supporting method 1] to [Enhanced DMRS type 1 supporting method 6]. Here, a DMRS indication table may be configured by applying at least one combination of considerations for the respective DMRS port indication methods. The base station and the UE may use at least one DMRS indication table newly configured for enhanced DMRS type 1 or 2 to estimate a channel using information, such as locations of DMRS ports and REs, OCC values, and transmission power, transmitted together during PDSCH scheduling.

<(2-2)-th embodiment: DCI-based dynamic indication method for enhanced DMRS type 2>

As an embodiment of the disclosure, a DCI-based DMRS port indication method for enhanced DMRS type 2 described above is described. The UE may receive, from the base station, indication for a DMRS port allocated during PDSCH scheduling through DCI format 1_1 or DCI format 1_2. As described above, the DMRS port indication based on conventional DMRS types 1 and 2 was possible through the antenna port field in DCI format 1_1 and DCI format 1_2 using one of [Table 25-1] to [Table 25-8].

When the UE receives the DCI-based DMRS port indication for enhanced DMRS type 2 from the base station, the UE may expect to support up to one codeword. That is, the UE may expect that n1 is configured for higher layer signaling, maxNrofCodeWordsScheduledByDCI, from the base station.

With respect to various methods that support enhanced DMRS type 2 defined in the above-described first embodiment, methods indicated through the antenna port field in DCI format 1_1 and DCI format 1_2 are described in detail.

[DMRS port indication method 5]

If [Enhanced DMRS type 2 supporting method 1] to [Enhanced DMRS type 2 supporting method 3] are configured for the UE, the UE may perform DMRS port indication based on [Table 31-1] and [Table 31-2] below. [Table 31-1] and [Table 31-2] may be DMRS port indication tables that may be used when maxLength =1 and 2, respectively, and maxLength may denote the maximum number of front-loaded symbols.

[Table 31-1] When using [DMRS port indication method 5], maxLength=1

| One codeword: Codeword 0 enabled, Codeword 1 disabled | | |
|---|---|---|
| Value | Number of DMRS CDM group(s) without data | DMRS port(s) |
| 0 | 1 | 0 |
| 1 | 1 | 1 |
| 2 | 1 | 2 |
| 3 | 1 | 3 |
| 4 | 1 | 0,1 |
| ... | ... | ... |
| 9 | 1 | 2,3 |
| 10 | 1 | 0-2 |
| ... | ... | ... |
| 13 | 1 | 1-3 |
| 14 | 1 | 0-3 |
| 15 | 2 | 0 |
| ... | ... | ... |
| 22 | 2 | 7 |
| 23 | 2 | 0,1 |
| ... | ... | ... |
| 50 | 2 | 6,7 |
| 51 | 2 | 0-2 |
| ... | ... | ... |
| 106 | 2 | 5-7 |
| 107 | 2 | 0-3 |
| ... | ... | ... |
| 176 | 2 | 4-7 |
| 177 | 3 | 0 |
| ... | ... | ... |
| 188 | 3 | 11 |
| 189 | 3 | 0,1 |
| ... | ... | ... |
| 254 | 3 | 10,11 |
| 255 | 3 | 0-2 |
| ... | ... | ... |
| 474 | 3 | 9-11 |
| 475 | 3 | 0-3 |
| ... | ... | ... |

(continued)

| One codeword: Codeword 0 enabled, Codeword 1 disabled | | |
|---|---|---|
| Value | Number of DMRS CDM group(s) without data | DMRS port(s) |
| 969 | 3 | 8-11 |
| 970-1023 | Reserved | Reserved |

[Table 31-1] above may be applied to [Enhanced DMRS type 2 supporting method 1] to [Enhanced DMRS type 2 supporting method 3] using three CDM groups. If based on [Table 26-8], in the case of using one front-loaded DMRS symbol, numbers of DMRS ports included in a first CDM group may be 0, 1, 2, and 3, numbers of DMRS ports included in a second CDM group may be 4, 5, 6, and 7, and numbers of DMRS ports included in a third CDM group may be 8, 9, 10, and 11. In [Table 31-1] above, entries #0 to #14 indicate a case of using one to four DMRS ports among a total of four DMRS ports in the first CDM group since a value of the number of DMRS CDM group(s) without data is 1, entries #15 to #176 indicate a case of using one to four DMRS ports among a total of eight DMRS ports in the first and second CDM groups since the value of the number of DMRS CDM group(s) without data is 2, and entries #177 to #969 indicate a case of using one to four DMRS ports among a total of 12 DMRS ports in the first to third CDM groups since the value of the number of DMRS CDM group(s) without data is 3. This represents the number of cases for all combinations of DMRS ports capable of indicating ranks 1 to 4 when higher layer signaling, maxLength, is configured to be 1, and [Table 31-1] above may be expressed in 10 bits capable of indicating a total of 969 entries as described above and may be expressed in fewer or more bits than 10 bits that may be used to express [Table 31-1] above in the case of considering various alternatives of [Table 31-1] in consideration of at least one of [Consideration 1-1] to [Consideration 1-7] described above. 0, 1, 2, and 3, which are numbers of DMRS ports included in the first CDM group, 4, 5, 6, and 7, which are numbers of DMRS ports included in the second CDM group, and 8, 9, 10, and 11, which are numbers of DMRS ports included in the third CDM group, are only one example and configuring a DMRS indication table using other DMRS port numbers may not be excluded (e.g., DMRS ports #0, #1, #6, and #7 in the first CDM group, DMRS ports #2, #3, #8, and #9 in the second CDM group, and DMRS ports #4, #5, #10, and #11 in the third CDM group).

[Table 31-2] When using [DMRS port indication method 5], maxLength=2

| One Codeword: Codeword 0 enabled, Codeword 1 disabled | | | |
|---|---|---|---|
| Value | Number of DMRS CDM group(s) without data | DMRS port(s) | Number of front-load symbols |
| 0 | 1 | 0 | 1 |
| 1 | 1 | 1 | 1 |
| 2 | 1 | 2 | 1 |
| 3 | 1 | 3 | 1 |
| 4 | 1 | 0.1 | 1 |
| ... | ... | ... | ... |
| 9 | 1 | 2.3 | 1 |
| 10 | 1 | 0-2 | 1 |
| ... | ... | ... | ... |
| 13 | 1 | 1-3 | 1 |
| 14 | 1 | 0-3 | 1 |
| 15 | 2 | 0 | 1 |
| ... | ... | ... | ... |
| 22 | 2 | 7 | 1 |

(continued)

| One Codeword: Codeword 0 enabled, Codeword 1 disabled | | | |
|---|---|---|---|
| Value | Number of DMRS CDM group(s) without data | DMRS port(s) | Number of front-load symbols |
| 23 | 2 | 0.1 | 1 |
| ... | ... | ... | ... |
| 50 | 2 | 6.7 | 1 |
| 51 | 2 | 0-2 | 1 |
| ... | ... | ... | ... |
| 106 | 2 | 5-7 | 1 |
| 107 | 2 | 0-3 | 1 |
| ... | ... | ... | ... |
| 176 | 2 | 4-7 | 1 |
| 177 | 3 | 0 | 1 |
| ... | ... | ... | ... |
| 188 | 3 | 11 | 1 |
| 189 | 3 | 0.1 | 1 |
| ... | ... | ... | ... |
| 254 | 3 | 10.11 | 1 |
| 255 | 3 | 0-2 | 1 |
| ... | ... | ... | ... |
| 474 | 3 | 9-11 | 1 |
| 475 | 3 | 0-3 | 1 |
| ... | ... | ... | ... |
| 969 | 3 | 8-11 | 1 |
| 970 | 1 | 0 | 2 |
| ... | ... | ... | ... |
| 977 | 1 | 15 | 2 |
| 978 | 1 | 0.1 | 2 |
| ... | ... | ... | ... |
| 1005 | 1 | 14-15 | 2 |
| 1006 | 1 | 0-2 | 2 |
| ... | ... | ... | ... |
| 1061 | 1 | 13-15 | 2 |
| 1062 | 1 | 0-3 | 2 |
| ... | ... | ... | ... |
| 1131 | 1 | 12-15 | 2 |
| 1132 | 2 | 0 | 2 |
| ... | | ... | |
| 1151 | 2 ... | 19 | 2 |

(continued)

| One Codeword: Codeword 0 enabled, Codeword 1 disabled | | | |
| --- | --- | --- | --- |
| Value | Number of DMRS CDM group(s) without data | DMRS port(s) | Number of front-load symbols |
| 1152 | 2 | 0,1 | 2 |
| | | ... | |
| 1271 | 2 | 18,19 | 2 |
| 1272 | 2 | 0-2 | 2 |
| | | ... | ... |
| 1831 | 2 | 17-19 | 2 |
| 1832 | 2 | 0-3 | 2 |
| ... | | ... | ... |
| 3651 | 2 | 16-19 | 2 |
| 3652 | 3 | 0 | 2 |
| ... | ... | ... | ... |
| 3675 | 3 | 23 | 2 |
| 3676 | 3 | 0,1 | 2 |
| | | | |
| 3951 | 3 | 22.23 | 2 |
| 3952 | 3 | 0-2 | 2 |
| ... | ... | ... | ... |
| 5975 | 3 | 21-23 | 2 |
| 5976 | 3 | 0-3 | 2 |
| ... | ... | ... | ... |
| 16601 | 3 | 20-23 | 2 |
| 16602-32767 | Reserved | Reserved | Reserved |

[Table 31-2] above may be applied to [Enhanced DMRS type 2 supporting method 1] to [Enhanced DMRS type 2 supporting method 3] using three CDM groups. If based on [Table 26-8], in the case of using one front-loaded DMRS symbol, numbers of DMRS ports included in the first CDM group may be 0, 1, 2, and 3, numbers of DMRS ports included in the second CDM group may be 4, 5, 6, and 7, and numbers of DMRS ports included in the third CDM group may be 8, 9, 10, and 11, and in the case of using two front-loaded DMRS symbols, numbers of DMRS ports included in the first CDM group may be 0, 1, 2, 3, 12, 13, 14, and 15, numbers of DMRS ports included in the second CDM group may be 4, 5, 6, 7, 16, 17, 18, and 19, and numbers of DMRS ports included in the third CDM group may be 8, 9, 10, 11, 20, 21, 22, and 23. Entries #0 to #969 of [Table 31-2] above correspond to a case of using one front-loaded DMRS symbol, and thus may be the same as entries of[Table 31-1] above. In [Table 30-2] above, entries #970 to #1131 correspond to a case of using two front-loaded DMRS symbols and a value of the number of DMRS CDM group(s) without data=1, and thus may indicate a case of using one to four DMRS ports among a total of eight DMRS ports in the first CDM group. Entries #1132 to #3651 correspond to a case of using two front-loaded DMRS symbols and the value of the number of DMRS CDM group(s) without data=2, and thus may indicate a case of using one to four DMRS ports among a total of 16 DMRS ports in the first and second CDM groups. Entries #3652 to #16601 correspond to a case of using two front-loaded DMRS symbols and the value of the number of DMRS CDM group(s) without data=3, and thus may indicate a case of using one to four DMRS ports among a total of 24 DMRS ports in the first to third CDM groups. This represents the number of cases for all combinations of DMRS ports capable of indicating ranks 1 to 4 when higher layer signaling, maxLength, is configured to be 2, and [Table 31-2] above may be expressed in 14 bits capable of indicating a total of 16601 entries as described above and may be expressed in fewer or more bits than 14 bits that may be used to express [Table 31-2] above in the case of considering various alternatives of [Table 31-2] in consideration of at least one of [Consideration 2-1] to [Consideration 2-7] described above. 0, 1, 2, 3, 12, 13, 14, and 15, which are numbers of DMRS ports included in the first CDM group, 4, 5, 6, 7, 16, 17, 18, and 19, which are numbers of DMRS ports included in the second CDM group, and 8, 9, 10, 11, 20, 21, 22, and 23, which are numbers of DMRS ports included in the first CDM group, are only one example and configuring a DMRS indication table using other DMRS port numbers may not be excluded (e.g., DMRS ports #0, #1, #6, 7, #12, #13, #18, and #19 in the first CDM group, DMRS ports #2, #3, #8, #9, #14, #15,# 20, and #21 in the second CDM group, and DMRS ports #4, #5, #10, #11, #16, #17, #22, and #23 in the third CDM group)

[DMRS port indication method 6]

If [Enhanced DMRS type 2 supporting method 4] is configured for the UE, the UE may perform DMRS port indication based on [Table 32-1] and [Table 32-2] below. [Table 32-1] and [Table 32-2] may be DMRS port indication tables that may be used when maxLength =1 and 2, respectively, and maxLength may denote the maximum number of front-loaded symbols.

[Table 32-1] When using [DMRS port indication method 6], maxLength=1

| One codeword: Codeword 0 enabled, Codeword 1 disabled | | |
|---|---|---|
| Value | Number of DMRS CDM group(s) without data | DMRS port(s) |
| 0 | 1 | 0 |
| 1 | 1 | 1 |
| 2 | 1 | 0,1 |
| 3 | 2 | 0 |
| 4 | 2 | 1 |
| 5 | 2 | 2 |
| 6 | 2 | 3 |
| 7 | 2 | 0,1 |
| ... | ... | ... |
| 12 | 2 | 2,3 |
| 13 | 2 | 0-2 |
| ... | ... | ... |
| 16 | 2 | 1-3 |
| 17 | 2 | 0-3 |
| 18 | 3 | 0 |
| ... | ... | ... |
| 23 | 3 | 5 |
| 24 | 3 | 0,1 |
| ... | ... | ... |
| 38 | 3 | 4-5 |
| 39 | 3 | 0-2 |
| ... | ... | ... |
| 58 | 3 | 3-5 |
| 59 | 3 | 0-3 |
| ... | ... | ... |

(continued)

| One codeword:<br>Codeword 0 enabled,<br>Codeword 1 disabled | | |
|---|---|---|
| Value | Number of DMRS CDM group(s) without data | DMRS port(s) |
| 73 | 3 | 2-5 |
| 74 | 4 | 0 |
| ... | ... | ... |
| 81 | 4 | 13 |
| 82 | 4 | 0,1 |
| ... | ... | ... |
| 109 | 4 | 12,13 |
| 110 | 4 | 0-2 |
| ... | ... | ... |
| 165 | 4 | 5,12,13 |
| 166 | 4 | 0-3 |
| ... | ... | ... |
| 235 | 4 | 4,5,12,13 |
| 236 | 5 | 0 |
| ... | ... | ... |
| 245 | 5 | 15 |
| 246 | 5 | 0,1 |
| ... | ... | ... |
| 290 | 5 | 14,15 |
| 291 | 5 | 0-2 |
| ... | ... | ... |
| 410 | 5 | 13-15 |
| 411 | 5 | 0-3 |
| ... | ... | ... |
| 620 | 5 | 12-15 |
| 621 | 6 | 0 |
| ... | ... | ... |
| 622 | 6 | 17 |
| 623 | 6 | 0,1 |
| ... | ... | ... |
| 688 | 6 | 16,17 |
| 689 | 6 | 0-2 |
| ... | ... | ... |
| 908 | 6 | 15-17 |
| 909 | 6 | 0-3 |
| ... | ... | .... |
| 1403 | 6 | 14-17 |

(continued)

| One codeword: Codeword 0 enabled, Codeword 1 disabled | | |
|---|---|---|
| **Value** | **Number of DMRS CDM group(s) without data** | **DMRS port(s)** |
| 1404-2047 | Reserved | Reserved |

[Table 32-1] above may be applied to [Enhanced DMRS type 2 supporting method 4] using six CDM groups. If based on [Table 26-2-4], in the case of using one front-loaded DMRS symbol, numbers of DMRS ports included in a first CDM group may be 0 and 1, numbers of DMRS ports included in a second CDM group may be 2 and 3, numbers of DMRS ports included in a third CDM group may be 4 and 5, numbers of DMRS ports included in a fourth CDM group may be 12 and 13, numbers of DMRS ports included in a fifth CDM group may be 14 and 15, and numbers of DMRS ports included in a sixth CDM group may be 16 and 17. In [Table 32-1] above, entries #0 to #2 correspond to a case in which a value of the number of DMRS CDM group(s) without data is 1, and thus may indicate a case of using one to two DMRS ports between a total of two DMRS ports in the first CDM, entries #3 to #17 correspond to a case in which the value of the number of DMRS CDM group(s) without data is 2, and thus may indicate a case of using one to four DMRS ports among a total of four DMRS ports in the first and second CDM groups, and subsequent entries may also indicate a case in which the value of the number of DMRS CDM group(s) without data is 3 to 6. This represents the number of cases for all combinations of DMRS ports capable of indicating ranks 1 to 4 when higher layer signaling, maxLength, is configured to be 1, and [Table 32-1] above may be expressed in 11 bits capable of indicating a total of 1403 entries as described above and may be expressed in fewer or more bits than 11 bits that may be used to express [Table 32-1] above in the case of considering various alternatives of [Table 32-1] in consideration of at least one of [Consideration 1-1] to [Consideration 1-7] described above. 0 and 1, which are numbers of DMRS ports included in the first CDM group, 2 and 3, which are numbers of DMRS ports included in the second CDM group, 4 and 5, which are numbers of DMRS ports included in the third CDM group, 12 and 13, which are numbers of DMRS ports included in the fourth CDM group, 14 and 15, which are numbers of DMRS ports included in the fifth CDM group, and 16 and 17, which are numbers of DMRS ports included in the fourth CDM group, are only one example and configuring a DMRS indication table using other DMRS port numbers may not be excluded (e.g., DMRS ports #0 and #1 in the first CDM group, DMRS ports #2 and #3 in the second CDM group, DMRS ports #4 and #5 in the third CDM group, DMRS ports #6 and #7 in the fourth CDM group, DMRS ports #8 and #9 in the fifth CDM group, and DMRS ports #10 and #11 in the sixth CDM group).

[Table 32-2] When using [DMRS port indication method 6], maxLength=2

| One Codeword: Codeword 0 enabled, Codeword 1 disabled | | | |
|---|---|---|---|
| **Value** | **Number of DMRS CDM group(s) without data** | **DMRS port(s)** | **Number of front-load symbols** |
| 0 | 1 | 0 | 1 |
| 1 | 1 | 1 | 1 |
| 2 | 1 | 0,1 | 1 |
| 3 | 2 | 0 | 1 |
| 4 | 2 | 1 | 1 |
| 5 | 2 | 2 | 1 |
| 6 | 2 | 3 | 1 |
| 7 | 2 | 0,1 | 1 |
| ... | ... | ... | ... |
| 12 | 2 | 2,3 | 1 |
| 13 | 2 | 0-2 | 1 |
| ... | ... | ... | ... |

(continued)

| One Codeword: Codeword 0 enabled, Codeword 1 disabled | | | |
|---|---|---|---|
| Value | Number of DMRS CDM group(s) without data | DMRS port(s) | Number of front-load symbols |
| 16 | 2 | 1-3 | 1 |
| 17 | 2 | 0-3 | 1 |
| 18 | 3 | 0 | 1 |
| ... | ... | ... | ... |
| 23 | 3 | 5 | 1 |
| 24 | 3 | 0,1 | 1 |
| ... | ... | ... | ... |
| 38 | 3 | 4-5 | 1 |
| 39 | 3 | 0-2 | 1 |
| ... | ... | ... | ... |
| 58 | 3 | 3-5 | 1 |
| 59 | 3 | 0-3 | 1 |
| ... | ... | ... | ... |
| 73 | 3 | 2-5 | 1 |
| 74 | 4 | 0 | 1 |
| ... | ... | ... | ... |
| 81 | 4 | 13 | 1 |
| 82 | 4 | 0,1 | 1 |
| ... | ... | ... | ... |
| 109 | 4 | 12,13 | 1 |
| 110 | 4 | 0-2 | 1 |
| ... | ... | ... | ... |
| 165 | 4 | 5,12,13 | 1 |
| 166 | 4 | 0-3 | 1 |
| ... | ... | ... | ... |
| 235 | 4 | 4,5,12,13 | 1 |
| 236 | 5 | 0 | 1 |
| ... | ... | ... | ... |
| 245 | 5 | 15 | 1 |
| 246 | 5 | 0,1 | 1 |
| ... | ... | ... | ... |
| 290 | 5 | 14,15 | 1 |
| 291 | 5 | 0-2 | 1 |
| ... | ... | ... | ... |
| 410 | 5 | 13-15 | 1 |
| 411 | 5 | 0-3 | 1 |

(continued)

| | One Codeword: Codeword 0 enabled, Codeword 1 disabled | | |
|---|---|---|---|
| Value | Number of DMRS CDM group(s) without data | DMRS port(s) | Number of front-load symbols |
| ... | ... | ... | |
| 620 | 5 | 12-15 | 1 |
| 621 | 6 | 0 | 1 |
| ... | ... | ... | ... |
| 622 | 6 | 17 | 1 |
| 623 | 6 | 0,1 | 1 |
| ... | ... | | |
| 688 | 6 | 16,17 | 1 |
| 689 | 6 | 0-2 | 1 |
| ... | ... | ... | ... |
| 908 | 6 | 15-17 | 1 |
| 909 | 6 | 0-3 | 1 |
| ... | ... | ... | ... |
| 1403 | 6 | 14-17 | 1 |
| 1404 | 1 | 0 | 2 |
| ... | ... | ... | ... |
| 1411 | 1 | 7 | 2 |
| 1412 | 1 | 0,1 | 2 |
| ... | ... | ... | ... |
| 1417 | 1 | 6.7 | 2 |
| 1418 | 1 | 0,1,6 | 2 |
| ... | ... | ... | ... |
| 1421 | 1 | 1,6,7 | 2 |
| 1422 | 1 | 0,1,6,7 | 2 |
| 1423 | 2 | 0 | 2 |
| ... | ... | ... | ... |
| 1430 | 2 | 9 | 2 |
| ... | ... | ... | ... |
| 6244 | 6 | 0-3 | 2 |
| ... | ... | ... | ... |
| 11088 | 6 | 20-23 | 2 |
| 11089-16393 | Reserved | Reserved | Reserved |

[Table 32-2] above may be applied to [Enhanced DMRS type 2 supporting method 4] using six CDM group. If based on [Table 26-2-4], in the case of using one front-loaded DMRS symbol, numbers of DMRS ports included in the first CDM group may be 0 and 1, numbers of DMRS ports included in the second CDM group may be 2 and 3, numbers of DMRS ports included in the third CDM group may be 4 and 5, numbers of DMRS ports included in the fourth CDM group may be 12 and 13, numbers of DMRS ports included in the fifth CDM group may be 14 and 15, and numbers of DMRS ports included in the sixth CDM group may be 16 and 17, and in the case of using two front-loaded DMRS symbols, numbers of DMRS ports included in the first CDM group may be 0, 1, 6, and 7, numbers of DMRS ports included in the second CDM group may be 2, 3, 8, and 9, numbers of DMRS ports included in the third CDM group may be 4, 5, 10, and 11, numbers of DMRS ports included in the fourth CDM group may be 12, 13, 18, and 19, numbers of DMRS ports included in the fifth CDM group may be 14, 15, 20, and 21, and numbers of DMRS ports included in the sixth CDM group may be 16, 17, 22, and 23. [Table 32-2] above represents the number of cases for all combinations of DMRS ports capable of indicating ranks 1 to 4 when higher layer signaling, maxLength, is configured to be 2, and [Table 32-2] above may be expressed in 14 bits capable of indicating a total of 11088 entries as described above and may be expressed in fewer or more bits than 14 bits that may be used to express [Table 32-2] above in the case of considering various alternatives of [Table 32-2] in consideration of at least one of [Consideration 2-1] to [Consideration 2-7] described above. 0, 1, 6, and 7, which are numbers of DMRS ports included in the first CDM group, 2, 3, 8, and 9, which are numbers of DMRS ports included in the second CDM group, 4, 5, 10, and 11, which are numbers of DMRS ports included in the third CDM group, 12, 13, 18, and 19, which are numbers of DMRS ports included in the fourth CDM group, 14, 15, 20, and 21, which are numbers of DMRS ports included in the fifth CDM group, and 16, 17, 22, and 23, which are numbers of DMRS ports included in the fourth CDM group, are only one example and configuring a DMRS indication table using other DMRS port numbers may not be excluded (e.g., DMRS ports #0 to #3 in the first CDM group, DMRS ports #4 to #7 in the second CDM group, DMRS ports #8 to #11 in the third CDM group, DMRS ports #12 to #15 in the fourth CDM group, DMRS ports #16 to #19 in the fifth CDM group, and DMRS ports #20 to #23 in the sixth CDM group).

As described above, [DMRS port indication method 5] may be applied to a case in which [Enhanced DMRS type 2 supporting method 1] to [Enhanced DMRS type 2 supporting method 3] are configured and, in addition thereto, may also be applied to other supporting methods for enhanced DMRS type 2, such as [Enhanced DMRS type 2 supporting method 4]. Similarly, [DMRS port indication method 6] may be applied to all of [Enhanced DMRS type 2 supporting method 1] to [Enhanced DMRS type 2 supporting method 4]. Here, a DMRS indication table may be configured by applying at least one combination of considerations for the respective DMRS port indication methods. The base station and the UE may use at least one DMRS indication table newly configured for enhanced DMRS type 2 to estimate a channel using information, such as locations of DMRS ports and REs, OCC values, and transmission power, transmitted together during PDSCH scheduling.

<Third embodiment: DCI-based dynamic indication method for enhanced DMRS types 1 and 2 when transmitting uplink data>

According to an embodiment of the disclosure, a DCI-based dynamic indication method for enhanced DMRS types 1 and 2 when transmitting uplink data (PUSCH) is described. The UE may receive, from the base station, indication for a DMRS port allocated during PUSCH scheduling through DCI format 0_1 or DCI format 0_2. As described above, the DMRS port indication based on conventional DMRS types 1 and 2 was possible through the antenna port field in DCI format 0_1 and DCI format 0_2 using one of [Table 25-9] to [Table 25-24].

When the UE receives the DCI-based DMRS port indication for enhanced DMRS types 1 and 2 from the base station, the UE may expect to support up to one codeword. That is, the UE may expect that n1 is configured for higher layer signaling (e.g., maxNrofCodeWordsForPUSCHScheduledByDCI) from the base station.

With respect to various methods that support enhanced DMRS types 1 and 2 defined in the above-described first embodiment, methods indicated through the antenna port field in DCI format 0_1 and DCI format 0_2 are described in detail.

The UE may apply at least one combination of [Higher layer configuration method 1], [Higher layer configuration method 1-1], [Higher layer configuration method 1-2], and [Higher layer configuration method 2] described above for enhanced DMRS type 1 or 2 to be applied for PDSCH reception similarly even to enhanced DMRS type 1 or 2 to be applied for PUSCH transmission scheduled through DCI formats 0_1 and 0_2. For example, if the UE similarly applies [Higher layer configuration method 1] described above to PUSCH transmission, the UE may be configured to support the enhanced DMRS type in higher layer signaling, DMRS-UplinkConfig.

With respect to PUSCH transmission scheduled through DCI formats 0_1 and 0_2, the UE may use [Enhanced DMRS type 1 supporting method 1] to [Enhanced DMRS type 1 supporting method 6] and [Enhanced DMRS type 2 supporting method 1] to [Enhanced DMRS type 2 supporting method 4] described above in a similar manner to a method of applying the same to a PDSCH DMRS to receive and understand indication for one or a plurality of DMRS ports based on enhanced DMRS type 1 or 2, applied for PUSCH transmission from the base station. Similarly thereto, the UE may apply at least one combination of [DMRS port indication method 1] to [DMRS port indication method 6] described above and [Consideration 1-1] to [Consideration 1-7] or [Consideration 2-1] to [Consideration 2-7] corresponding thereto, described above, in a similar method to a method of applying the same to a PDSCH DMRS to receive and understand indication for one or a plurality of DMRS ports based on enhanced DMRS type 1 or 2, applied for PUSCH transmission from the base station. A difference between [DMRS port indication method 1] to [DMRS port indication method 6] available for the PDSCH DMRS port indication and a case of applying the same to PUSCH DMRS port indication may be that, in the case of the PDSCH DMRS port indication, one DMRS indication table includes all rank values (e.g., 1 to 4) and, in the case of the PUSCH DMRS port indication, different DMRS indication tables are used according to different rank values for the same higher layer configuration value (e.g., maxLength configured to be 1) as in [Table 25-9] to [Table 25-12]. As an example, if the base station and the UE desire to use [Table 27-1a] described above as a DMRS indication table to be applied for PUSCH transmission, it may be dividedly defined for each rank value as shown in [Table 33-1] to [Table 33-4] below. Here, the UE may understand DMRS port indication information from the base station based on a DMRS indication table corresponding to a rank value that may be known through a field for precoding information and the number of layers in the case of codebook-based PUSCH transmission (when higher layer signaling, txConfig, is configured as a codebook and usage of an SRS resource set is configured as a codebook) in DCI format 0_1 or 0_2, and an SRI field in the case of non-codebook-based PUSCH transmission (when higher layer signaling, txConfig, is configured as a non-codebook and usage of a SRS resource set is configured as a non-codebook). For example, if a rank value that may be known through the field for precoding information and the number of layers or the SRI field is 2, the base station may notify the UE of DMRS port indication based on a DMRS indication table (e.g., [Table 33-2]) with rank value=2 and the UE may also receive the DMRS port indication from the base station based on the DMRS indication table with rank value=2 and may understand indicated DMRS port numbers. Also, as described above, since rank information may be known through the field for precoding information and the number of layers or the SRI field, the antenna port field does not need to separately indicate the rank information, and thus the bit length of the antenna port field may require the number of bits capable of expressing the largest number of entries among entries corresponding to each rank value when configuring specific higher layer signaling (e.g., when enhanced DMRS type 1 and maxLength=1 are configured as shown in [Table 33-1] to [Table 33-4]). For example, since [Table 33-1] and [Table 33-2] have 20 entries, [Table 33-3] has six entries, and [Table 33-4] has five entries, five bits capable of expressing 20 that is the largest number of entries may be required.

[Table 33-1] [DMRS port indication method 1] use and [Consideration 1-1] applied alternative example, maxLength=1, rank=1

| Value | Number of DMRS CDM group(s) without data | DMRS port(s) |
|---|---|---|
| 0 | 1 | 0 |
| 1 | 1 | 1 |
| 2 | 2 | 0 |
| 3 | 2 | 1 |
| 4 | 2 | 2 |
| 5 | 2 | 3 |
| 6 | 3 | 0 |
| 7 | 3 | 1 |
| 8 | 3 | 2 |
| 9 | 3 | 3 |
| 10 | 3 | 4 |
| 11 | 3 | 5 |
| 12 | 4 | 0 |
| 13 | 4 | 1 |
| 14 | 4 | 2 |
| 15 | 4 | 3 |
| 16 | 4 | 4 |
| 17 | 4 | 5 |
| 18 | 4 | 6 |
| 19 | 4 | 7 |
| 20-31 | Reserved | Reserved |

[Table 33-2] [DMRS port indication method 1] use and [Consideration 1-1] applied alternative example, maxLength=1, rank=2

| Value | Number of DMRS CDM group(s) without data | DMRS port(s) |
|---|---|---|
| 0 | 1 | 0,1 |
| 1 | 2 | 0,1 |
| 2 | 2 | 2.3 |
| 3 | 2 | 0,2 |
| 4 | 3 | 0,1 |
| 5 | 3 | 2,3 |
| 6 | 3 | 4,5 |
| 7 | 3 | 0,2 |
| 8 | 3 | 0,4 |
| 9 | 3 | 2,4 |
| 10 | 4 | 0,1 |
| 11 | 4 | 2,3 |
| 12 | 4 | 4,5 |
| 13 | 4 | 6,7 |
| 14 | 4 | 0,2 |
| 15 | 4 | 0,4 |
| 16 | 4 | 0,6 |
| 17 | 4 | 2,4 |
| 18 | 4 | 2,6 |
| 19 | 4 | 4,6 |
| 20-31 | Reserved | Reserved |

[Table 33-3] [DMRS port indication method 1] use and [Consideration 1-1] applied alternative example, maxLength=1, rank=3

| Value | Number of DMRS CDM group(s) without data | DMRS port(s) |
|---|---|---|
| 0 | 2 | 0-2 |
| 1 | 3 | 0-2 |
| 2 | 3 | 3-5 |
| 3 | 4 | 0-2 |
| 4 | 4 | 3-5 |
| 5 | 4 | 5-7 |
| 6-31 | Reserved | Reserved |

[Table 33-4] [DMRS port indication method 1] use and [Consideration 1-1] applied alternative example, maxLength=1, rank=4

| Value | Number of DMRS CDM group(s) without data | DMRS port(s) |
|---|---|---|
| 0 | 2 | 0-3 |
| 1 | 3 | 0-3 |
| 2 | 3 | 2-5 |

(continued)

| Value | Number of DMRS CDM group(s) without data | DMRS port(s) |
|---|---|---|
| 3 | 4 | 0-3 |
| 4 | 4 | 4-7 |
| 5-31 | Reserved | Reserved |

All methods in this embodiment may be equally applied even to configuration grant type 1 based on higher layer signaling or configuration grant type 2 activated with DCI format 0_0, 0_1, or 0_2. Here, to apply all methods in this embodiment to configuration grant type 1 or 2, the UE may be based on independent higher layer signaling from the base station, may be based on the above-described higher layer signaling for supporting enhanced DMRS types 1 and 2, may be activated or deactivated based on MAC-CE, may be dynamically indicated through the PDCCH, or may be defined in the standard.

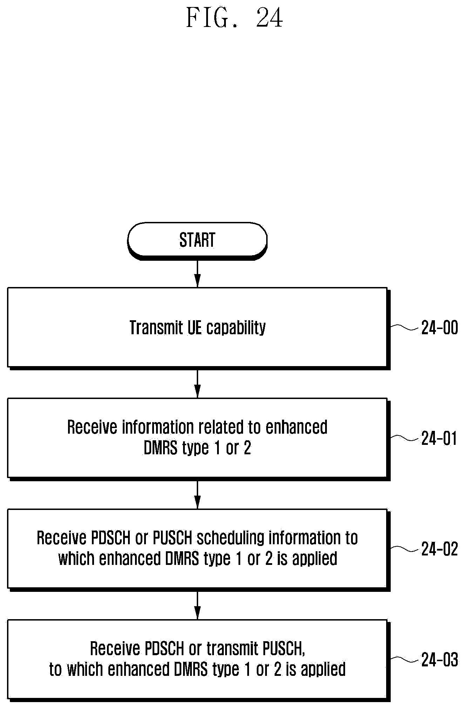

FIG. 24 illustrates a diagram of an operation of a UE for supporting enhanced DMRS types 1 and 2 according to an embodiment of the disclosure.

The UE may report UE capability to a base station (24-00). Here, the UE capability that may be reported may be UE capability that supports enhanced DMRS types 1 and 2 as described above, may be UE capability regarding whether each of methods mentioned in the embodiments is supported, may have individual UE capability for a PDSCH and a PUSCH, and may have integrated UE capability. Then, the UE may receive information on enhanced DMRS type 1 or 2 from the base station (24-01). Here, information on enhanced DMRS type 1 or 2 may be a notification (, which may be based on independent higher layer signaling, may be based on the above-described higher layer signaling for supporting enhanced DMRS types 1 and 2, may be activated or deactivated based on MAC-CE, or may be dynamically indicated through the PDCCH,) for the UE from the base station for each of the methods mentioned in the embodiments. Then, the UE may receive, from the base station, PDSCH or PUSCH scheduling information to which enhanced DMRS type 1 or 2 is applied (24-02). Here, the corresponding scheduling information may be indicated through DCI format 0_1 or 0_2 for the PUSCH and may be indicated through DCI format 1_1 or 1_2 for the PDSCH, and information indicated through the antenna port field in each DCI format may be based on one or a plurality of DMRS indication tables that may be defined through at least one combination of [DMRS port indication method 1] to [DMRS port indication method 6] above according to a method acquired in the above-described operation of receiving information on enhanced DMRS type 1 or 2. Based on the corresponding scheduling information, the UE may receive the PDSCH or transmit the PUSCH, to which enhanced DMRS type 1 or 2 is applied (24-03).

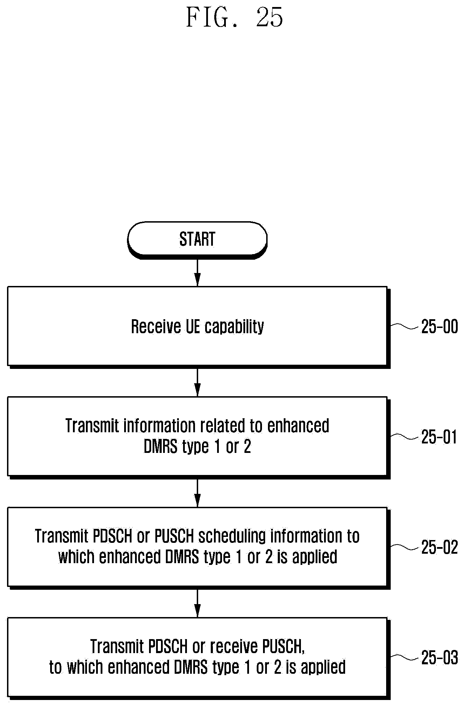

FIG. 25 illustrates a diagram of an operation of a base station for supporting enhanced DMRS types 1 and 2 according to an embodiment of the disclosure.

The base station may receive UE capability from a UE (25-00). Then, the base station may transmit information on enhanced DMRS type 1 or 2 to the UE (25-01). Here, information on enhanced DMRS type 1 or 2 may be a notification (, which may be based on independent higher layer signaling, may be based on the above-described higher layer signaling for supporting enhanced DMRS types 1 and 2, may be activated or deactivated based on MAC-CE, or may be dynamically indicated through the PDCCH) for the UE from the base station for each of the methods mentioned in the embodiments. Then, the base station may transmit, to the UE, PDSCH or PUSCH scheduling information to which enhanced DMRS type 1 or 2 is applied (25-02). Here, the corresponding scheduling information may be indicated through DCI format 0_1 or 0_2 for the PUSCH and may be indicated through DCI format 1_1 or 1_2 for the PDSCH, and information indicated through the antenna port field in each DCI format may be based on one or a plurality of DMRS indication tables that may be defined through at least one combination of [DMRS port indication method 1] to [DMRS port indication method 6] described above according to a method acquired in the above-described operation of receiving information on enhanced DMRS type 1 or 2. Based on the corresponding scheduling information, the base station may transmit the PDSCH or receive the PUSCH, to which enhanced DMRS type 1 or 2 is applied (25-03).

<(3-1)-th embodiment: Uplink data channel transmission method including five or more layers>

As an embodiment of the disclosure, the uplink data channel transmission method including five or more layers is described.

When transmitting an uplink data channel including five or more layers, one of a method of generating and transmitting a single codeword and a method of generating and transmitting two codewords may be configured for the UE from the base station through higher layer signaling, may be activated through a MAC-CE, may be dynamically indicated through L1 signaling, may be notified through combination of higher layer signaling and L1 signaling, or may be defined in the standard.

The UE may receive, from the base station, a notification to use DMRS type 1 or 2 described above or one of enhanced DMRS types 1 and 2 mentioned in the first embodiment to the third embodiment and may use the same for uplink data channel transmission including five or more layers. The corresponding notification method may be configured for the UE from the base station through higher layer signaling, may be activated through MAC-CE, may be dynamically indicated through L1 signaling, may be notified through combination of higher layer signaling and L1 signaling, or may be defined in the standard.

In the following description, a method of transmitting an uplink data channel including five or more layers using DMRS type 1 or 2 described above may be referred to as [Transmission method 3-1-1], and a method of transmitting an uplink data channel using one of enhanced DMRS types 1 and 2 mentioned in the first embodiment to the third embodiment may be referred to as [Transmission method 3-1-2].

The UE may dynamically switch to one of [Transmission method 3-1-1] and [Transmission method 3-1-2] through L1 signaling. Here, possible L1 signaling may include DCI, and switching between two methods may be indicated by defining a new field in corresponding DCI, may be indicated by configuring a different method between [Transmission method 3-1-1] and [Transmission method 3-1-2] in each entry of the TDRA field, or may be indicated through different entries by generating the antenna port field including all ports of Transmission method 3-1-1] and [Transmission method 3-1-2].

When the UE transmits the uplink data channel including five or more layers using [Transmission method 3-1-1], the number of front-loaded symbols may be configured to be 2.

When the UE transmits the uplink data channel including five or more layers using [Transmission method 3-1-2], the number of front-loaded symbols may be configured to be 1 or 2.

The UE may report UE capability for uplink data channel transmission including five or more layers to the base station. The UE capability reported by the UE may include at least one of the following items.

- When transmitting the uplink data channel including five or more layers, only [Transmission method 3-1-1] may be used.
- When transmitting the uplink data channel including five or more layers, [Transmission method 3-1-1] and [Transmission method 3-1-2] may be used.
- When transmitting the uplink data channel including five or more layers, a switching method between [Transmission method 3-1-1] and [Transmission method 3-1-2]

  - A switching method using higher layer signaling (RRC or MAC-CE)
  - A switching method using L1 signaling

Only when the UE capability for supporting enhanced DMRS type 1 or 2 mentioned in the first embodiment to the third embodiment described above is reported, the UE may report the UE capability.

Only when the UE capability for transmitting the uplink data channel including five or more is reported, the UE may report the UE capability.

Only when all of the UE capability for supporting enhanced DMRS type 1 or 2 mentioned in the first embodiment to the third embodiment described above and the UE capability for transmitting the uplink data channel including five or more are reported, the UE may report the UE capability.

<Fourth embodiment: sequence initialization method when simultaneously supporting enhanced DMRS types 1 and 2 and low peak-to-average power ratio (PAPR) DMRS>

As an embodiment of the disclosure, a DMRS sequence initialization method promised between the base station and the UE when simultaneously supporting enhanced DMRS types 1 and 2 and low PAPR DMRS is described.

To initialize a pseudo random sequence generator used for generating PDSCH DMRS sequence, the UE may use [Equation 7] below.

[Equation 7]

$$c_{init} = \left( 2^{17} \left( N_{symb}^{slot} n_{s,f}^{\mu} + l + 1 \right) \left( 2 N_{ID}^{\bar{n}_{SCID}^{\bar{\lambda}}} + 1 \right) + 2^{17} \left\lfloor \frac{\bar{\lambda}}{2} \right\rfloor + 2 N_{ID}^{\bar{n}_{SCID}^{\bar{\lambda}}} + \bar{n}_{SCID}^{\bar{\lambda}} \right) mod\, 2^{31}$$

Each parameter in Equation 7 may have the following meaning.

- $l$ denotes an OFDM symbol number in a slot, and $n_{s,f}^{\mu}$ denotes a slot number in a frame.

- $N_{ID}^0, N_{ID}^1 \in \{0, 1, ..., 65535\}$ : They may be values corresponding to higher layer signaling, scramblingID0 and scramblingID1, which are configured in higher layer signaling, DMRS-DownlinkConfig, respectively. The corresponding values may be used when the PDSCH is scheduled with DCI format 1_1 or 1_2, and, here, CRC of the PDCCH is scrambled with C-RNTI, MCS-C-RNTI, or CS-RNTI.

- $N_{ID}^0 \in \{0, 1, ..., 65535\}$ : It may be a value corresponding to higher layer signaling, scramblingID0, which is configured in higher layer signaling, DMRS-DownlinkConfig. The corresponding value may be used when the PDSCH is scheduled with DCI format 1_0, and, here, CRC of the PDCCH is scrambled with C-RNTI, MCS-C-RNTI, or CS-RNTI.

- $N_{ID}^0, N_{ID}^1 \in \{0, 1, ..., 65535\}$ : They may be values corresponding to higher layer signaling, scramblingID0 and scramblingID1, which are configured in higher layer signaling, DMRS-DownlinkConfig, within common multicast broadcast signal (MBS) frequency resources for multicast, respectively. The corresponding values may be used when the PDSCH is scheduled with DCI format 4_2, and, here, CRC of the PDCCH is scrambled with G-RNTI or G-CS-RNTI.

- $N_{ID}^0 \in \{0, 1, ..., 65535\}$ : It may be a value corresponding to higher layer signaling, scramblingID0, which is configured in higher layer signaling, DMRS-DownlinkConfig, within common MBS frequency resources for multicast. The corresponding value may be used when the PDSCH is scheduled with the PDCCH, and, here, CRC of the PDCCH is scrambled with G-RNTI, G-CS-RNTI, or MCCH-RNTI.

- If the above case does not apply, $N_{ID}^{\bar{n}_{SCID}^{\bar{\lambda}}}$ may be used as $N_{ID}^{cell}$ (cell ID).

- $\bar{n}_{SCID}^{\bar{\lambda}}$ and $\bar{\lambda}$ may be interpreted as follows.

  - If dmrs-Downlink is configured in higher layer signaling, DMRS-DownlinkConfig,

$$\bar{n}_{SCID}^{\bar{\lambda}} = \begin{cases} n_{SCID} & \lambda = 0 \ or \ \lambda = 2 \\ 1 - n_{SCID} & \lambda = 1 \end{cases},$$

$\bar{\lambda} = \lambda$ ($\lambda$ may indicate a CDM group number)
  - Otherwise,

$$\bar{n}_{SCID}^{\bar{\lambda}} = n_{SCID}, \bar{\lambda} = 0$$

- For $n_{SCID}$, a value of 0 or 1 may be indicated to the UE through the DMRS sequence initialization field that may be present in DCI that schedules the PDSCH. Here, DCI formats 1_1, 1_2, and 4_2 may be possible, otherwise, $n_{SCID}$=O.

To initialize a pseudo random sequence generator used for generating PUSCH DMRS sequence, the UE may use [Equation 8] below.

[Equation 8]

$$c_{init} = \left( 2^{17} \left( N_{symb}^{slot} n_{s,f}^{\mu} + l + 1 \right) \left( 2 N_{ID}^{\bar{n}_{SCID}^{\bar{\lambda}}} + 1 \right) + 2^{17} \left\lfloor \frac{\bar{\lambda}}{2} \right\rfloor + 2 N_{ID}^{\bar{n}_{SCID}^{\bar{\lambda}}} + \bar{n}_{SCID}^{\bar{\lambda}} \right) mod 2^{31}$$

Each parameter in Equation 8 may have the following meaning.

- $l$ denotes an OFDM symbol number in a slot, and $n_{s,f}^{\mu}$ denotes a slot number in a frame.

- $N_{ID}^0, N_{ID}^1 \in \{0, 1, ..., 65535\}$ : They may be values corresponding to higher layer signaling, scramblingID0 and scramblingID1, which are configured in higher layer signaling, DMRS-UplinkConfig, respectively. The corresponding values may be used when the PUSCH is scheduled with DCI format 0_1 or 0_2, or transmitted based on configuration grant.

- $N_{ID}^0 \in \{0, 1, ..., 65535\}$ : It may be a value corresponding to higher layer signaling, scramblingID0, which is configured in higher layer signaling, DMRS-UplinkConfig. The corresponding value may be used when the PUSCH is scheduled with DCI format 0_0, and, here, CRC of the PDCCH is scrambled with C-RNTI, MCS-C-RNTI, or CS-RNTI.

- $N_{ID}^0, N_{ID}^1 \in \{0, 1, ..., 65535\}$ : They may be values corresponding to msgA-ScramblingID0 and msgA-ScramblingID1, which are configured in higher layer signaling, msgA-DMRS-Config, for each msgA PUSCH configuration, respectively. The corresponding values may be used when the PUSCH is triggered through a type 2 random access process.

- If the above case does not apply, $N_{ID}^{\bar{n}_{SCID}^{\bar{\lambda}}}$ may be used as a value of $N_{ID}^{cell}$ (cell ID).

- $\bar{n}_{SCID}^{\bar{\lambda}}$ and λ may be interpreted as follows.

  - If dmrs-Uplink is configured in higher layer signaling, DMRS-UplinkConfig,

$$\bar{n}_{SCID}^{\bar{\lambda}} = \begin{cases} n_{SCID} & \lambda = 0 \ or \ \lambda = 2 \\ 1 - n_{SCID} & \lambda = 1 \end{cases},$$

$\bar{\lambda} = \lambda$ (λ may indicate a CDM group number)
  - Otherwise,

$$\bar{n}_{SCID}^{\bar{\lambda}} = n_{SCID}, \bar{\lambda} = 0$$

  - $n_{SCID}$ may be indicated, configured, or determined as follows.

    - A value of 0 or 1 may be indicated through the DMRS sequence initialization field that may be present in DCI that schedules the PUSCH and here, DCI formats 0_1 and 0_2 may be possible.
    - When the PUSCH is transmitted through configuration grant type 1, it may be configured through higher layer signaling, dmrs-SeqInitialization.
    - When the PUSCH is transmitted through a type 2 random access process, it may be determined through mapping between connected DMRS resources and preamble and PUSCH transmission locations.
    - When RRC configuration grant-based PUSCH is transmitted in an RRC inactive state, it may be determined through mapping between connected DMRS resources and SSB and PUSCH transmission locations.
    - If the above case does not apply, it is $n_{SCID}$.

If the UE supports the above-described enhanced DMRS type 1 or 2 (e.g., method based on at least one combination among [Enhanced DMRS type 1 supporting method 1] to [Enhanced DMRS type 1 supporting method 6] or [Enhanced DMRS type 2 supporting method 1] to [Enhanced DMRS type 2 supporting method 4] described above), that is, when the UE is notified of information for supporting enhanced DMRS type 1 or 2 from the base station based on higher layer signaling or L1 signaling, whether enhanced DMRS type 1 or 2 and low PAPR DMRS sequence may be simultaneously used may be reported to the base station as UE capability. The corresponding UE capability may be reported as independent UE capability for each of the PDSCH and the PUSCH, and may be reported as one UE capability integrated for PDSCH and PUSCH support.

For the low PAPR DMRS sequence that may be simultaneously used with enhanced DMRS type 1 or 2, the UE may be configured through independent higher layer signaling, through higher layer signaling for supporting enhanced DMRS types 1 and 2 described above, or through at least one combination of independent higher layer signaling for [Consideration 1-1] to [Consideration 1-7] or [Consideration 2-1] to [Consideration 2-7] described above, may be activated or inactivated based on MAC-CE, or may dynamically receive indication through the PDCCH. As another method, if the UE supports enhanced DMRS type 1 or 2, (e.g., method based on at least one combination of [Enhanced DMRS type 1 supporting method 1] to [Enhanced DMRS type 1 supporting method 6] or [Enhanced DMRS type 2 supporting method 1] to [Enhanced DMRS type 2 supporting method 4] described above), that is, when the UE is notified of information for supporting enhanced DMRS type 1 or 2 from the base station based on higher layer signaling or L1 signaling, the UE may need to assume that the low PAPR DMRS sequence is available. As another method, if the UE supports enhanced DMRS type 1 or 2, (e.g., method based on at least one combination of [Enhanced DMRS type 1 supporting method 1] to [Enhanced DMRS type 1 supporting method 6] or [Enhanced DMRS type 2 supporting method 1] to [Enhanced DMRS type 2 supporting method 4] described above), that is, when the UE is notified of information for supporting enhanced DMRS type 1 or 2 from the base station based on higher layer signaling or L1 signaling, the UE may need to assume that the low PAPR DMRS sequence is unavailable.

If the UE supports enhanced DMRS type 1 or 2, (e.g., method based on at least one combination of [Enhanced DMRS type 1 supporting method 1] to [Enhanced DMRS type 1 supporting method 6] or [Enhanced DMRS type 2 supporting method 1] to [Enhanced DMRS type 2 supporting method 4] described above), that is, when the UE is notified of information for supporting enhanced DMRS type 1 or 2 from the base station based on higher layer signaling or L1 signaling, $\bar{n}_{SCID}^{\bar{\lambda}}$ and $\bar{\lambda}$ may be interpreted as follows.

$$\bar{n}_{SCID}^{\bar{\lambda}} = \begin{cases} n_{SCID} & \lambda = 0 \ or \ \lambda = 2 \ or \ \lambda = 4 \\ 1 - n_{SCID} & \lambda = 1 \ or \ \lambda = 3 \ or \ \lambda = 5 \end{cases}, \ \bar{\lambda} = \lambda \ (\lambda \ \text{denotes a CDM group number})$$

As another method, $\bar{n}_{SCID}^{\bar{\lambda}}$ and $\bar{\lambda}$ may be interpreted as follows.

$$\bar{n}_{SCID}^{\bar{\lambda}} = \begin{cases} n_{SCID} & mod(\lambda, 2) = 0 \\ 1 - n_{SCID} & otherwise \end{cases}, \ \bar{\lambda} = \lambda \ (\lambda \ \text{denotes a CDM group number})$$

<Fifth embodiment: frequency resource allocation constraint method for enhanced DMRS types 1 and 2>

As an embodiment of the disclosure, the frequency resource allocation constraint method for enhanced DMRS types 1 and 2 mentioned in the above-described first embodiment to fourth embodiment is described.

With respect to enhanced DMRS types 1 and 2 mentioned in the above-described first embodiment to fourth embodiment, if the base station schedules the PUSCH to the UE with DCI, and information indicating enhanced DMRS types 1 and 2 is included in the corresponding DCI, the UE may expect that the number of frequency resources indicated through the frequency resource allocation information field included in the DCI is the even number of RBs or the odd number of RBs.

With respect to enhanced DMRS types 1 and 2 mentioned in the above-described first embodiment to fourth embodiment, if the base station schedules the PDSCH to the UE with DCI and information indicating enhanced DMRS types 1 and 2 is included in the corresponding DCI, the UE may report information on constraint on the number of frequency resources of the PDSCH indicated with the DCI as UE capability, and the base station may indicate the number of frequency resources to the UE through the frequency resource allocation field in the DCI according to this UE capability report. The UE capability may include at least one piece of the following information.

- Constraint on the number of RBs that the UE may receive: Only even numbers may be supported, or there is no constraint (both even and odd numbers are possible).

    ■ If only even numbers may be supported as the number of RBs that the UE may receive, and, here, if FD-OCC with the length of 4 is supported through enhanced DMRS types 1 and 2 mentioned in the above-described first embodiment and fourth embodiment, the UE does not expect to apply the FD-OCC with the length of 4 across different precoding resource block groups (PRGs). That is, in a corresponding situation, the UE may expect to apply the FD-OCC with the length of 4 only in a PRG.
    ■ If there is no constraint on the number of RBs that the UE may receive, the UE may perform channel estimation by applying the FD-OCC with the length of 4 to various combinations of four consecutive DMRS REs in one RB. For example, in the case of enhanced DMRS type 1, DMRS REs may be present at locations of REs 0, 2, 4, 6, 8, and 10 in a specific RB. Here, the UE may perform channel estimation by applying the FD-OCC with the length of 4 to REs 0, 2, 4, and 6, and may perform channel estimation by applying the FD-OCC with the length of 4 to REs 4, 6, 8, and 10.

■ If there is no constraint on the number of RBs that the UE may receive, the UE may perform channel estimation by applying the FD-OCC with the length of 4 using four consecutive DMRS REs in a single RB and may perform channel estimation by applying the FD-OCC with the length of 2 using remaining two DMRS REs. For example, in the case of enhanced DMRS type 1, DMRS REs may be present at locations of REs 0, 2, 4, 6, 8, and 10 in a specific RB. Here, the UE may perform channel estimation by applying four FD-OCCs with the length of 4 to REs 0, 2, 4, and 6, and may perform channel estimation by applying four FD-OCCs with the length of 2 to REs 8 and 10.

- Frequency resource allocation constraint: The UE may expect to receive only frequency resource allocation information of the PDSCH including the even number of RBs through DCI.
- Location constraint of a start point of PDSCH frequency resources in a bandwidth part when performing frequency resource allocation: When receiving frequency resource allocation information of the PDSCH including the even number of RBs through DCI, the UE may expect that a location of the start point of PDSCH frequency resources in the bandwidth part is spaced apart by the even number of RBs away from point A. Here, point A may indicate the center of a first subcarrier of common RB 0.

If the UE reports the above-described UE capability to the base station and frequency resource allocation for the PDSCH is constrained, the UE may expect to be scheduled together with UEs having reported the above-described UE capability among other UEs during MU-MIMO scheduling from the base station. Also, if the UE reports the above-described UE capability, the UE may expect to be scheduled together only when the even number of PDSCH frequency resources are allocated, a start point of PDSCH frequency resources is spaced apart by the even number of RBs away from point A, and they have the same PRG size among other UEs of previous release during MU-MIMO scheduling from the base station.

The above-described UE capability related to constraint on frequency resource allocation for the PDSCH may be reported as separate UE capability by the UE only when UE capability that supports enhanced DMRS types 1 and 2 mentioned in the first embodiment to the fourth embodiment is reported. Alternatively, the above-described UE capability may be included in the UE capability that supports enhanced DMRS types 1 and 2 mentioned in the first embodiment to the fourth embodiment.

If the UE did not report the above-described UE capability to the base station, the base station may not configure corresponding higher layer signaling in the UE and the base station may perform scheduling such that when receiving a PDSCH, the UE may receive only a PDSCH including the even number of RBs. If the UE reports the above-described UE capability to the base station and frequency resource allocation for a PDSCH is constrained, the UE may expect to receive only a PDSCH including the even number of RBs or may expect to receive a PDSCH including the even number or the odd number of RBs depending on whether corresponding higher layer signaling is configured. For example, if higher layer signaling is configured, the UE may expect to receive only the PDSCH including the even number of RBs, and if higher layer signaling is not configured, the UE may expect to receive the PDSCH including the even number or the odd number of RBs (i.e., may expect to receive the PDSCH without constraint on the number of RBs). If higher layer signaling is configured, the UE may expect to receive scheduling for a PDSCH including two or four PRGs from the base station according to PRG configuration or indication when the base station schedules the PDSCH. That is, when receiving the PDSCH, the UE may expect that a PRG with a size less than 2 or 4 present at the end of a bandwidth part is not included in the corresponding PDSCH although a PRG size is 2 or 4 according to PRG configuration or indication.

If the UE reports the above-described UE capability to the base station and frequency resource allocation for the PDSCH is constrained, the base station may configure corresponding higher layer signaling in the UE. If the UE receives the PDSCH through the corresponding higher layer signaling, the base station may perform scheduling such that the UE may expect the even number or an unlimited number of RBs of the PDSCH when the UE receives the PDSCH. When the UE reports the above-described UE capability to the base station and frequency resource allocation for the PDSCH is constrained, the UE may expect to receive configuration for higher layer signaling from the base station and the corresponding higher layer signaling may express that PDSCH scheduling without constraint on the number of RBs or may express that only PDSCH scheduling including the even number of RBs is possible. If higher layer signaling is not configured, it may indicate that PDSCH scheduling without constraint on the number of RBs is possible. If higher layer signaling is configured and a configuration value expresses that only PDSCH scheduling including the even number of RBs is possible, the UE may expect to receive scheduling for a PDSCH including two or four PRGs from the base station according to PRG configuration or indication when the base station schedules the PDSCH. That is, when receiving the PDSCH, the UE may expect that a PRG with a size less than 2 or 4 present at the end of a bandwidth part is not included in the corresponding PDSCH although a PRG size is 2 or 4 according to PRG configuration or indication.

If the UE reports the above-described UE capability to the base station and the corresponding UE capability implies that there is no constraint on the frequency resource allocation, the UE receive constraint-free frequency resource allocation information from the base station during PDSCH scheduling.

If the UE reports the above-described UE capability to the base station and the corresponding UE capability implies that there is no constraint on the frequency resource allocation, the UE may receive configuration of higher layer signaling from the base station. Here, the corresponding higher layer signaling may indicate that there is no constraint on the frequency resource allocation and the UE may receive constraint-free frequency resource allocation information from the base station during PDSCH scheduling.

The above-described fifth embodiment may be similarly applied to PUSCH transmission to which enhanced DMRS types 1 and 2 mentioned in the above-described first embodiment to fourth embodiment are applied.

<(5-1)-th embodiment: additional frequency resource allocation constraint method for enhanced DMRS types 1 and 2>

As an embodiment of the disclosure, the additional frequency resource allocation constraint method for enhanced DMRS types 1 and 2 mentioned in the above-described first embodiment to fourth embodiment is described. Corresponding embodiment may be used for frequency resource allocation constraint when the base station schedules the PDSCH or the PUSCH for the UE in consideration with the above-described fifth embodiment.

When the UE supports enhanced DMRS types 1 and 2 mentioned in the above-described first embodiment to fourth embodiment, if there is no frequency resource allocation constraint, the following problems may arise.

- [Problem 1 with frequency resource allocation] When the UE receives scheduling for PDSCH reception or PUSCH transmission from the base station, if there is no frequency resource allocation constraint in corresponding scheduling information, a case in which a total number of DMRS REs used in each OFDM symbol through which a DMRS is transmitted is not a multiple of 4 during PDSCH and PUSCH scheduling may occur when the UE supports enhanced DMRS types 1 and 2 mentioned in the above-described first embodiment to fourth embodiment. In the case of using FD-OCC with the length of 4 in enhanced DMRS types 1 and 2 mentioned in the above-described first embodiment to fourth embodiment (e.g., [Enhanced DMRS type 1 supporting method 6] or [Enhanced DMRS type 2 supporting method 3] above), the FD-OCC with the length of 4 is used for four adjacent DMRS REs. Therefore, if there is a case in which a total number of DMRS REs used in each OFDM symbol through which DMRS is transmitted is not a multiple of 4, four adjacent DMRS REs to which the FD-OCC with the length of 4 is to be applied may be absent. For example, if the UE receives scheduling for the odd number of PRBs as frequency resource allocation, a total number of DMRS REs used in each OFDM symbol through which DMRS is transmitted may be an even number rather than a multiple of 4. In this case, if the FD-OCC is applied using adjacent DMRS REs four by four, two DMRS REs may ultimately remain and the FD-OCC with the length of 4 may not be applied to these DMRS REs.
- [Problem 2 with frequency resource allocation] Also, when the UE receives scheduling for PDSCH reception or PUSCH transmission from the base station, if there is no frequency resource allocation constraint in corresponding scheduling information, a case in which a total number of DMRS REs used in each OFDM symbol through which a difference in the number of RBs between a location of a start PRB and CRBO in consideration of the location of the start PRB and the location of CRBO during PDSCH and PUSCH scheduling may occur when the UE supports enhanced DMRS types 1 and 2 mentioned in the above-described first embodiment to fourth embodiment. In the case of using FD-OCC with the length of 4 in enhanced DMRS types 1 and 2 mentioned in the above-described first embodiment to fourth embodiment (e.g., [Enhanced DMRS type 1 supporting method 6] or [Enhanced DMRS type 2 supporting method 3] above), the FD-OCC with the length of 4 may be used for four adjacent DMRS REs. Here, DMRS sequence is mapped based on CRBO, and thus when the PDSCH and the PUSCH with offset equal to the even number of RBs based on CRBO are scheduled, the FD-OCC with the length of 4 may be used for first four DMRSs based on a low subcarrier of start PRB of the PDSCH and the PUSCH. That is, the FD-OCC with the length of 4 may be applied from a first DMRS RE of the start PRB. However, when the PDSCH and the PUSCH with offset equal to the odd number of RBs based on CRBO are scheduled, the FD-OCC with the length of 4 may not be applied from the first DMRS RE of start PRB of corresponding PDSCH and PUSCH and the FD-OCC with the length of 4 may be applied from a third DMRS RE of the start PRB. Therefore, there is a problem in that the FD-OCC with the length of 4 may not be applied to first two DMRS REs of the start PRB.

A problematic situation including at least one of [Problem 1 with frequency resource allocation] and [Problem 2 with frequency resource allocation] described above may be referred to as [Orphan RE problem]. When describing [Orphan RE problem] in the following, it may represent a case of including at least one of the above-described problems and solving [Orphan RE problem] may represent solving at least one of the above-described problems.

The UE may report, to the base station, UE capability indicating that frequency resource allocation constraint is not required from the base station during PDSCH reception or PUSCH transmission. That is, the UE may report, to the base station, the UE capability indicating that [Orphan RE problem] may be solved. The base station that receives the corresponding UE capability may schedule the PDSCH and the PUSCH for the corresponding UE without constraint on frequency resource allocation. Here, the constraint-free frequency resource allocation may imply that at least one of [Problem 1 with frequency resource allocation] and [Problem 2 with frequency resource allocation] described above is not considered. For example, the UE may expect to receive scheduling for the odd number of RBs from the base station during PDSCH and PUSCH scheduling or that the start PRB has the odd number of RB offsets from CRBO.

The UE may not report, to the base station, UE capability indicating that frequency resource allocation constraint is not required from the base station during PDSCH reception or PUSCH transmission. In this case, the UE may imply a UE incapable of solving [Orphan RE problem]. Here, the UE may require constraint on frequency resource allocation during PDSCH and PUSCH scheduling from the base station. Here, the constraint on frequency resource allocation may include constraint capable of solving [Problem 1 with frequency resource allocation] and [Problem 2 with frequency resource allocation] described above and may include at least one of constraints described below.

- [Frequency resource allocation constraint 1] The UE may receive scheduling for the even number of consecutive PRBs from the base station as frequency resource allocation information during PDSCH and PUSCH scheduling.

  - In the case of frequency resource allocation scheme 0, the UE may expect to receive indication of a bitmap to which consecutive 1s are allocated from the base station. Here, a value of each 1 in the bitmap may indicate each RBG (RB group) and the UE may expect that all RBGs to which consecutive 1s are allocated have the even number of RBs. For example, if the UE has four RBs as an RBG size in a bandwidth part and a size of a first or last RBG is an odd number (e.g., 1 or 3) less than 4, the UE may expect that the first or last RBG is excluded from the bitmap to which consecutive 1s are allocated. Since sizes of all RBGs are configured with the even number of RBs except for the first or last RBG (e.g., 2, 4, 8, or 16 RBs), the number of consecutive 1s in the bitmap may be the even number or the odd number.
  - In the case of frequency resource allocation scheme 1, the UE may expect to receive scheduling of the even number of consecutive RBs from the base station.

- [Frequency resource allocation constraint 2] The UE may receive scheduling for the even number of consecutive or inconsecutive PRBs as frequency resource allocation information during PDSCH and PUSCH scheduling from the base station.

  - In the case of frequency resource allocation scheme 0, the UE may expect to receive indication of a bitmap to which consecutive or inconsecutive 1s are allocated from the base station. Here, a value of each 1 in the bitmap may indicate each RBG (RB group) and the UE may expect that all RBGs to which consecutive 1s are allocated have the even number of RBs. For example, if the UE has four RBs as an RBG size in a bandwidth part and a size of a first or last RBG is an odd number (e.g., 1 or 3) less than 4, the UE may expect that the first or last RBG is excluded from the bitmap to which consecutive 1s are allocated. Since sizes of all RBGs are configured with the even number of RBs except for the first or last RBG (e.g., 2, 4, 8, or 16 RBs), the number of consecutive 1s in the bitmap may be the even number or the odd number.
  - In the case of frequency resource allocation scheme 1, the UE may expect to receive scheduling of the even number of consecutive RBs from the base station.

- [Frequency resource allocation constraint 3] The UE may expect that a start PRB has the even number of RB offsets from CRBO as frequency resource allocation information during PDSCH and PUSCH scheduling from the base station.
- [Frequency resource allocation constraint 4] The UE may not expect to apply FD-OCC with the length of 4 across different PRGs. That is, in a corresponding situation, the UE may expect to apply the FD-OCC with the length of 4 only in a PRG.
- [Frequency resource allocation constraint 5] When a size of a PRG is two PRBs, four PRBs, or a wideband, the UE may expect that at least one of [Frequency resource allocation constraint 1] to [Frequency resource allocation constraint 3] described above is applied even to frequency resource allocation even during PDSCH or PUSCH scheduling of another UE scheduled (i.e., co-scheduled) with the corresponding UE through MU-MIMO.
- [Frequency resource allocation constraint 6] If the UE satisfies at least one of the following conditions, the UE may perform an operation after "→" below:

  - In a case in which higher layer signaling, repetitionScheme, is configured for the UE as fdmSchemeA or fdmSchemeB from the base station;
  - In a case in which the TCI state field in DCI received by the UE from the base station indicates a codepoint that indicates two TCI states;
  - In a case in which a DMRS port indicated to the UE through the antenna port field in the DCI received from the base station is present in a single CDM group;

- In a case in which the UE is notified of enhanced DMRS types 1 and 2 mentioned in the above-described first embodiment to fourth embodiment through combination of higher layer signaling and L1 signaling from the base station; and
  - In a case in which the size of the PRG of the UE is a wideband;

→ During PDSCH and PUSCH scheduling, the UE may be allocated the even number of consecutive PRBs that is a multiple of 4 using frequency resource allocation scheme 1, or may be allocated the even number of consecutive or inconsecutive PRBs that is a multiple of 4 using frequency resource allocation scheme 0.

- [Frequency resource allocation constraint 7] If the UE satisfies at least one of the following conditions, the UE may perform an operation after "→" below:

  - In a case in which higher layer signaling, repetitionScheme, is configured for the UE as fdmSchemeA or fdmSchemeB;
  - In a case in which the TCI state field in DCI received by the UE from the base station indicates a codepoint that indicates two TCI states;
  - In a case in which a DMRS port indicated to the UE through the antenna port field in the DCI received from the base station is present in a single CDM group;
  - In a case in which the UE is notified of enhanced DMRS types 1 and 2 mentioned in the above-described first embodiment to fourth embodiment through combination of higher layer signaling and L1 signaling from the base station; and
  - In a case in which the size of the PRG of the UE is 2 PRBs or 4 PRBs;

→ During PDSCH and PUSCH scheduling, the UE may be allocated the even number of consecutive PRBs that is a multiple of a value corresponding to double of the PRG size (i.e., multiple of 4 if PRG size =2 PRBs and multiple of 8 if PRG size=4 PRBs) using frequency resource allocation scheme 1 or may be allocated the even number of consecutive or inconsecutive PRBs that is a multiple of a value corresponding to double of the PRG (i.e., multiple of 4 if PRG size =2 PRBs and multiple of 8 if PRG size=4 PRBs) using frequency resource allocation scheme 0.

<6-th embodiment: PTRS transmission resource determination method>

As an embodiment of the disclosure, a PTRS transmission resource determination method in the case of using enhanced DMRS types 1 and 2 mentioned in the above-described first embodiment to fourth embodiment or using [Transmission method 3-1-1] or [Transmission method 3-1-2] above for DMRS when transmitting an uplink data channel including at least five layers mentioned in the (3-1)-th embodiment is described.

When determining PTRS transmission resources, the UE may number allocated RBs in ascending order from a low RB location, for PDSCH reception or PUSCH transmission. Similarly, the UE may number subcarriers in allocated RBs in ascending order from #0, a lowest subcarrier location, for PDSCH reception or PUSCH transmission. Here, the UE may determine a subcarrier through which a PTRS is transmitted through [Equation 9] below.

[Equation 9]

$$k = k_{\text{ref}}^{\text{RE}} + \left(iK_{\text{PT-RS}} + k_{\text{ref}}^{\text{RE}}\right)N_{\text{sc}}^{\text{RB}}$$

$$k_{\text{ref}}^{\text{RE}} = \begin{cases} n_{\text{RNTI}} \bmod K_{\text{PT-RS}} & \text{if } N_{\text{RB}} \bmod K_{\text{PT-RS}} = 0 \\ n_{\text{RNTI}} \bmod (N_{\text{RB}} \bmod K_{\text{PT-RS}}) & \text{otherwise} \end{cases}$$

In [Equation 9] above,

- i denotes an integer of 0 or more (i=0, 1, 2, ...)

- For a case in which the PDSCH is scheduled for the UE, $k_{ref}^{RE}$ may be determined as follows.

  - If resourceElementOffset is configured for the UE in higher layer signaling, PTRS-DownlinkConfig, a value of $k_{ref}^{RE}$ may be identified according to a corresponding resourceElementOffset value in [Table 34] or [Table 35] below. If resourceElementOffset is not configured for the UE in higher layer signaling, PTRS-DownlinkConfig, the

**153**

UE may use a value of $k_{ref}^{RE}$ corresponding to 'offset00' in [Table 34] or [Table 35] below.

- If the PUSCH is scheduled for the UE, $k_{ref}^{RE}$ may be determined as follows.

  ■ If resourceElementOffset is configured for the UE in higher layer signaling, PTRS-UplinkConfig, a value of $k_{ref}^{RE}$ may be identified according to a corresponding resourceElementOffset value in [Table 34] or [Table 35] below. If resourceElementOffset is not configured for the UE in higher layer signaling, PTRS-UplinkConfig, the UE may use a value of $k_{ref}^{RE}$ corresponding to 'offset00' in [Table 34] or [Table 35] below.

- $n_{RNTI}$ may be as follows.

  ■ When the PUSCH is dynamically scheduled for the UE through DCI, $n_{RNTI}$ may be C-RNTI, CS-RNTI, MCS-C-RNTI, or SP-CSI-RNTI.
  ■ When activation for grant type 2 PUSCH is scheduled for the UE or grant type 1 PUSCH is configured for the UE through DCI, $n_{RNTI}$ may be CS-RNTI.
  ■ When the PDSCH is scheduled for the UE through DCI, $n_{RNTI}$ may be an RNTI of the corresponding DCI

- $N_{RB}$ may be the number of scheduled RBs.
- $K_{RT-RS}$ may be a value of 2 or 4.
- For [Table 34] or [Table 35] below, the PDSCH may use a DMRS antenna port number as a value acquired by adding 1000 to a value of a DMRS antenna port shown in a first column and the PUSCH may use the value of the DMRS antenna port shown in the first column as is as the DMRS antenna port number.

For DMRS antenna ports 4 to 7 of DMRS type 1 and DMRS antenna ports 6 to 9 of DMRS type 2 in [Table 35] below, other values may be used without being limited to values below. For example, for DMRS antenna ports 4 and 5 of DMRS type 1, offset00, offset01, offset10, and offset11 may be shift values for 0,2,6, and 8, respectively, or shift values for 2, 4, 8, and 10, respectively. Similarly thereto, for DMRS antenna ports 6 and 7 of DMRS type 1, offset00, offset01, offset10, and offset11 may be shift values for 1, 3, 7, and 9, respectively, or shift values for 3,5,9, and 11, respectively. As another example, for DMRS antenna ports 4 and 5 of DMRS type 1, offset00, offset01, offset10, and offset11 may be shift values for four values selected from among 0,2,4,6,8, and 10, respectively. A similar example may also be applied to DMRS type 2.

[Table 34]

| DMRS antenna port | $k_{\mathrm{ref}}^{\mathrm{RE}}$ | | | | | | | |
|---|---|---|---|---|---|---|---|---|
| | DMRS configuration type 1 | | | | DMRS configuration type 2 | | | |
| | resourceElementOffset | | | | resourceElementOffset | | | |
| | Offset00 | Offset01 | Offset10 | Offset11 | Offset00 | Offset01 | Offset10 | Offset11 |
| 0 | 0 | 2 | 6 | 8 | 0 | 1 | 6 | 7 |
| 1 | 2 | 4 | 8 | 10 | 1 | 6 | 7 | 0 |
| 2 | 1 | 3 | 7 | 9 | 2 | 3 | 8 | 9 |
| 3 | 3 | 5 | 9 | 11 | 3 | 8 | 9 | 2 |
| 4 | | | | | 4 | 5 | 10 | 11 |
| 5 | | | | | 5 | 10 | 11 | 4 |

[Table 35]

| DMRS antenna port | $k_{\mathrm{ref}}^{\mathrm{RE}}$ | | | | | | | |
|---|---|---|---|---|---|---|---|---|
| | DMRS configuration type 1 | | | | DMRS configuration type 2 | | | |
| | resourceElementOffset | | | | resourceElementOffset | | | |
| | Offset00 | Offset01 | Offset10 | Offset11 | Offset00 | Offset01 | Offset10 | Offset11 |
| 0 | 0 | 2 | 6 | 8 | 0 | 1 | 6 | 7 |
| 1 | 2 | 4 | 8 | 10 | 1 | 6 | 7 | 0 |
| 2 | 1 | 3 | 7 | 9 | 2 | 3 | 8 | 9 |
| 3 | 3 | 5 | 9 | 11 | 3 | 8 | 9 | 2 |
| 4 | 6 | 8 | 0 | 2 | 4 | 5 | 10 | 11 |
| 5 | 8 | 10 | 2 | 4 | 5 | 10 | 11 | 4 |
| 6 | 7 | 9 | 1 | 3 | 6 | 7 | 0 | 1 |
| 7 | 9 | 11 | 3 | 5 | 7 | 0 | 1 | 6 |
| 8 | | | | | 8 | 9 | 2 | 3 |
| 9 | | | | | 9 | 2 | 3 | 8 |

If the PDSCH or the PUSCH is scheduled for the UE through DCI, in the case of using enhanced DMRS types 1 and 2 mentioned in the above-described first embodiment to fourth embodiment or using [Transmission method 3-1-1] or [Transmission method 3-1-2] above for DMRS when transmitting an uplink data channel including at least five layers mentioned in the (3-1)-th embodiment, the UE may expect or assume that at least one condition of the following items and a situation in which the UE transmits or receives PT-RS does not simultaneously occur:

- A case in which, when the UE receives the PDSCH, the UE is allocated 1004 to 1015 for enhanced DMRS type 1 and allocated 1006 to 1023 for enhanced DMRS type 2 and the corresponding UE and another UE operating in MU-MIMO share a DMRS RE of the same CDM group allocated to the corresponding UE; and
- A case in which, when the UE transmits the PUSCH, the UE is allocated 1004 to 1015 for enhanced DMRS type 1 and allocated 1006 to 1023 for enhanced DMRS type 2 and the corresponding UE and another UE operating in MU-MIMO share a DMRS RE of the same CDM group allocated to the corresponding UE.

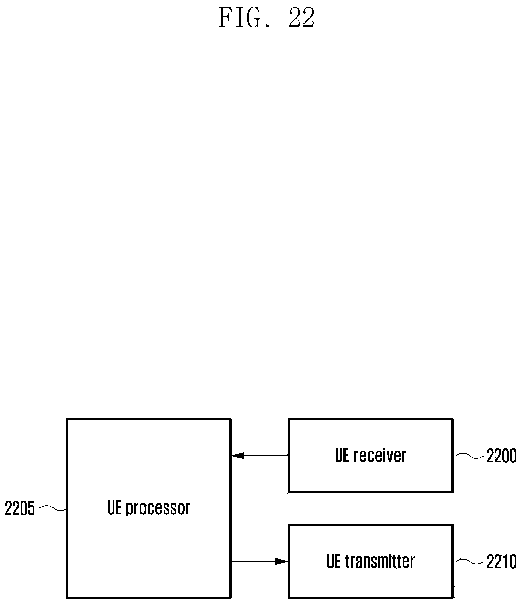

FIG. 22 illustrates a structure of a UE in a wireless communication system, according to an embodiment of the disclosure.

Referring to FIG. 22, the UE may include a transceiver including a UE receiver 2200 and a UE transmitter 2210, a memory (not shown), and a UE processor 2205 (or UE controller or processor). The transceiver (2200, 2210), the memory, and the UE processor 2205 of the UE may operate according to the above-described communication method of the UE. However, elements of the UE are not limited to the above-described example. For example, the UE may include more or fewer elements than the above elements. Also, the transceiver, the memory, and the processor may be implemented in the form of a single chip.

The transceiver may transmit and receive a signal to and from a base station. The signal may include control information and data. To this end, the transceiver may include a radio frequency (RF) transmitter configured to up-convert and amplify a frequency of a transmitted signal and an RF receiver configured to low-noise amplify a received signal and down-convert a frequency. However, this is only an example of the transceiver, and elements of the transceiver are not limited to the RF transmitter and the RF receiver.

Also, the transceiver may receive a signal through a radio channel, output the signal to the processor, and transmit the signal output from the processor through the radio channel.

The memory may store a program and data required for an operation of the UE. Also, the memory may store control information or data included in a signal transmitted and received by the UE. The memory may be configured by storage media, such as a read only memory (ROM), a random access memory (RAM), a hard disc, a compact disc (CD)-ROM, and a digital versatile disc (DVD), or a combination of the storage media. The number of memories may be plural.

Also, the processor may control a series of processes such that the UE may operate according to the above embodiments. For example, the processor may control elements of the UE to receive DCI including two layers and simultaneously receive a plurality of PDSCHs. The number of processors may be plural, and the processor may perform an operation of controlling the elements of the UE by executing the program stored in the memory.

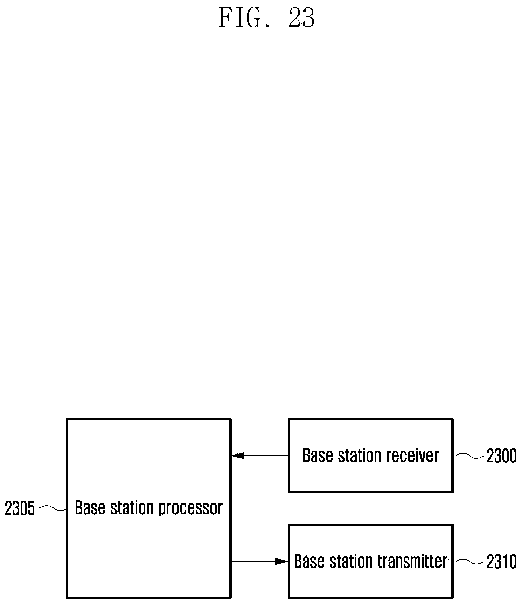

FIG. 23 illustrates a structure of a base station in a wireless communication system, according to an embodiment of the disclosure.

Referring to FIG. 23, the base station may include a transceiver including a base station receiver 2300 and a base station transmitter 2310, a memory, and a base station processor 2305 (or base station controller or processor). The transceiver (2300, 2310), the memory, and the base station processor 2305 of the base station may operate according to the above-described communication method of the base station. However, elements of the base station are not limited to the above example. For example, the base station may include more or fewer elements than the above-described elements. Also, the transceiver, the memory, and the processor may be implemented in the form of a single chip.

The transceiver may transmit and receive a signal to/from a UE. The signal may include control information and data. To this end, the transceiver may include an RF transmitter configured to up-convert and amplify a frequency of a transmitted signal and an RF receiver configured low-noise amplify a received signal and down-convert a frequency. However, this is only an example of the transmitter, and elements of the transceiver are not limited to the RF transmitter and the RF receiver.

Also, the transceiver may receive a signal through a radio channel, output the signal to the processor, and transmit the signal output from the processor through the radio channel.

The memory may store a program and data required for an operation of the base station. Also, the memory may store control information or data included in a signal transmitted and received by the base station. The memory may be configured by storage media such as a ROM, a RAM, a hard disc, a CD-ROM, and a DVD, or a combination of the storage media. The number of memories may be plural.

The processor may control a series of processes such that the base station may operate according to the embodiments of the disclosure. For example, the processor may control each element of the base station to configure and transmit pieces of DCI for two types of layers including allocation information on a plurality of PDSCHs. The number of processors may be plural, and the processor may perform an operation of controlling the elements of the base station by executing the program stored in the memory.

The methods according to various embodiments described in the claims or the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within an electronic device. The at least one program may include instructions that cause the electronic device to perform the methods according to embodiments as defined by the claims or specification of the disclosure.

The programs (software modules or software) may be stored in non-volatile memories including a RAM and a flash memory, a ROM, an electrically erasable programmable read only memory (EEPROM), a magnetic disc storage device, a CD-ROM, DVDs, other type optical storage devices, or a magnetic cassette. Alternatively, the programs may be stored in a memory configured with any combination of some or all of the memory devices. Also, a plurality of such configuration memories may be included.

Also, the programs may be stored in an attachable storage device accessible through communication networks, such as the Internet, Intranet, a local area network (LAN), a wide LAN (WLAN), and a storage area network (SAN) or a combination thereof. Such a storage device may access a device performing the embodiments of the disclosure via an external port. Also, a separate storage device on the communication network may access the device performing the embodiments of the disclosure.

In the above-described detailed embodiments of the disclosure, an element included in the disclosure is expressed in the singular form or the plural form according to presented detailed embodiments. However, the singular form or the plural form is selected appropriately to the presented situation for convenience of description, and the disclosure is not limited by elements expressed in the singular form or the plural form. Therefore, an element expressed in the plural form may also include a single element or an element expressed in the singular form may also include a plurality of elements.

Meanwhile, the embodiments of the disclosure described and shown in the specification and the drawings have been presented to easily explain the technical contents of the disclosure and help understanding of the disclosure, and are not intended to limit the scope of the disclosure. That is, it will be apparent to those skilled in the art that other modifications and changes may be made thereto on the basis of the technical idea of the disclosure. Also, the above respective embodiments may be employed in combination, as necessary. For example, one embodiment of the disclosure may be partially combined with other embodiments to operate a base station and a UE. For example, a first embodiment and a second embodiment of the disclosure may be partially combined with each other to operate the base station and the UE. Also, although the above embodiments have been described on the basis of an FDD LTE system, other variants based on the technical idea of the embodiments may also be implemented in other systems, such as TDD LTE, 5G, or NR systems.

Meanwhile, in the drawings explaining the methods of the disclosure, the order of description does not necessarily correspond to the order of execution, and the order of precedence may be changed or executed in parallel.

Alternatively, in the drawings explaining the methods of the disclosure, some elements may be omitted and only some elements may be included without departing from the essential spirit and scope of the disclosure.

Also, the methods of the disclosure may be implemented by combining some or all of the contents included in the respective embodiments without departing from the essential spirit and scope of the disclosure.

Various embodiments of the disclosure have been described. The above description of the disclosure is used for exemplification, and the embodiments of the disclosure are not limited to the disclosed embodiments. Those skilled in the art would understand that the disclosure may be easily modified to other detailed forms without changing the technical idea or an essential feature of the disclosure. The scope of the disclosure is represented by the claims to be described below rather than the detailed description, and it should be interpreted that the meaning and scope of the claims and all the changes or modified forms derived from the equivalents thereof fall within the scope of the disclosure.

**Claims**

1. A method of a user equipment (UE) of a communication system, the method comprising:

   transmitting UE capability information to a base station;
   receiving, from the base station, downlink control information (DCI) that includes resource allocation information related to a physical downlink shared channel (PDSCH); and
   receiving the PDSCH from the base station based on the resource allocation information, wherein, when the UE capability information does not indicate that the UE supports PDSCH scheduling without scheduling constraint, the resource allocation information is determined based on the scheduling constraint, and
   the scheduling constraint is constraint on frequency resource allocation of a PDSCH related to an enhanced DMRS.

2. The method of claim 1, wherein, when the UE capability information indicates that the UE supports PDSCH scheduling without the scheduling constraint, the resource allocation information is determined without the scheduling constraint.

3. The method of claim 1, wherein the scheduling constraint is constraint ensuring that the PDSCH scheduled by the resource allocation information has the even number of consecutive resource blocks (RBs).

4. The method of claim 1, wherein the scheduling constraint is constraint ensuring that a start RB of the PDSCH scheduled by the resource allocation information has the even number of RB offsets from common resource block 0 (CRBO).

5. The method of claim 1, wherein the enhanced DMRS type is related to a frequency domain orthogonal cover code (FD-OCC) with the length of 4.

6. A method of a base station of a communication system, the method comprising:

   receiving user equipment (UE) capability information from a UE;
   transmitting, to the UE, downlink control information (DCI) that includes resource allocation information related to a physical downlink shared channel (PDSCH); and
   transmitting the PDSCH to the UE based on the resource allocation information,
   wherein, when the UE capability information does not indicate that the UE supports PDSCH scheduling without scheduling constraint, the resource allocation information is determined based on the scheduling constraint, and
   the scheduling constraint is constraint on frequency resource allocation of a PDSCH related to an enhanced DMRS.

7. The method of claim 6, wherein, when the UE capability information indicates that the UE supports PDSCH scheduling without the scheduling constraint, the resource allocation information is determined without the scheduling constraint.

8. The method of claim 6, wherein the scheduling constraint is constraint ensuring that the PDSCH scheduled by the resource allocation information has the even number of consecutive resource blocks (RBs).

9. The method of claim 6, wherein the scheduling constraint is constraint ensuring that a start RB of the PDSCH scheduled by the resource allocation information has the even number of RB offsets from common resource block 0 (CRBO).

10. The method of claim 6, wherein the enhanced DMRS type is related to a frequency domain orthogonal cover code (FD-OCC) with the length of 4.

11. A user equipment (UE) of a communication system, the UE comprising:

a transceiver; and
a controller configured to,
transmit UE capability information to a base station,
receive, from the base station, downlink control information (DCI) that includes resource allocation information related to a physical downlink shared channel (PDSCH), and
receive the PDSCH from the base station based on the resource allocation information,
wherein, when the UE capability information does not indicate that the UE supports PDSCH scheduling without scheduling constraint, the resource allocation information is determined based on the scheduling constraint, and the scheduling constraint is constraint on frequency resource allocation of a PDSCH related to an enhanced DMRS.

12. The UE of claim 11, wherein, when the UE capability information indicates that the UE supports PDSCH scheduling without the scheduling constraint, the resource allocation information is determined without the scheduling constraint.

13. The UE of claim 11, wherein the scheduling constraint is constraint ensuring that the PDSCH scheduled by the resource allocation information has the even number of consecutive resource blocks (RBs).

14. The UE of claim 11, wherein the scheduling constraint is constraint ensuring that a start RB of the PDSCH scheduled by the resource allocation information has the even number of RB offsets from common resource block 0 (CRBO).

15. A base station of a communication system, the base station comprising:

a transceiver; and
a controller configured to,
receive user equipment (UE) capability information from a UE,
transmit, to the UE, downlink control information (DCI) that includes resource allocation information related to a physical downlink shared channel (PDSCH), and
transmit the PDSCH to the UE based on the resource allocation information,
wherein, when the UE capability information does not indicate that the UE supports PDSCH scheduling without scheduling constraint, the resource allocation information is determined based on the scheduling constraint, and the scheduling constraint is constraint on frequency resource allocation of a PDSCH related to an enhanced DMRS.

# FIG. 1

One subframe (110)

$N_{symb}^{subframe,\mu}$ OFDM symbols

1 OFDM symbols (102)

1 subcarrier (103)

$K = N_{RB,x}^{max,\mu} N_{sc}^{RB} - 1$

$N_{RB}^{\mu} N_{sc}^{RB}$ subcarriers

Resource block $N_{sc}^{RB}$ subcarriers (104)

Resource element (k,l) (101)

Frequency

$\bar{l}=0$

$\bar{l}=14 \cdot 2^{\mu} - 1$

$K=0$

Time

**FIG. 2**

FIG. 3

BWP#1
(301)

BWP#2
(302)

Frequency

UE bandwidth
(300)

FIG. 4

Duration [404]

Frequency resources [403]

UE BWP [410]

Slot [420]

Control resource set#1 [401]

Control resource set#2 [402]

Time

Frequency

FIG. 5A

# FIG. 5B

1 slot = 14 OFDM symbols

| 0 | 1 | 2 | 3 | 4 | 5 | 6 | 7 | 8 | 9 | 10 | 11 | 12 | 13 |
|---|---|---|---|---|---|---|---|---|---|----|----|----|----|

Search space 1
Search space 2
Search space 3

5-1-00

[X,Y] = (7,3)

X=7

Y=3

Y=3

5-1-05

[X,Y] = (4,3)

X=4

X'=5>X

X'=5>X

Y=3

Y=3

Y=3

5-1-10

[X,Y] = (2,2)

X=2  X=2  X=2  X=2  X=2  X=2  X=2

Y=2  Y=2  Y=2  Y=2  Y=2  Y=2  Y=2

# FIG. 6

Receive PDCCH indicating new UL transmission or DL transmission (630)

Drx-onDurationTimer (615)

Start or restart drx-InactivityTimer (620)

drx-LongCycle (625)

Active time (605)

# FIG. 7

TCI state #0
(700)

TCI state #1
(705)

TCI state #2
(710)

# FIG. 8

**RRC configured TCI state (800)**

| TCI #0 (805) | TCI #1 (810) | TCI #2 (815) | · · · | TCI #N (820) |

**TCI state list for CORESET (825)**

| TCI #a (830) | TCI #b (835) | · · · | TCI #n (840) |

TCI indication via MAC CE (845)

FIG. 9

| Serving Cell ID (915) | CORESET ID (920) | Oct 1 (900) |
|---|---|---|
| CORESET ID | TCI state ID (925) | Oct 2 (905) |

EP 4 478 821 A1

FIG. 10

# FIG. 11

Periodicity (1105)

Rate matching resource (1102)

Frequency-domain Allocation (1104)

Time-domain Allocation (1103)

Frequency

slot#0  slot#1  slot#2

PDSCH (1101)

Time

# FIG. 12

1200

BWP#1
(Active)
on Cell#1

CSS#1 ⟷ CORESET#1
(Ref: CSI-RS#1/Cell#1/BWP#1 with QCL-TypeD) — 1215

CSS#2

USS#1

1205

BWP#1
(Active)
on Cell#2

CSS#1 ⟷ CORESET#1
(Ref: CSI-RS#1/Cell#1/BWP#1 with QCL-TypeD) — 1220

USS#2

USS#2 ⟷ CORESET#2
(Ref: CSI-RS#1/Cell#2/BWP#1 with QCL-TypeD) — 1225

PDCCH 모니터링 구간 — 1210

1230

Active
BWP on
Cell#1

USS#1 ⟷ CORESET#1
(Ref: CSI-RS#1/Cell#1/BWP#1 with QCL-TypeD) — 1245

USS#2 ⟷ CORESET#2
(Ref: CSI-RS#1/Cell#1/BWP#1 with QCL-TypeD) — 1250

USS#3

1235

Active
BWP on
Cell#2

USS#1 ⟷ CORESET#1
(Ref: CSI-RS#1/Cell#2/BWP#1 with QCL-TypeD) — 1255

USS#2

USS#3 ⟷ CORESET#2
(Ref: CSI-RS#2/Cell#2/BWP#1 with QCL-TypeD) — 1260

PDCCH 모니터링 구간 — 1240

EP 4 478 821 A1

FIG. 13

RA type 0
[13-00]

13-15

Bitmap

RA type 1
[13-05]

13-20

Starting VRB

13-25

Length

Both RA
type 0 & 1
[13-10]

13-30

1 bit for RA type
indication

13-35

Maxpayload for RA type 0, payload for RA type 1

# FIG. 14

S
(14-00)

L (14-05)

| 0 | 1 | 2 | 3 | 4 | 5 | 6 | 7 | 8 | 9 | 10 | 11 | 12 | 13 |

OFDM symbol

$$\text{Slot} \left\lfloor n \cdot \frac{2^{\mu_{PDSCH}}}{2^{\mu_{PDCCH}}} \right\rfloor + K_0 \quad (14\text{-}10)$$

# FIG. 15

# FIG. 16

RRC configured TCI states

16-00

| TCI #0 | TCI #1 | TCI #2 | TCI #3 | ⋯ | TCI #M-1 |

⇩

MAC-CE activated TCI states for PDSCH

16-20

| TCI #0' | TCI #1' | TCI #2' | ⋯ | TCI #K-1 |

MAC CE based beam indication

⇩

TCI state for PDSCH

16-40

| TCI #I |

DCI based beam selection

FIG. 17

MAC-CE structure

| CORESET Pool ID | Serving Cell ID | | | | | BWP ID | | |
|---|---|---|---|---|---|---|---|---|
| $T_7$ | $T_6$ | $T_5$ | $T_4$ | $T_3$ | $T_2$ | $T_1$ | $T_0$ | Oct 2 |
| $T_{15}$ | $T_{14}$ | $T_{13}$ | $T_{12}$ | $T_{11}$ | $T_{10}$ | $T_9$ | $T_8$ | Oct 3 |

17-05 → (Oct 1)

17-00

. . .

| $T_{(N-2)\times 8+7}$ | $T_{(N-2)\times 8+6}$ | $T_{(N-2)\times 8+5}$ | $T_{(N-2)\times 8+4}$ | $T_{(N-2)\times 8+3}$ | $T_{(N-2)\times 8+2}$ | $T_{(N-2)\times 8+1}$ | $T_{(N-2)\times 8}$ | Oct N |
|---|---|---|---|---|---|---|---|---|

FIG. 18

**Single cell LTE/NR [S00]**

gNB: SDAP [S25] → PDCP [S30] → RLC [S35] → MAC [S40] → PHY [S45]

UE: PHY [S50] → MAC [S55] → RLC [S60] → PDCP [S65] → SDAP [S70]

**Carrier aggregation [S10]**

gNB: SDAP → PDCP → RLC → MAC → PHY
... → PHY

UE: PHY → ... → MAC → RLC → PDCP → SDAP
PHY →

**Dual connectivity [S20]**

SgNB: RLC → MAC → PHY
PHY → MAC → RLC

MgNB: SDAP → PDCP → RLC → MAC → PHY

UE: PHY → MAC → RLC → PDCP → SDAP

FIG. 19

FIG. 20

| Control information for TRP #0 | — | DCI #0 |
| Control information for TRP #1 | — | DCI #1 |
| ... | | ... |
| Control information for TRP #(N-1) | — | DCI #(N-1) |

Case #1 (N100)

| Control information for TRP #0 | — | DCI |
| Control information for TRP #1 | — | sDCI |
| ... | | |
| Control information for TRP #(N-1) | | |

Case #3 (N110)

| Control information for TRP #0 | — | DCI #0 |
| Control information for TRP #1 | — | sDCI #0 |
| ... | | ... |
| Control information for TRP #(N-1) | — | sDCI #(N-2) |

Case #2 (N105)

| Control information for TRP #0 | |
| Control information for TRP #1 | — Long DCI |
| ... | |
| Control information for TRP #(N-1) | |

Case #4 (N115)

# FIG. 21

| | | | |
|---|---|---|---|
| R | Serving Cell ID | BWP ID | Oct 1 |
| $C_0$ | TCI state ID $_{0,1}$ | | Oct 2 |
| R | TCI state ID $_{0,2}$ | | Oct 3 (Optional) |

21-05
21-10
21-15

. . .

| | | |
|---|---|---|
| $C_N$ | TCI state ID $_{N,1}$ | Oct M-1 |
| R | TCI state ID $_{N,2}$ | Oct M (Optional) |

FIG. 22

```
2205 ~~  ┌──────────────┐        ┌──────────────┐
          │              │ ◀───── │  UE receiver │ ~~ 2200
          │ UE processor │        └──────────────┘
          │              │
          │              │ ─────▶ ┌──────────────┐
          └──────────────┘        │UE transmitter│ ~~ 2210
                                  └──────────────┘
```

FIG. 23

2305 ~ Base station processor

Base station receiver ~ 2300

Base station transmitter ~ 2310

# FIG. 24

```
        ┌──────────────┐
        │    START     │
        └──────┬───────┘
               │
               ▼
┌──────────────────────────────────┐
│                                  │
│       Transmit UE capability     │──── 24-00
│                                  │
└──────────────┬───────────────────┘
               │
               ▼
┌──────────────────────────────────┐
│  Receive information related to   │
│     enhanced DMRS type 1 or 2     │──── 24-01
│                                  │
└──────────────┬───────────────────┘
               │
               ▼
┌──────────────────────────────────┐
│ Receive PDSCH or PUSCH scheduling │
│  information to which enhanced    │──── 24-02
│   DMRS type 1 or 2 is applied     │
└──────────────┬───────────────────┘
               │
               ▼
┌──────────────────────────────────┐
│    Receive PDSCH or transmit      │
│  PUSCH, to which enhanced DMRS    │──── 24-03
│     type 1 or 2 is applied        │
└──────────────────────────────────┘
```

# FIG. 25

START

Receive UE capability — 25-00

Transmit information related to enhanced
DMRS type 1 or 2 — 25-01

Transmit PDSCH or PUSCH scheduling information to
which enhanced DMRS type 1 or 2 is applied — 25-02

Transmit PDSCH or receive PUSCH,
to which enhanced DMRS type 1 or 2 is applied — 25-03

## INTERNATIONAL SEARCH REPORT

| | International application No. |
|---|---|
| | **PCT/KR2023/003293** |

**A. CLASSIFICATION OF SUBJECT MATTER**

**H04W 72/23**(2023.01)i; **H04W 72/04**(2009.01)i; **H04W 56/00**(2009.01)i; **H04L 5/00**(2006.01)i; **H04W 72/21**(2023.01)i

According to International Patent Classification (IPC) or to both national classification and IPC

**B. FIELDS SEARCHED**

Minimum documentation searched (classification system followed by classification symbols)

H04W 72/23(2023.01); H04W 72/02(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 단말 능력(UE capability), PDSCH, DCI, 주파수(frequency), 자원 할당(resource allocation), DMRS 타입(type)

**C. DOCUMENTS CONSIDERED TO BE RELEVANT**

| Category* | Citation of document, with indication, where appropriate, of the relevant passages | Relevant to claim No. |
|---|---|---|
| A | KR 10-2022-0008701 A (SAMSUNG ELECTRONICS CO., LTD.) 21 January 2022 (2022-01-21)<br>See paragraphs [0029]-[0347] and figure 1. | 1-15 |
| A | RAPPORTEUR (QUALCOMM INCORPORATED). List of agreement for Rel.17 Support NR from 52.6GHz to 71GHz work item, post RAN1 #107bis-e. R1-2200808, 3GPP TSG RAN WG1 Meeting #107bis-e. 27 January 2022.<br>See pages 1-62. | 1-15 |
| A | ERICSSON. PDSCH/PUSCH enhancements. R1-2107054, 3GPP TSG RAN WG1 Meeting #106-e. 06 August 2021.<br>See pages 1-61. | 1-15 |
| A | ERICSSON. Extending NR operation to 71 GHz. R2-2202435, 3GPP TSG RAN WG2 Meeting #117-e. 14 February 2022.<br>See pages 1-162. | 1-15 |
| A | MODERATOR (VIVO). Summary of PDSCH/PUSCH enhancements (Bandwidth/Timeline/Reference signals). R1-2110398, 3GPP TSG RAN WG1 Meeting #106bis-e. 13 October 2021.<br>See pages 1-45. | 1-15 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **30 May 2023** | **31 May 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

| | International application No. |
|---|---|
| | **PCT/KR2023/003293** |

| Patent document cited in search report | | Publication date (day/month/year) | Patent family member(s) | | Publication date (day/month/year) |
|---|---|---|---|---|---|
| KR 10-2022-0008701 | A | 21 January 2022 | WO 2022-014833 | A1 | 20 January 2022 |

Form PCT/ISA/210 (patent family annex) (July 2022)